# EUROPÄISCHE PATENTANMELDUNG

(11) **EP 0 501 252 A1**
(43) Veröffentlichungstag der Anmeldung: **02.09.1992**
(21) Anmeldenummer: 92102452.7
(22) Anmeldetag: 14.02.1992
(51) Int. Cl.: C09B 62/503, C09B 62/04, D06P 1/38

(54) **Bifunktionelle Reaktivfarbstoffe**

(30) Priorität: 27.02.1991 DE 4106099; 29.11.1991 DE 4139319
(71) Anmelder: BAYER AG, 51368 Leverkusen (DE)
(72) Erfinder: Eizenhöfer, Thomas, Dr., W-5000 Köln 60 (DE); Harms, Wolfgang, Dr., W-5068 Odenthal (DE); Herd, Karl-Josef, Dr., W-5068 Odenthal-Holz (DE)

(57) **Zusammenfassung**

Reaktivfarbstoffe der Formel 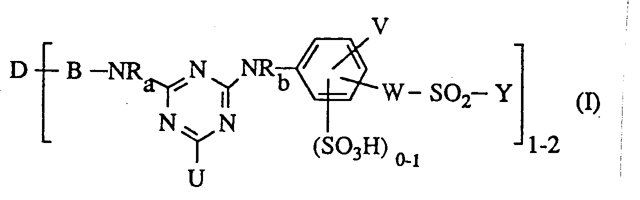
worin
- D: = Rest eines organischen Farbstoffes
- B: = direkte Bindung oder Brückenglied an ein Ring-C-Atom eines aromatisch-carbocyclischen oder an ein Ring C-Atom oder N-Atom eines aromatisch-heterocyclischen Ringes in D,
- Ra,Rb: = gleich oder verschieden, H, C₁-C₄-Alkyl
oder mit OH, CN, CO₂H OSO₃H oder SO₃H substituiertes C₁-C₄-Alkyl,
- U: = Cl, F oder ein gegebenenfalls durch CO₂H, CO₂NH₂, SO₃H oder C₁-C₄-Alkyl substituierter Pyridiniumrest,
- W: = geradkettiges oder verzweigtes C₁-C₆-Alkylen,
- Y: = CH=CH₂ oder CH₂-CH₂-X, worin
- X: = alkalisch eliminierbarer Rest,BR>
- V: = H, Halogen, C₁-C₄-Alkoxy, C₁-C₃-Alkyl, CN, COOH, SO₃H, oder CONH₂, mit der Maßgabe, daß
- D: = Rest eines Farbstoffes der Formazan-, Phthalocyanin-, Antrachinon- und Triphendioxazin-Reihe, wenn W = -CH₂-, und
- D: = Rest eines Farbstoffes der Formazan-, Phthalocyanin-, Antrachinon- unnd Triphendioxazin-Reihe und
- U: = die anfangs gegebene Bedeutung zukommt, wenn W = C₂-Alkylen oder
- U: = F oder ein gegebenenfalls durch CO₂H, CONH₂, SO₃H oder C₁-C₄-Alkyl substituierter Pyridiniumrest ist und
- D: = Rest eines organischen Farbstoffes, wenn der Rest W für C₂-Alkylen steht.

## Beschreibung

Die vorliegende Erfindung betrifft neue wasserlösliche Reaktivfarbstoffe, Verfahren zu ihrer Herstellung und ihre Verwendung zum Färben.

Die Praxis des Färbens mit Reaktivfarbstoffen hat in neuerer Zeit zu steigenden Anforderungen an Qualität und Wirtschaftlichkeit der Färbeprozesse geführt. Infolgedessen besteht weiterhin ein Bedarf nach neuen Reaktivfarbstoffen, die verbesserte Eigenschaften in bezug auf Echtheiten und Verarbeitbarkeit aufweisen. Aus der EP-A-307 817 und der JP-A-72-23708 sind bereits Reaktivfarbstoffe auf Basis von Azofarbstoffen bekannt, die zwei Reaktivgruppen aufweisen.

Die vorliegende Erfindung betrifft neue Reaktivfarbstoffe der Formel 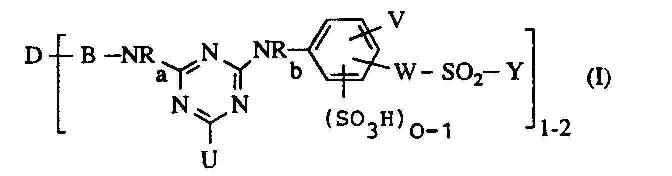
worin
- D =: Rest eines organischen Farbstoffes
- B =: direkte Bindung oder Brückenglied an ein Ring-C-Atom eines aromatischcarbocyclischen oder an ein Ring C-Atom oder N-Atom eines aromatischheterocyclischen Ringes in D,
- Rₐ, R_{b} =: gleich oder verschieden, H, C₁-C₄-Alkyl oder mit OH, CN, CO₂H, OSO₃H oder SO₃H substituiertes C₁-C₄-Alkyl,
- U =: Cl, F oder ein gegebenenfalls durch CO₂H, CONH₂, SO₃H oder C₁-C₄-Alkyl substituierter Pyridiniumrest,
- W =: geradkettiges oder verzweigtes C₁-C₆-Alkylen,
- Y =: CH=CH₂ oder CH₂-CH₂-X, worin x = alkalisch eliminierbarer Rest
- V =: H, Halogen, C₁-C₄-Alkoxy, C₁-C₃-Alkyl, CN, COOH, CONH₂ oderSO₃H
mit der Maßgabe, daß
a)
   - D =: Rest eines Farbstoffes der Formazan-, Phthalocyanin-, Anthrachinonund Triphendioxazin-Reihe, wenn W = -CH₂-,
b)
   - D =: Rest eines Farbstoffes der Formazan-, Phthalocyanin-, Anthrachinon-und Triphendioxazin-Reihe und
   - U =: die anfangs gegebene Bedeutung zukommt, wenn W = C₂-Alkylen
   oder
c)
   - U =: F oder ein gegebenenfalls durch CO₂H, CONH₂, SO₃H oder C₁-C₄-Alkyl substituierter Pyridiniumrest ist, und
   - D =: Rest eines organischen Farbstoffes, wenn der Rest W für C₂-Alkylen steht.

D ist bevorzugt der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe.

X ist bevorzugt OSO₃H, SSO₃H, OCOCH₃, OPO₃H₂, OSO₂CH₃, SCN, NHSO₂CH₃, CL, F, Br, OCOC₆H₅, OSO₂-C₆H₄CH₃N^{⊕}(CH₃)₃; wenn W = -CH₂- bedeutet, ist X insbesondere OSO₃H, Cl, Br, F.

Geeignete Brückenglieder B, die gleich oder verschieden sein können, sind beispielsweise: 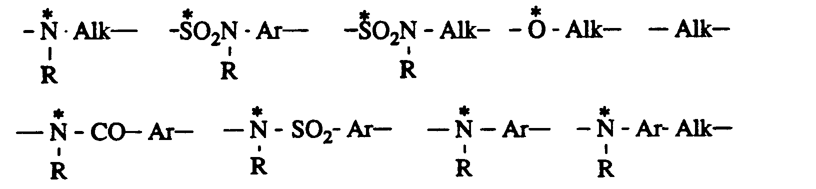
wobei der Stern die Verknüpfungsstelle mit D markiert,
- R: eine unter Rₐ genannte Bedeutung hat,
- Alk: gegebenenfalls durch Heteroatome, wie O, S, 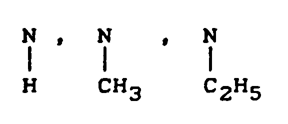 unterbrochenes, geradkettiges oder verzweigtes C₁-C₆-Alkylen,
- Ar: gegebenenfalls substituiertes Phenylen oder Naphthylen und
- Alk oder Ar: weitere Substituenten, beispielsweise F, Cl, Br, C₁-C₄-Alkyl, C₁-C₄-Alkoxy, Carboxy oder Sulfo enthalten können,

Der Rest D in Formel (1) kann in der üblichen Weise substituiert sein. Als Beispiele für weitere Substituenten am Rest D seien genannt: Alkylgruppen mit 1 bis 4 Kohlenstoffatomen wie Methyl, Ethyl, Propyl, Isopropyl oder Butyl, Alkoxygruppen mit 1 bis 4 Kohlenstoffatomen wie Methoxy, Ethoxy, Propoxy, Isopropoxy oder Butoxy, Acylaminogruppen mit 1 bis 8 Kohlenstoffatomen wie Acetylamino, Propionylamino oder Benzoylamino, Amino, Alkylamino mit 1 bis 4 Kohlenstoffatomen wie Methylamino, Ethylamino, Propylamino, Isopropylamino oder Butylamino, Phenylamino, N,N-Di-β-hydroxyethylamino, N,N-Di-β-sulfato-ethylamino, Sulfobenzylamino, N,N-Disulfobenzylamino, Alkoxycarbonyl mit 1 bis 4 Kohlenstoffatomen im Alkoxyrest wie Methoxycarbonyl oder Ethoxycarbonyl, Alkylsulfonyl mit 1 bis 4 Kohlenstoffatomen wie Methylsulfonyl oder Ethylsulfonyl, Trifluormethyl, Nitro, Cyano, Halogen wie Fluor, Chlor oder Brom, Carbamoyl, N-Alkylcarbamoyl mit 1 bis 4 Kohlenstoffatomen im Alkylrest wie N-Methylcarbamoyl oder N-Ethylcarbamoyl, Sulfamoyl, N-Alkylsulfamoyl mit 1 bis 4 Kohlenstoffatomen wie N-Methylsulfamoyl, N-Propylsulfamoyl, N-Isopropylsulfamoyl oder N-Butylsulfamoyl, N-(4-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Ethyl, Methoxy, Ethoxy, Acetylamino, Benzoylamino, Amino, Chlor, Brom, Ureido, Hydroxy, Carboxy, Sulfomethyl oder Sulfo.

Der Rest Rₐ und R_{b} in Formel (1) ist, falls es sich um einen Alkylrest handelt, geradkettig oder verzweigt; er kann weitersubstituiert sein, z.B. durch Halogen, Hydroxy, Cyan, C₁₋₄-Alkoxy, Carboxy oder Sulfo, Als Beispiele für R seien die folgenden Reste genannt: Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanethyl, sulfomethyl, β-Sulfoethyl, Aminosulfonylmethyl und β-Sulfatoethyl.

Geeignete Brückenglieder W sind beispielsweise
-CH₂-, -CH₂-CH₂-, -(CH₂)₃-, 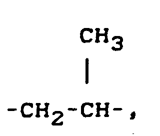
-(CH₂)₄-, 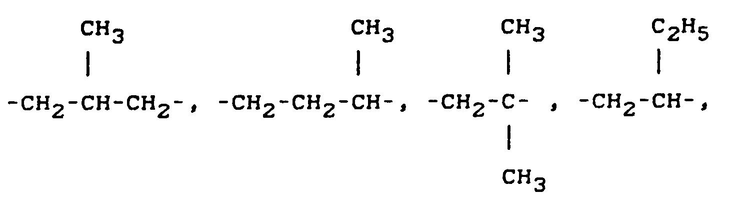
-(CH₂)₅-, -(CH₂)₆-, -CH₂-CH₂-O-CH₂-CH₂-,

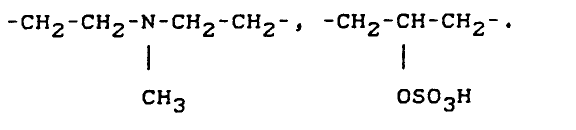

Bevorzugte Farbstoffe sind solche der Formel 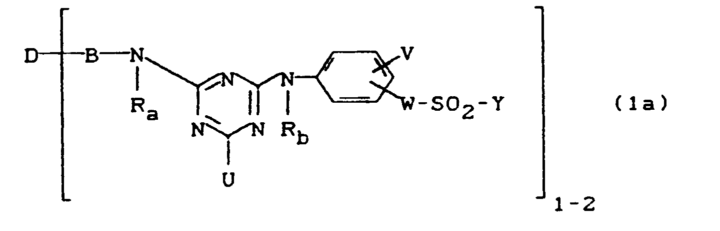
worin
- B, D =: die obengenannte Bedeutung haben,
- Rₐ =: gleich oder verschieden, H oder C₁-C₂-Alkyl,
- R_{b} =: H, C₁-C₃-Alkyl, β-Hydroxyethyl, β-Sulfatoethyl, β-Carboxyethyl, β-Cyanoethyl oder Carboxymethyl,
- U =: Cl, F oder ein gegebenenfalls durch CO₂H, CONH₂, SO₃H oder C₁-C₄-Alkyl substituierter Pyridiniumrest,
- W =: CH₂, C₂H₄, 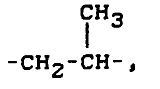 -(CH₂)₃-, -(CH₂)₄-,
- Y =: CH=CH₂ oder CH₂-CH₂-X, mit X = Cl oder OSO₃H
- V =: H, Cl, C₁-C₂-Alkyl, C₁-C₂-Alkoxy, COOH,
SO₃H.

Bevorzugte Farbstoffe sind solche der Formeln (4) bis (8) 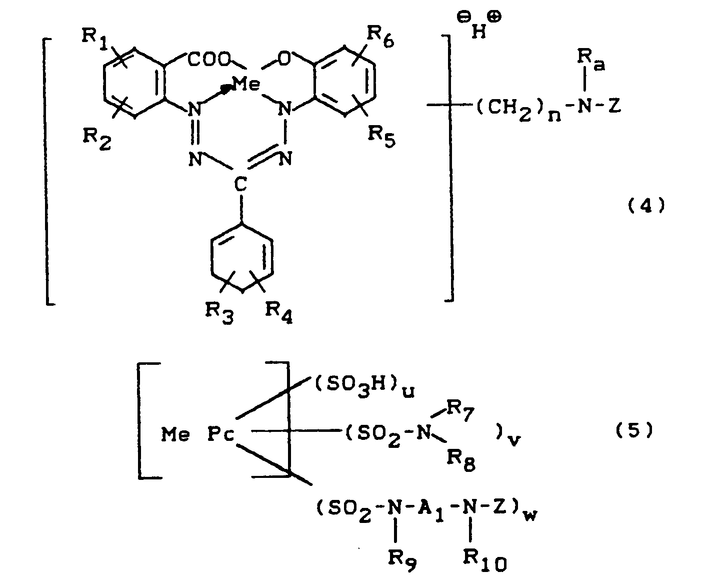 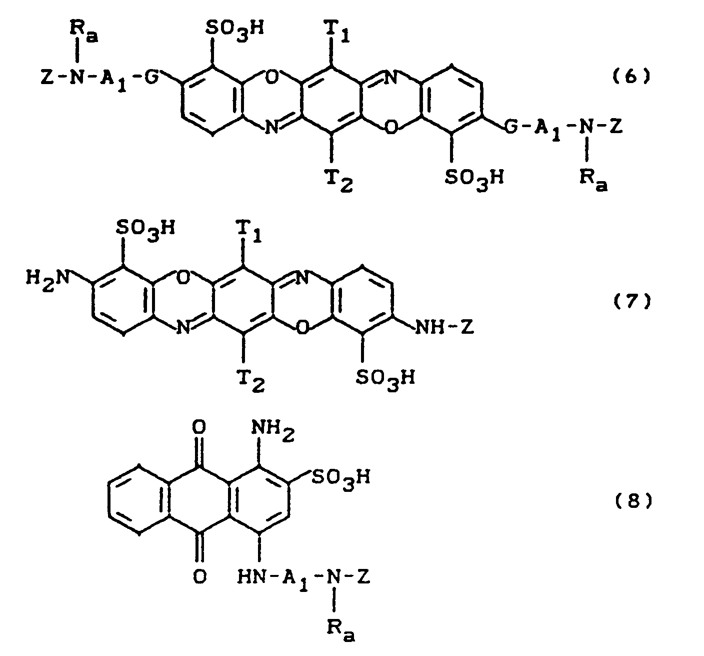
worin
- Rₐ: H oder C₁-C₂-Alkyl,
- Pc: Phthalocyaninkern,
- Me: zweiwertiges Metallion, beispielsweise Fe, Cu, Zn, Co, Ni, vorzugsweise Cu, Ni,
- n: 0 oder 1 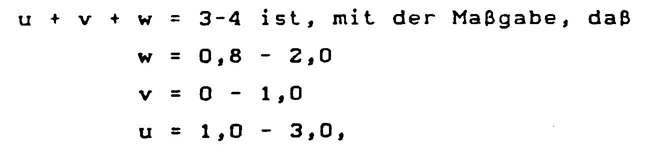
- A₁ =: aliphatisches, araliphatisches oder aromatisches Brückenglied,
- G =: Sauerstoff oder -N-R₁₁, worin
- R₁₁ =: H, C₁-C₂-Alkyl, wobei wenn A₁ = C₂-Alkylen, R₁₁ und Rₐ zu einem Ring geschlossen sein können,
- T₁, T₂ =: H, Chlor, Brom, C₁-C₄-Alkyl, C₁-C₄-Alkoxy oder Acylamino,
- R₁ - R₆ =: unabhängig voneinander H, C₁-C₄-Alkyl, C₁-C₄-Alkoxy, Hydroxy, Halogen, Carboxy, Sulfonamido, Alkyl- oder Arylcarbonylamino, oder -sulfonylamino, β-Sulfatoethylsulfonyl oder SO₃H,
- R₇ - R₁₀ =: H, C₁-C₂-Alkyl, gegebenenfalls substituiert durch Hydroxy, Carboxy oder Sulfonyl, worin R₉ und R₁₀ auch zu einem Ring geschlossen sein können, wenn A₁ = C₂-Alkylen,
- Z =: ein Rest der Formel

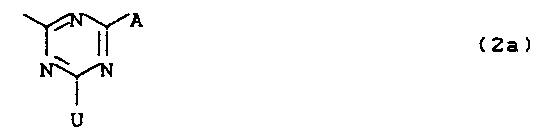

worin
- U =: Cl, F oder ein gegebenenfalls durch CO₂H, CO₂NH₂, SO₃H oder C₁-C₄-Alkyl substituierter Pyridiniumrest,
- A =: ein Rest der Formel

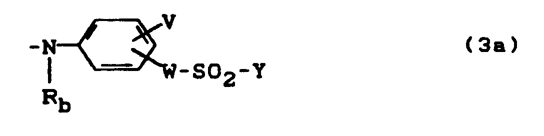

worin
- R_{b} =: H, C₂H₅, i-C₃H₇, n-C₃H₇, C₂H₄-OH, Carboxymethyl, Carboxyethyl oder β-Cyanoethyl
- W =: -CH₂-, -C₂H₄-, 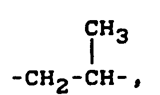 -(CH₂)₃-, -(CH₂)₄-,
- V =: H, SO₃H, COOH, C₁-C₂-Alkyl, C₁-C₂-Alkoxy, Cl,
- y =: CH=CH₂ oder CH₂-CH₂-X mit X = Cl oder OSO₃H.

Besonders geeignete aliphatische Reste A₁ sind C₂-C₈-Alkylenreste, die durch Heteroatome oder Heteroatomgruppierungen unterbrochen oder substituiert sein können, wie beispielsweise
-(CH₂)₂₋₈-, 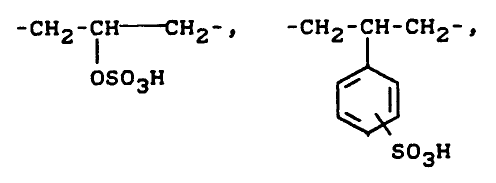 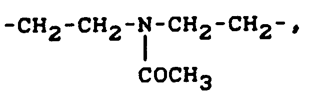
-CH₂-CH₂-O-CH₂-CH₂-, 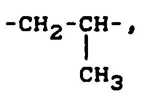 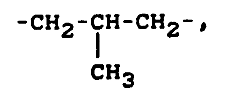
-CH₂-CH₂-NHCO-CH₂-

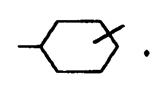

Besonders geeignete araliphatische Reste A₁ sind C₁-C₄-Alkylenphenylreste, die durch Heteroatome oder Heteroatomgruppen unterbrochen sein können, wie beispielsweise

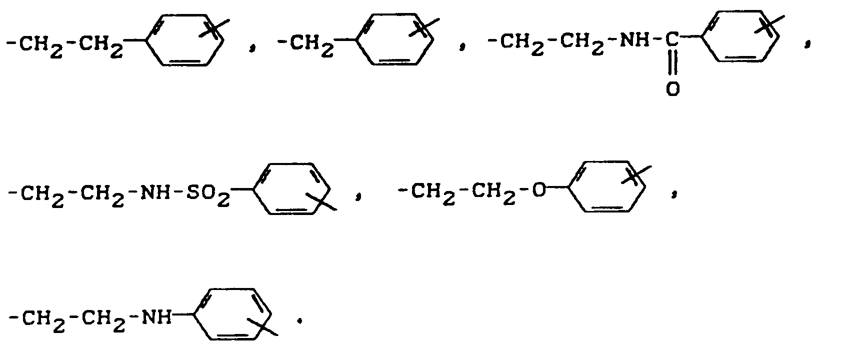

Besonders geeignete aromatische Reste A₁ sind Phenylenreste, die durch Substituenten, wie beispielsweise C₁-C₂-Alkyl, SO₃H oder COOH substituiert sein können, wie beispielsweise

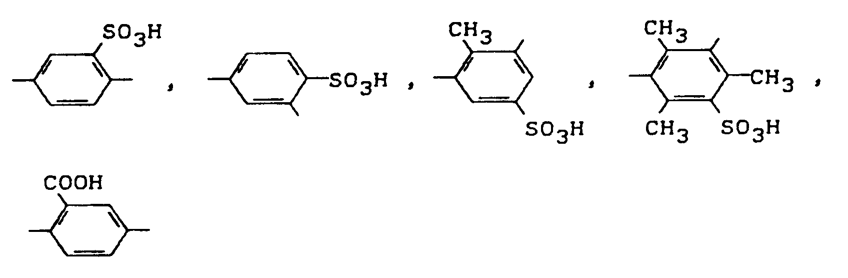

Besonders bevorzugt sind Kupfer-Formazanfarbstoffe der Formeln (9) - (12) 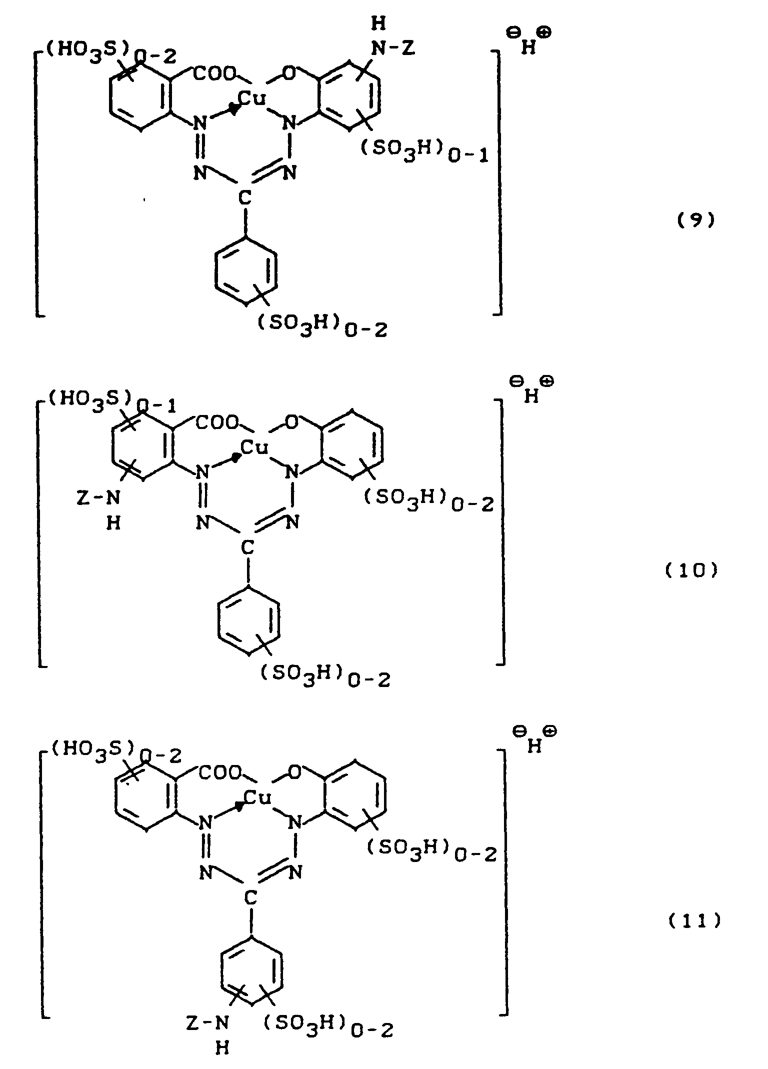 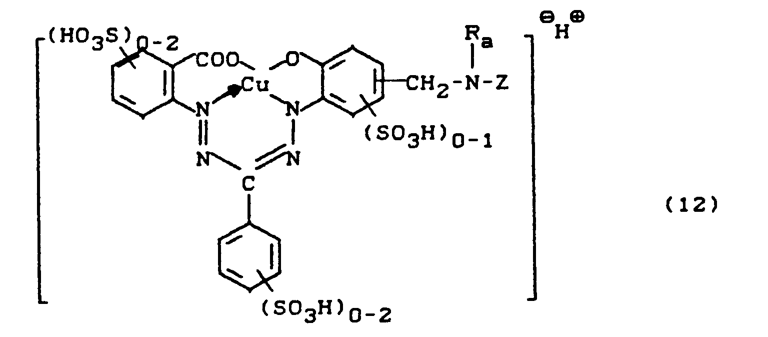
in denen
- Rₐ =: H, C₁-C₂-Alkyl,
- Z: die obengenannte Bedeutung der Formel (2a) hat und die Gesamtzahl der Sulfogruppen im Farbstoff mindestens 2 beträgt.

Ganz besonders bevorzugt sind Kupfer-Fomazanfarbstoffe der Formel 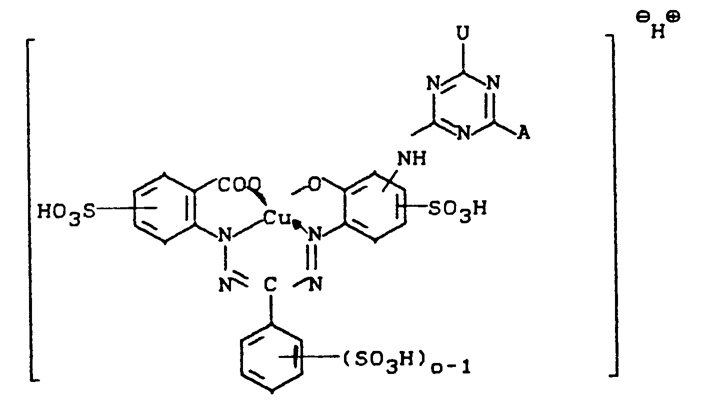
worin bedeuten
- U =: F, Cl oder ein gegebenenfalls durch CO₂H, CO₂NH₂, SO₃H oder C₁-C₄-Alkyl substituierter Pyridiniumrest,
- A =:

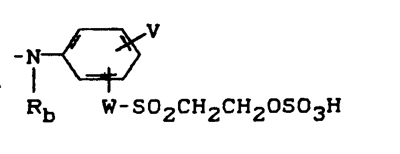

worin V, W und R_{b} die unter Formel (3a) genannte Bedeutung haben.

Weiter besonders bevorzugt sind Phthalocyaninfarbstoffe der Formel (13) 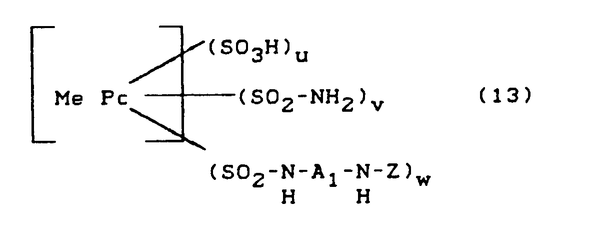
in denen
Z, Pc, u, v, w die obengenannte Bedeutung haben,
- Me =: Cu oder Ni,
- A₁ =: C₂-C₄-Alkylen, 1,3-Phenylen, 1,3-Sulfophenylen oder 1,3-Carboxyphenylen.

Weiter besonders bevorzugt sind Triphendioxazinfarbstoffe der Formeln (14) und (15) 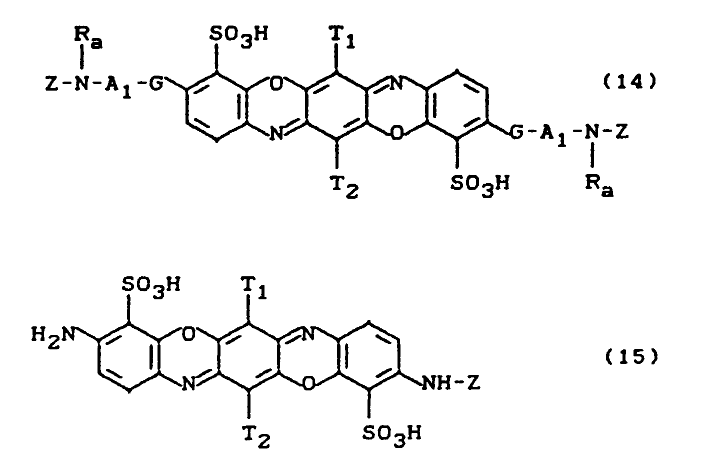
in denen
- Z =: Rest der Formel (2a)
- Rₐ =: H oder C₁-C₂-Alkyl
- G =: O, N-R₁₁ (mit R₁₁ = H, C₁-C₂-Alkyl, wobei, wenn A₁ = C₂H₄ Rₐ' und R₁₁ auch zu einem Ring geschlossen sein können),
- T₁, T₂ =: Cl oder Br bedeuten.

Besonders bevorzugt sind auch Anthrachinonfarbstoffe der Formel (16) 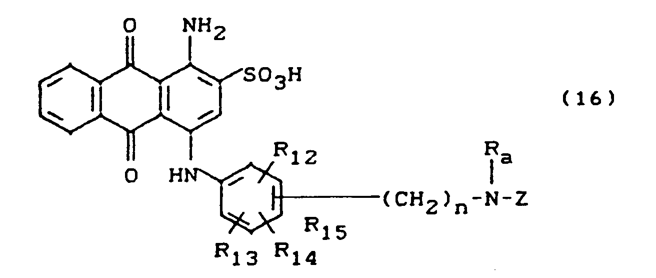
worin
- n =: 0 oder 1
- Rₐ =: H, C₁-C₂-Alkyl
- Z =: Rest der Formel (2a)
- R₁₂: H, C₁-C₄-Alkyl, Alkoxy, Halogen, CO₂H oder SO₃H,
- R₁₃-R₁₅: unabhängig voneinander H, C₁-C₄-Alkyl oder SO₃H.
Weiterhin bevorzugt sind Azofarbstoffe der Formel (II)

D⁅B - NRₐ - Z]₁₋₂ (II)

worin
- B: die oben angegebene Bedeutung hat
- D =: Resteines Monoazo-, Polyazo- oder Metallkomplexazofarbstoffes
- Rₐ =: H, C₁-C₂-Alkyl
- Z =: Rest der Formel

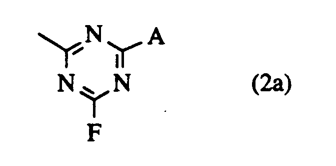

worin
- A =:

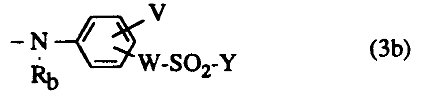

worin
- R_{b} =: H, CH₃, C₂H₅, i-C₃H₇, n-C₃H₇, C₂H₄OH, Carboxymethyl, Carboxyethyl,
- W =: -C₂H₄-, 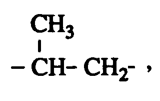 -(CH₂)₃-,
- V, Y: die unter Formel (3a) angegebene Bedeutung haben.

Bevorzugt sind insbesondere Azofarbstoffe der folgenden Formeln (17) bis (28): 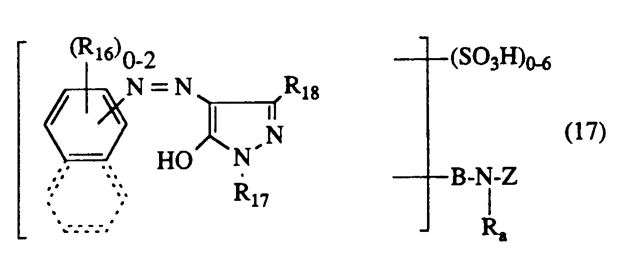
- R₁₆=: Alkyl, Alkoxy, Halogen,
- R₁₇=: H, Alkyl, Aryl, Hetaryl, Aralkyl
- R₁₈=: COOH, CH₃

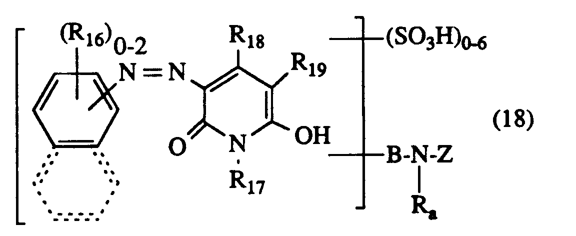

- R₁₆=: Alkyl, Alkoxy, Halogen,
- R₁₇=: H, Alkyl, Aralkyl, Aryl,
- R₁₈=: Alkyl, Aryl, Aralkyl, Hetaryl, CO₂H,
- R₁₉=: H, COOR₃, 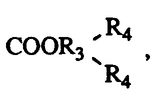 CN, CH₂-SO₃H, SO₃H,

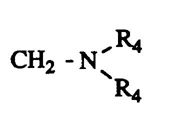

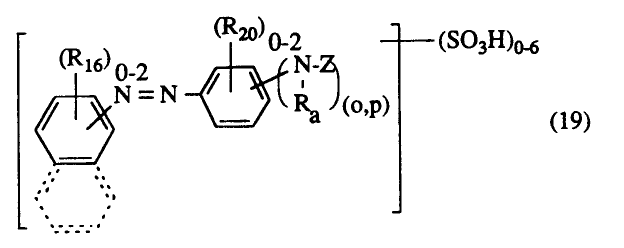

- R₁₆=: Alkyl, Alkoxy, Halogen
- R₂₀=: Alkyl, Alkoxy, Acylamino, Amino
- o,p: in o- bzw. p-Stellung zur Azo-Gruppe bedeuten,

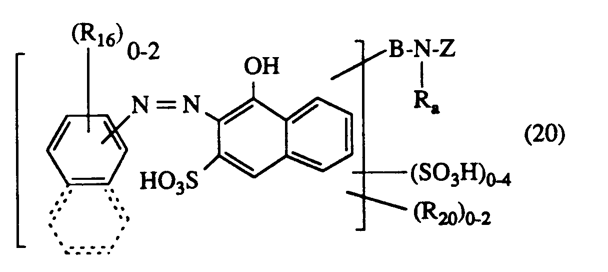

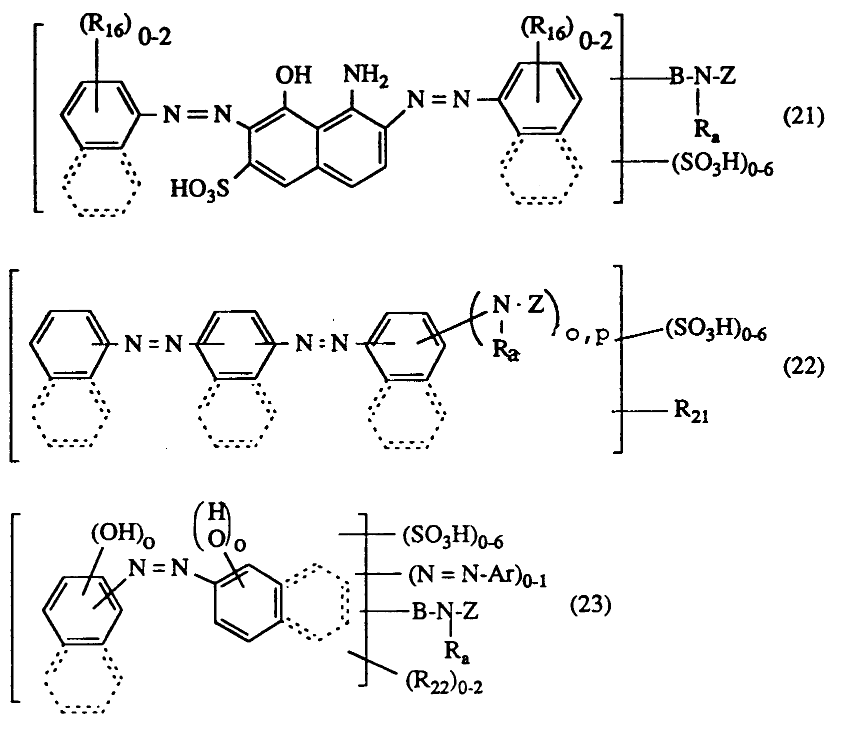

- R₁₆=: Alkyl, Alkoxy, Halogen
- R₂₀=: Alkyl, Alkoxy, Arylamino
- o: in ortho-Stellung zur Azogruppe bedeutet,
- R₂₁=: H, C₁-C₂-Alkyl, Acylamino, Ureido
- R₂₂=: R₈, NO₂

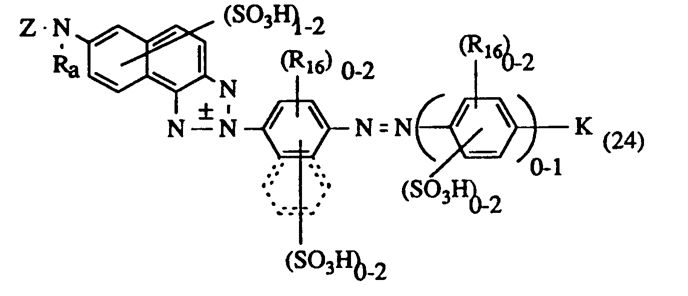

- R₁₆ =: Alkyl, Alkoxy, Halogen
- K =: Rest einer Kupplungskomponente, wobei als Kupplungskomponenten insbesondere solche der Pyridon-, Pyrazolon-, Acetessigsäurearylid-und Naphtholsulfonsäure-Reihe in Frage kommen.

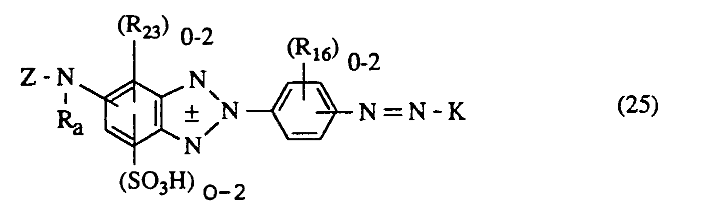

mit
- R₂₃ =: Alkyl, Halogen
- R₁₆ =: Alkyl, Alkoxy
- K =: Rest einer Kupplungskomponente

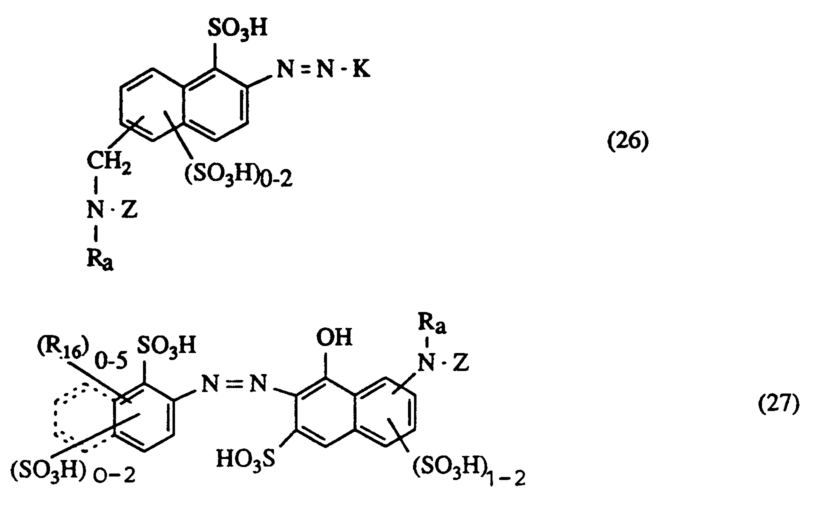

- R₁₆ =: Alkyl, Alkoxy, Arylamino

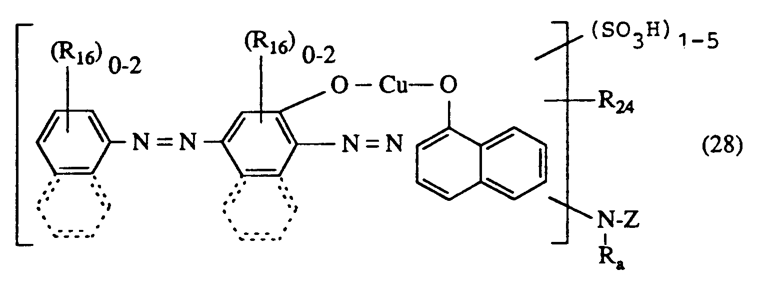

- R₁₆ =: Alkyl, Alkoxy
- R₂₄ =: H, NH₂, Arylamino.

Die vorliegende Erfindung betrifft weiterhin die Herstellung der Reaktivfarbstoffe der Formel (1) nach an sich bekannten Methoden.

Folgende seien genannt:
1. Die Herstellung der Reaktivfarbstoffe erfolgt durch Kondensation einer Farbbase der allgemeinen Formel

   D-B-NRₐ-H (29)

   in der D, B und Rₐ die obengenannte Bedeutung haben, mit 2,4,6-Trichlor-oder 2,4,6-Trifluortriazin.
   Das Zwischenprodukt wird in einem weiteren Reaktionsschritt mit einem Aminosulfon der Formel 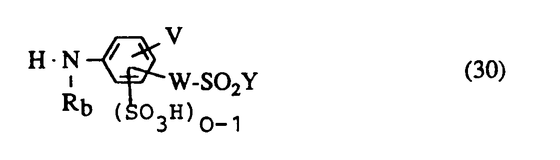 in der R_{b}, V, Y, W die obengenannte Bedeutung haben,
   zum Reaktivfarbstoff umgesetzt.
2. Die Herstellung der Farbstoffe der Formel (1) kann auch dadurch erfolgen, daß man eine Farbbase der allgemeinen Formel (29), in der D die obengenannte Bedeutung hat, mit der faserreaktiven Verbindung der Formel (31) kondensiert, 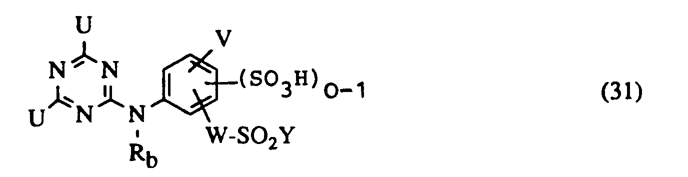 W, U, R_{b}, V, Y haben die oben angegebene Bedeutung.
3. Geeignete Farbstoffvorprodukte werden mit Trihalogentriazinen und den Komponenten der Formel (30) oder geeignete Vorprodukte werden mit den Primärkondensationsprodukten der Formel (31) kondensiert und anschließend in die Farbstoffe umgewandelt.
4. Gegebenenfalls wird im synthetisierten Halogenthiazinfarbstoff das Halogenatom gegen den Rest eines Pryidins ausgetauscht, das durch COOH, CONH₂, SO₃H, C₁-C₄-Alkyl substituiert sein kann.

Die Kondensationen der Ausgangskomponenten mit den Trihalogentriazinen und den Komponenten der Formel (30) oder mit den Reaktivkomponenten der Formel (31) erfolgen unabhängig von der Reihenfolge in wäßrigem oder organisch-wäßrigen Medien in Anwesenheit von säurebindenden Mitteln. In Abhängigkeit von der Natur der Ausgangskomponenten erfolgt dabei die erste Stufe der Kondensation in pH-Bereichen von 2 bis 8, vorzugsweise 3 bis 7, und bei Temperaturen von 0 bis 40°C, vorzugsweise 0 bis 25°C. Der Austausch des zweiten Halogenatoms des Triazins vollzieht sich im pH-Bereich von 4 bis 10, vorzugsweise 5 bis 9, und im Temperaturbereich von 0 bis 60°C, vorzugsweise 0 bis 30°C.

Säurebindende Mittel sind beispielsweise Carbonate, Hydroxide oder Phosphate wie Natriumcarbonat, Natriumhydrogencarbonat, verdünnte Natronlauge, Di- oder Trinatriumphosphat oder Natriumfluorid.

Soll die Kondensation bzw. die Farbstoffsynthese direkt zu einer Farbstofflösung bzw. zu einer flüssigen Farbstoffpräparation führen, kann die Verwendung von Lithiumcarbonaten oder Lithiumhydroxid vorteilhaft sein, gegebenenfalls zusammen mit Lösungsvermittlern und/oder stabilisierenden Puffersystemen. Andere Umwandlungsreaktionen der Farbstoffe oder deren Vorprodukte wie Metallisierungsreaktionen, Sulfierungen oder Einführung von Acylaminogruppierungen können im allgemeinen in beliebigen Stufen der Farbstoffsynthesen vorgenommen werden.

Besonders wertvolle Farbstoffe dieser Reihe sind wasserlösliche Formazan-, Anthrachinon-, Triphendioxazin- und Phthalocyanin- sowie Azo-Farbstoffe, und insbesondere solche, die Sulfonsäure- und/oder Carbonsäuregruppen aufweisen. Die Farbstoffe können sowohl metallfrei als auch metallhaltig sein, wobei unter den Metallkomplexen die Kupfer-, Nickel-, Chrom- und Kobalt-Komplexe bevorzugtes Interesse besitzen.

Geeignete Farbstoffreste D bzw. die den Farbstoffen der Formel (1) zugrundeliegenden aminogruppenhaltigen Farbbasen sind in der Literatur in sehr großer Zahl beschrieben. Beispielhaft seien hier erwähnt:

| | |
|---|---|
| DE-A 2 557 141 | Farbbasen der Formeln 9-11 |
| DE-A 3 239 364 A1 | Farbbasen der Formel 12 |
| DOS 164 463 | Farbbasen der Formel 13 |
| US 4 007 164 | |
| DOS 2 503 011 | Farbbasen der Formeln 14-15 |
| DOS 2 124 080 | |
| DOS 3 423 581 | |
| U.Venkataraman "The Chemistry of Synthetic Dyes", Vol. III, Academic Press, New York, 1952 | Farbbasen der Formel 16 |

Weitere Beispiele sind in folgendem Schrifttum gegeben: EP-A 54 515, EP-A 69 703, EP-A 70 807, EP-A 73 267, DE-A 3 222 726, DE-A 2557 141, DE-A 2 650 555, DE-A 3 023 855, DE-A 2 847 938, DE-A 2 817 780, GB-A 2 057 479, DE-A 2 916 715, DE-A 2 814 206, DE-A 3 019 936, EP-A 45 488 sowie Venkataraman: The Chemistry of Synthetic Dyes, BD. VI, Kapitel II, S. 211-325, New York, London; 1972.

Gegenstand der Erfindung sind auch die neuen Amine der Formel 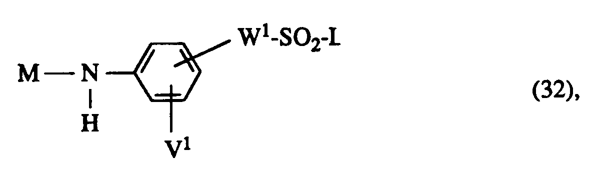
worin
- M =: C₂H₅, C₃H₇, C₂H₅OH,
- V¹=: H, Cl, SO₃H, CH₃, CO₂H, OCH₃,
- L =: CH=CH₂, CH₂-CH₂-Q,
- Q=: Cl, OH,-OSO₃H,
- W¹=: CH₂, C₂H₄,

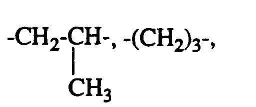

Die Darstellung der neuen Amine der Formel (32) erfolgt nach an sich bekannten Methoden:
Nitro- oder Acylaminoverbindungen der Formel (33) 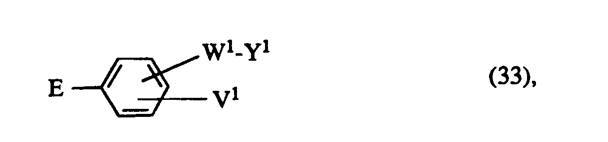
worin
V¹, W¹ die obengenannte Bedeutung haben,
- E =: NO₂ oder Acylamino,
- Y¹=: Cl, Br, -OSO₃H, 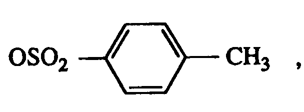 O-SO₂-CH₃
werden in an sich bekannter Weise mit 2-Mercaptoethanol zu Sulfiden der Formel 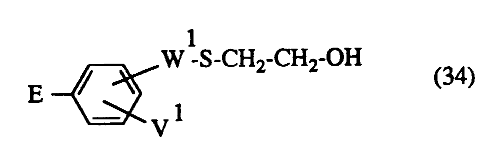
worin
E, V¹ und W¹ die obengenannte Bedeutung haben,
umgesetzt und diese in bekannter Weise, beispielsweise mit H₂O₂ oder Chlor, zu Sulfonen der Formel (35) 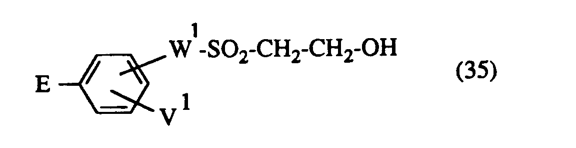
worin
V¹, W¹ die obengenannte Bedeutung haben,
oxidiert und anschließend die Nitrogruppe E reduziert bzw. die Acylaminogruppe E verseift. Die entstehenden bekannten Aminoverbindungen der Formel (36) 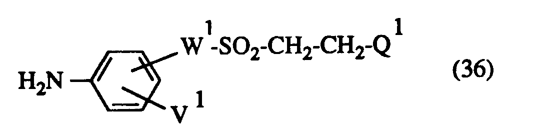
worin
V¹, W¹ die obengenannte Bedeutung haben, und
- Q¹ =: HO oder Cl,
werden in bekannter Weise (z.B. durch reduktive Alkylierung) N-alkyliert. Gegebenenfalls anschließend wird die OH-Gruppe in Q¹ in eine -OSO₃H-Gruppe umgewandelt (in bekannter Weise mit konzentrierter Schwefelsäure oder Oleum). Durch Einwirkung von Oleum können außer den Sulfatogruppen zusätzlich Sulfogruppen (V¹ = SO₃H) in den Phenylenrest eingeführt werden. Die so erhaltenen Amine können durch Behandeln mit alkalisch wirkenden Mitteln, wie Alkalihydroxid oder Alkalicarbonat, in Verbindungen der Formel (32) überführt werden, in denen die Gruppierung L die Gruppierung -CH=CH₂ bedeutet.

Der Aufbau von Verbindungen der Formel (35) mit E=NO₂ kann auch ausgehend von Verbindungen der Formel 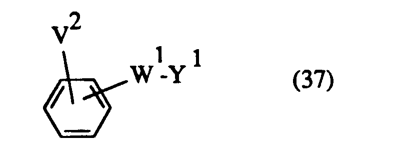
worin
W¹, Y¹ die oben angegebene Bedeutung haben, und
- V²=: H, C₁-C₂-Alkyl,
durch Umsetzung mit 2-Mercaptoethanol und nachfolgende Oxidation zu Verbindungen der Formel 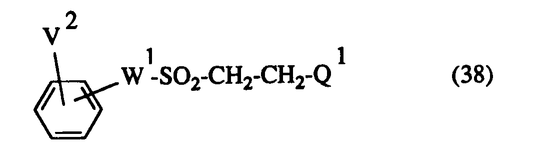
worin
V², W¹, Q¹ die oben angegebene Bedeutung haben
und anschließenden Nitrierung der Verbindungen (38) zu Verbindungen der Formel (35) mit E=NO₂ erreicht werden. Etwa während der Nitrierung veresterte OH-Gruppen Q¹ können durch Verseifung in OH-Gruppen zurückverwandelt werden. Bei der Einführung der Nitrogruppe über die Verbindungen der Formel (38) entstehen im allgemeinen bezüglich der Stellung der Nitrogruppe zur Seitenkette W¹-SO₂-CH₂-CH₂-Q¹ Isomerengemische.

Eine wichtige und spezielle Variante zur Herstellung von Verbindungen der Formel (38) oder (35) besteht in der radikalisch katalysierten Addition von 2-Mercaptoethanol an Styrole oder Allylbenzole der Formel 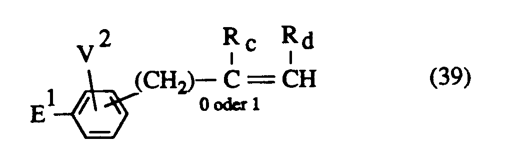
worin
- E¹=: H, NO₂,
- R_{c}, R_{d}=: H, C₁-₂-Alkyl, und
- V²: die oben angegebene Bedeutung hat,
der nachfolgenden Oxidation der entstandenen Sulfide der Formel 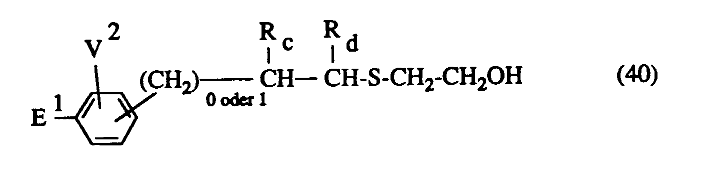
mit den angegebenen Bedeutungen für E¹, V², R_{c}, R_{d} zu Sulfonen der Formel 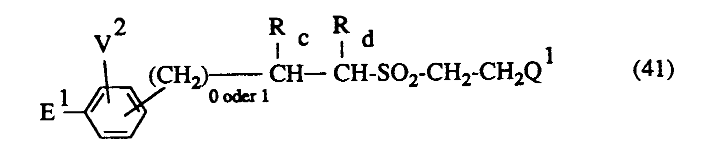
worin
E¹, V2, R_{c}, R_{d} die oben angegebene Bedeutung haben, und
- Q¹ =: OH, Cl
und gegebenenfalls anschließender Nitrierung, das heißt, mit der Überführung von E¹=H zu E¹=NO₂ und somit Umwandlung zu Verbindungen der Formel (35).

In einer weiteren bevorzugten Ausführungsform betrifft die Erfindung ein Verfahren zur Herstellung von Aminen gemäß Anspruch 11 (mit W=C₂H₄), dadurch gekennzeichnet, daß man an Ethenylaromaten der Formel (33a) 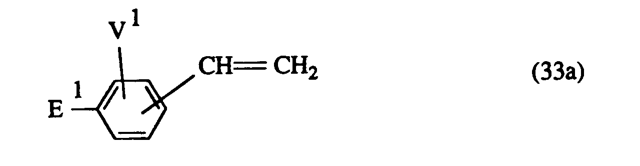
worin
- E¹ =: H, NO₂ oder Acylamino, und
- V¹: die unter Formel (33) angegebene Bedeutung hat,
2-Mercaptoethanol zu Sulfiden der Formel (34a) 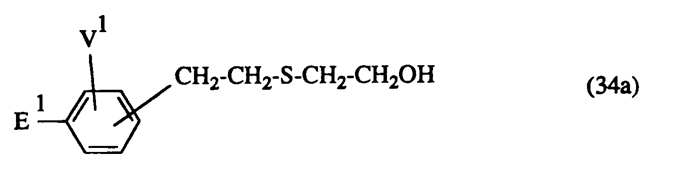
radikalkatalysiert addiert,
diese zu Sulfonen der Formel (35a) 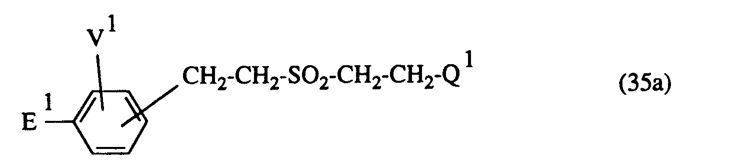
worin

Q¹ die unter Formel (41) angegebene Bedeutung hat, oxidiert und anschließend, wenn E¹=H zu E¹=NO₂ nitriert, die Nitrognuppe E¹ reduziert bzw. die Acylaminogruppe E¹ verseift, gegebenenfalls die entstandenen Aminoverbindungen N-alkyliert und/oder die OH-Gruppe Q¹ in eine OSO₃H-Gruppe umwandelt und gegebenenfalls im Phenylkern an Stelle von V¹=H eine SO₃H-Gruppe einführt.

Besonders geeignete Amine der Formel (30) zur Umsetzung mit 2,4,6-Trichlor- oder 2,4,6-Trifluortriazin- bzw. mit einem Vorkondensationsprodukt der Farbbasen der Formel (29) mit dem obengenannten Triazin, sind beispielsweise:

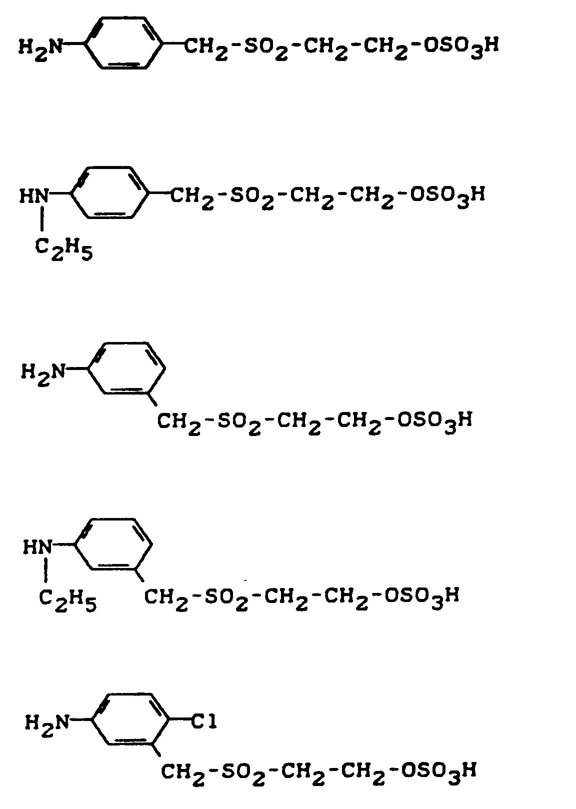

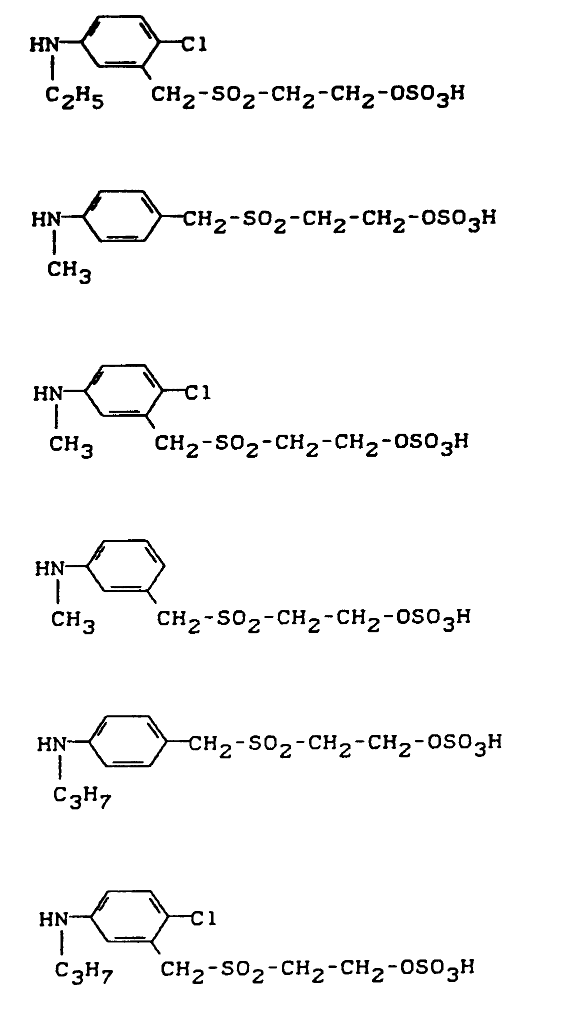

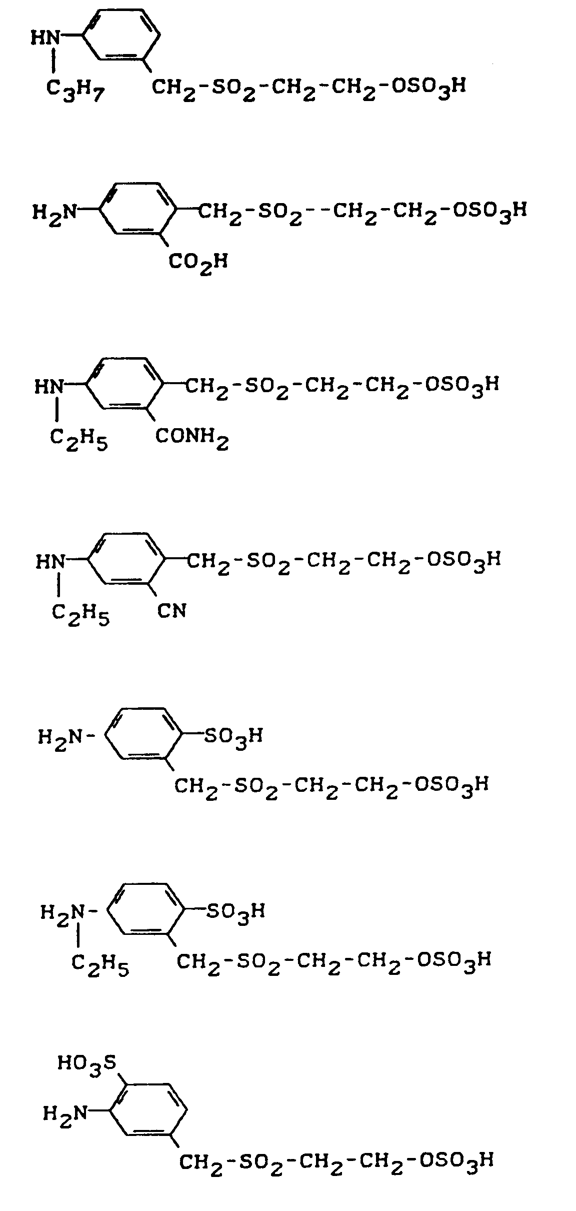

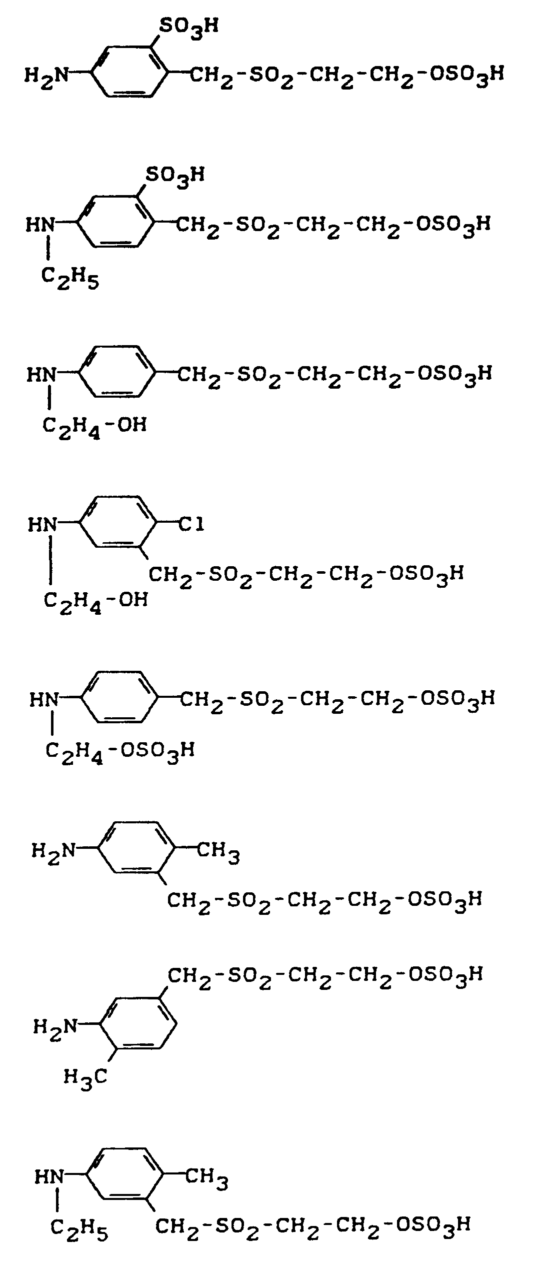

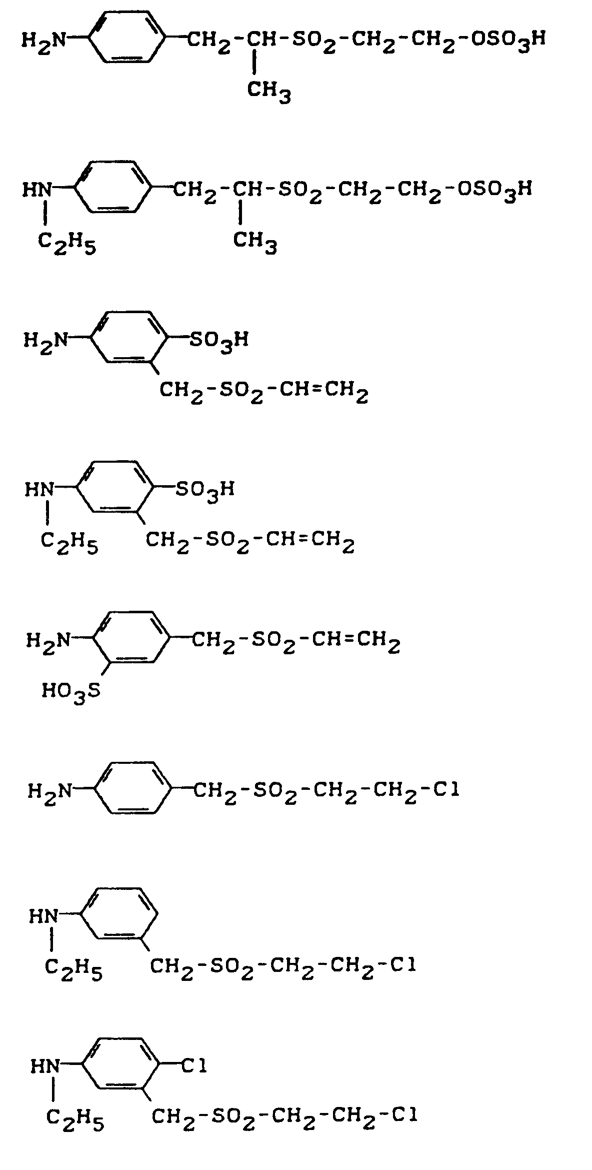

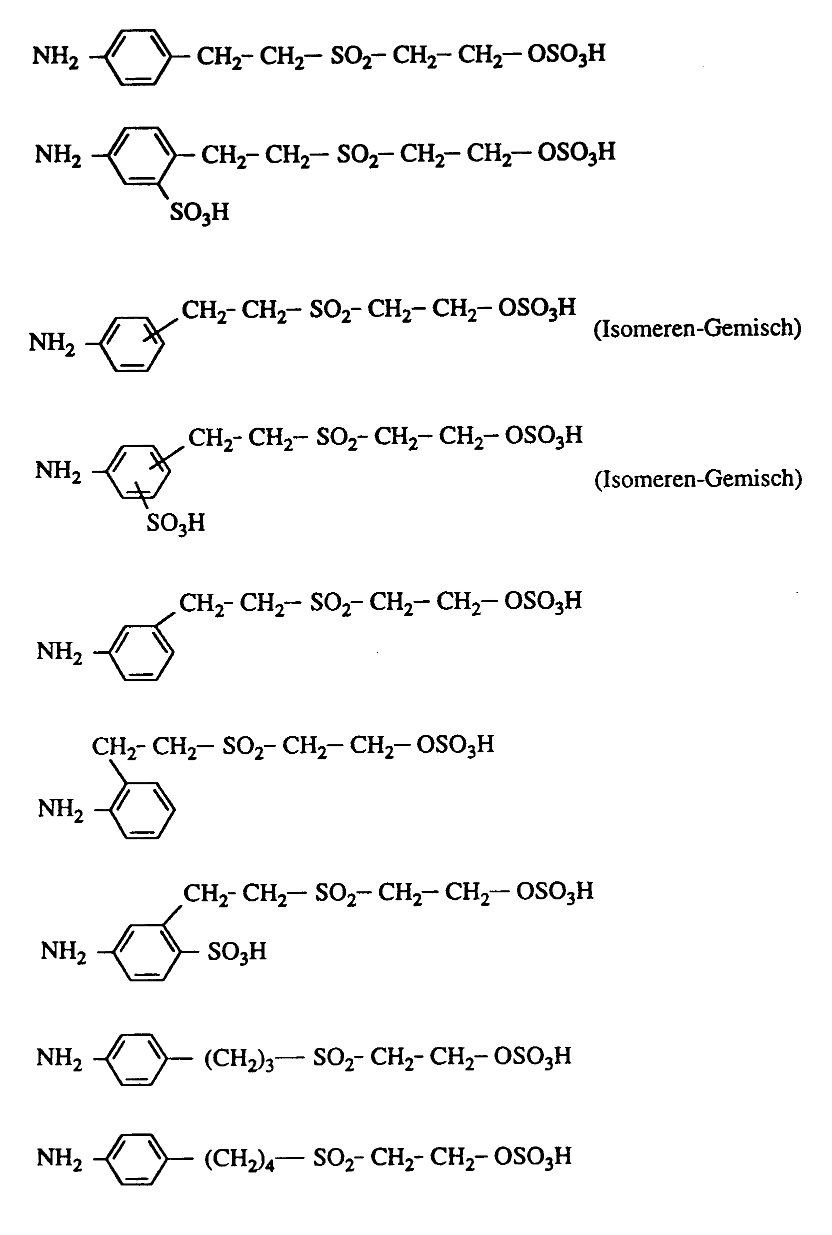

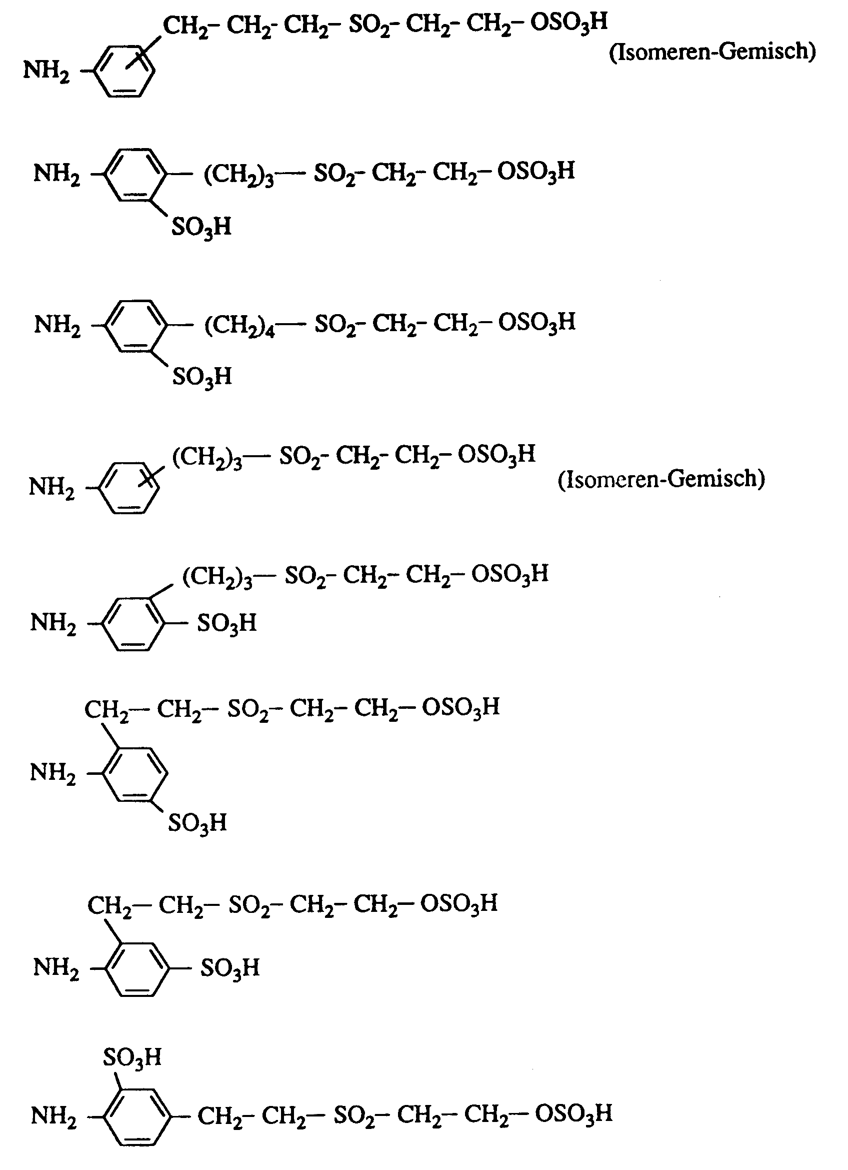

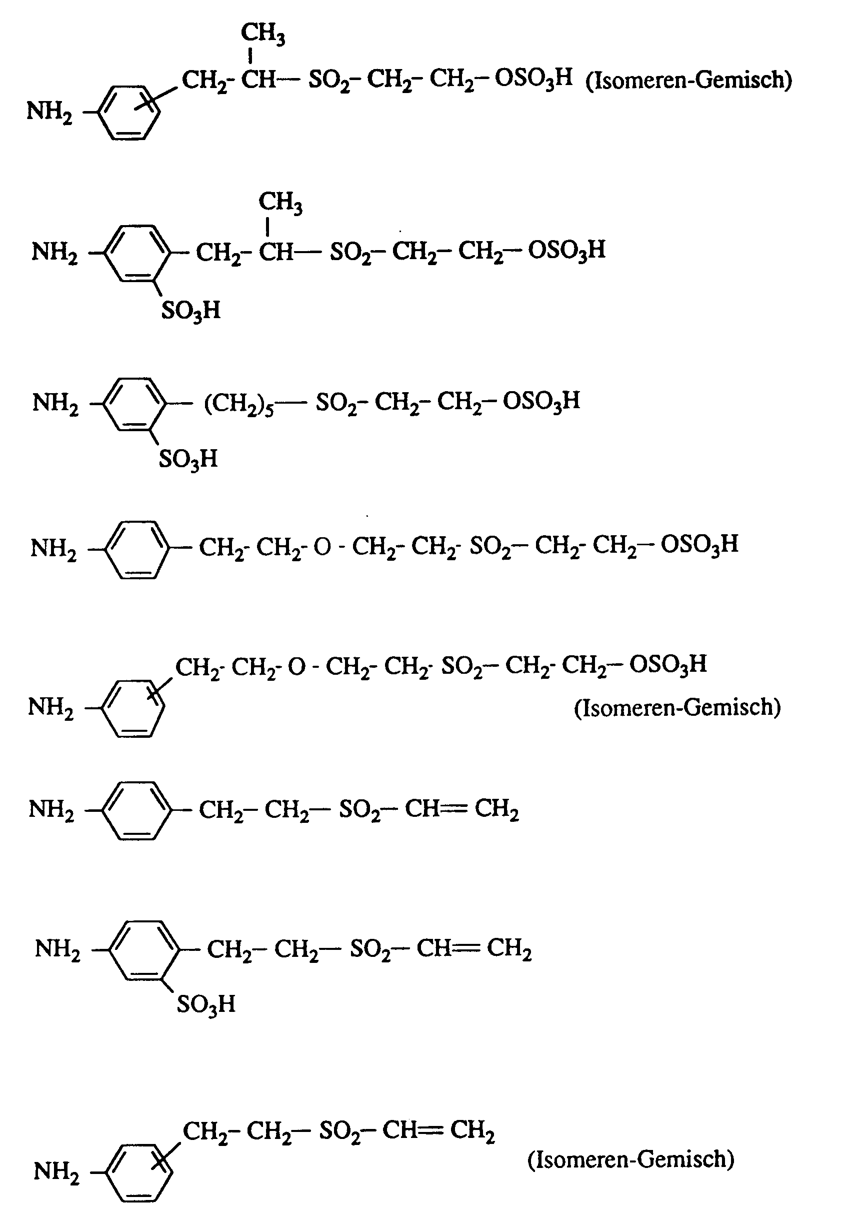

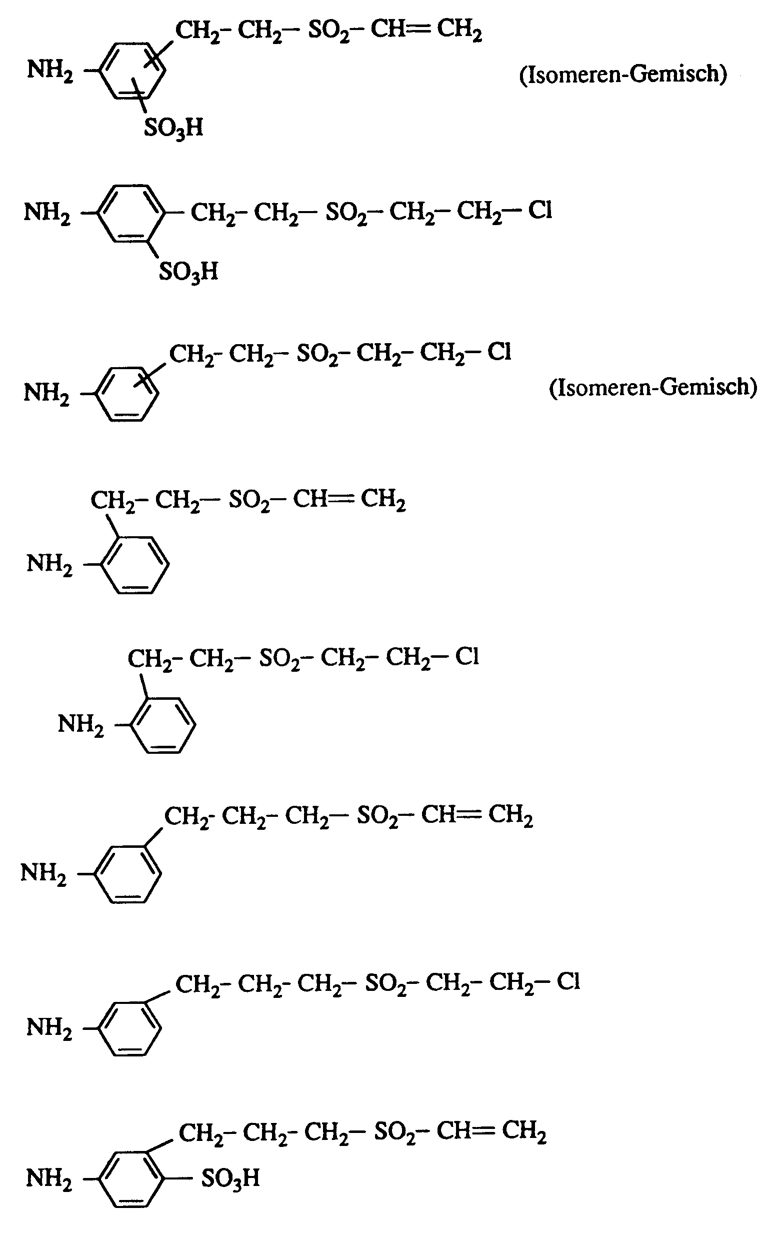

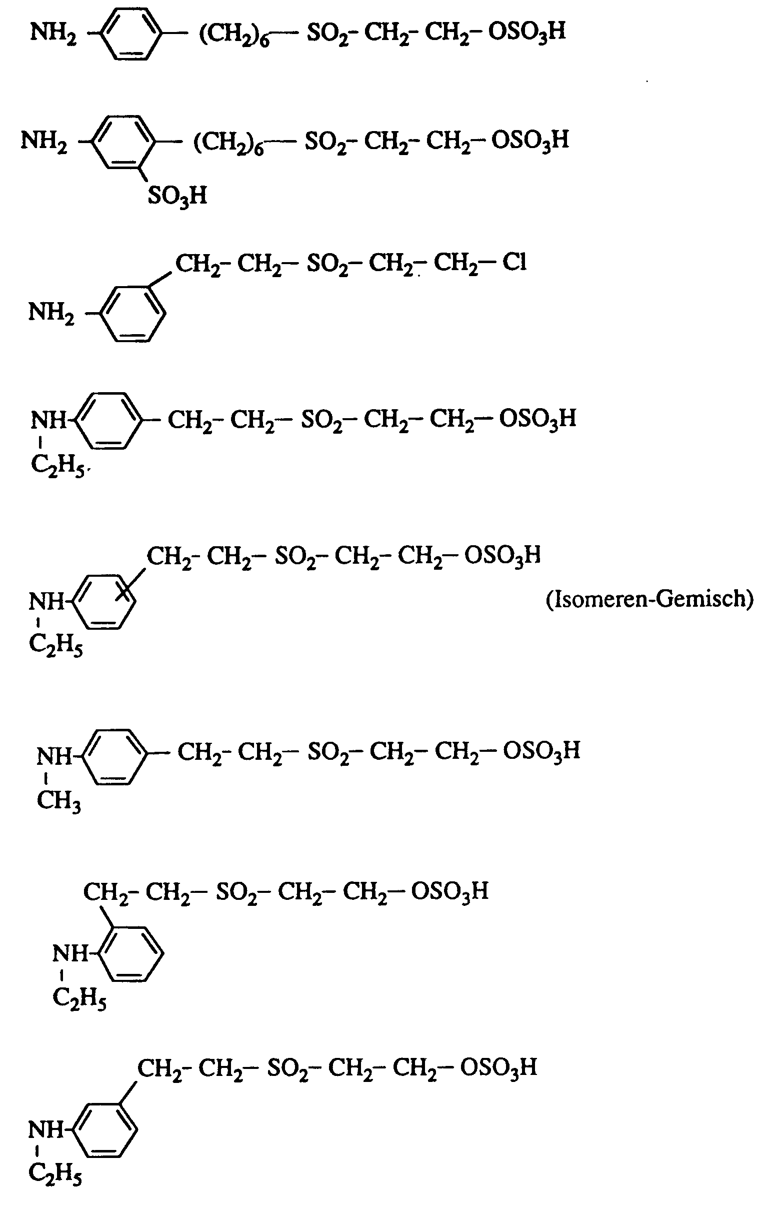

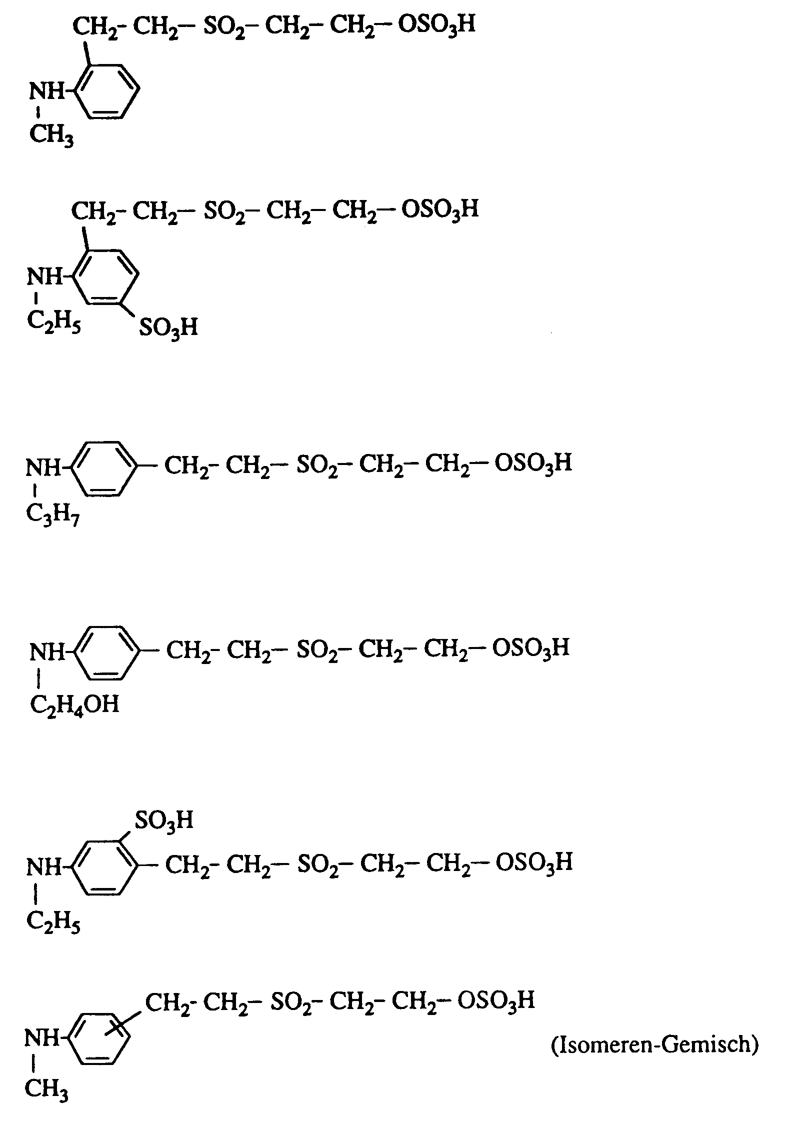

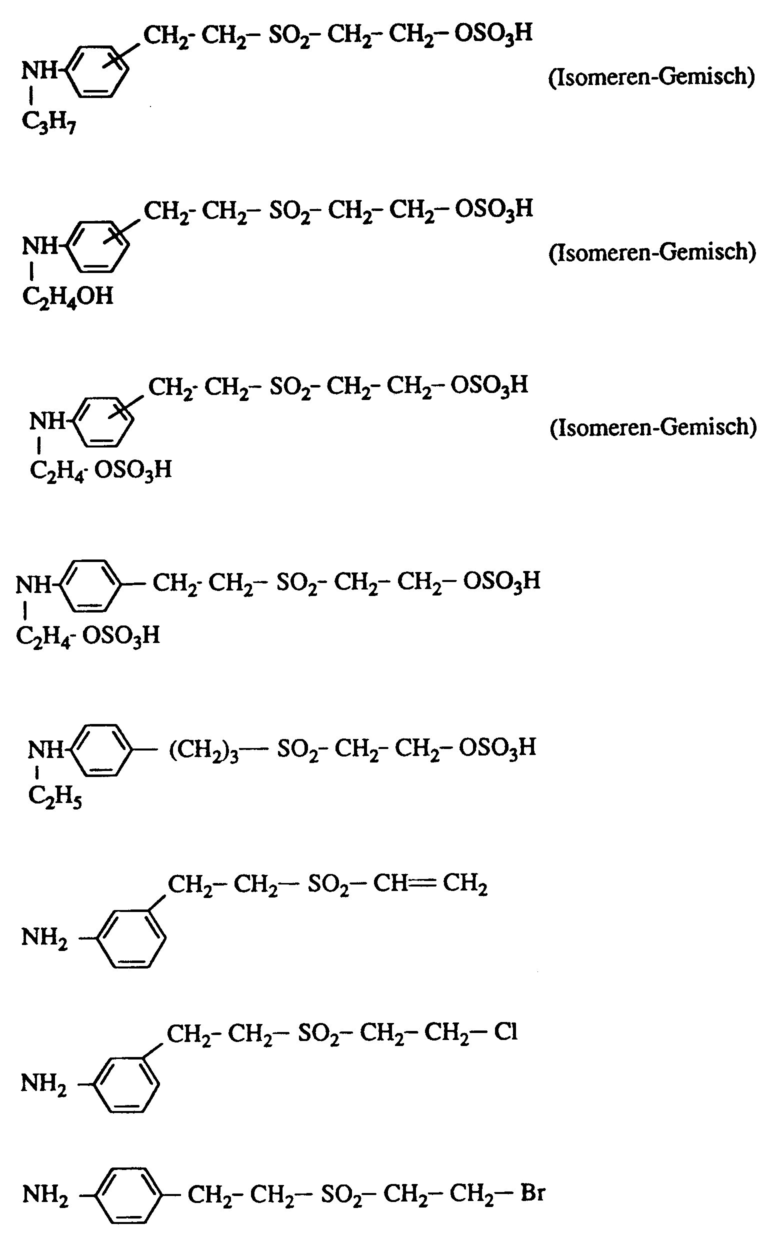

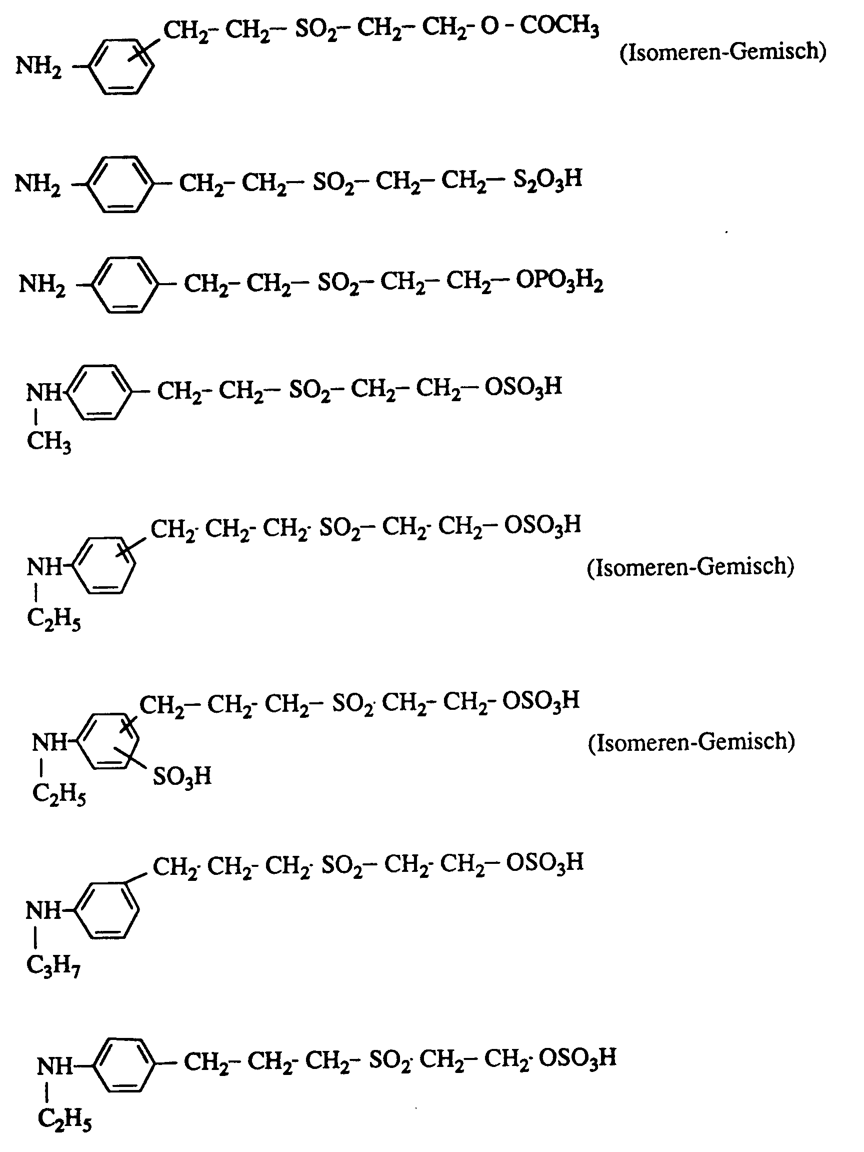

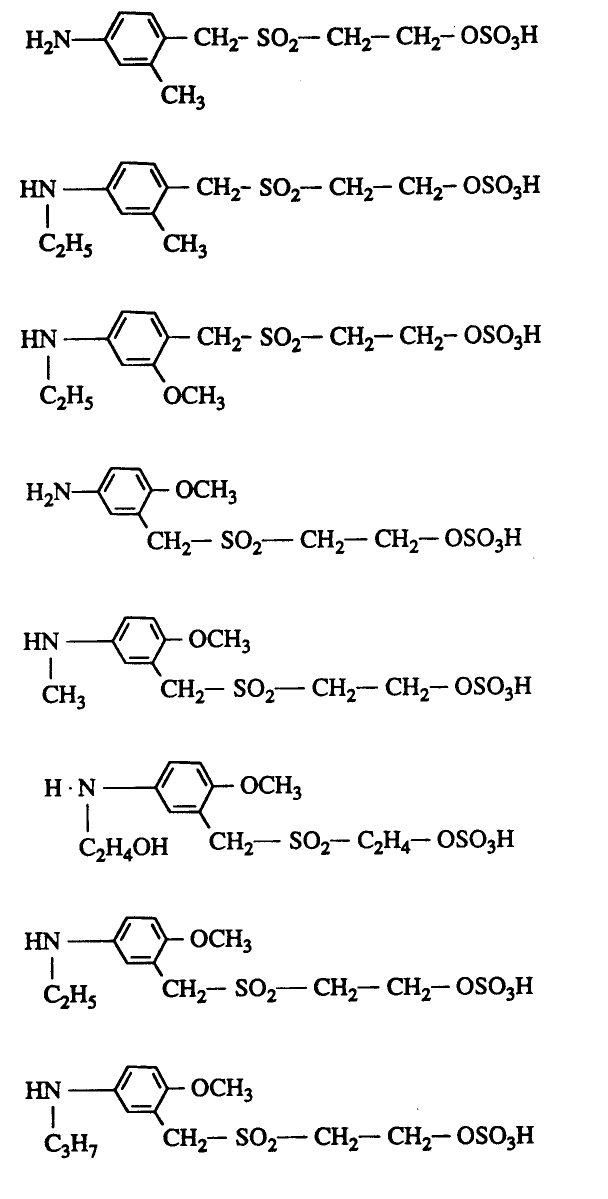

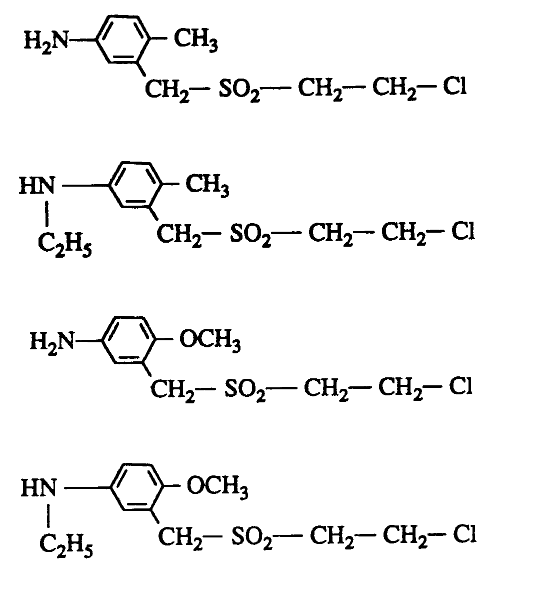

Die erfindungsgemäßen Farbstoffe eignen sich hervorragend zum Färben und Bedrucken von natürlichen und synthetischen hydroxyl- oder amidgruppenhaltigen Materialien, insbesondere solche aus Cellulose und Polyamiden. Farbstoffgemische aus Farbstoffen der Formel (1) besitzen verbesserte Löslichkeitseigenschaften.

Sowohl die Farbstoffe als auch die Farbstoffgemische sind besonders geeignet zum Färben von Cellulosematerialien in Auszieh-, Klotz-, Kaltverweil- und Kontinueverfahren, sowie im Druck.

Die erfindungsgemäßen Farbstoffe, insbesondere der allgemeinen Formel (1) eignen sich hervorragend in Mischungen mit anderen Farbstoffen, insbesondere für Trichromien.

Die Reaktivfarbstoffe der Formel (1) zeichnen sich durch hohe Reaktivität und ausgezeichnetes Fixiervermögen aus. Aufgrund ihrer Bifunktionalität ergeben sie auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht-und Naßechtheiten.

Die angegebenen Farbstoff-Formeln sind die der freien Säuren. Bei der Herstellung werden im allgemeinen die Salze erhalten, insbesondere die Alkalisalze wie Natrium-, Kalium- oder Lithiumsalze. Die Farbstoffe können auch als konzentrierte Lösungen eingesetzt werden.

### Beispiel 1

65 g des Natriumsalzes der Verbindung der Formel 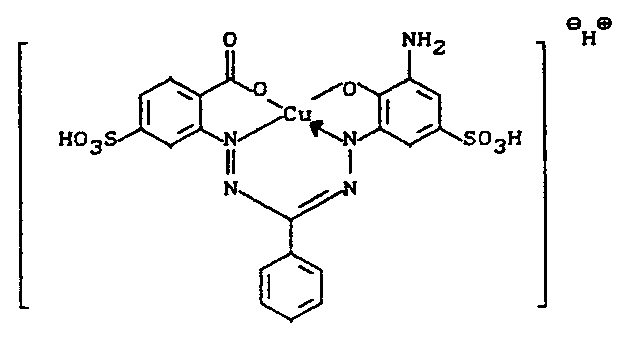
werden in 200 ml Wasser bei pH 7,5 gelöst. Man kühlt auf 0°C ab und läßt in 20 Minuten 9 g Trifluortriazin eintropfen und hält dabei den pH-Wert durch Zugabe von Sodalösung bei 6-7. Nach beendeter Umsetzung wird eine neutralisierte Lösung von 17,5 g 4-Aminobenzyl-β-sulfatoethylsulfon in 100 ml Wasser zugetropft und der pH-Wert mit Sodalösung bei 7 gehalten. Nach beendeter Kondensation wird der Farbstoff entweder durch Eindampfen bzw. Sprühtrocknung oder durch Aussalzen isoliert. Der so erhaltene Farbstoff der Formel 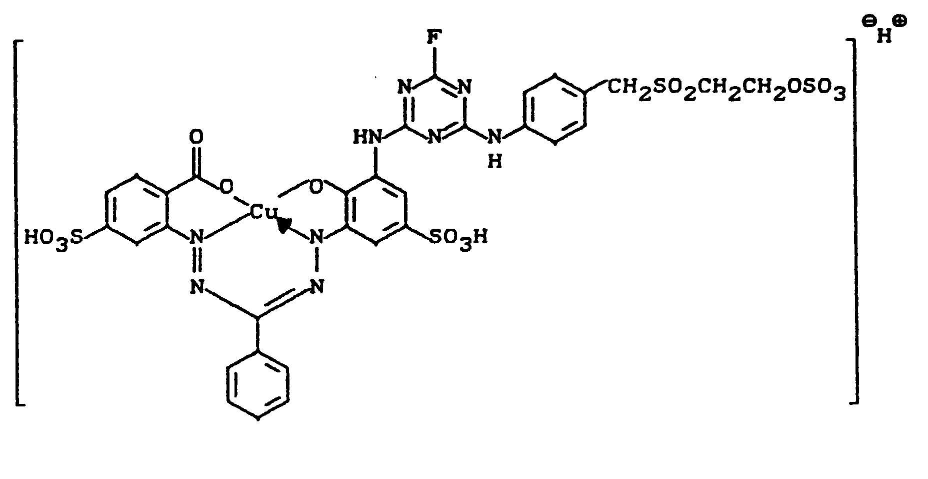
λₘₐₓ = 611 nm
färbt Baumwolle in echten blauen Tönen.

### Beispiel 2

Einen weiteren wertvollen Farbstoff erhält man, wenn man anstelle der in Beispiel 1 eingesetzten Farbbase das Natriumsalz der Verbindung der Formel 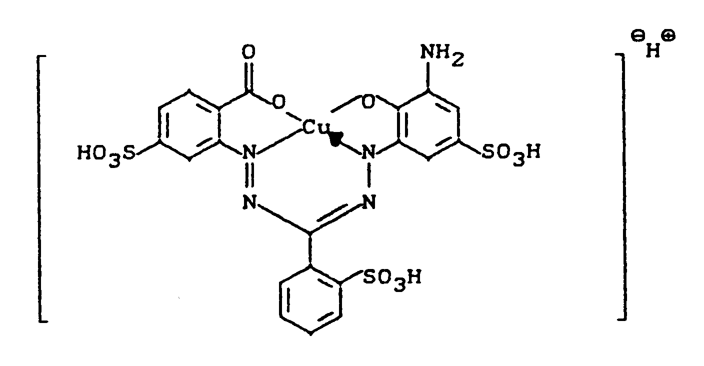
einsetzt und im übrigen analog verfährt. Der so erhaltene Farbstoff der Formel 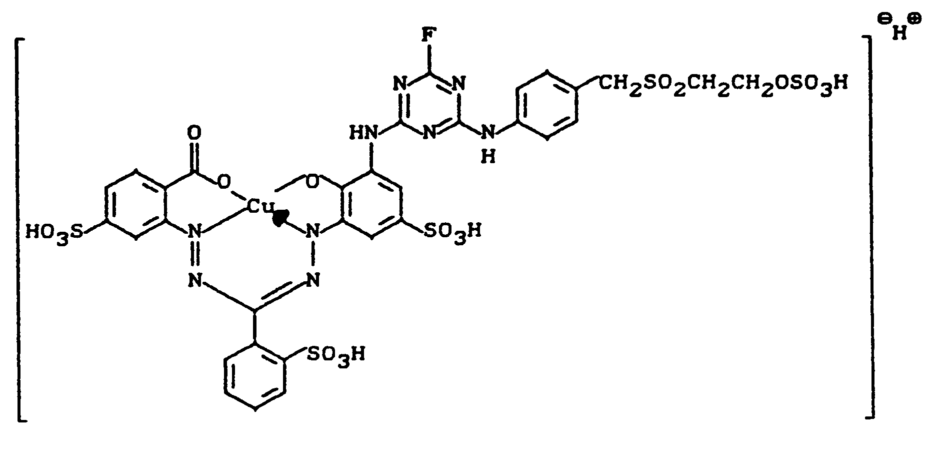
λₘₐₓ = 589 nm
färbt Baumwolle in echten blauen Tönen.

### Beispiel 3

Arbeitet man analog dem Beispiel 1 und setzt anstelle von 4-Aminobenzyl-(β-sulfatoethyl)-sulfon das 4-[N-ethyl]aminobenzyl-(β-sulfatoethyl)-sulfon ein, erhält

man den Farbstoff der Formel 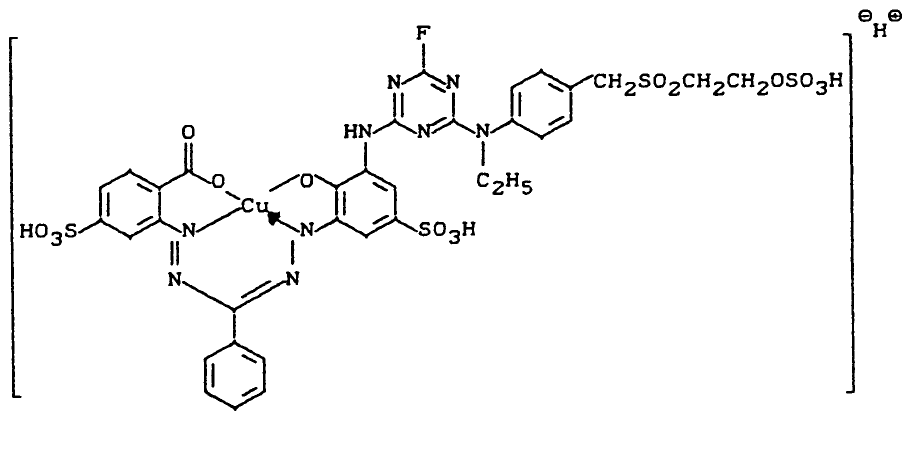
λₘₐₓ = 612 nm
der Baumwolle nach den für Reaktivfarbstoffe üblichen Applikationsmethoden in blauen Tönen färbt.

### Beispiel 4

Arbeitet man analog dem Beispiel 3 und setzt anstelle des 2,4,6-Trifluortriazin das 2,4,6-Trichlortriazin ein, erhält man einen Farbstoff der Formel 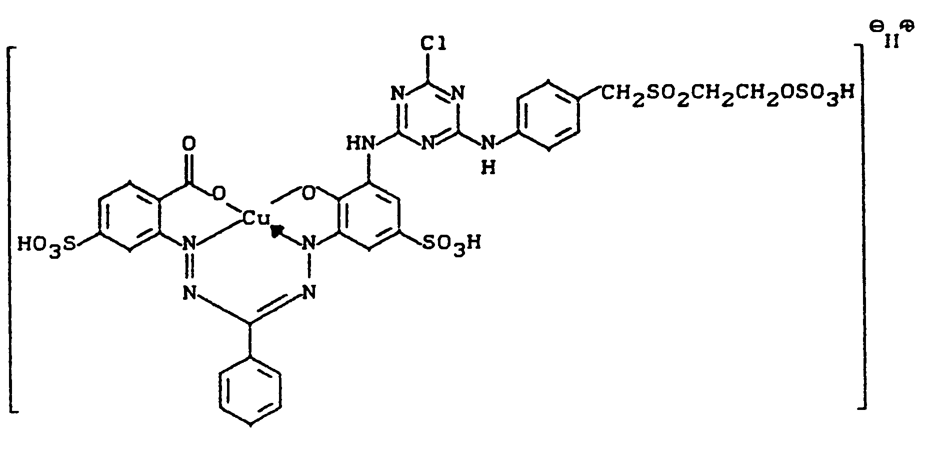
λₘₐₓ = 613 nm
der Baumwolle nach den für Reaktivfarbstoffen üblichen Färbemethoden in blauen Tönen färbt.

### Beispiele 5 bis 41

Weitere wertvolle erfindungsgemäße Farbstoffe erhält man nach den Angaben des Beispiels 1 durch Umsetzung der in Tabelle 1 angegebenen Komponenten.

Die erhaltenen Farbstoffe besitzen sehr gute faserreaktive Farbstoffeigenschaften und liefern nach den üblichen Färbe- und Druckverfahren farbstarke echte Färbungen und Drucke mit den in dem jeweiligen Tabellenbeispiel angegebenen Farbton auf Baumwolle.

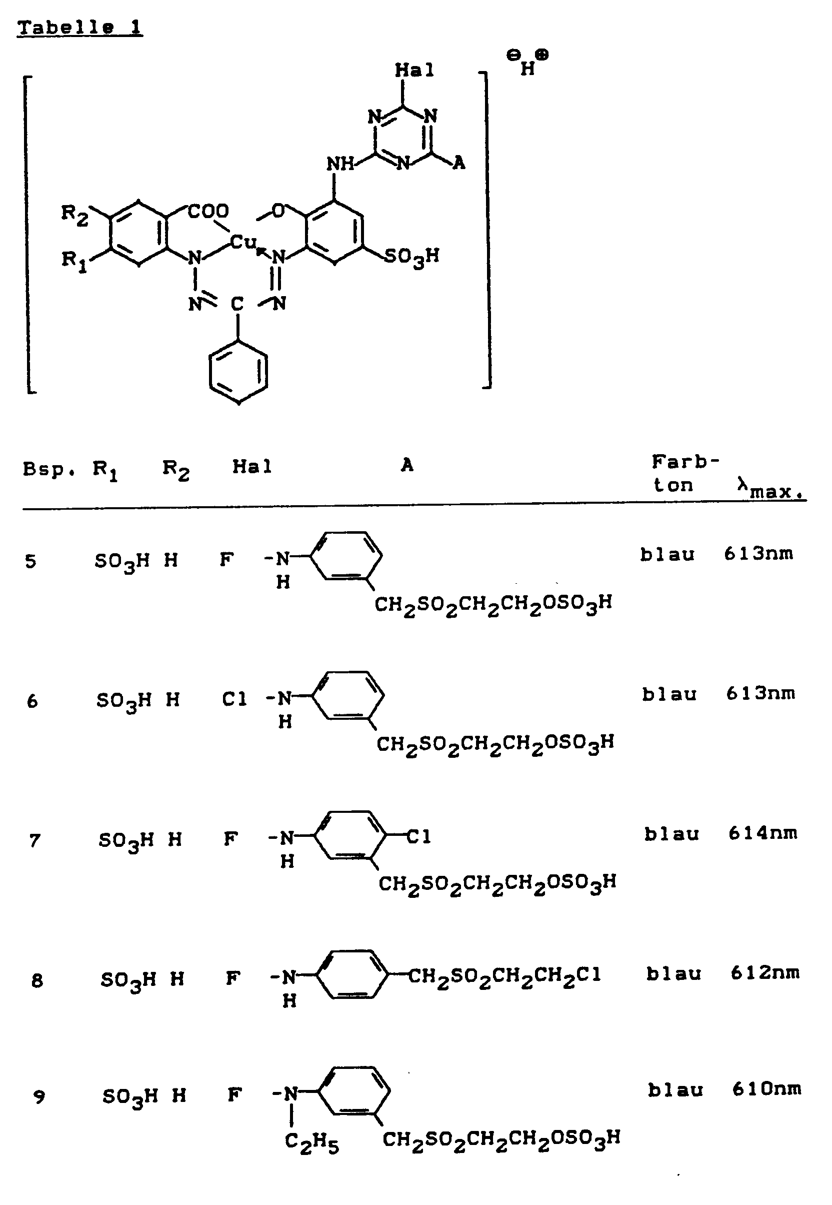

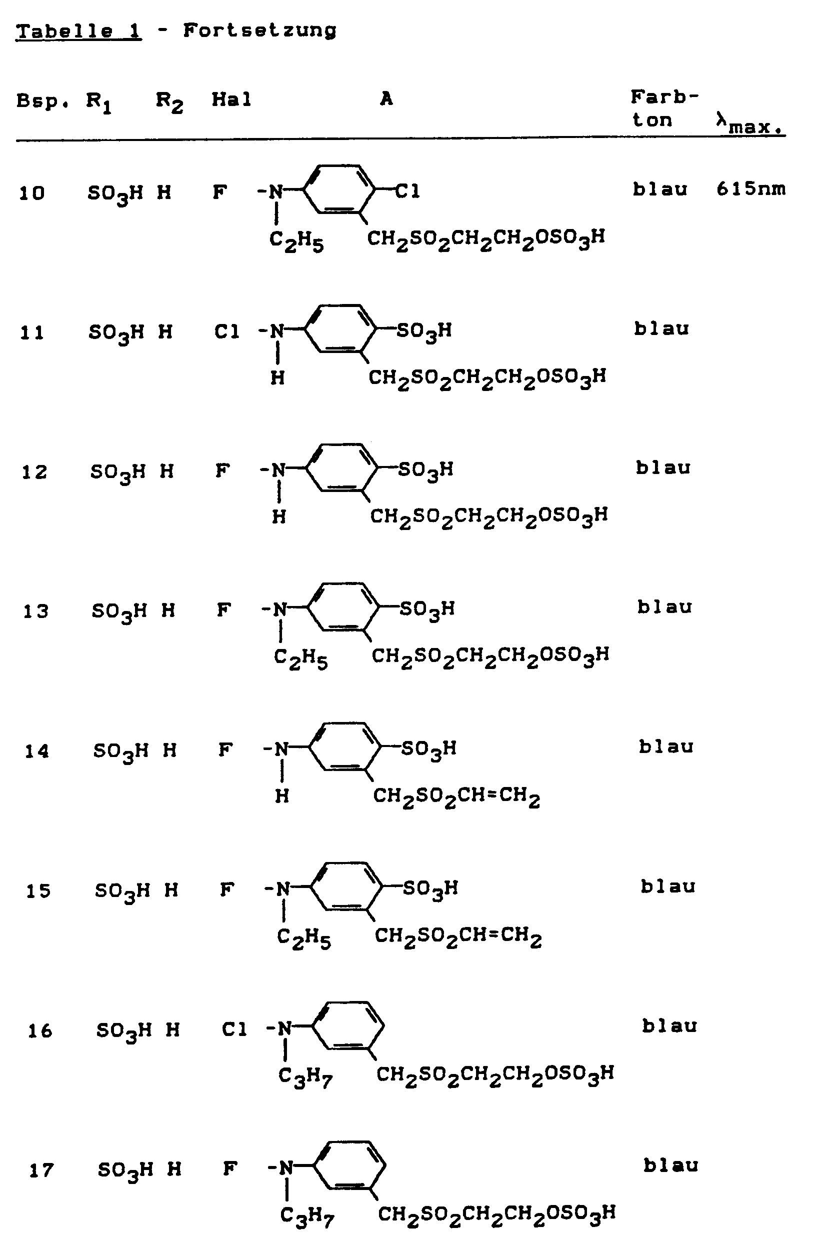

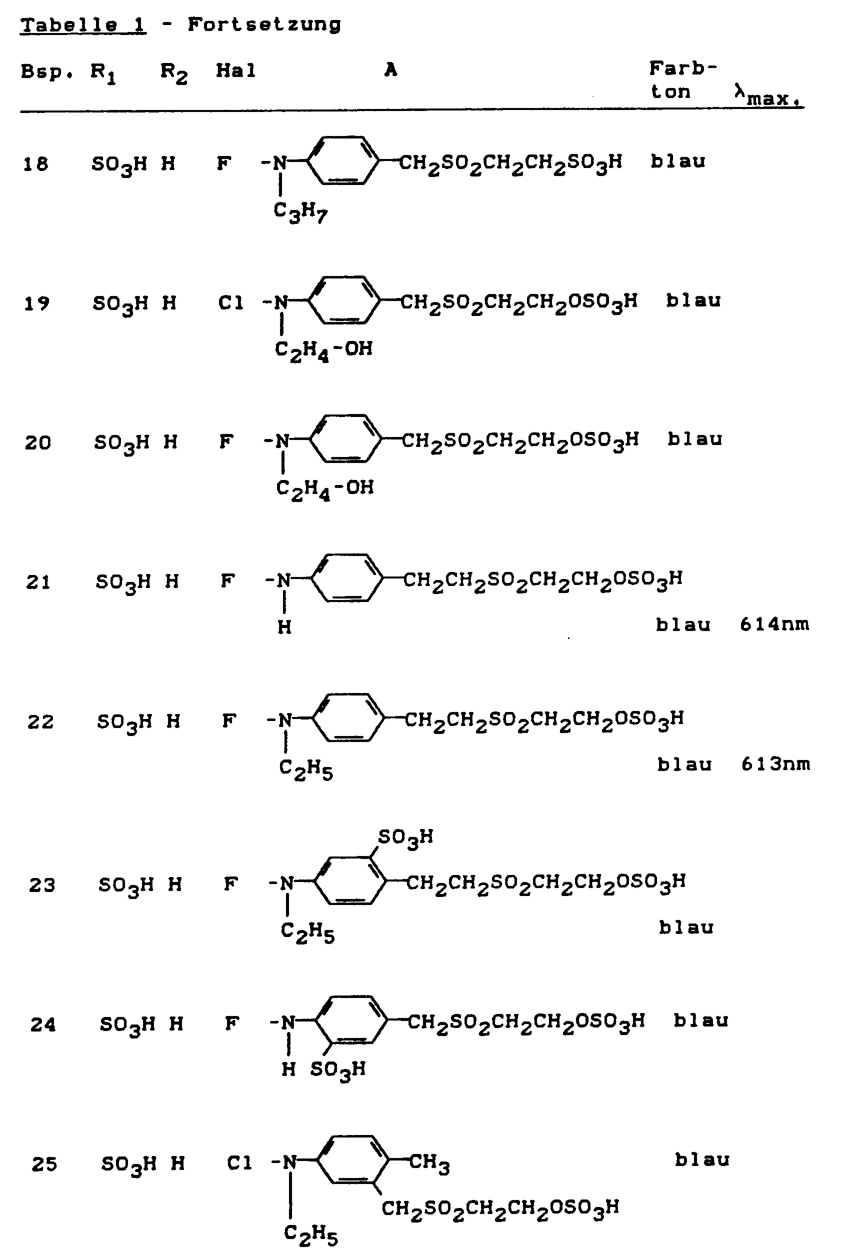

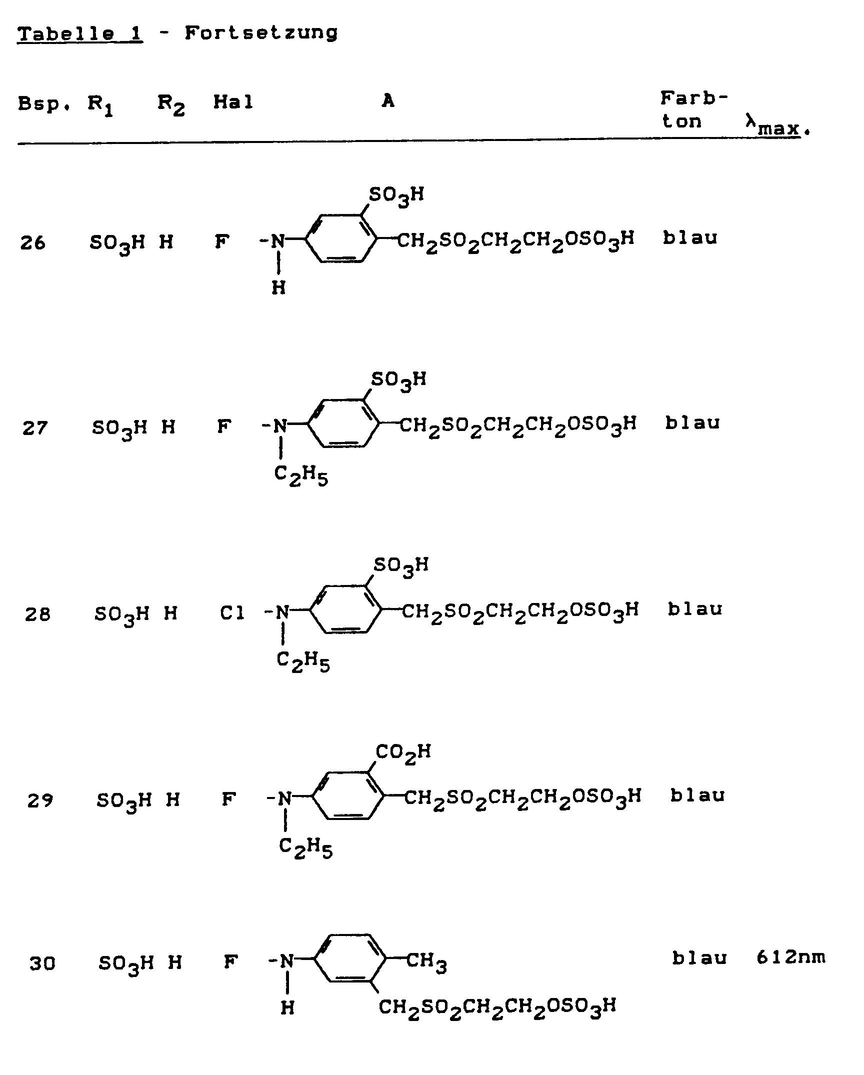

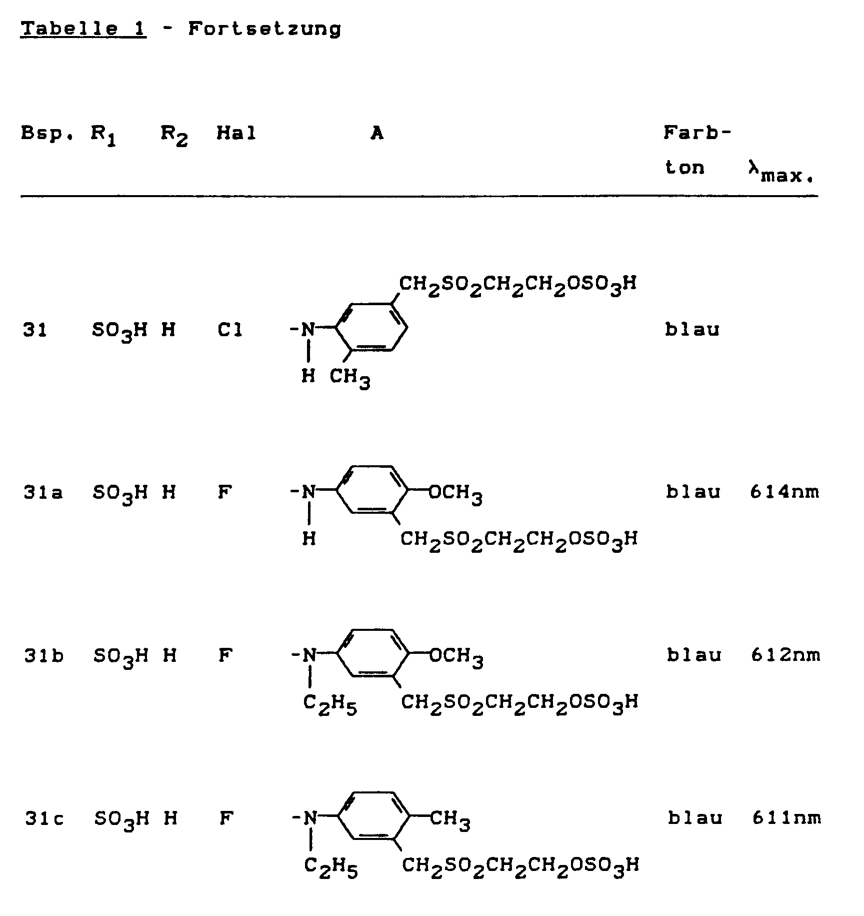

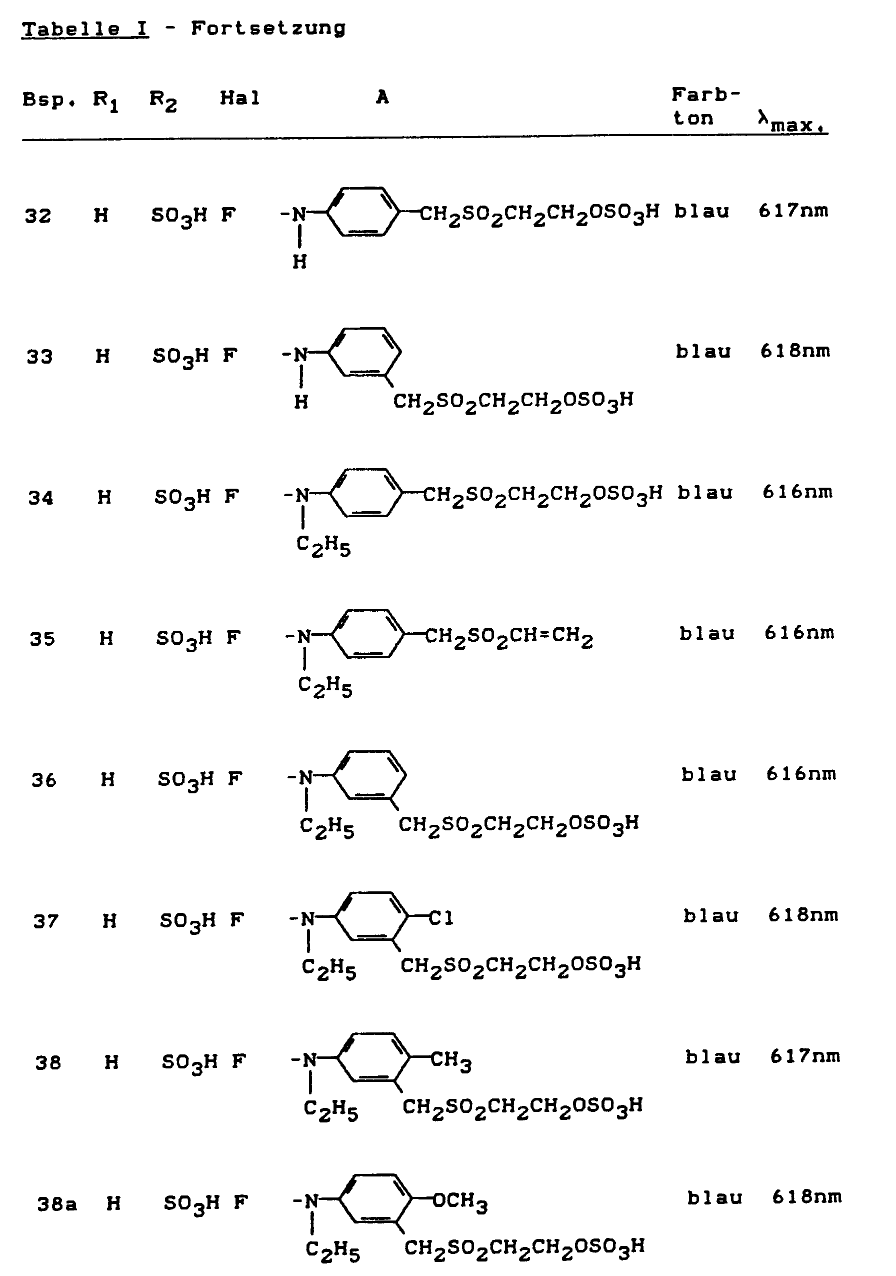

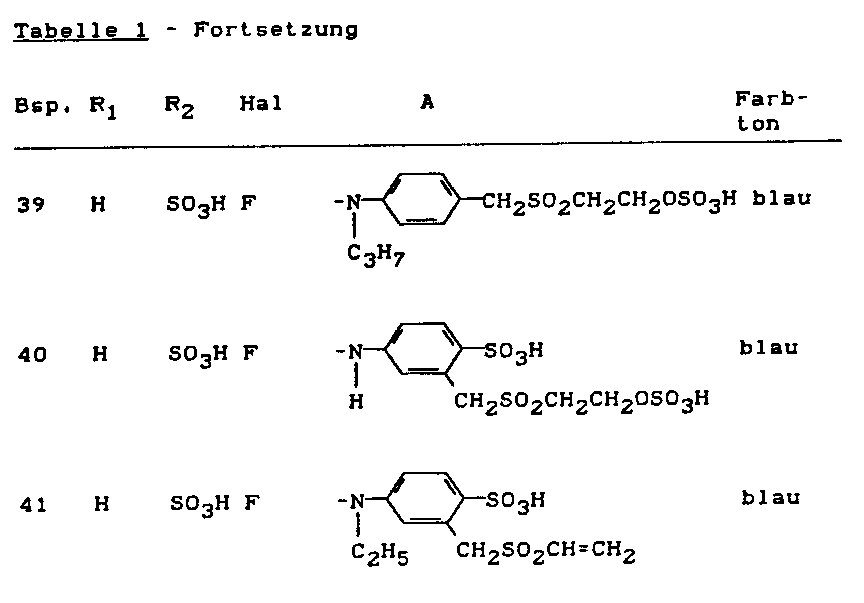

### Beispiele 42 bis 50

Weitere erfindungsgemäße Farbstoffe der allgemeinen Formel 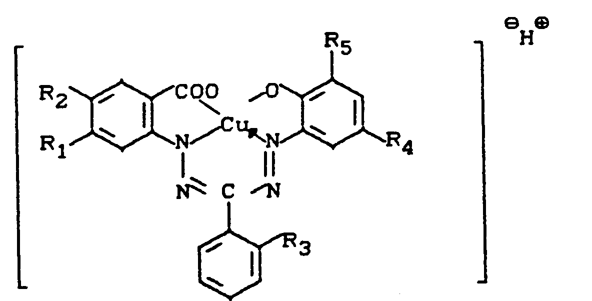
lassen sich analog dem Ausführungsbeispiel durch Umsetzung der in der Tabelle 2 angegebenen Komponenten herstellen.

Die erhaltenen Farbstoffe besitzen sehr gute faserreaktive Farbstoffeigenschaften und liefern nach den üblichen Färbe- und Druckverfahren farbstarke echte Färbungen und Drucke mit dem im jeweiligen Tabellenbeispiel angegebenen Farbton auf Baumwolle.

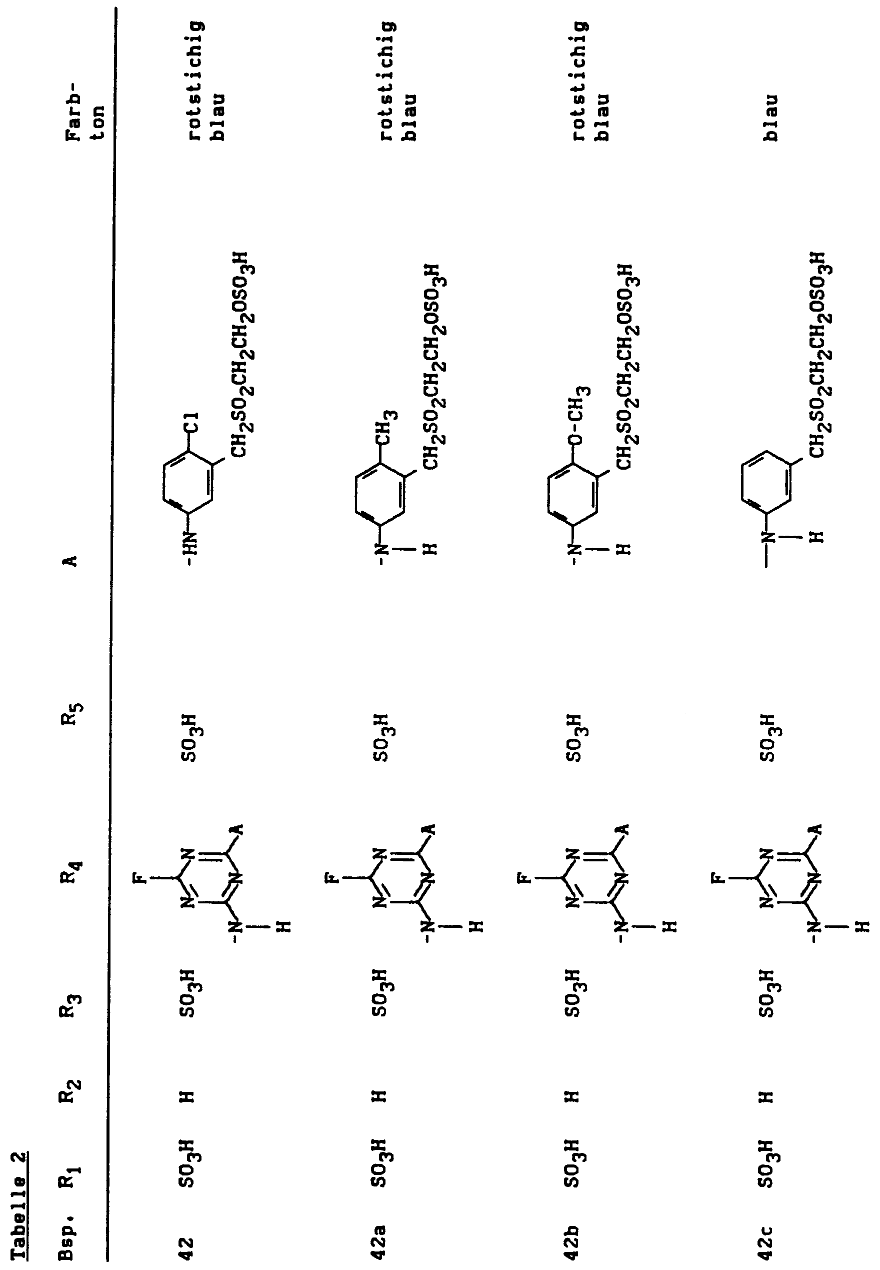

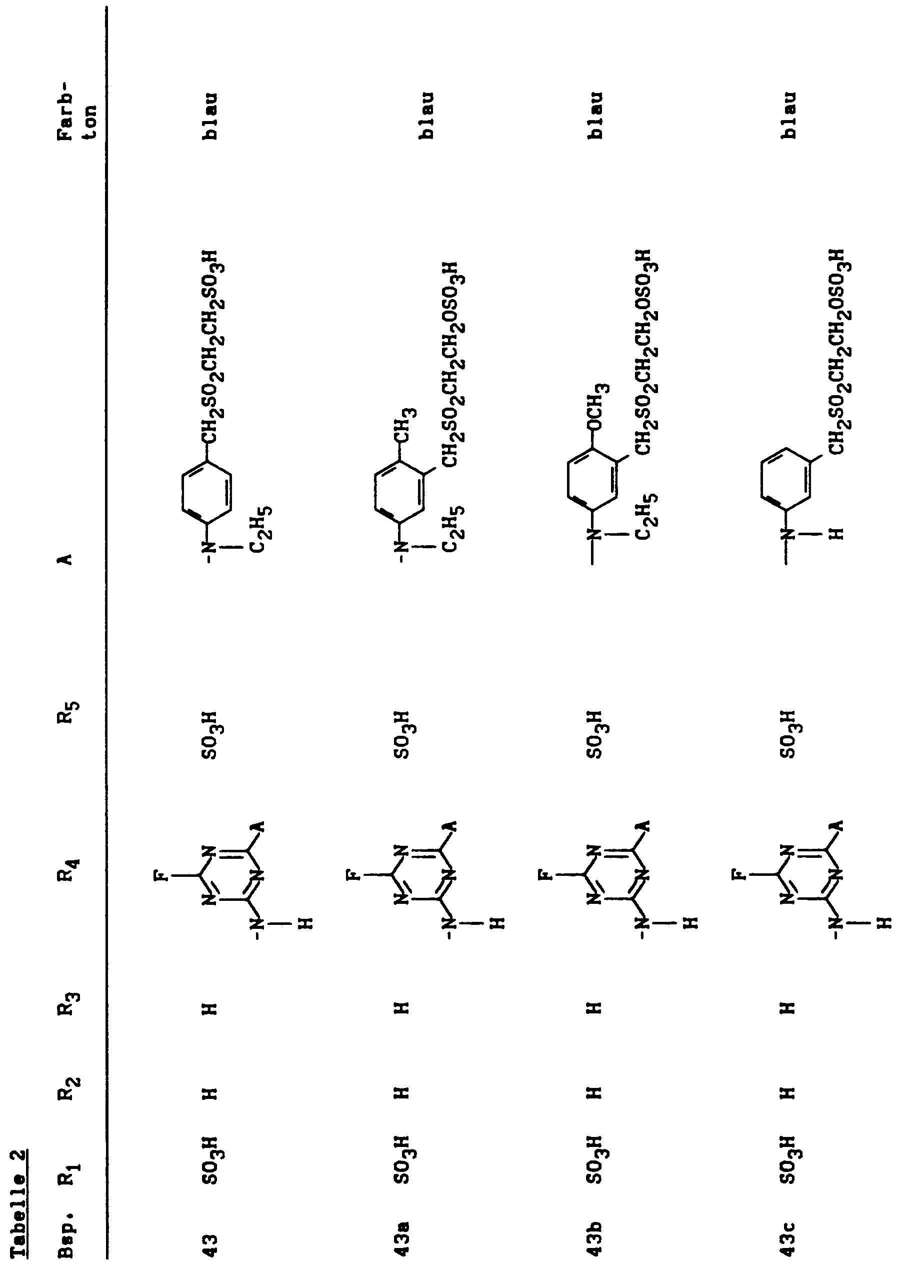

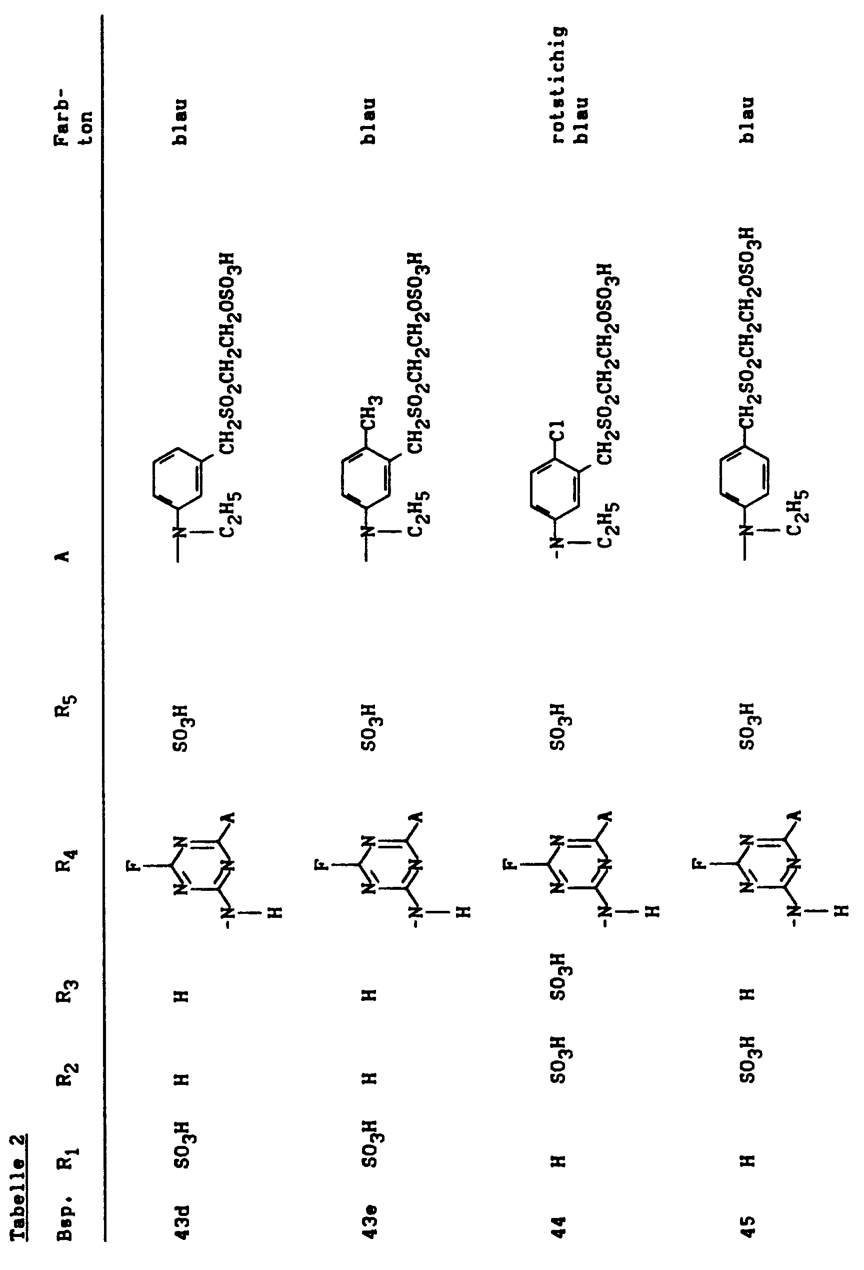

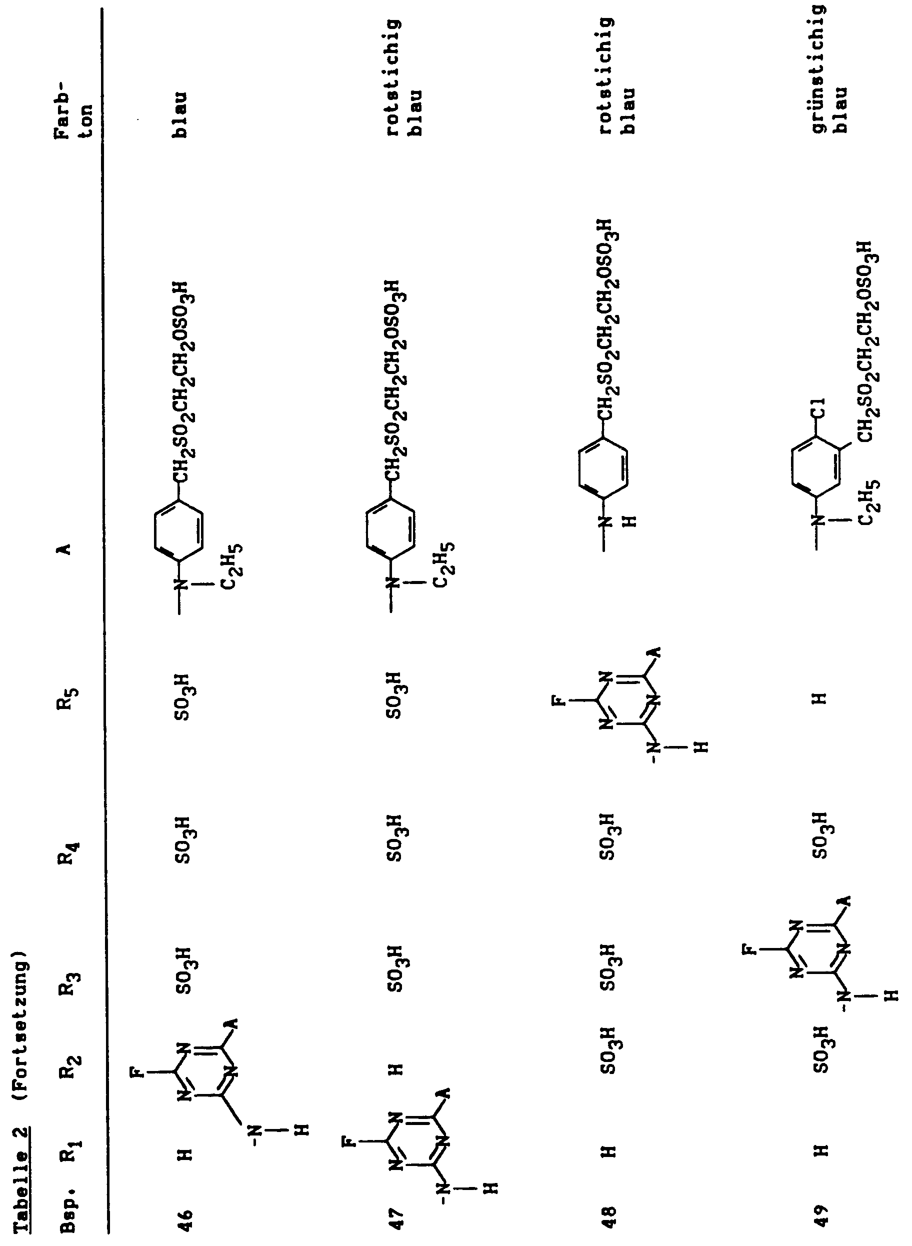

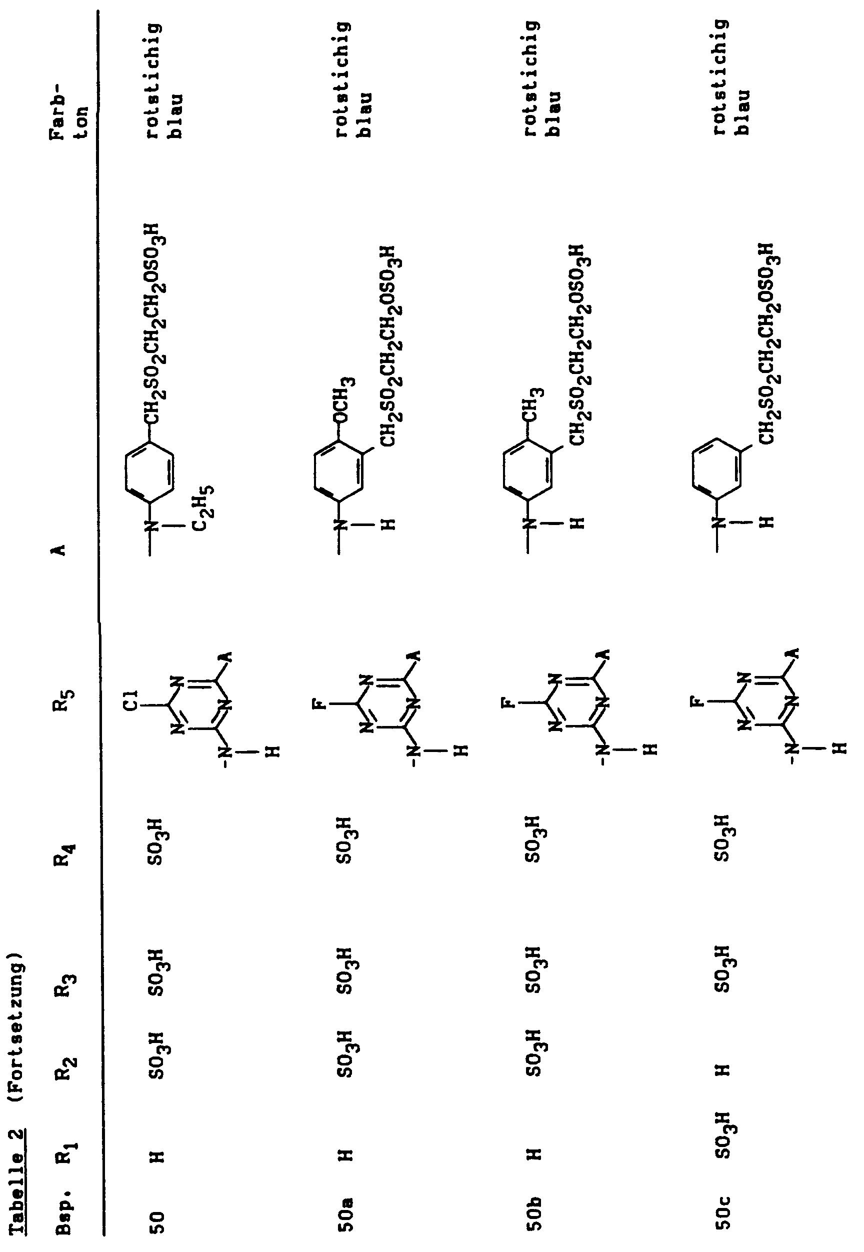

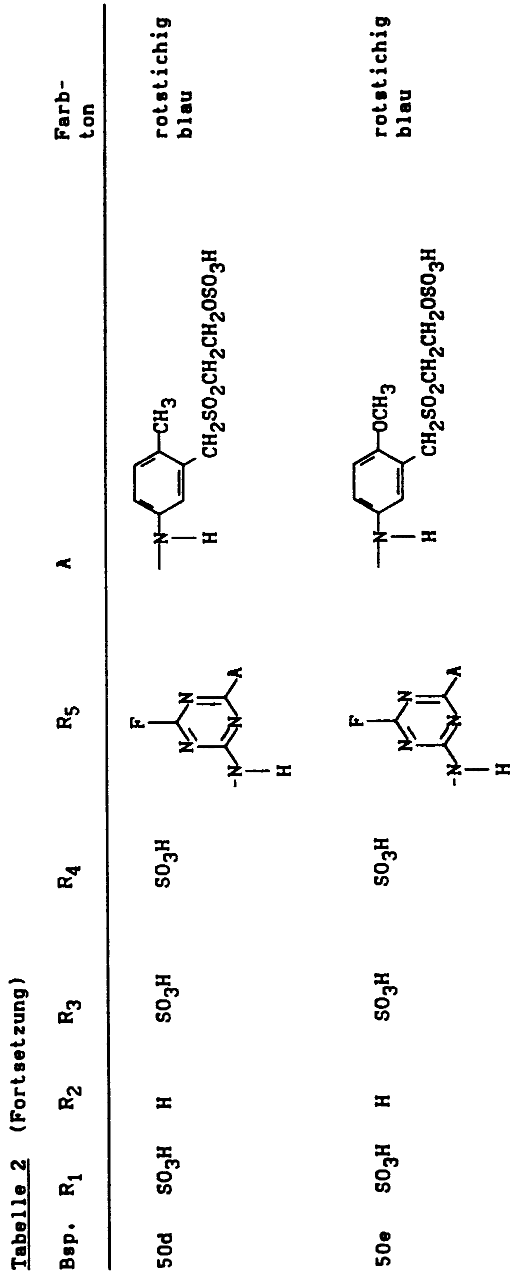

### Beispiel 51

32,9 g Kupferphthalocyanin-Verbindung der Formel 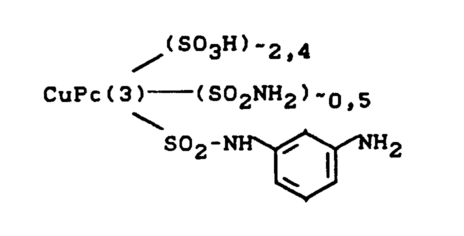
hergestellt durch Kondensation von Kupferphthalocyanintetrasulfochloridsulfonsäure mit 3-Aminoacetanilid und Ammoniak sowie nachfolgende Verseifung der Acetylaminogruppe in verdünnter Natronlauge bei 75°C, werden in 420 ml Wasser bei pH 7 gelöst. Man tropft die Lösung in 30 Minuten zu einer Suspension, die man aus einer Lösung von 5,9 g Cyanurchlorid in 50 ml Aceton und 50 g Eis hergestellt hat, und hält im Reaktionsgemisch die Temperatur auf 0 bis 3°C, den pH-Wert durch Zudosieren von 2n Sodalösung auf 4,0 bis 4,5. Nach 30 Minuten seit Ende der Zugabe wird die entstandene Lösung geklärt und mit 10,7 g 4-Aminobenzyl-β-sulfatoethylsulfon versetzt. Durch weitere Sodazugabe wird die Kondensation bei pH 6,0 bis 6,5 und bei 15 bis 23°C durchgeführt. Der erhaltene Farbstoff wird entweder durch Eindampfen bzw. Sprühtrocknung oder durch Aussalzen mit 70 g Natriumchlorid und Filtration aus der Lösung isoliert. Er entspricht der Formel 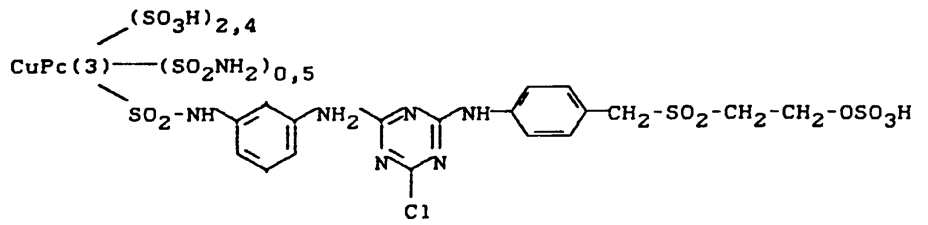
λmax = 668 nm, 629 nm in H₂O
und färbt Baumwolle aus langer Flotte oder nach dem bekannten Klotzverfahren in türkisblauen Tönen.

Einen ähnlichen Farbstoff erhält man, wenn man anstelle der eingangs eingesetzten Farbbase 33,9 g Kupferphthalocyaninverbindung der Formel 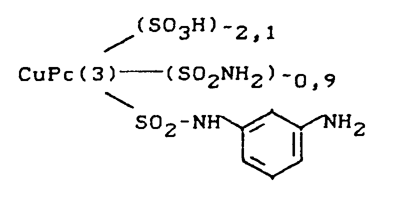
einsetzt und im übrigen analog verfährt. Der so erhaltene Farbstoff zeigt eine Absorption von λmax = 668 nm, 629 nm in H₂O.

### Beispiel 52

28,3 g Kupferphthalocyaninverbindung der Formel 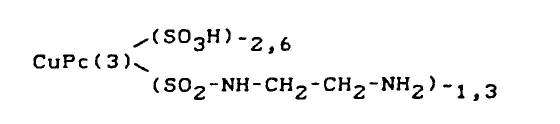
hergestellt durch Kondensation von Kupferphthalocyanintetrasulfochlorid/sulfonsäure mit Monoacetylethylendiamin und anschließende hydrolytische Abspaltung des Acetylrestes mit verdünnter Natronlauge bei 75°C, werden in 380 ml Wasser bei pH 8,5 gelöst. Die Lösung wird in 30 Minuten zu einer Suspension getropft, die durch Eingießen einer Lösung von 7,2 g Cyanurchlorid in 45 ml Aceton auf 45 g Eis erhalten wird. Man hält im Reaktionsgemisch den pH-Wert durch Zugabe von 2n Natronlauge auf 7,0 bis 7,5 und die Temperatur auf 0 bis 5°C, Nach 1-stündigem Nachrühren wird die Lösung geklärt und das Filtrat portionsweise mit 11,5 g 4-Aminobenzyl-β-sulfatoethylsulfon versetzt. Während des Einstreuens und danach hält man den pH-Wert in der Reaktionsmischung auf 6,0 bis 6,5 und steigert die Temperatur zunächst auf 20 bis 25°C und nach 2 Stunden auf 30°C.

Nach beendeter Kondensation wird der Farbstoff aus der Lösung mit Natriumchlorid ausgesalzen, abgesaugt und bei 50°C im Vakuum getrocknet. Er entspricht der Formel 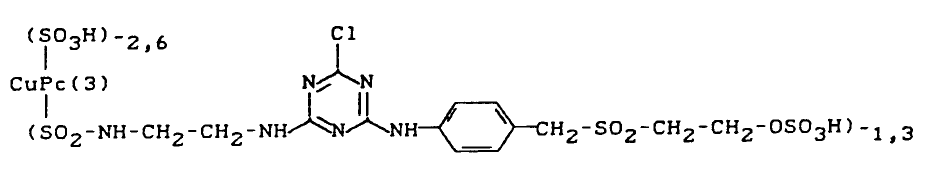
λmax = 668 nm, 629 nm in H₂O.
und gibt auf Baumwolle türkisblaue Färbungen und Drucke.

Ähnliche Farbstoffe werden erhalten, wenn man anstelle obiger Kupferphthalocyaninverbindung 28,4 g Kupferpthalocyaninverbindung der Formel 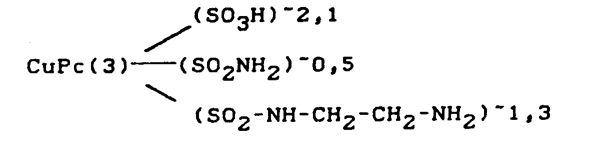
oder
33,7 g Kupferphthalocyaninverbindung der Formel 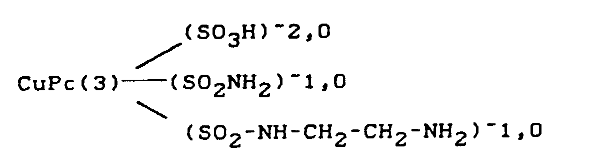
einsetzt.

### Beispiel 53

10,9 g 4-Aminobenzyl-β-sulfatoethylsulfon werden in 150 ml Wasser bei pH 5,5 gelöst. Man setzt 0,3 g Natriumfluorid zu der Lösung und kühlt auf 0 - 3°C ab. Unter gutem Rühren läßt man nun 6,1 g Cyanurfluorid zulaufen und hält den pH-Wert mit verdünnter Sodalösung auf 4,5. Nach kurzem Nachrühren ist die Kondensation beendet.

32 g Kupferphthalocyanin-Komponente der Formel 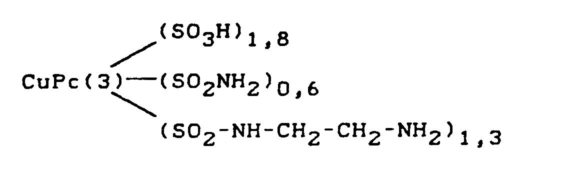
hergestellt nach den Angaben der Europäischen Patentschrift 0 073 267, werden in 300 ml Wasser bei pH = 7,0 - 7,5 gelöst. Man läßt nun die Lösung des obigen Kondensationsproduktes zu der Farbstoffkomponente bei 0 - 5° zulaufen und hält den pH-Wert in der Reaktionsmischung auf 7,0 bis 7,5. Nach 3 Stunden läßt man die Temperatur allmählich auf 20°C ansteigen und hält weiterhin den pH-Wert konstant. Nach beendeter Umsetzung wird das erhaltene Produkt aus der Lösung ausgesalzen, abgesaugt, mit etwas Phosphatlösung bei pH 6,0 gepuffert und im Vakuum bei 45°C getrocknet. Der Farbstoff entspricht der Formel 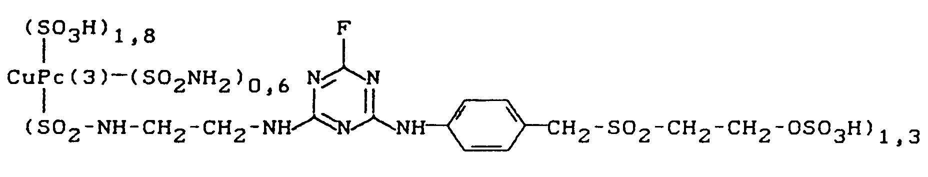
und färbt Baumwolle aus langer Flote und nach den bekannten Kontinue-Verfahren in türkisblauen Tönen.

Weitere Phthalocyanin-Reaktivfarbstoffe werden erhalten, wenn man die in Tabelle 3 genannten Metallphthalocyanin-Komponenten und Reaktivkomponenten in analoger Weise kondensiert.

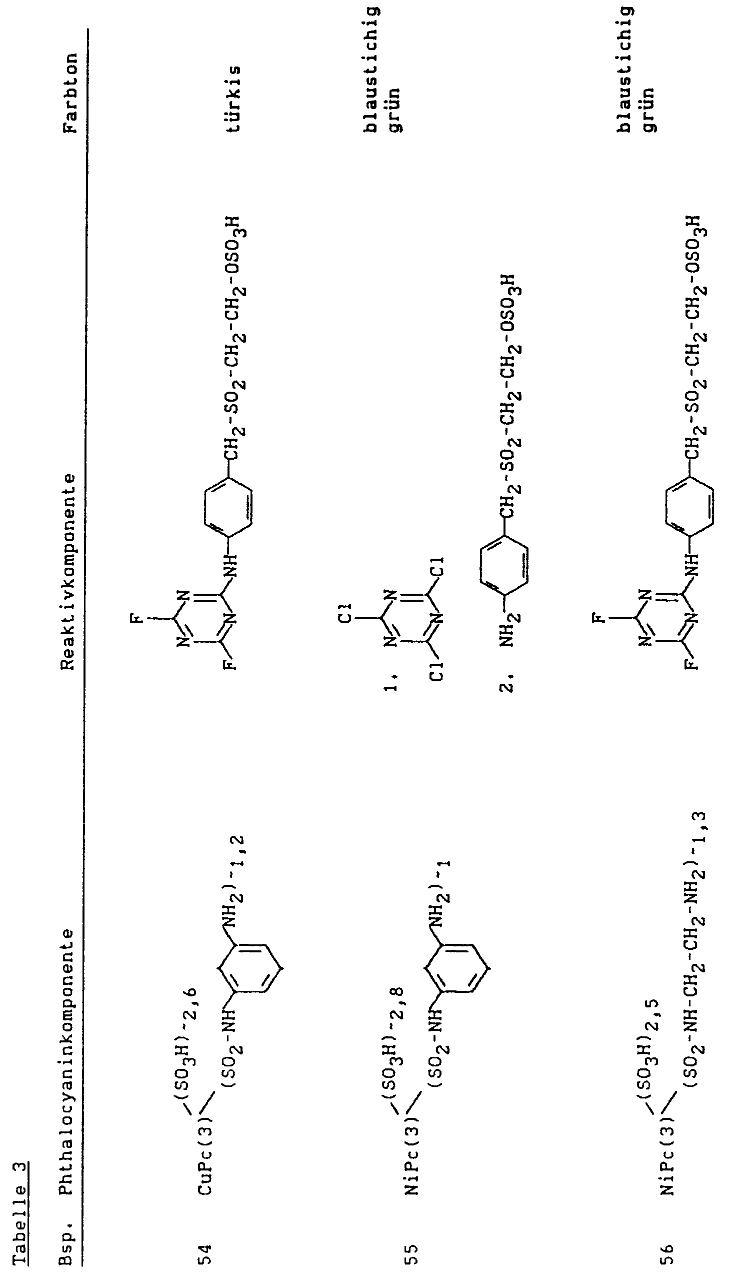

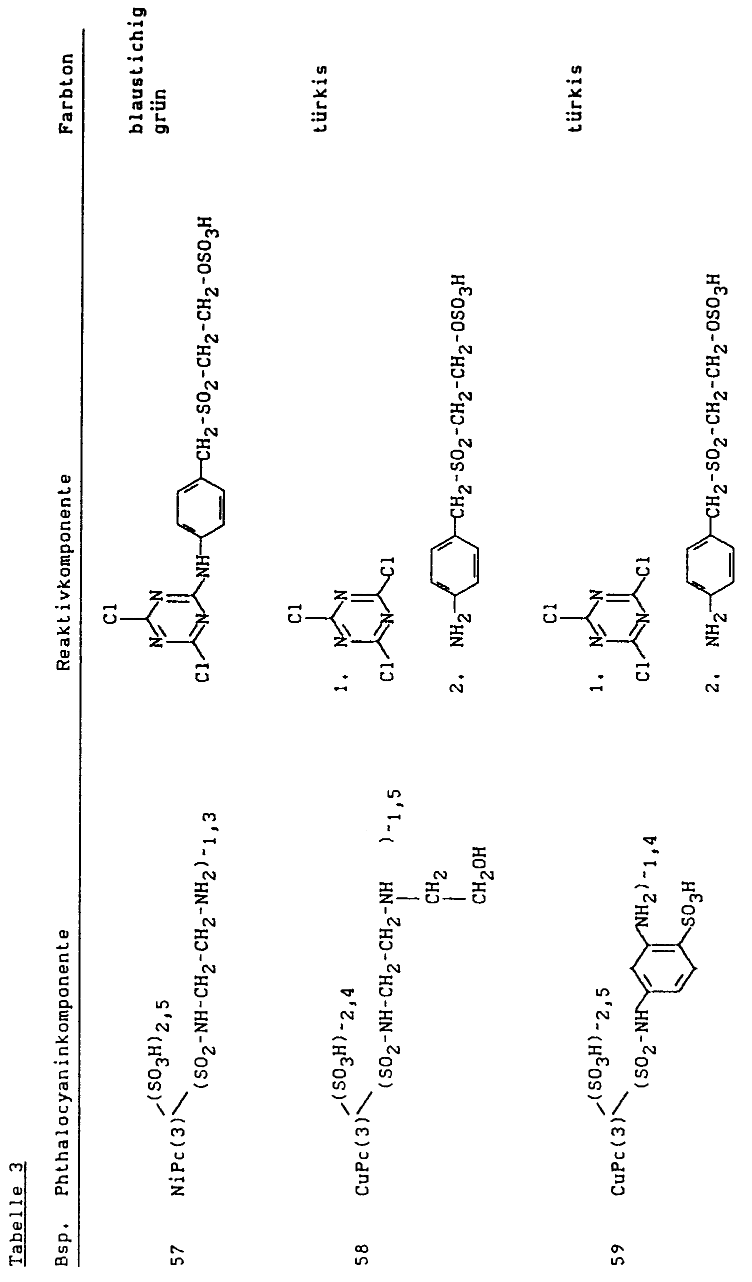

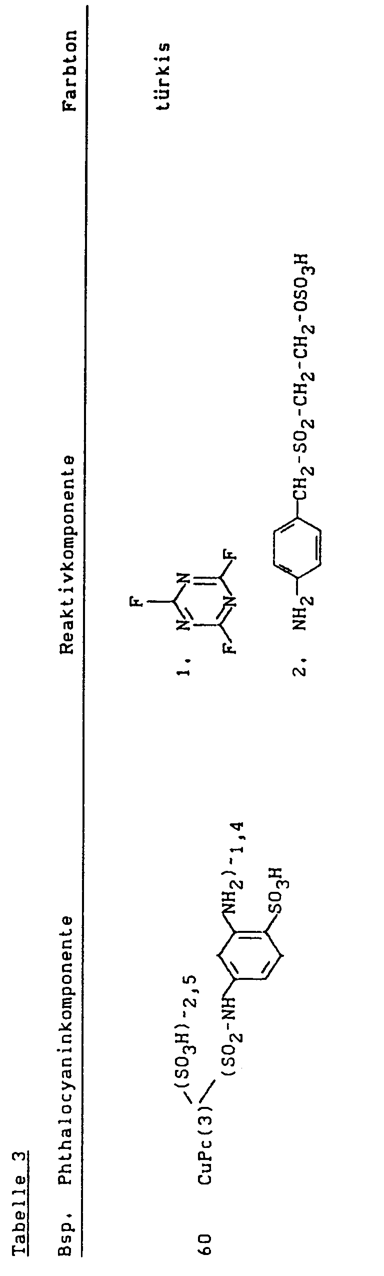

### Beispiel 61

40 g 1-Amino-4-(2'-aminomethyl-4'-methyl-6'-sulfophenylamino)-anthrachinon-2-sulfonsäure werden in 800 ml Wasser und 100 ml Aceton durch Neutralisation mit ca. 45 ml 2n Natronlauge bei pH 7 gelöst. Man kühlt auf 10°C ab und tropft eine Lösung von 17,5 g Cyanurchlorid in 100 ml Aceton in 15 bis 20 Minuten ein. Während des Eintropfens hält man den pH-Wert im Reaktionsgemisch mit 2n Sodalösung auf 6,0 bis 7,0. Wenn der Sodaverbrauch etwa 1 Stunde nach der Cyanurchlorid-Zugabe zum Stillstand gekommen ist, läßt man eine neutralisierte Lösung von 26,6 g 4-Aminobenzyl-β-sulfatoethylsulfon in 270 ml Wasser bei 20°C zulaufen, hält den pH-Wert mit Sodalösung auf 6,5 und steigert die Temperatur auf 25-30°. Nach beendeter Kondensation wird der Farbstoff durch Aussalzen abgeschieden, isoliert und bei 50°C im Vakuum getrocknet. Er entspricht der Formel 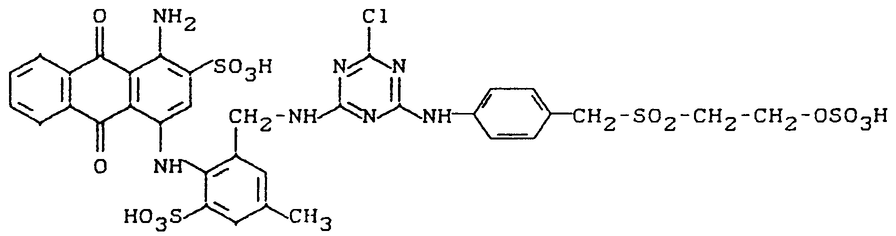
λₘₐₓ = 626 nm, 588 in H₂O
und gibt auf Cellulosefasern nach den bekannten Klotz- und Druckverfahren brillante rotstichig blaue Färbungen und Drucke.

### Beispiel 62

53,1 g 1-Amino-4-(3'-amino-5'-sulfo-2',4',6'-trimethylphenylamino)-anthrachinon-2-sulfonsäure werden in 530 Teilen Wasser bei pH 6 gelöst. 19,4 g Cyanurchlorid werden in 100 ml Methylethylketon gelöst und die Lösung auf 100 g Eis ausgetragen. Man läßt nun die Farbstofflösung zu der Cyanurchloridsuspension bei 0-10°C zutropfen und hält im Reaktionsgemisch mit 10 %iger Sodalösung den pH-Wert auf 4,5. Nach beendeter Umsetzung wird eine neutralisierte Lösung von 31,0 g 4-Aminobenzyl-β-sulfatoethylsulfon in 310 ml Wasser dazudosiert und bei einer Temperatur von 20-25°C der pH-Wert mit verdünnter Sodalösung auf 5,8 bis 6,0 gehalten, bis die Kondensation beendet ist. Der erhaltene Farbstoff der Formel 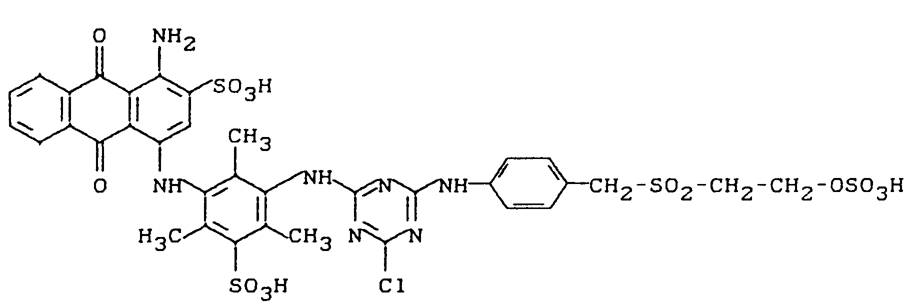
wird durch Aussalzen und Filtration isoliert und bei 50°C im Vakuum getrocknet.

Er gibt auf Baumwolle brillante rotstichig blaue Färbungen und Drucke.

Einen ähnlichen Farbstoff erhält man, wenn man anstelle des 4-Aminobenzyl-β-sulfatoethylsulfons die gleiche Menge 3-Aminobenzyl-β-sulfatoethylsulfon einsetzt.

### Beispiel 63

14,7 g 1-Amino-4-(3'-amino-phenylamino)-anthrachinon2,4'-disulfonsäure werden in 250 ml Wasser bei pH 5 und 0-5°C gelöst. Man läßt 2,8 ml Cyanurfluorid innerhalb von 5 bis 10 Minuten zu der Lösung der Farbkomponente tropfen und hält den pH-Wert mit 2n Sodalösung auf 4,2 bis 4,7. Nach kurzem Nachrühren ist die Kondensation zum Difluortriazinylfarbstoff beendet.

9,8 g 4-Aminobenzyl-β-sulfatoethylsulfon werden zu der Lösung der reaktiven Farbstoffkomponente langsam zugegeben und dabei der pH-Wert auf 5,0 bis 5,6 gehalten. Danach hält man den pH auf 6,0 bis 6,5 und läßt im Verlaufe von 15 Stunden die Temperatur allmählich auf 20°C ansteigen, wonach die Kondensation beendet ist. Der Farbstoff wird nun im Laufe von 2 Stunden mit 8 % Kaliumchlorid ausgesalzen. Man saugt den ausgefällten Farbstoff der Formel ab 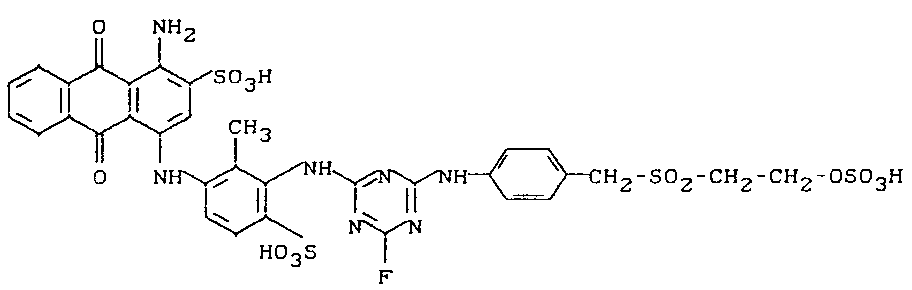
λₘₐₓ = 602 nm in H₂O
und wäscht ihn mit 10 %iger Kaliumchloridlösung bis zum hellen Ablauf. Nach Trocknung im Vakuum bei 45°C erhält man ein Produkt, mit dem Cellulosegewebe in blauen Tönen gefärbt und bedruckt werden kann.

### Beispiel 64

13,2 g 4-Aminobenzyl-β-sulfatoethylsulfon werden in 250 ml Wasser gelöst. Nach Abkühlung der Lösung auf 0-5°C wird ein pH-Wert von 4,5 eingestellt. Man läßt 4,2 ml Cyanurfluorid innerhalb 15 Minuten zu der Lösung tropfen und hält mit 2n Sodalösung den pH-Wert auf 4,0 bis 4,5. Zu der Suspension der erhaltenen Reaktivkomponente wird im Laufe von 30 Minuten eine neutralisierte Lösung von 19,0 g 1-Amino-4-(3'-amino-2'-methylphenylamino)-anthrachinon-2,5'-disulfonsäure in 350 ml Wasser zugetropft. Dabei hält man in der Reaktionslösung die Temperatur weiter auf 0 bis 5°C und den pH-Wert mit Sodalösung auf 6,0 bis 6,5. Nach 2 Stunden läßt man die Temperatur im Laufe von 15 Stunden allmählich auf 10°C ansteigen. Nach Beendigung der Kondensation wird der Farbstoff der Formel 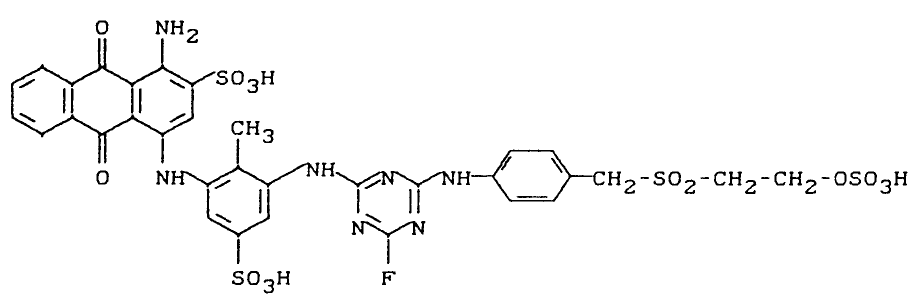
mit 10 % Natriumchlorid aus der Lösung ausgesalzen, abgesaugt, mit 10 %iger Natriumchloridlösung gewaschen und bei 45°C im Vakuum getrocknet.

Mit dem Farbstoff lassen sich Cellulosefasern in klaren blauen Tönen färben und bedrucken.

### Beispiel 65

Setzt man in Beispiel 64 anstelle der dort angegebenen Anthrachinonkomponente eine neutralisierte Lösung von 20,4 g 1-Amino-4-(4'-methyl-aminomethyl-phenylamino)-anthrachinon-2,2'-disulfonsäure mit dem Kondensationsprodukt von 13,6 g 4-Aminophenyl-β-sulfatoethylsulfon und 4,4 ml Cyanurfluorid bei 0 bis 5°C und pH 6,5 bis 7,0 um und arbeitet auf, wie dort beschrieben, so erhält man einen Farbstoff der Formel 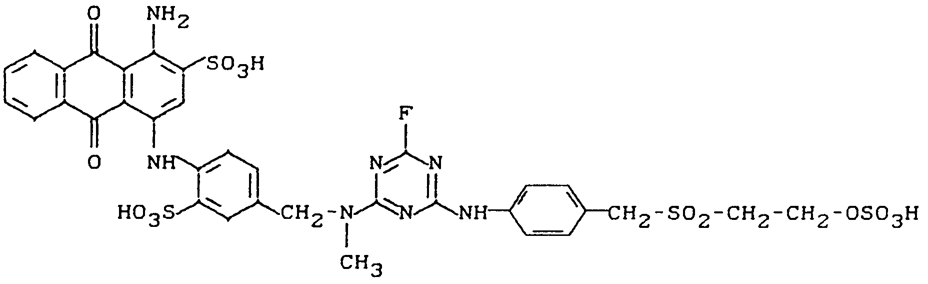
λₘₐₓ = 597 nm, ca. 625 nm in H₂O
der auf Baumwolle nach den üblichen Techniken ebenfalls klare blaue Färbungen und Drucke ergibt.

### Beispiel 66

9,6 g Cyanurchlorid werden in 50 ml Aceton gelöst. Die Lösung gibt man auf 50 g Eis und läßt dann eine neutralisierte Lösung von 14,8 g 4-Aminobenzyl-β-sulfatoethylsulfon in 200 ml Wasser zutropfen. Man führt die Kondensation durch Zutropfen von 10 %iger Sodalösung bei pH 4,5 bis 4,7 durch und hält dabei die Temperatur auf 0-5°C, nach beendeter Kondensation auf 15-20°C.

17,6 g Triphendioxazinverbindung der Formel 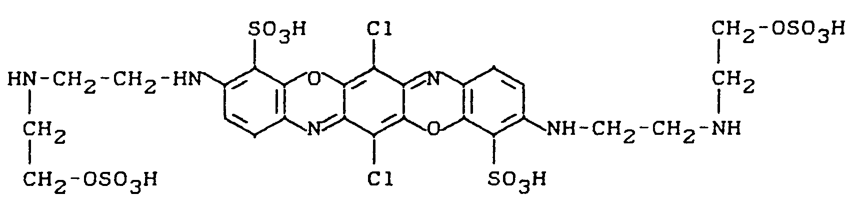
werden in 600 ml Wasser durch Einstellen eines pH-Wertes von 9 mit 2n Natronlauge gelöst. Zu der Lösung gibt man nun portionsweise die obige Reaktivkomponente und hält im Reaktionsgemisch den pH-Wert mit 2n Natronlauge auf 8,5 bis 8,7, die Temperatur auf 15 bis 20°C. Nach Beendigung der Umsetzung wird der Farbstoff der Formel 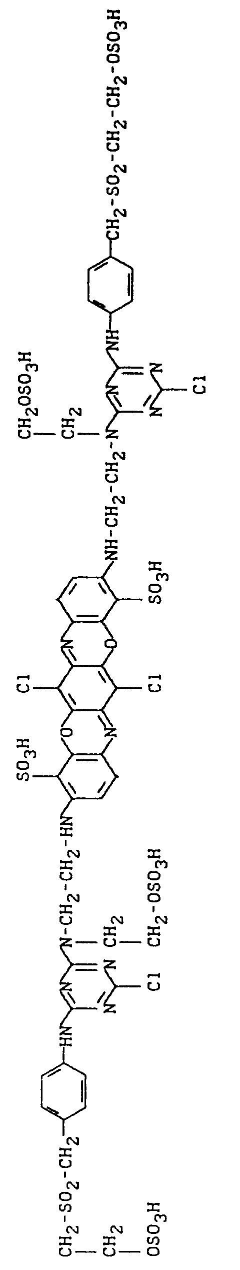
ausgesalzen, abgesaugt und im Vakuum bei 50°C getrocknet. Er gibt auf Baumwolle nach den bekannten Färbetechniken kräftige blaue Färbungen.

Weitere Triphendioxazin-Reaktivfarbstoffe erhält man durch Umsetzung folgender Komponenten:

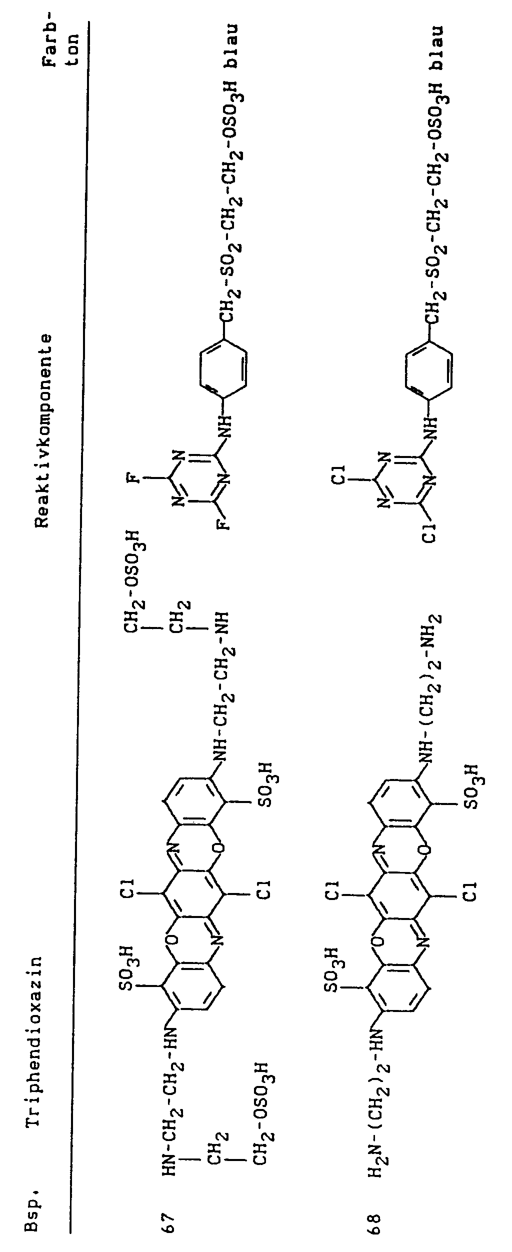

### Beispiel 69

27,3 g 3,9-Diamino-6,13-dichlor-triphendioxazin-4,11-disulfonsäure werden in 900 ml Wasser durch Neutralisation mit 10 %iger Lithiumhydroxid-Lösung gelöst. Nach Abkühlung der Lösung auf 0-5°C tropft man 10,8 g Cyanurfluorid ein und hält mit 10 %iger LithiumhydroxidLösung den pH-Wert auf 5,5 bis 6,0. Ist die Umsetzung beendet, trägt man portionsweise 23,6 g 4-Aminobenzyl-β-sulfatoethylsulfon in die Lösung ein und hält den pH-Wert weiter auf 6,0 bis 6,5. Nach 5 Stunden läßt man die Temperatur unter weiterer pH-Kontrolle über Nacht auf 20-25°C ansteigen. Die Lösung wird unter Zusatz von 1 g Kieselgur geklärt, der Farbstoff aus dem Filtrat durch Zusatz von 15 % Natriumchlorid ausgesalzen und nach Absaugen und Waschen mit 15 %iger Natriumchlorid-Lösung bei 50°C im Vakuum getrocknet.

Der Farbstoff der Formel 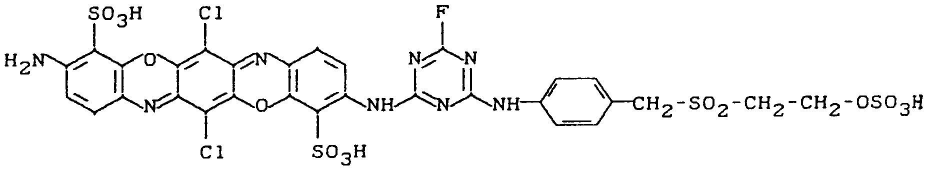
färbt Baumwolle in stark rotstichig blauen Tönen.

### Beispiel 70

Analog dem Beispiel 69 erhält man folgenden Triphendioxazin-Farbstoff: 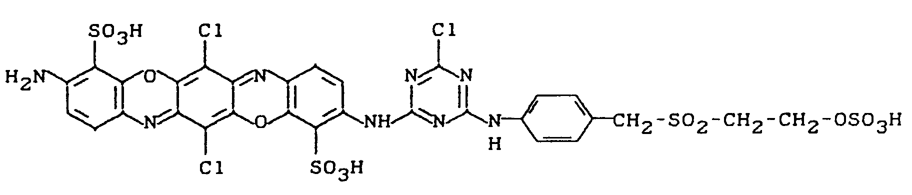
Es färbt Baumwolle in stark rotstichig blauen Tönen.

### Beispiel 70 a

Zu einer Farbstofflösung, die gemäß Beispiel 1 synthetisiert wurde, setzt man 3,0 g Pyridin-3-carbonsäure. Man erwärmt die Lösung auf 75-80° und bringt den pH-Wert mit 2n Sodalösung auf 7,0, bis der Austausch des Fluoratoms gegen den Nicotinsäurerest beendet ist. Nach Abkühlen kann der Farbstoff ausgesalzen oder die Lösung nach Entsalzen und Aufkonzentrieren als Flüssigfarbstoff verwendet werden.

Der Farbstoff entspricht der Formel 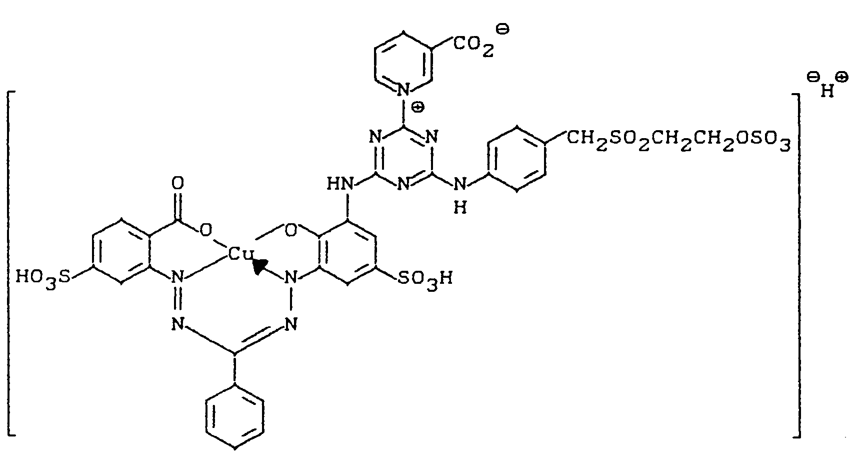
und färbt ähnlich dem Farbstoff des Beispiels 1 Baumwolle aus langer Flotte.

In ähnlicher Weise können auch die anderen in den vorangegangenen Beispielen beschriebenen Fluor- oder Chlortriazinfarbstoffe in die 3-Carboxypyridiniumtriazin-Farbstoffe umgewandelt werden.

### Beispiel 71

10 g 4-Aminobenzyl-(β-hydroxyethyl)-sulfon (hergestellt nach GB 877 250 [C.A. 56; 11758i]) werden im Autoklaven in 100 ml Methanol nach Zugabe von 3,5 g Acetaldehyd und 4 g Raney-Nickel unter einem Wasserstoffdruck von 60 bis 80 bar gesetzt. Man erwärmt den Autoklaven auf 40°C und hält solange den Wasserstoffdruck aufrecht, bis die Reaktion beendet ist. Der Autoklaveninhalt wird mit 100 ml Methanol versetzt und die Suspension siedend heiß vom Nickel geklärt. Aus dem Filtrat kristallisiert beim Einengen das Amin der Formel 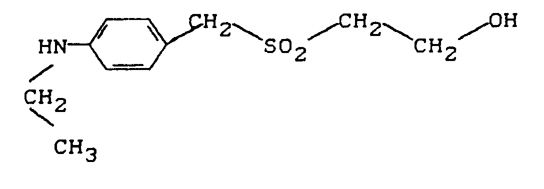
das aus der abgekühlten Mischung abgesaugt wird und mit wenig kaltem Methanol gewaschen werden kann.
¹H-NMR in D₆-DMSO (TMS als innerer Standard):
δ = 1,17 (t, 3H), 3,03 (m, 4H), 3,79 (q, 2H), 4,21 (s, 2H), 5,16 (t, NH), 5,61 (t, OH), 6,57 (d, 2H) , 7,09 (d, 2H) ppm.

### Beispiel 72

Verfährt man wie in Beispiel 71 und setzt anstelle von 4-Aminobenzyl-(β-hydroxyethyl)-sulfon das 5-Amino-2-chlorbenzyl-(β-hydroxyethyl)-sulfon ein (hergestellt nach EP 307 817 A1), erhält man das Amin der Formel 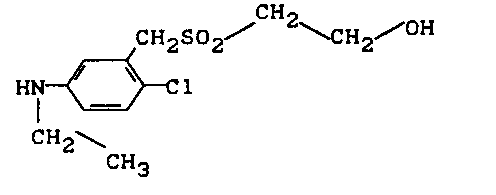
¹H-NMR in D₆-DMSO (TMS als innerer Standard):
δ = 1,18 (t, 3H), 3,01 (q, 2H), 3,24 (t, 2H), 3,83 (t, 2H), 4,56 (s, 2H), 6,59 (dd, 1H), 6,77 (d, 1H), 7,19 (d, 1H) ppm.

### Beispiel 73

Anstelle des in Beispiel 71 eingesetzten 4-Aminobenzyl-(β-hydroxyethyl)-sulfon kann man auch nach gleichem Verfahren das 3-Aminobenzyl-(β-hydroxyethyl)-sulfon in das Amin der Formel 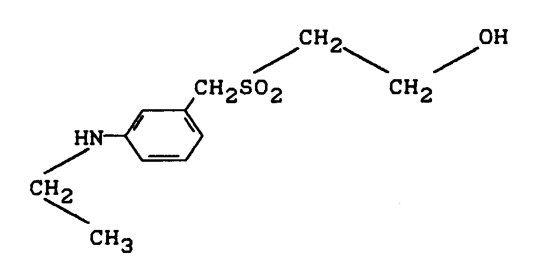
überführen.
¹H-NMR in D₆-DMSO (TMS als innerer Standard):
δ = 1,18 (t, 3H), 3,05 (m, 2H), 3,14 (t, 2H), 3,81 (t, 2H), 4,31 (s, 2H), 5.22 (br., NH), 5,62 (t, OH), 6,55 (m, 3H) 7,08 (t, 1H) ppm.

In analoger Weise werden die folgenden Verbindungen erhalten: 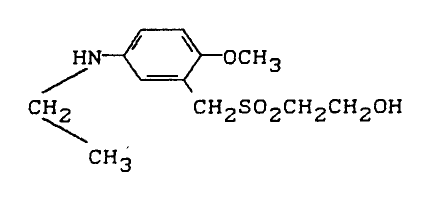
¹H-NMR in D₆-DMSO (TMS als innerer Standard):
δ = 1,13 (t, 3H), 2,95 (q, 2H), 3,11 (t, 2H), 3,65 (s, 3H), 3,75 (q, 2H), 4,26 (s, 2H), 5,00 (t, OH), 5,15 (br., NH), 6,46 (dd, 1H), 6,51 (d, 1H), 6,76 (d, 1H) ppm. 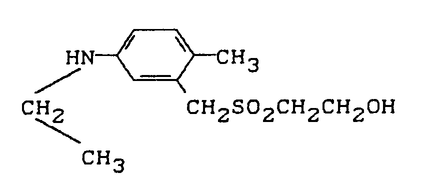
¹H-NMR in D₆-DMSO (TMS als innerer Standard):
δ = 1,18 (t, 3H), 2,20 (s, 3H), 3,00 (m, 2H), 3,26 (t, 2H), 3,84 (q, 2H), 4,40 (s, 2H), 5,20 (t, NH), 5,40 (t, OH), 6,46 (dd, 1H), 6,54 (d, 1H), 6,92 (d, 1H) ppm.

### Beispiel 74

Anstelle des in Beispiel 72 eingesetzten Acetaldehyd kann man die Alkylierung auch mit n-Propylaldehyd durchführen. Man erhält dann ein Amin der Formel 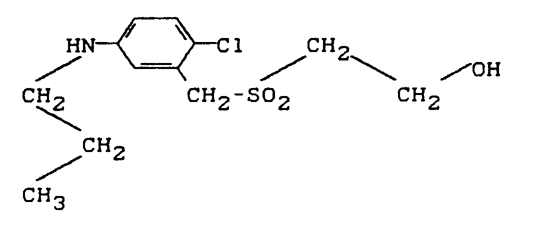
¹H-NMR in D₆-DMSO (TMS als innerer Standard):
δ = 0,95 (t, 3H), 1,55 (q, 2H), 2,92 (q, 2H), 3,24 (t, 2H), 3,81 (q, 2H), 4,50 (s, 2H), 5,19 (t, NH), 5,87 (t, OH), 6,58 (dd, 1H), 6,71 (d, 1H), 7,14 (d, 1H) ppm.

In analoger Weise werden die folgenden Verbindungen erhalten:

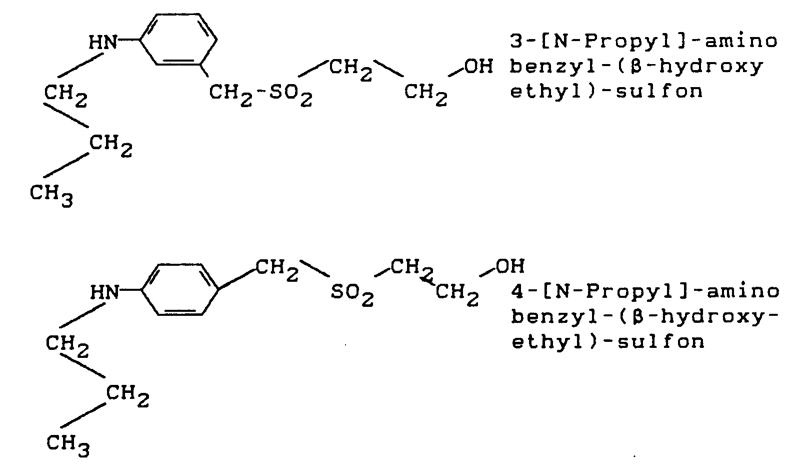

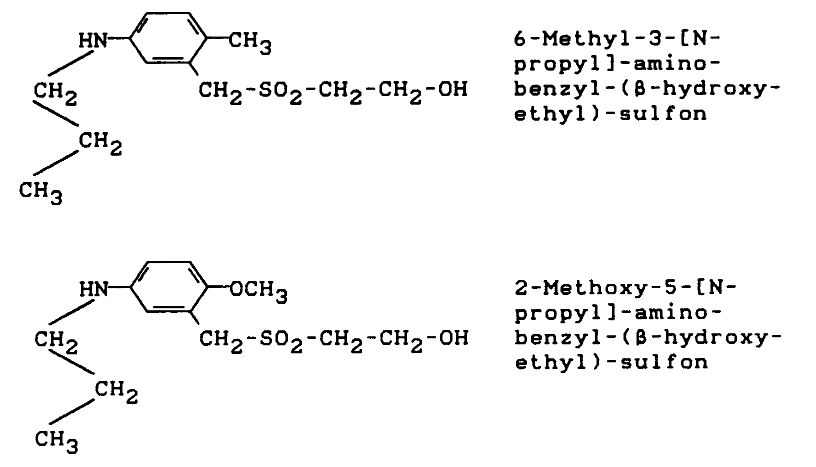

### Beispiel 75

30 g 4-[N-Ethyl]-aminobenzyl-(β-hydroxyethyl)-sulfon des Beispiels 71 werden in 90 ml 100 %iger Schwefelsäure bei 0 bis 10°C eingetragen. Man rührt 2 Stunden und trägt die erhaltene Lösung in 350 g Eis ein. Die kristalline Fällung wird abgesaugt, mit 25 %iger Natriumchloridlösung bis zur Sulfatfreiheit gewaschen und bei 50°C im Vakuum getrocknet. Das erhaltene Produkt entspricht der Formel 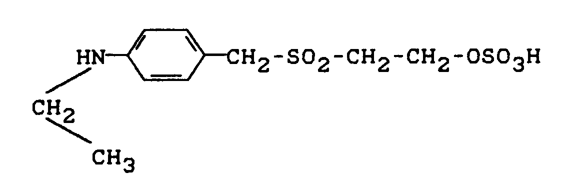
¹H-NMR in D₆-DMSO (TMS als innerer Standard):
δ = 1,22 (t, 3H), 3,35 (m, 4H), 4,18 (t, 2H), 4,56 (s, 2H), 7,58 (m, 4H), 9,48 (br, NH) ppm.

In analoger Weise werden die folgenden Amine erhalten: 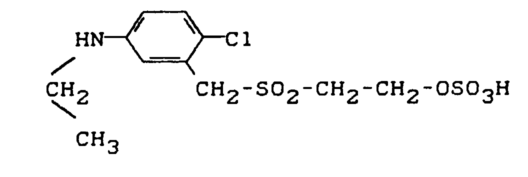
¹H-NMR in D₆-DMSO (TMS als innerer Standard):
δ = 1,20 (t, 3H), 3,27 (q, 2H), 3,58 (t, 2H), 4,19 (t, 2H), 4,68 (s, 2H), 7,32 (dd, 1H), 7,46 (d, 1H), 7,60 (d, 1H), 9,10 (br, NH) ppm. 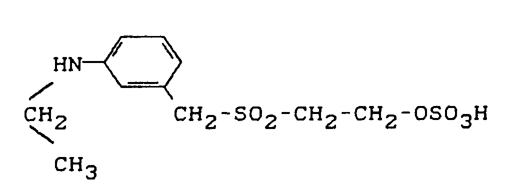
¹H-NMR in D₆-DMSO (TMS als innerer Standard):
δ = 1,13 (t, 3H), 2,97 (m, 2H), 3,30 (t, 2H), 4,09 (t, 2H), 4,27 (S, 2H), 6,08 (m, 1H), 6,45 (m, 2H), 6,98 (m, 1H) ppm. 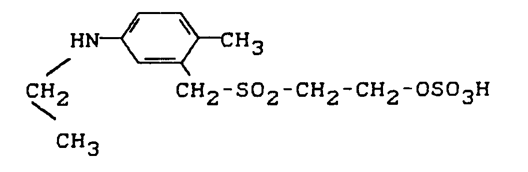
¹H-NMR in D₆-DMSO (TMS als innerer Standard):
δ = 1,20 (t, 3H), 2,41 (s, 3H), 3,38 (m, 2H), 3,58 (t, 2H), 4,20 (t, 2H), 4,65 (s, 2H), 7,40 (m, 3H) ppm. 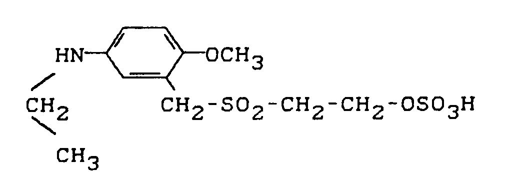
¹H-NMR in D₆-DMSO (TMS als innerer Standard):
δ = 1,21 (t, 3H), 3,35 (q, 2H), 3,45 (t, 2H), 3,89 (s, 3H), 4,15 (t, 3H), 4,56 (s, 3H), 7,23 (d, 1H), 7,52 (m, 2H) ppm.

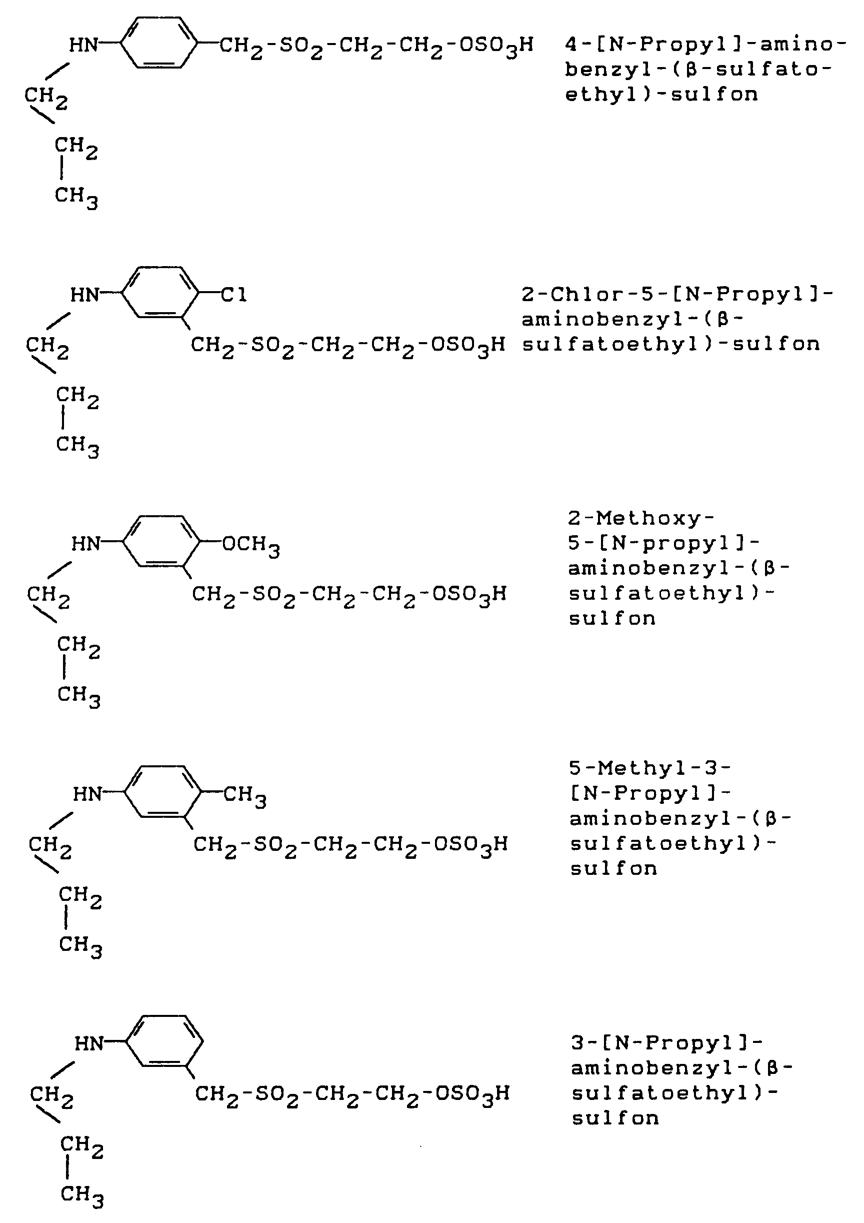

### Beispiel 76

78,4 g 1-Amino-8-hydroxynaphthalin-3,6-disulfonsäure (als Mononatriumsalz) werden in 800 ml Wasser bei pH 6,5 gelöst. Nach Abkühlung auf 0°C läßt man zügig 21,5 ml Cyanurfluorid zulaufen und hält den pH-Wert mit 20 %iger Sodalösung auf 4,0 bis 4,5, die Temperatur weiter um 0°C.

72 g Komponente der Formel 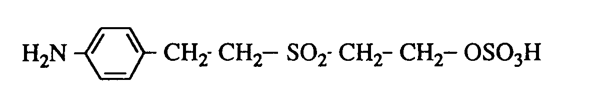
werden in 500 ml Wasser durch Zugabe von 55 ml 10 %iger Lithiumhydroxidlösung bis zum pH-Wert von 6,9 bei 0 bis 3°C gelöst. Man gibt beide Lösungen zusammen und hält in dem Reaktionsgemisch dem pH-Wert mit 2 n Sodalösung auf 5,0 bis 5,2.

51,3 g 2-Aminonaphthalin-1-sulfonsäure werden in 575 ml Wasser durch Neutralisation mit Natronlauge bei pH 6,5 und 0°C gelöst. Man gibt 57,5 ml konzentrierte Salzsäure in einem Guß zu und diazotiert anschließend mit 57,5 ml 4 n Natriumnitritlösung. Nach einstündigem Nachrühren wird gegebenenfalls überschüssiges Nitrit mit Amidosulfonsäurelösung zerstört

Die erhaltene Diazosuspension wird nun in die oben hergestellte Lösung bei 0 bis 5°C eingetragen und dabei der pH-Wert in der Mischung mit 2 n Sodalösung auf 7,0 gehalten. Nach 3 Stunden läßt man die Temperatur auf 20°C ansteigen und rührt bis zur Beendigung der Kupplung nach. Der erhaltene Farbstoff der Formel 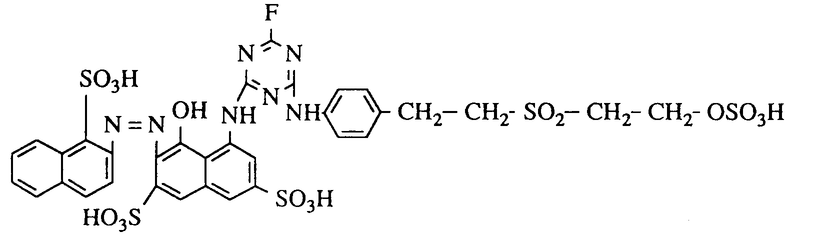
wird mit Natriumchlorid ausgesalzen, isoliert und nach Zusatz von etwas Phosphatpuffer bei 50°C im Vakuum getrocknet.

Er färbt Baumwolle aus langer Flotte mit einer optimalen Färbetemperatur von 50°C in blaustichig roten Tönen mit hohen Fixierausbeuten.
λₘₐₓ = 546 nm in Wasser.

### Beispiel 77

78,4 g 1-Amino-8-hydroxynaphthalin-3,6-disulfonsäure werden wie in Beispiel 76 mit 21,5 ml Cyanurfluorid umgesetzt. Man gibt anschließend eine bis pH 6 neutralisierte, auf 0 bis 3°C gekühlte Lösung von 89,5 g der Komponente der Formel, 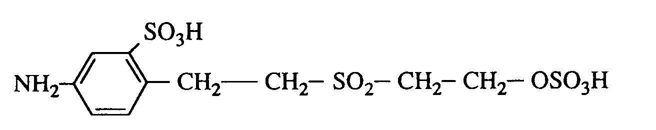
erhalten nach den Angaben des Beispiels 80, innerhalb von einigen Minuten zu und hält den pH-Wert mit 2 n Sodalösung auf 5,2.

Wenn die Kondensation beendet ist, setzt man eine Diazosuspension zu, die man nach Beispiel 76 aus 51,3 g 2-Aminonaphthalin-1-sulfonsäure herstellt. Dabei hält man im Kupplungsgemisch den pH-Wert mit Sodalösung auf 7,0 bis 7,5. Man läßt die Temperatur in 2 1/2 Stunden allmählich auf 10°C und dann über Nacht auf 20°C steigen, wobei man den pH-Wert weiter auf 7,0 hält. Der Farbstoff wird mit Kaliumchlorid ausgesalzen, abgesaugt und mit 25 %iger Kaliumchloridlösung gewaschen. Er wird nach Zusatz von Phosphatpuffer bei 50°C im Vakuum getrocknet.

Erentspricht der Formel 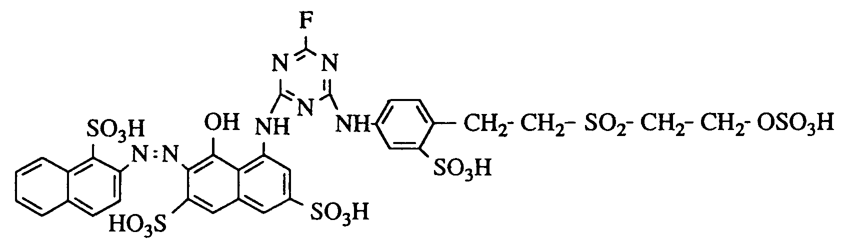
und färbt Baumwolle in blaustichig roten Tönen mit einer optimalen Färbetemperatur von 50°C und hoher Fixierausbeute.
λₘₐₓ = 546 nm in Wasser.

### Beispiel 78

78,4 g 1-Amino-8-hydroxynaphthalin-3,6-disulfonsäure werden nach den Angaben des Beispiels 1 mit 21,5 ml Cyanurfluorid kondensiert.

Man läßt in 10 Minuten eine auf 0 bis 3°C gekühlte und auf pH 5 gestellte Lösung von 72 g 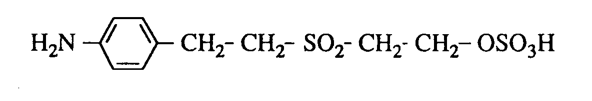
in 250 ml Wasser zulaufen und hält dabei mit 2 n Sodalösung den pH-Wert auf 5,2.

Hergestellt wird die Lösung durch Sulfatierung von 2-(x-Aminophenylyethyl)-2-hydroxyethylsulfon nach den Angaben des Beispiels 81.

69,7 g 2-Aminonaphthalin-1,5-disulfonsäure werden in 500 ml Wasser durch Zugabe von Natronlauge bis zum pH 7 gelöst. Man kühlt die Lösung ab auf 0°C, versetzt sie mit 67,5 ml 4 n Natriumnitritlösung und 300 g Eis und setzt in einem Guß 60 ml konzentrierte Salzsäure zu. Nach einstündigem Nachrühren ist die Diazotierung beendet. Man gibt bis zum Verschwinden der Nitritanzeige Amidosulfonsäure zu.

In die vorgelegte Lösung der oben hergestellten Kupplungskomponente trägt man die Diazoniumsuspension bei 0°C ein und hält gleichzeitig den pH-Wert im Kupplungsgemisch mit verdünnter Sodalösung auf 7,0. Nach 3 Stundenläßt man die Temperatur auf 20°C ansteigen und salzt nach beendeter Kupplung den Farbstoff aus. Er wird abgesaugt, gewaschen und nach Zufügen von etwas Phosphatpuffer getrocknet. Der Farbstoff der Formel 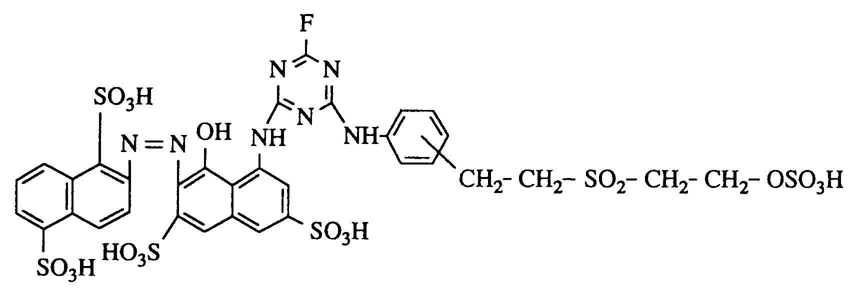
färbt Baumwolle aus langer Flotte bei einer optimalen Färbetemperatur von 50°C mit guten Fixierausbeuten in blaustichig roten Tönen.
λₘₐₓ = 541 nm in Wasser.

### Beispiel 79

A. 500 g Styrol, 468 g 2-Mercaptoethanol, 5,0 g Azoisobuttersäurenitril werden gerührt, wobei die Temperatur im Laufe etwa einer Stunde auf 30 bis 33°C ansteigt. Man rührt über Nacht weiter und erwärmt dann 5 bis 6 Stunden auf 50°C. Die Umsetzung ist beendet, wenn ein ¹H-Kernresonanzspektrum keine der charakteristischen Styrol-Signale im Bereich δ = 4,80, 5,30 und 6,26 ppm mehr zeigt.
Die erhaltene farblose Flüssigkeit entspricht der Formel 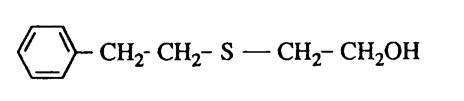 und enthält noch geringe Mengen 2-Mercaptoethanol. Der Ansatz wird nach Verdünnen mit 4,4 l Wasser direkt zum Sulfon oxydiert (siehe Abschnitt C).
B. Das in A erhaltene Produkt läßt sich auch auf folgende Weise erhalten:
176 g 2-Chlorethylbenzol, 107 g 2-Mercaptoethanol, 198 g Kaliumcarbonat und 840 ml Acetonitril werden unter Rühren und Stickstoffatmosphäre 4 Stunden bei 86°C zum Rückfluß erhitzt Nach Eingießen in 8 l Wasser wird die Mischung mit Methylenchlorid ausgeschüttelt, die Methylenchlorid-Phase mit 2 n Sodalösung extrahiert, mit Wasser gewaschen und über Natriumsulfat getrocknet. Nach Abdestillation des Methylenchlorids im Rotationsverdampfer, zuletzt im Vakuum bei 50°C, hinterbleibt ein gelbliches Öl, das mit dem Thioether des Abschnitts A identisch ist und im ¹H-NMR-Spektrum die gleichen Signale zeigt.

| ¹H-NMR (D₆-DMSO) | |
|---|---|
| δ = 2,60 ppm | (t, 2H) |
| δ = 2,73-2,83 ppm | (m, 4H) |
| δ = 3,53-3,60 ppm | (m, 2H) |
| δ = 4,78 ppm | (t, 1H) |
| δ = 7,20-7,30 ppm | (m, 5H) |

C. Die im Abschnitt 79A erhaltene Emulsion des 2-Hydroxy-2 -phenyl- ethyl sulfids in 4,4 l Wasser wird mit 54 g Natriumacetat und 7 ml Eisessig versetzt, so daß sich ein pH-Wert von 5,2 einstellt.
Man setzt eine Lösung von 7,9 g Wolframsäure in 120 ml Wasser und 5 ml 50 %iger Natronlauge zu, die vor dem Zusatz mit 7 ml Eisessig ebenfalls auf pH 5,2 gestellt war. Man läßt nun bei 55 bis 60°C in einer Stunde 932 g 35 %iges Wasserstoffperoxid zulaufen, dabei entsteht zwischendurch eine klare Lösung, die sich gegen Ende der Zugabe wieder eintrübt. Eine chromatographische Probe zeigt, daß kein Sulfid mehr vorhanden ist und im wesentlichen eine Mischung aus dem entsprechenden Sulfoxid und Sulfon vorliegt. Man vervollständigt die Oxidation zum Sulfon mit weiteren 480 g 35 %igem Wasserstoffperoxid und Nachrühren bei 55 bis 60°C. Der Ansatz wird dann auf 0°C gekühlt. Das auskristallisierte Sulfon wird abgesaugt und mit mehreren Portionen Eis-Wasser gewaschen. Nach Trocknung erhält man 920g. Das Produkt schmilzt bei 56 bis 59°C.

| ¹H-NMR (D₆-DMSO) | |
|---|---|
| δ = 2,97-3,06 ppm | (m, 2H) |
| δ = 3,26 ppm | (t, 2H) |
| δ = 3,36-3,47 ppm | (m, 2H) |
| δ = 3,79-3,88 ppm | (m, 2H) |
| δ = 5,15 ppm | (t, 1H) |
| δ = 7,20-7,36 ppm | (m, 5H) |

D. 135 g des obigen Sulfons 79C werden bei 0°C in 445 ml 96 %ige Schwefelsäure eingetragen. Sobald eine Lösung entstanden ist, läßt man bei -20°C 120 g Mischsäure aus 40 g Salpetersäure und 80 g Schwefelsäure in 2 Stunden zutropfen. Man läßt die Temperatur über Nacht auf Raumtemperatur ansteigen. Die erhaltene Mischung wird in 1,5 kg Eis und 2,5 l Wasser eingegossen und die entstandene Lösung zur Verseifung der Sulfatogruppe 4 Stunden bei 106°C am Rückfluß erhitzt. Anschließend wird die Mischung auf 0°C abgekühlt. Aus der Emulsion kristallisiert bei Rühren über Nacht oder nach Animpfen die Verbindung der Formel 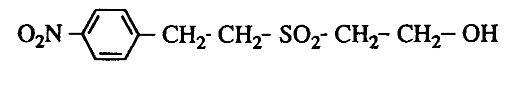 Fp.: 92-93°C

| ¹H-NMR (D₆-DMSO) | |
|---|---|
| δ = 3,12-3,22 ppm | (m, 2H) |
| δ = 3,28 ppm | (t, 2H) |
| δ = 3,47-3,53 ppm | (m, 2H) |
| δ = 3,90 ppm | (t, 2H) |
| δ = 4,74 ppm | (breit 1H) |
| δ = 7,58 ppm | (d, 2H) |
| δ = 8,17 ppm | (d, 2H) |

E. 200 g 2-(4-Nitrophenyl)-ethyl-2'-hydroxyethylsulfon des Beispiels 79D werden in 800 ml Methanol nach Zusatz von 10 g Raney-Nickel bei 60°C und 50 bar Wasserstoffdruck katalytisch reduziert. Man verdünnt mit 1 l Methanol, klärt das Nickel in der Siedehitze ab und dampft das Filtrat im Rotationsverdampfer zur Trockene ein. Man erhält 172 g der eines Öls, das bei Erkalten zu einer Kristallmasse erstarrt: 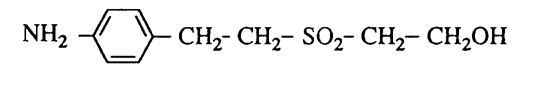 Fp.: 58-62°C

| ¹H-NMR (D₆-DMSO) | |
|---|---|
| δ = 2,88-2,96 ppm | (m, 2H) |
| δ = 3,19-3,34 ppm | (t,m, 4H) |
| δ = 3,74-3,81 ppm | (m, 2H) |
| δ = 5,03 ppm | (s, 2H) |
| δ = 5,13 ppm | (t, 1H) |
| δ = 6,52 ppm | (d,2H) |
| δ = 6,92 ppm | (d, 2H) |

F. 172 g 2-(4-Aminophenyl)-ethyl-2'-hydroxyethylsulfon des Beispiels 79E werden in 260 ml 96 %ige Schwefelsäure bei 0°C eingetragen. Man tropft dann bei 0°C unter Kühlung in 30 Minuten 85 ml 20 %iges Oleum zu und rührt noch 2$\frac{\text{1}}{\text{2}}$ Stunden unter weiterer Kühlung nach. Die Lösung wird auf 1,4 kg Eis-Wasser gegeben, die entstandene Fällung abgesaugt und mit 1,5 l Isopropanol frei von Schwefelsäure gewaschen. Nach Trocknung wird ein Produkt erhalten, das der Formel 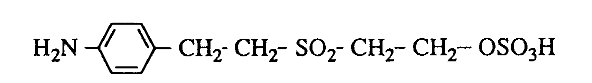
entspricht und in bezugauf diese Formel einen Gehalt von 97,6 % aufweist

| ¹H-NMR (D₆-DMSO) | |
|---|---|
| δ = 3,00-3,08 ppm | (m, 2H) |
| δ = 3,34-3,48 ppm | (m, 4H) |
| δ = 4,17 ppm | (t, 2H) |
| δ = 7,28 ppm | (d, 2H) |
| δ = 7,48 ppm | (d, 2H) |
| δ = ca. 9,7 ppm | (breit) |

### Beispiel 80

100 g 2-(Aminophenyl)-ethyl-2'-hydroxyethylsulfon werden in eine Mischung von 147 ml 20 %igem Oleum und 80 ml 65 %igem Oleum bei 10 bis 15°C eingetragen. Wenn alles gelöst ist, setzt man 80 ml 65 %iges Oleum unter Kühlung bei 15 bis 20°C nach und rührt dann den Ansatz 17 Stunden bei 25°C. Eine chromatographische Probe zeigt nach der Sulfatierung außerdem vollständige Sulfonierung des aromatischen Ringes an. Der Ansatz wird nun auf 1,5 kg Eis so ausgetragen, daß die Temperatur bei 0 bis 5°C gehalten wird. Die erhaltene Lösung wird bei 0 bis 5°C mit 460 g Calciumcarbonat versetzt, bis ein pH-Wert von 4,3 erreicht wird. Man saugt das Calciumsulfat ab, wäscht es mit Wasser und dampft die vereinigten Filtrate im Rotationsverdampfer im Vakuum bei 35°C auf etwa 500 g Lösung ein. Man erhält die Lösung des Produktes der Formel 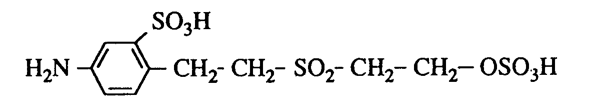
deren Gehalt durch Titration mit Natriumnitritlösung in saurem Medium mit 0,324 Molen = 99 % der Theorie gefunden wird und die zur Herstellung der beschriebenen Farbstoffe direkt eingesetzt werden kann.

Eine im Vakuum völlig eingedampfte und getrocknete Probe dieser Lösung zeigt folgende Signale im Kernresonanzspektrum:

| ¹H-NMR (D₆-DMSO) | |
|---|---|
| δ = 3,28-3,48 ppm | (m, 6H) |
| δ = 4,13 ppm | (t, 2H) |
| δ = 6,75 ppm | (d, 1H) |
| δ = 7,20 ppm | (d, 1H) |
| δ = 7,32 ppm | (s, 1H) |

### Beispiel 81

A. 135 g 2-Hydroxy-2'-phenyl-diethylsulfon aus Beispiel 79C werden in 780 g 90 %ige Schwefelsäure eingetragen bei 0°C. Die Mischung wird anschließend 30 Minuten bei 25°C gerührt, bis eine klare Lösung entstanden ist. Man läßt bei -13 bis -7°C in 4 bis 5 Stunden 120 g Mischsäure aus 40 g Salpetersäure und 80 g Schwefelsäure zutropfen und über Nacht die Temperatur auf etwa 0°C ansteigen. Der Ansatz wird auf 2,7 kg Eis und 2 l Wasser gegossen und die Mischung 4 Stunden bei 106 bis 107°C unter Rückfluß erhitzt. Man kühlt auf 0°C ab, saugt nach Rühren über Nacht die etwas weiche kristalline Masse ab und wäscht sie mit 1 500 ml Eiswasser säurefrei. Nach Vakuumtrocknung bei Raumtemperatur erhält man 133 g eines Isomeren-Gemisches vom Schmelzintervall 69 bis 83°C, das den Formeln 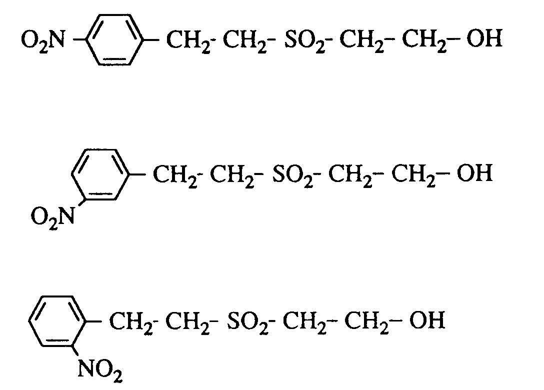 entspricht und in dem das p-Isomere vorherrschend ist.
B. 133 g des oben erhaltenen Nitro-Isomerengemisches werden in 500 ml Methanol im Autoklaven bei 60 bis 70°C unter 60 bar Wasserstoffdruck in Gegenwart von Raney-Nickel reduziert Nach Klärung der mit 400 ml Methanol verdünnten Lösung bei 64°C wird die erhaltene Lösung eingedampft. Das zurückbleibende bräunliche Öl kristallisiert beim Stehen. Erhalten werden 115 g Kristallisat, das der Formel 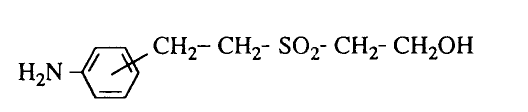 entspricht und ein Schmelzintervall 45 bis 51°C aufweist.
C. Zur Sulfatierung schmilzt man 100 g obiger Aminosulfonverbindung bei 55°C aufund läßt die Schmelze langsam zu 150 mi 96 %iger Schwefelsäure, die auf 25°C gehalten wird, zutropfen.

Wenn alles gelöst ist, kühlt man auf 0°C ab, setzt 50 ml 20 %iges Oleum zu und rührt 15 Stunden bei 0 bis 5°C. Die Lösung wird auf 800 g Eis und 800 ml Wasser gegossen, mit etwa 338 g Calciumcarbonat bis zu pH 5,2 neutralisiert, durch Filtration von Calciumsulfat befreit, das Calciumsulfat mit Wasser gewaschen und die vereinigten Filtrate auf etwa 600 ml eingeengt. Erhalten wird eine Lösung der Sulfatoverbindung der Formel

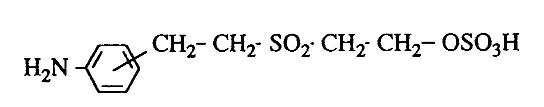

### Beispiel 82

117 g β-(4-Nitrophenyl)-ethylchlorid werden in 500 ml Ethanol mit 67 g 2-Mercaptoethanol und 124 g Kaliumcarbonat auf 50 bis 60°C erwärmt. Nach beendeter Umsetzung wird das Ethanol im Vakuum abdestilliert, das zurückbleibende Öl mit Wasser gewaschen und nach Emulgieren in 400 ml Wasser nach der Verfahrensweise des Beispiels 79C mit Wasserstoffperoxid zum Sulfon oxidiert

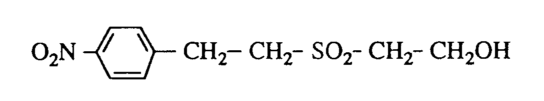

### Beispiel 83

In Analogie zu Beispiel 82 wird aus 2-Nitrophenylethanol (nach einer Reaktion mit SOCl₂) durch Ersatz des Chloratoms gegen den 2-Mercaptoethanolrest und Oxidation des gewonnenen Thioethers mit H₂O₂ die Verbindung der Formel erhalten, 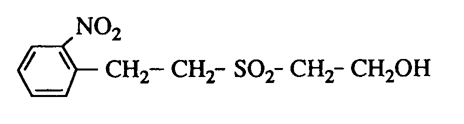
aus der sich nach katalytischer Reduktion der Nitrogruppe und anschließende Veresterung mit Schwefelsäure folgende Verbindung herstellen läßt

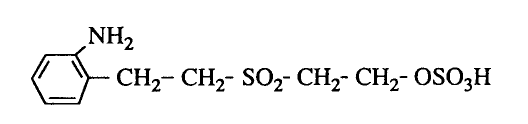

### Beispiel 84

In Analogie zum Beispiel 79A gibt man 49,7 g 3-Nitrostyrol, 31,5 g 2-Mercaptoethanol und 0,4 g Azoisobuttersäurenitril zusammen, läßt über Nacht rühren und erwärmt dann auf 50°C. Die erhaltene Verbindung der Formel 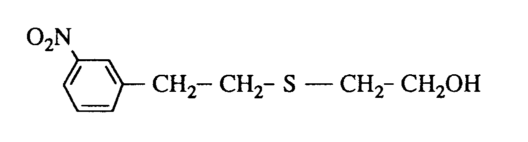
wird mit H₂O₂ in Analogie zum Beispiel 79C zum Sulfon oxidiert, die Nitrogruppe katalytisch reduziert und die erhaltene Aminoverbindung mit Schwefelsäure zur Sulfatoverbindung der Formel 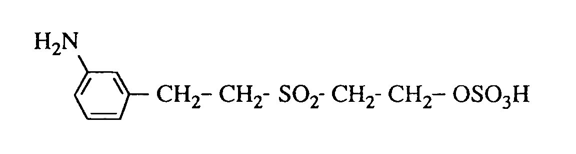
umgewandelt.

### Beispiel 85

Nach den Angaben des Beispiels 76 wird aus 78,4 g 1-Amino-8-hydroxynaphthalin-3,6-disulfonsäure, 21,5 ml Cyanurfluorid und 72 g 2-(4-Aminophenyl)-ethyl-2'-sulfatoethylsulfon eine Lösung der Kupplungskomponente 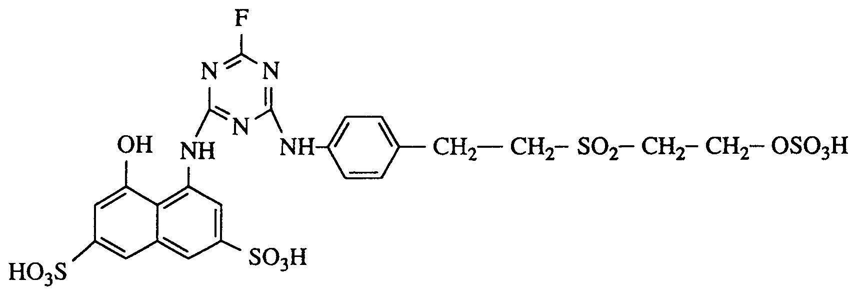
hergestellt.

39,8 g 2-Aminobenzolsulfonsäure werden in 300 ml Wasser und 112 ml 2 n Natronlauge bei pH 6 gelöst. Es werden 57,5 ml 4 n Natriumnitritlösung zugesetzt Die erhaltene Lösung läßt man in 30 Minuten in eine vorgelegte Mischung von 200 ml Wasser, 60 ml konzentrierte Salzsäure und 2,5 ml 4 n Natriumnitritlösung bei 0 bis 2°C einlaufen. Man rührt anschließend 1 Stunde nach, beseitigt etwas überschüssige salpetrige Säure mit Amidosulfonsäure und trägt die erhaltene Diazosuspension bei 0 bis 3°C in die obige Lösung der Kupplungskomponente ein, wobei man in der entstehenden Mischung durch gleichzeitige Zugabe von 2 n Sodalösung den pH-Wert auf 6,5 hält Nach zweistündigem Rühren unter Kühlung läßt man die Temperatur auf 20°C ansteigen.

Nach beendeter Kupplung wird der Farbstoff mit Natriumchlorid ausgesalzen, abgesaugt, mit 25 %iger Natriumchloridlösung gewaschen und nach Pufferung bei 50°C im Vakuum getrocknet.

Er entspricht der Formel 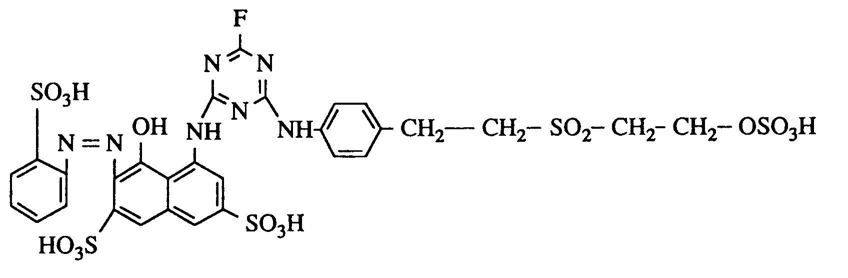
und färbt Baumwolle aus langer Flotte bei einer optimalen Färbetemperatur von 50°C mit guten Fixierausbeuten in roten Tönen.
λₘₐₓ = 532 nm in Wasser.

Weitere Farbstoffe werden analog aus den in der nachfolgenden Zusammenstellung angegebenen Komponenten synthetisiert.

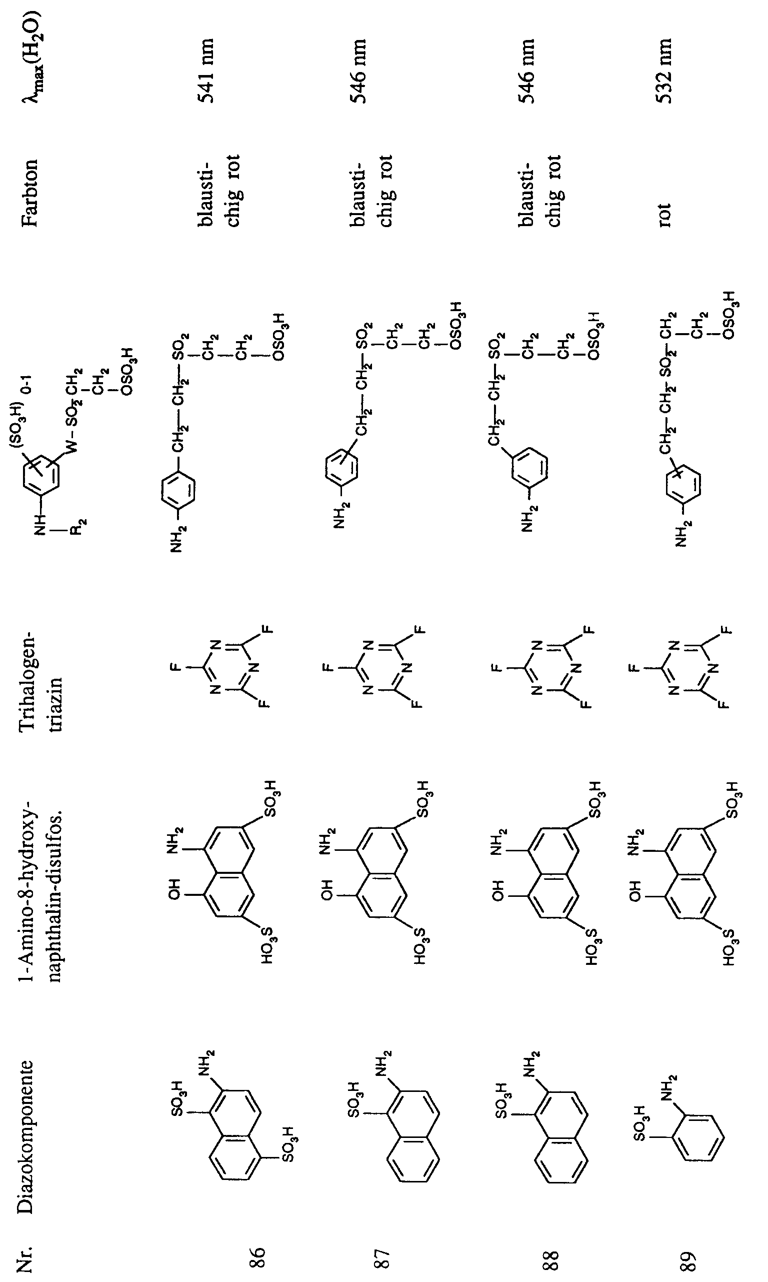

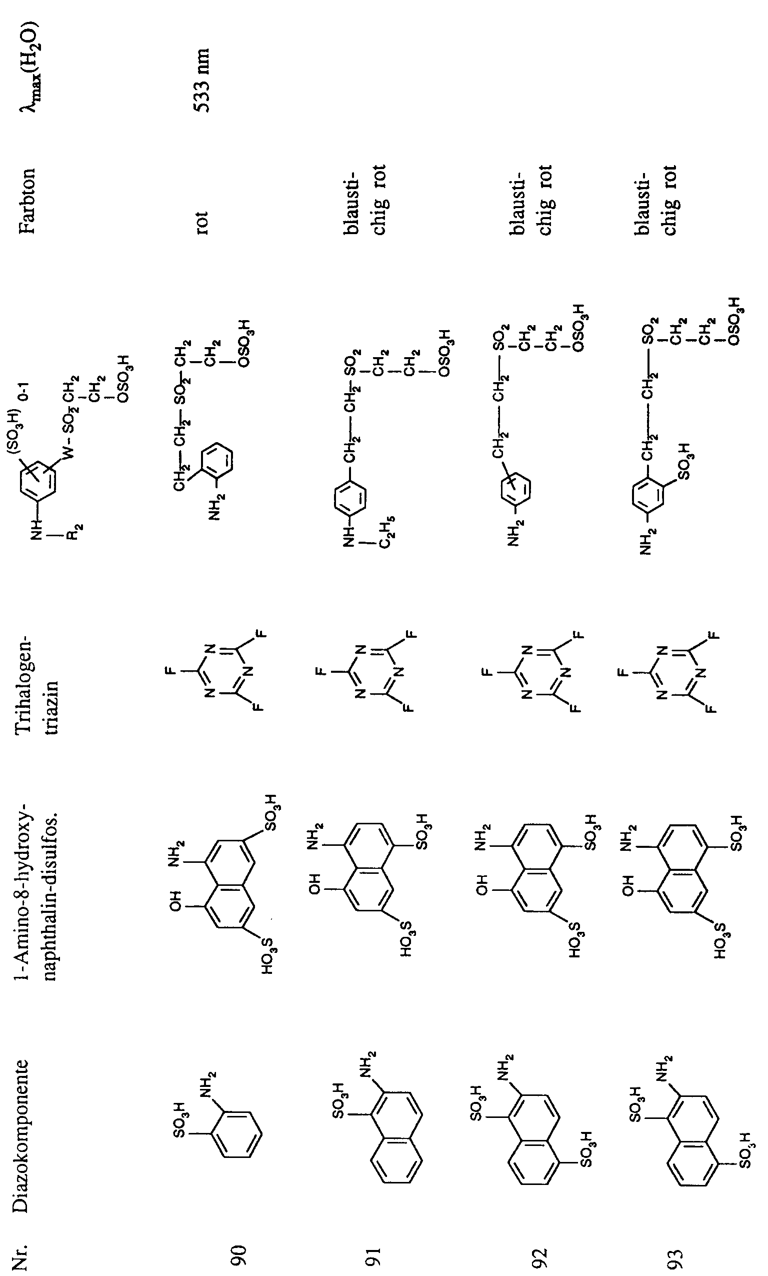

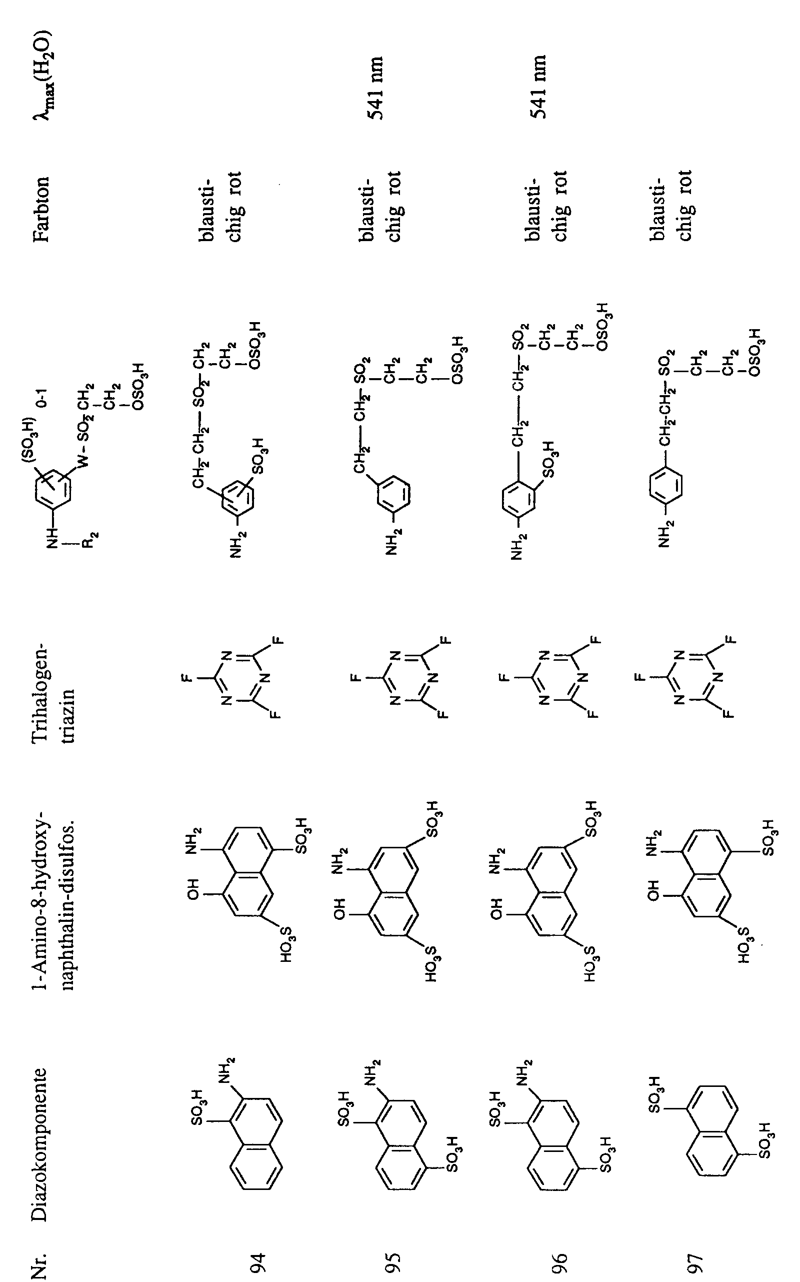

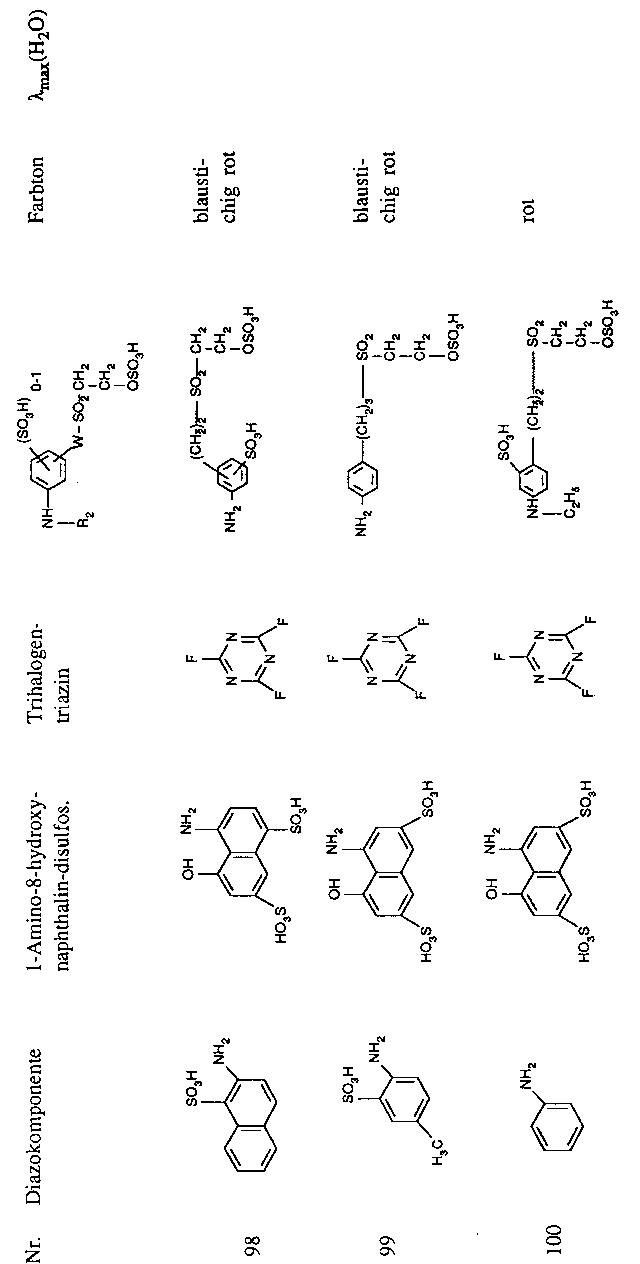

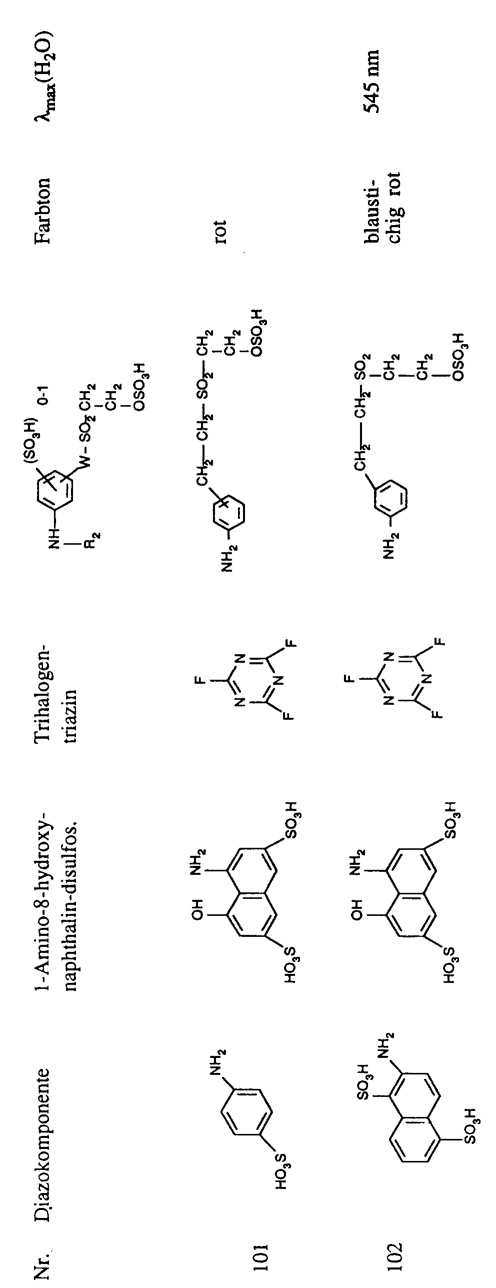

### Beispiel 103

41,7 g Azoverbindung der Formel 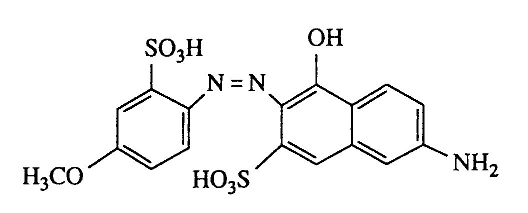
werden in 800 ml Wasser durch Einstellen eines pH-Wertes von 4,5 mit 2 n Natronlauge gelöst. Nach Abkühlung der Lösung auf 0°C tropft man in 10 Minuten 8,2 ml Cyanurfluorid ein und hält den pH-Wert mit 2 n Sodalösung auf 4,5 bis 4,7. Man rührt noch 10 Minuten nach und setzt dann eine neutrale Lösung von 39,4 g Komponente der Formel 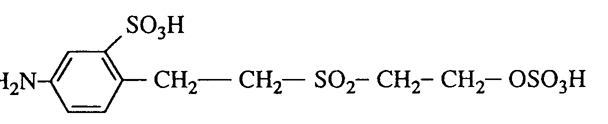
in 150 ml Wasser hinzu, die gemäß den Angaben des Beispiels 80 gewonnen wird. Während der Zudosierung wird die Temperatur weiter auf 0 bis 2°C und der pH-Wert mit Sodalösung auf 5,5 bis 5,7 gehalten. Nach 2 Stunden läßt man die Temperatur auf 20°C ansteigen. Ist die Kondensation beendet, wird der Farbstoff mit Kaliumchlorid ausgesalzen, abgesaugt, mit 15 %iger Kaliumchloridlösung gewaschen und nach Versatz mit etwas Phosphatpufferlösung bei 50°C im Vakuum getrocknet.

Der Farbstoff der Formel 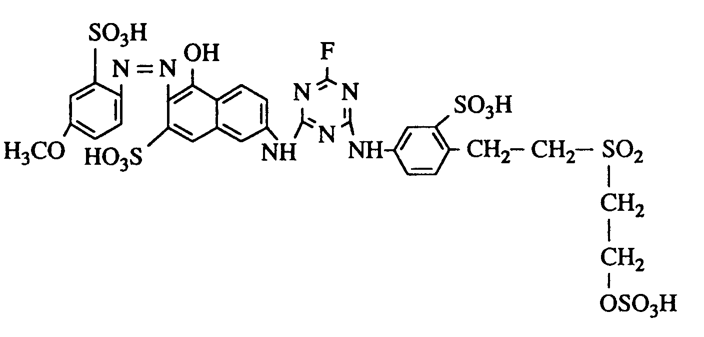
färbt Baumwolle aus langer Flotte mit einer optimalen Färbetemperatur von 50°C und hoher Fixierausbeute in Scharlachtönen.
λₘₐₓ = 500 nm in Wasser.

### Beispiel 104

24,5 g Azoverbindung der Formel 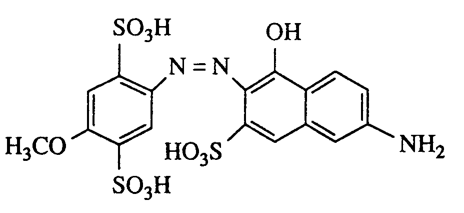
werden in 340 ml Wasser bei pH 7 gelöst. Nach Abkühlung auf 0 bis 2°C stellt man den pH-Wert mit verdünnter Salzsäure auf 4,5 und läßt dann sofort 4,3 ml Cyanurfluorid in 4 Minuten zutropfen. Der pH-Wert wird mit 2 n Sodalösung weiter auf 4,5 gehalten. 15 Minuten später ist die Umsetzung beendet.
Man gibt nun eine mit 10 %iger Lithiumhydroxidlösung auf pH 6 gestellte Lösung von 18,6 g Komponente der Formel 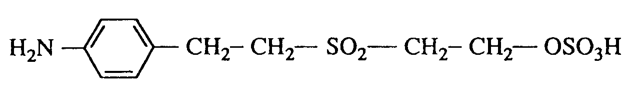
in 100 ml Wasser hinzu und hält den pH-Wert im Reaktionsgemisch auf 5,0 bis 5,5. Nach 2 Stunden läßt man die Temperatur auf 20°C ansteigen. Man setzt 1 g primäres Natriumphosphat hinzu, stellt den pH-Wert mit verdünnter Natronlauge auf 5,5 und dampft anschließend die Lösung im Rotationsverdampfer bei 35 bis 40°C im Vakuum ein. Man erhält ein orangefarbenes Pulver, das Baumwolle aus langer Flotte mit einer optimalen Färbetemperatur von 40 bis 60°C und ausgezeichneter Fixierausbeute in rotstichigen Orangetönen färbt.

Der erhaltene Farbstoff hat die Formel 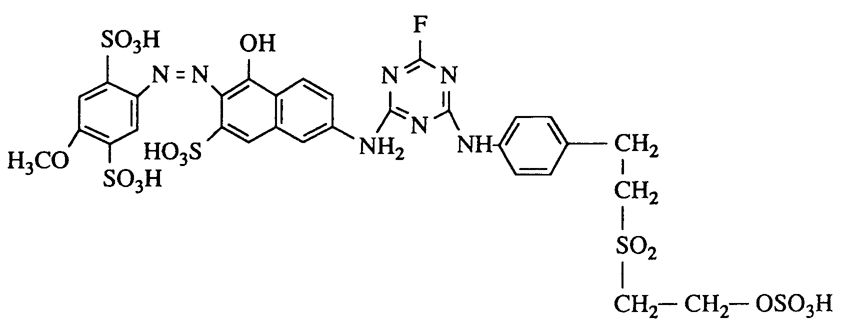
λₘₐₓ = 497 nm in Wasser.

Weitere orangefärbende Farbstoffe erhält man, wenn man analog folgende Azokomponenten mit Cyanurfluorid und Aminophenylalkyl-β-sulfatoethylsulfonen kondensiert.

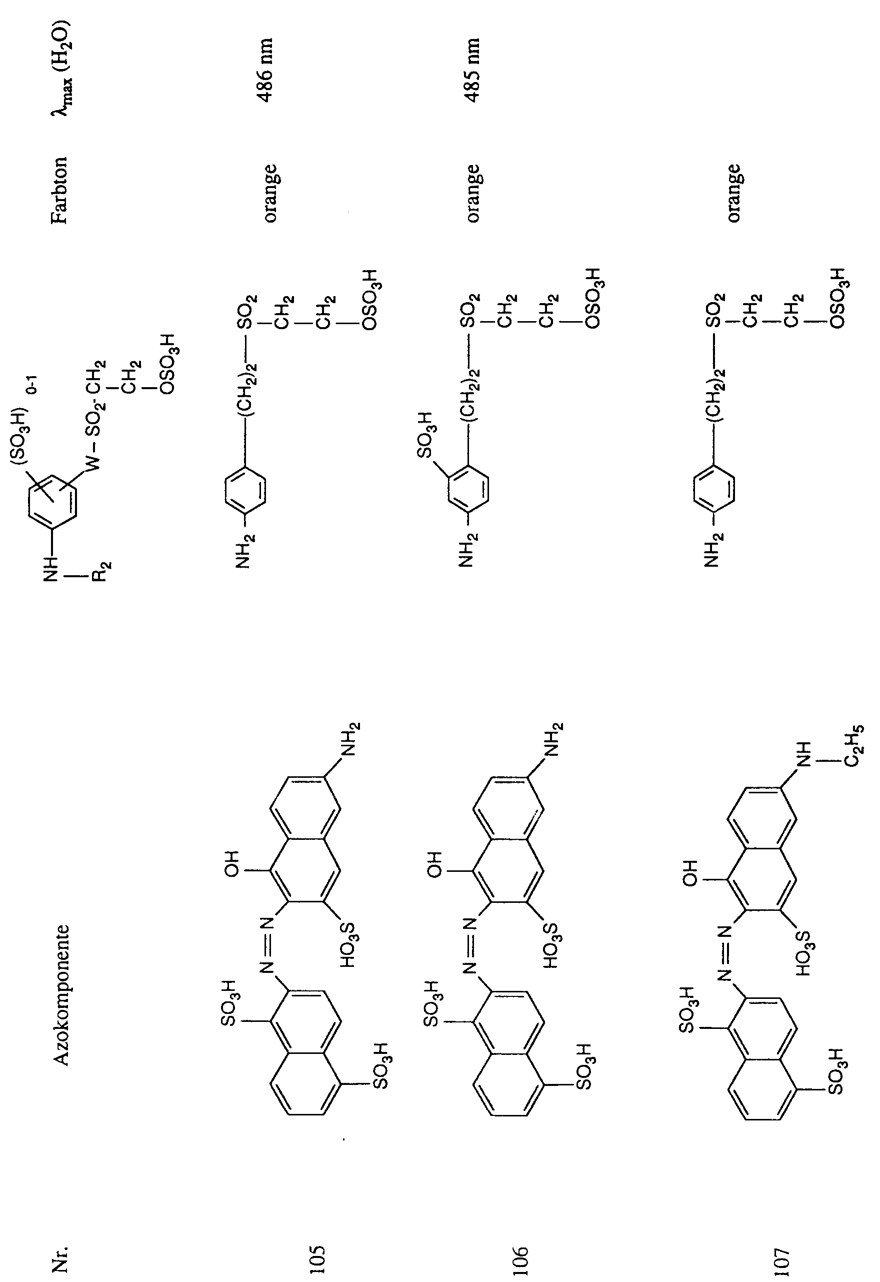

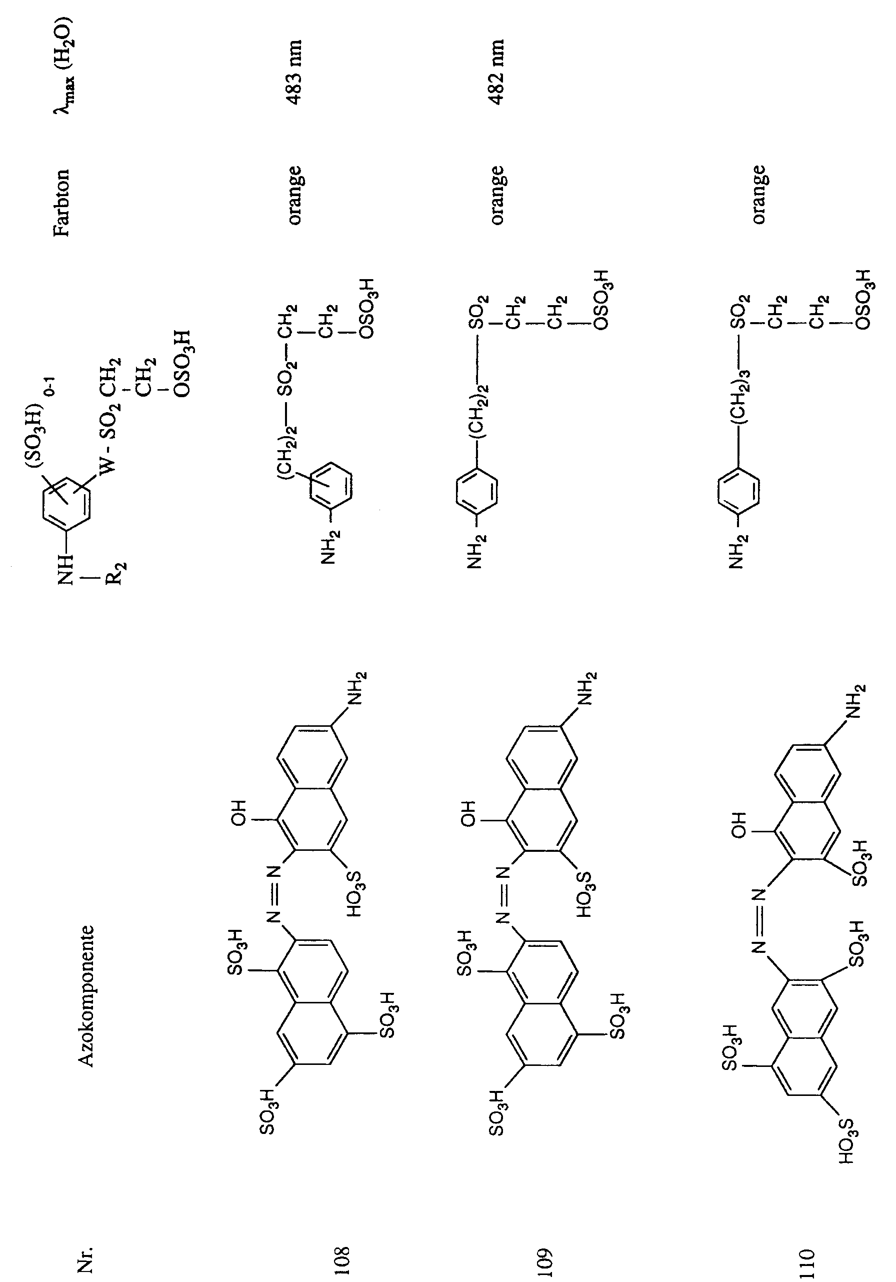

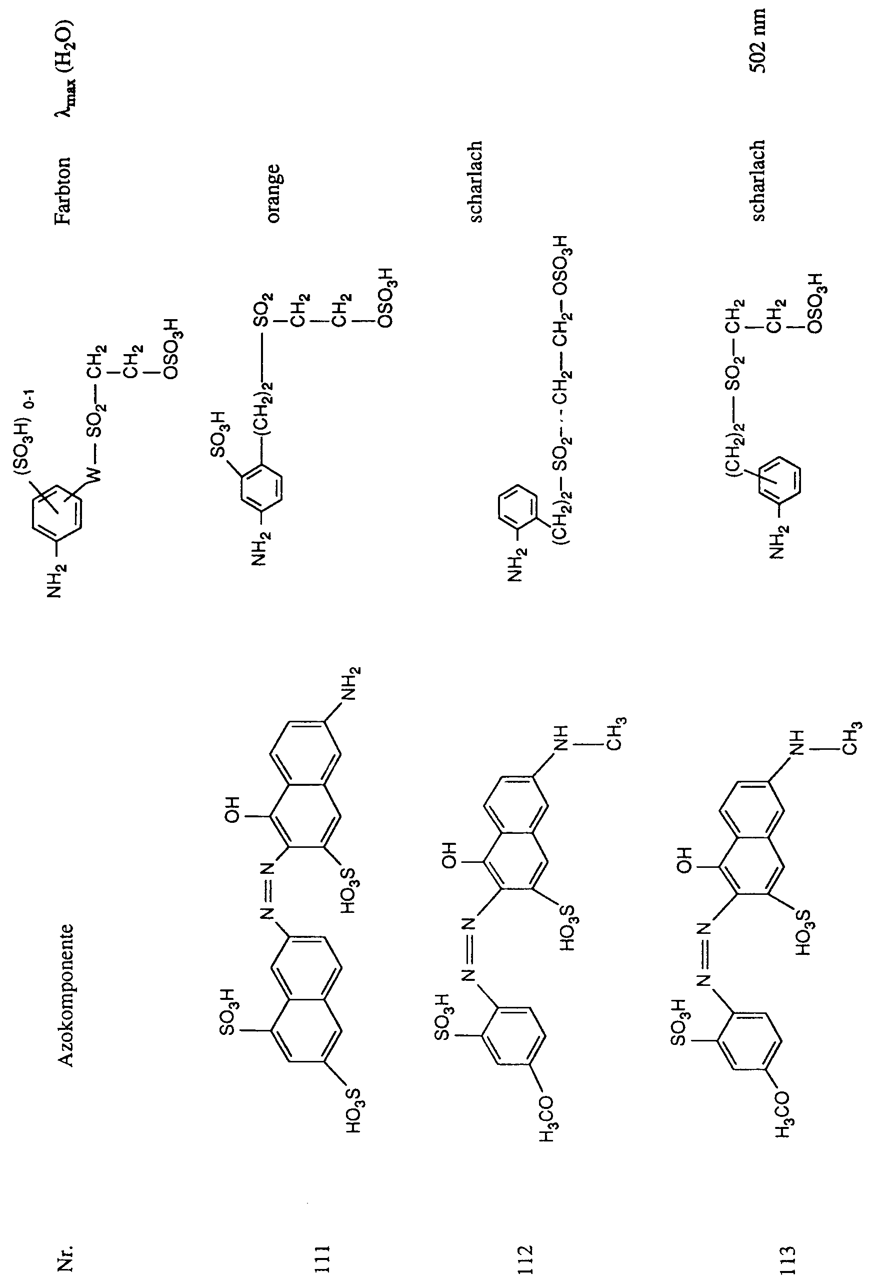

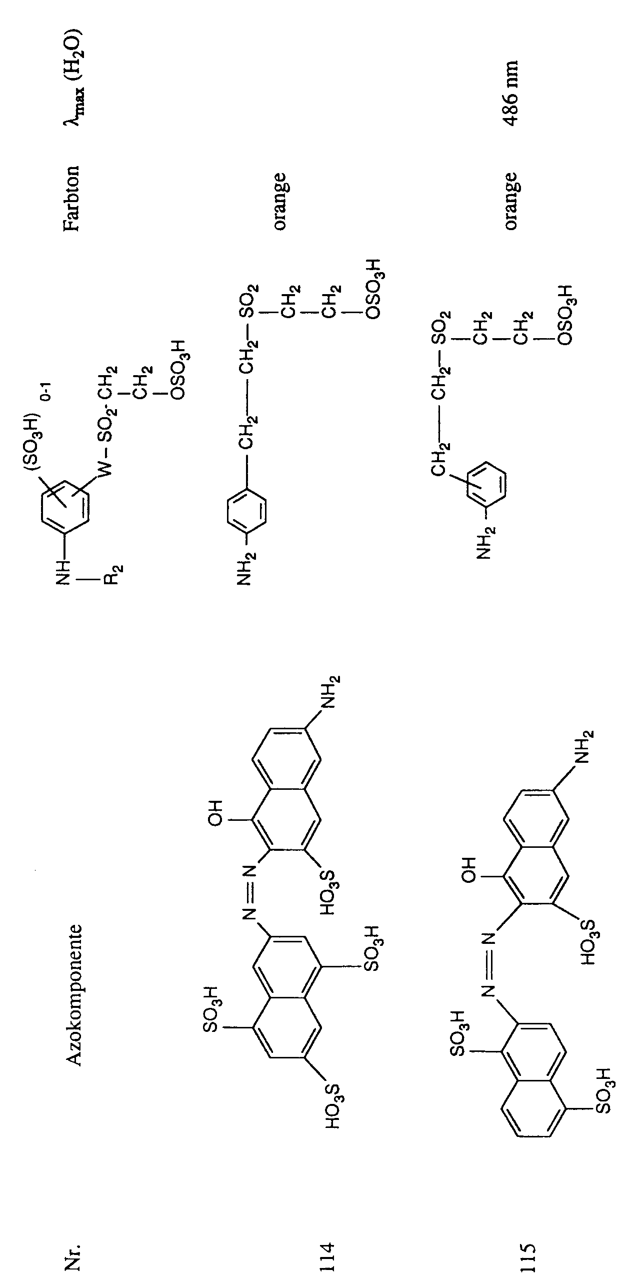

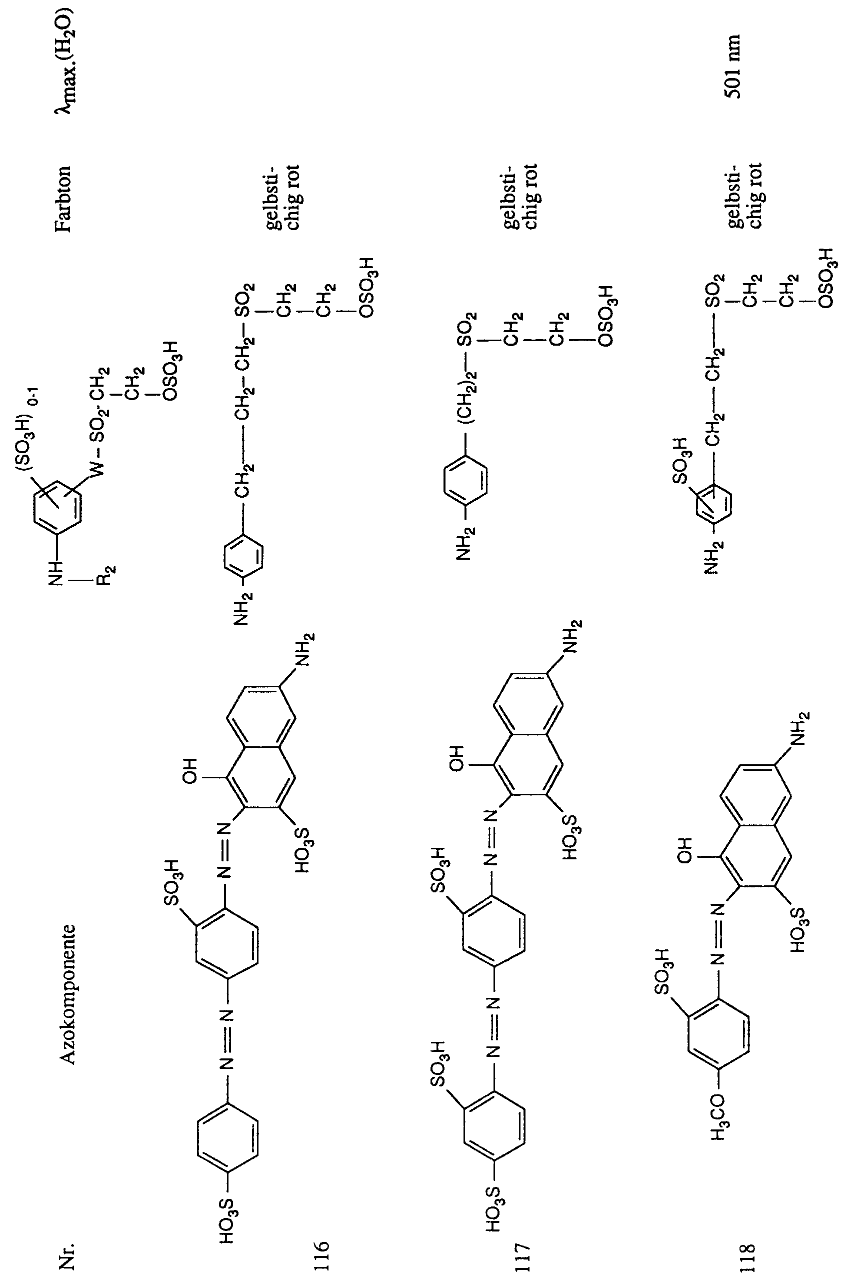

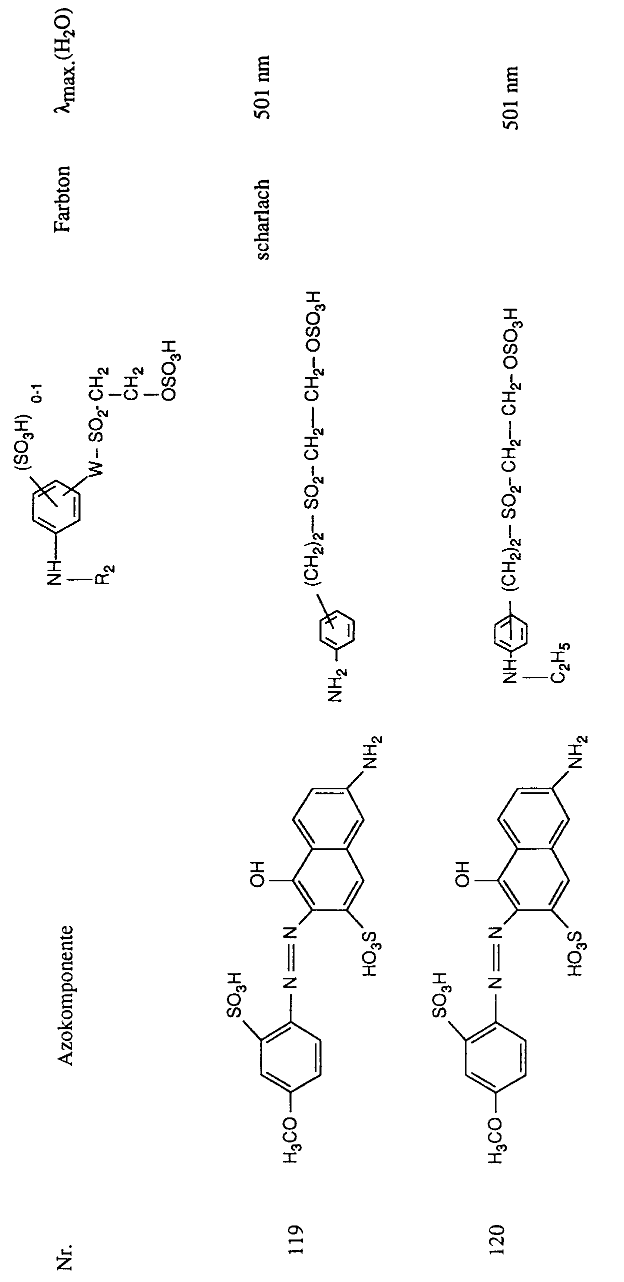

### Beispiel 121

35,0 g des Kupplungsproduktes von 2-Aminonaphthalin-6,8-disulfonsäure auf 3-Aminoacetanilid werden in 600 ml Wasser bei pH 5,5 unter Erwärmen auf 50°C gelöst. Man kühlt auf 0°C ab und läßt 7,7 ml Cyanurfluorid in 5 bis 10 Minuten zutropfen. Dabei wird der pH-Wert mit verdünnter Sodalösung auf 5,2 bis 5,5 gehalten.
Wenn die Umsetzung nach etwa 10 bis 15 Minuten beendet ist, läßt man eine auf pH 5,5 gestellte Lösung von 35,0g Verbindung 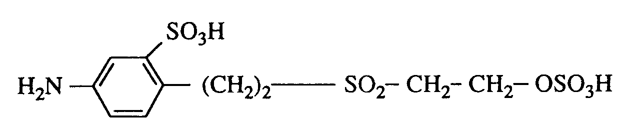
in 120 ml Wasser zutropfen und hält den pH-Wert mit verdünnter Sodalösung auf 5,5 bis 5,7, die Temperatur auf 0 bis 5°C, später ansteigend auf 15 bis 20°C.
Die erhaltene Lösung wird nach Zusatz von 1,5 g Phosphat- Puffer von pH 6 im Vakuum bei 35 bis 40°C eingedampft oder sprühgetrocknet.
Der erhaltene Farbstoff der Formel 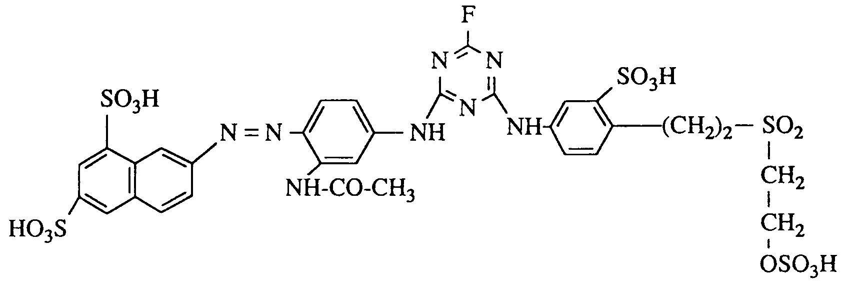
färbt Baumwolle aus langer Flotte mit einer optimalen Färbetemperatur von 50°C in goldgelben Tönen.
λ_{max.} = 389 nm in Wasser.

Weitere rotstichig gelb färbende Farbstoffe erhält man durch Kondensation folgender p-Aminoazoverbindungen mit Cyanurfluorid und Aminophenylalkyl-β-sulfatoethylsulfonen.

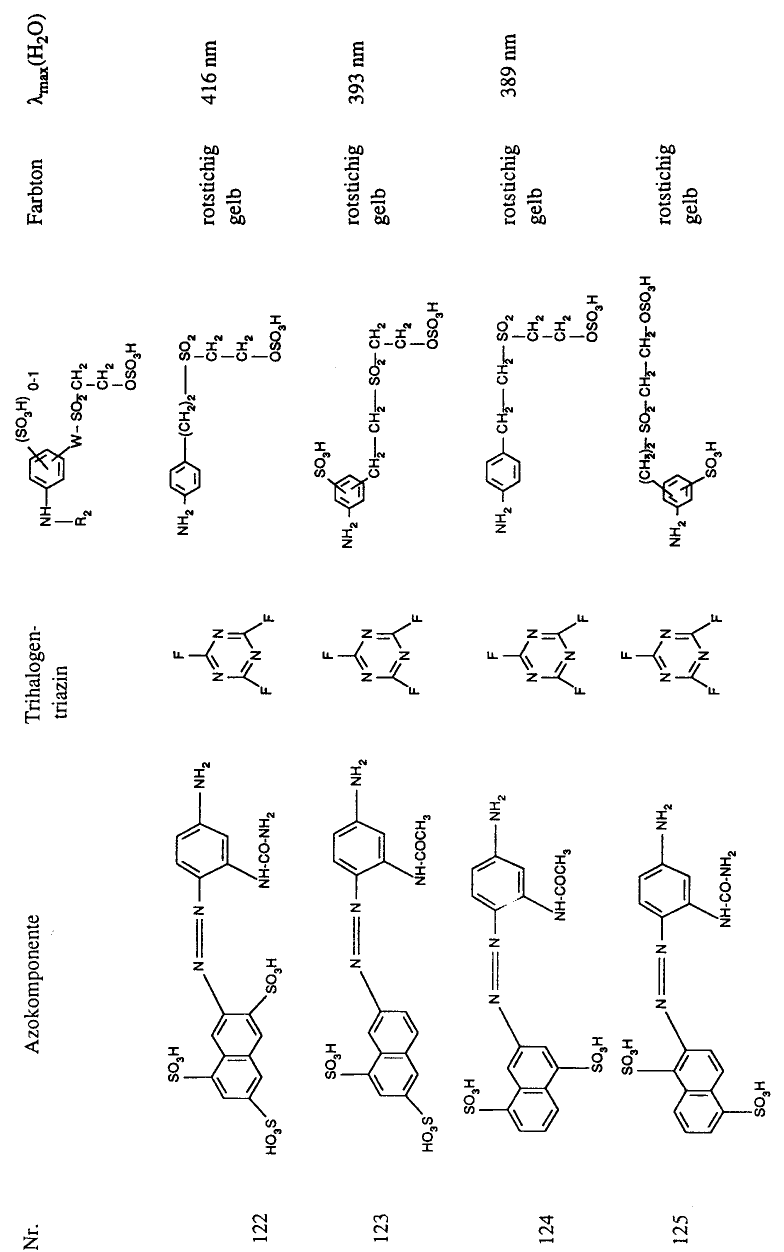

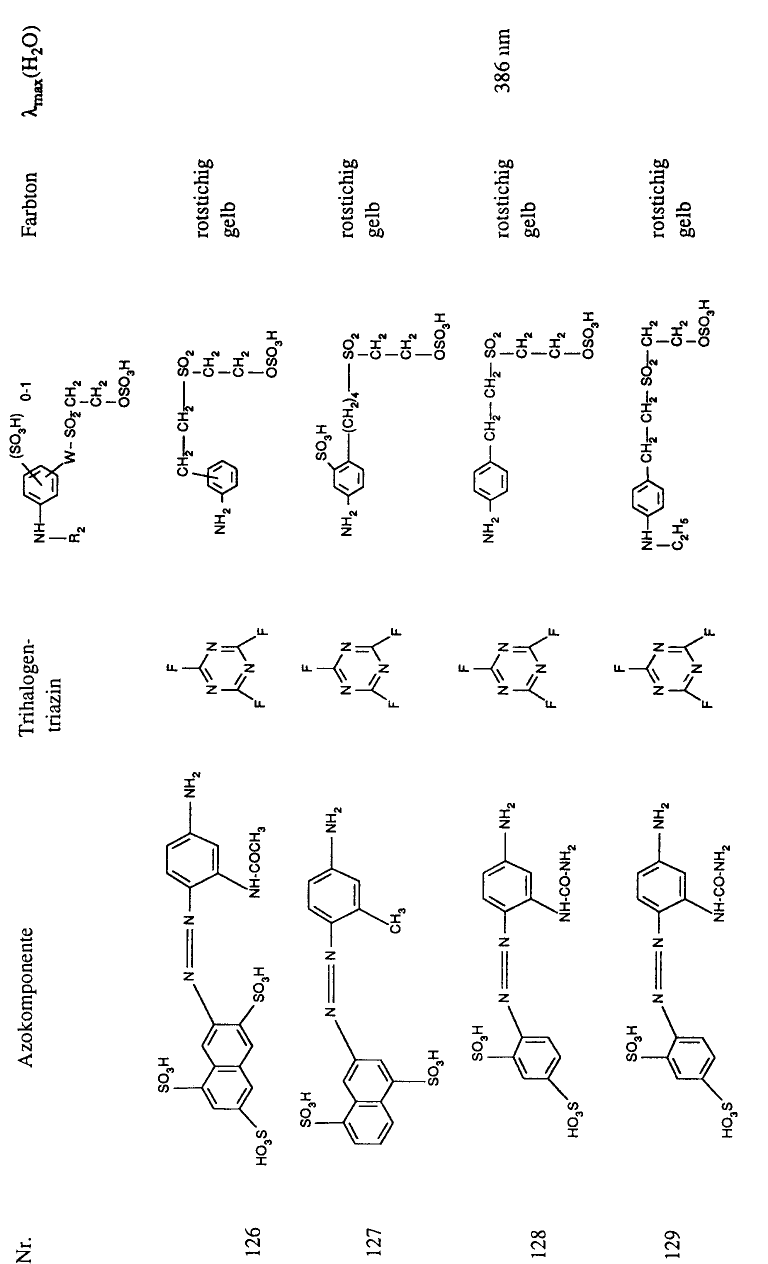

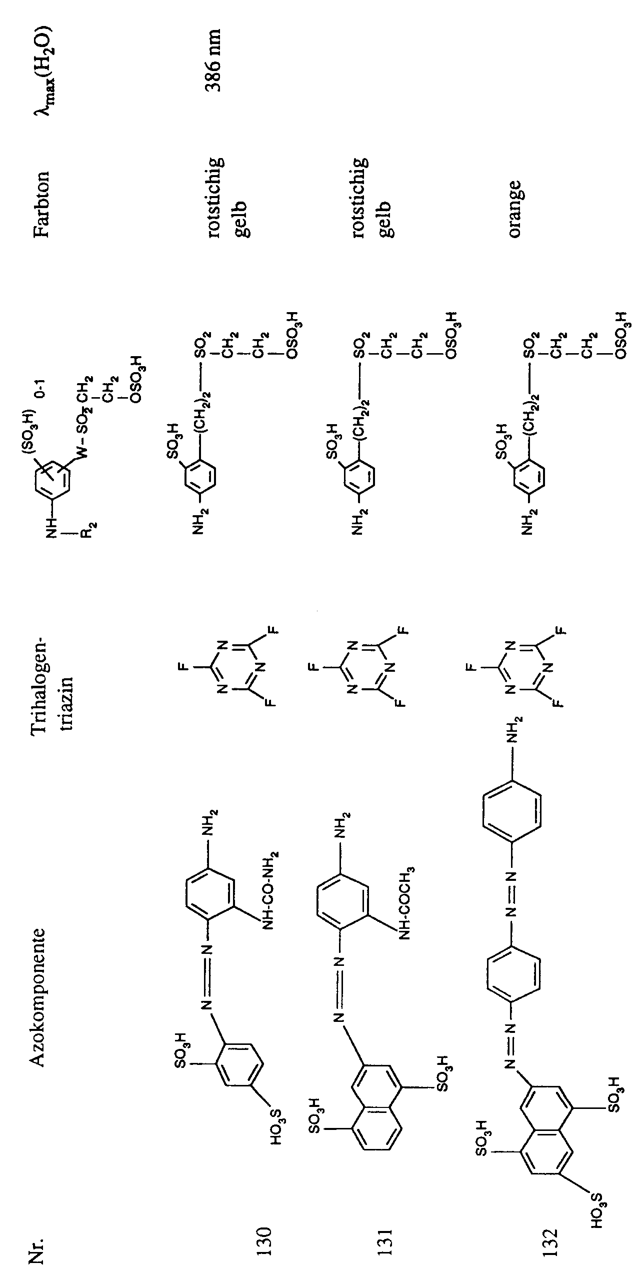

### Beispiel 133

24,2 g Aminoazopyrazolon der Formel 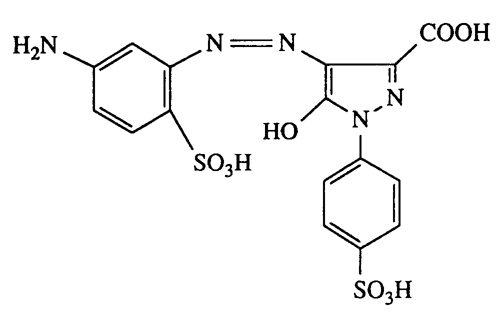
(hergestellt durch Kupplung von diazotierter 2-Amino-formylamino-benzolsulfonsäure auf 1-(4'-Sulfophenyl)-3-carboxy-5-pyrazolon und Verseifung mit verdünnter Natronlauge) werden in Form des Natriumsalzes in 600 ml Wasser gelöst Man kühlt auf 0 bis 2°C ab, stellt den pH-Wert mit verdünnter Salzsäure auf 5,0 und läßt sofort innerhalb von etwa 5 Minuten 4,0 ml Cyanurfluorid zutropfen. Der pH-Wert wird mittels 2 n Sodalösung dabei beständig zwischen 4,3 und 4,6 gehalten. Ist die Umsetzung nach 15 Minuten beendet, wird eine mit Lithiumhydroxidlösung auf pH 5,7 gestellte Lösung von 17,0 g Verbindung der Formel 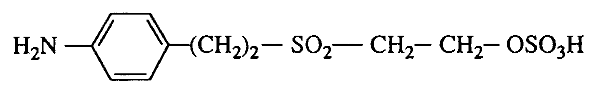
in 120 ml Wasser bei 0 bis 5°C zugegeben. Man hält den pH-Wert dabei mit 2 n Sodalösung auf 5,5 bis 6 und läßt nach 2 Stunden die Temperatur auf 20°C steigen.

Der erhaltene Farbstoff der Formel 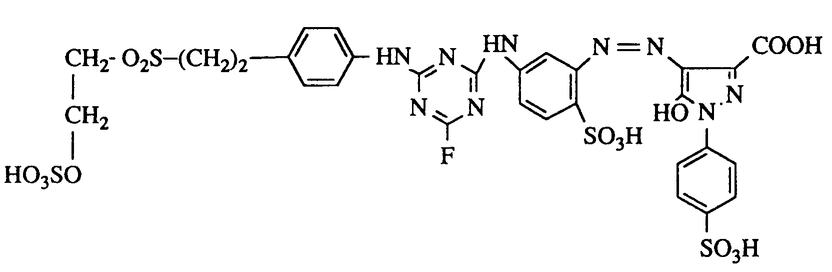
färbt Baumwolle aus langer Flotte in grünstichig gelben Tönen mit guter Fixierausbeute.

### Beispiel 134

Ersetzt man im Beispiel 133 die 5-Amino-2-sulfophenylazopyrazolon-Komponente durch eine äquivalente Menge des entsprechenden 4-Amino-2-sulfophenylazopyrazolons, so erhält man einen Farbstoff der Formel 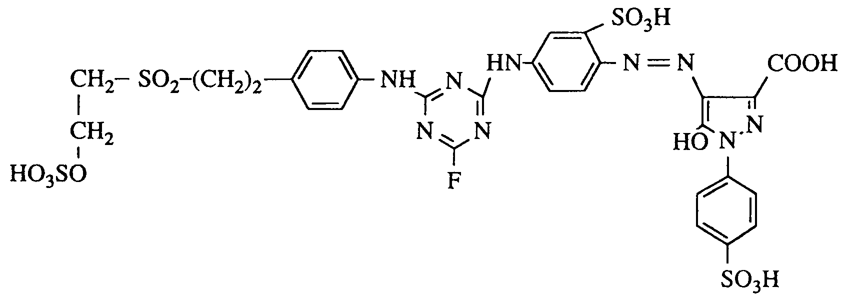
der Baumwolle in rotstichigen gelben Tönen färbt wie der des Beispiels 133.

Weitere gelbe Farbstoffe mit ähnlichen Eigenschaften erhält man, wenn man die folgenden Aminophenylazopyrazolone mit Cyanurfluorid und den angegebenen Aminophenylalkyl-β-sulfatoethylsulfonen kondensiert.

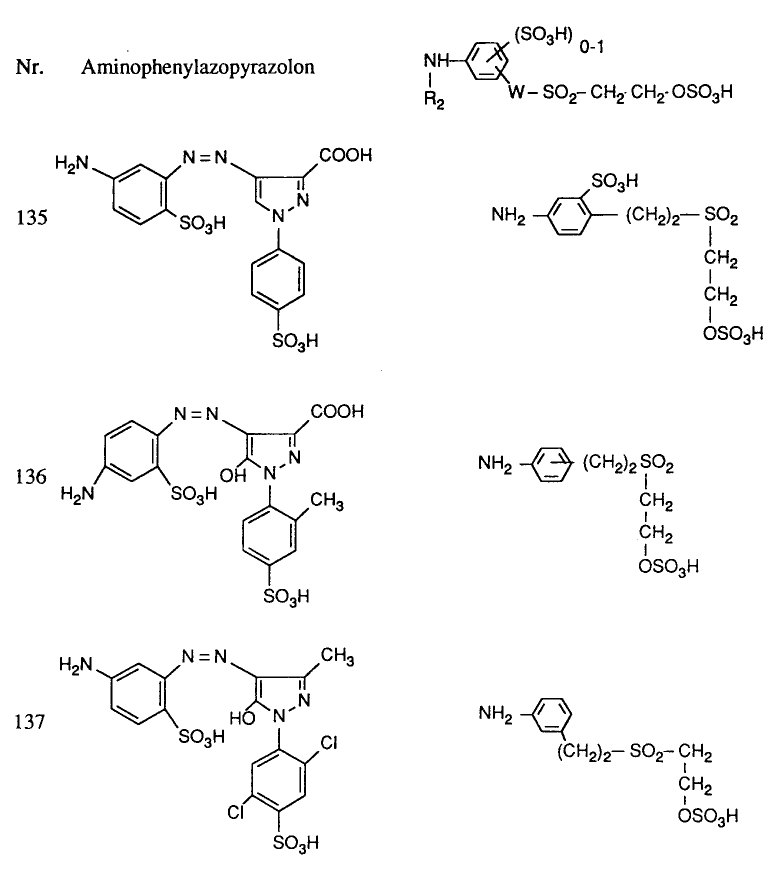

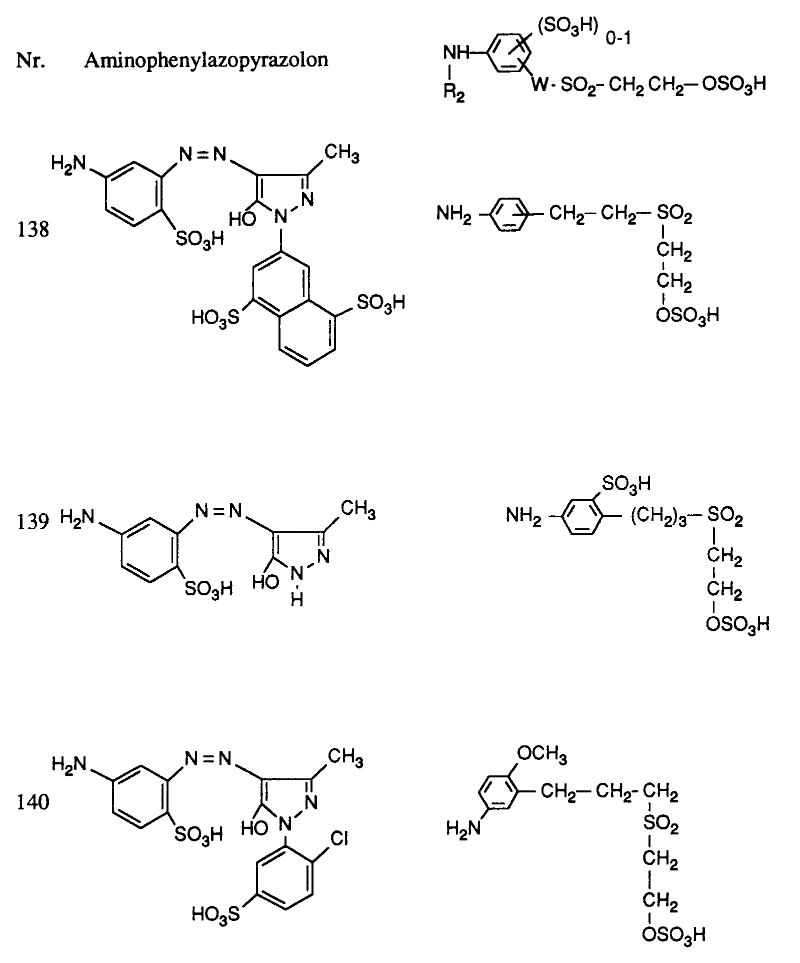

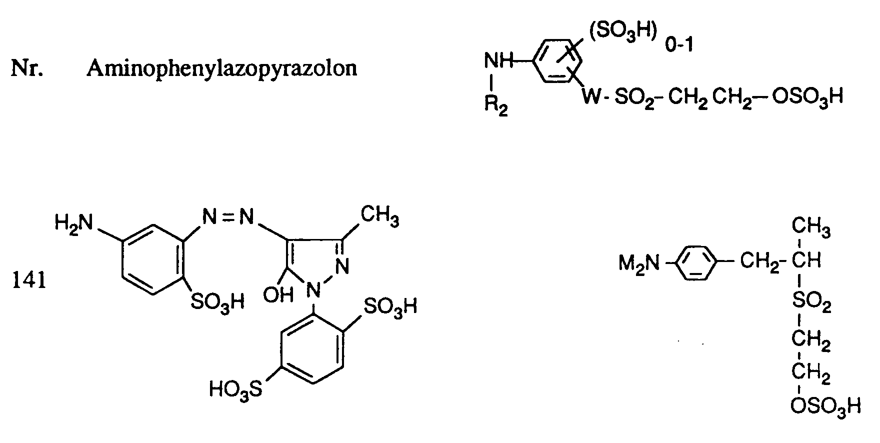

### Beispiel 142

19,9 g Azoverbindung der Formel 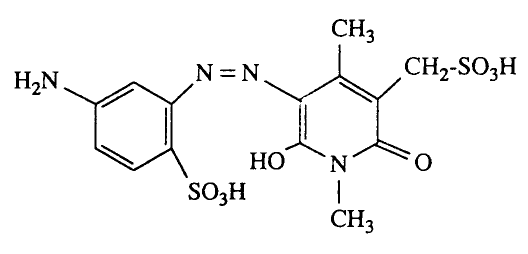
hergestellt durch Kupplung von diazotierter 4-Acetylamino-2-aminoberzolsulfonsäure auf 1,4-Dimethyl-6-hydroxy-5-aminocarbonyl-3-sulfomethyl-pyridon-2 und Verseifung der Acetylaminogruppe in verdünnter Natronlauge, werden in 400 ml Wasser bei pH 5,0 gelöst.
Nach Abkühlung auf 0°C läßt man 4,1 ml Cyanurfluorid zulaufen und hält den pH-Wert mit 2 n Sodalösung auf 4,5. Man rührt noch 15 Minuten unter den gleichen Bedingungen nach und setzt dann eine mit Lithiumhydroxid neutralisierte Lösung von 15,7 g Komponente der Formel 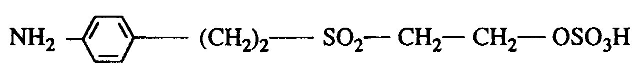
in 110 ml Wasser zu. Man hält den pH-Wert mit Sodalösung auf 5,5 bis 5,7, die Temperatur weiterhin auf 0 bis 3°C und führt die Kondensation durch Rühren über Nacht zu Ende. Der Farbstoff wird mit Kaliumchlorid ausgesalzen, abgesaugt und mit 15 %iger Kaliumchloridlösung gewaschen.

Er entspricht der Formel 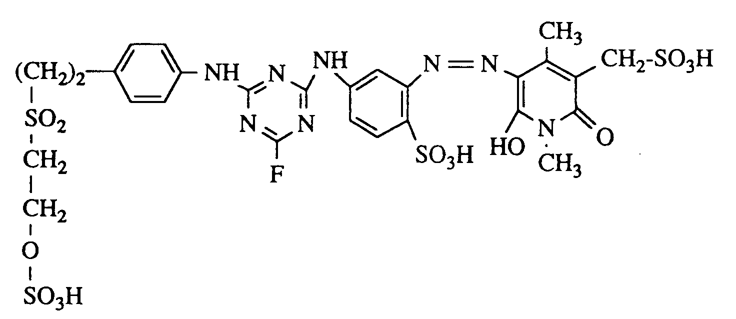
λ_{max.} = 422 nm in Wasser
und färbt Baumwolle aus langer Flotte mit einer optimalen Färbetemperatur von 40 bis 50°C in brillanten grünstichigen Gelbtönen.

Ähnliche Farbstoffe erhält man, wenn man nach den Angaben des Beispiels 142 die Komponenten der Beispiele 143 bis 154 miteinander umsetzt.

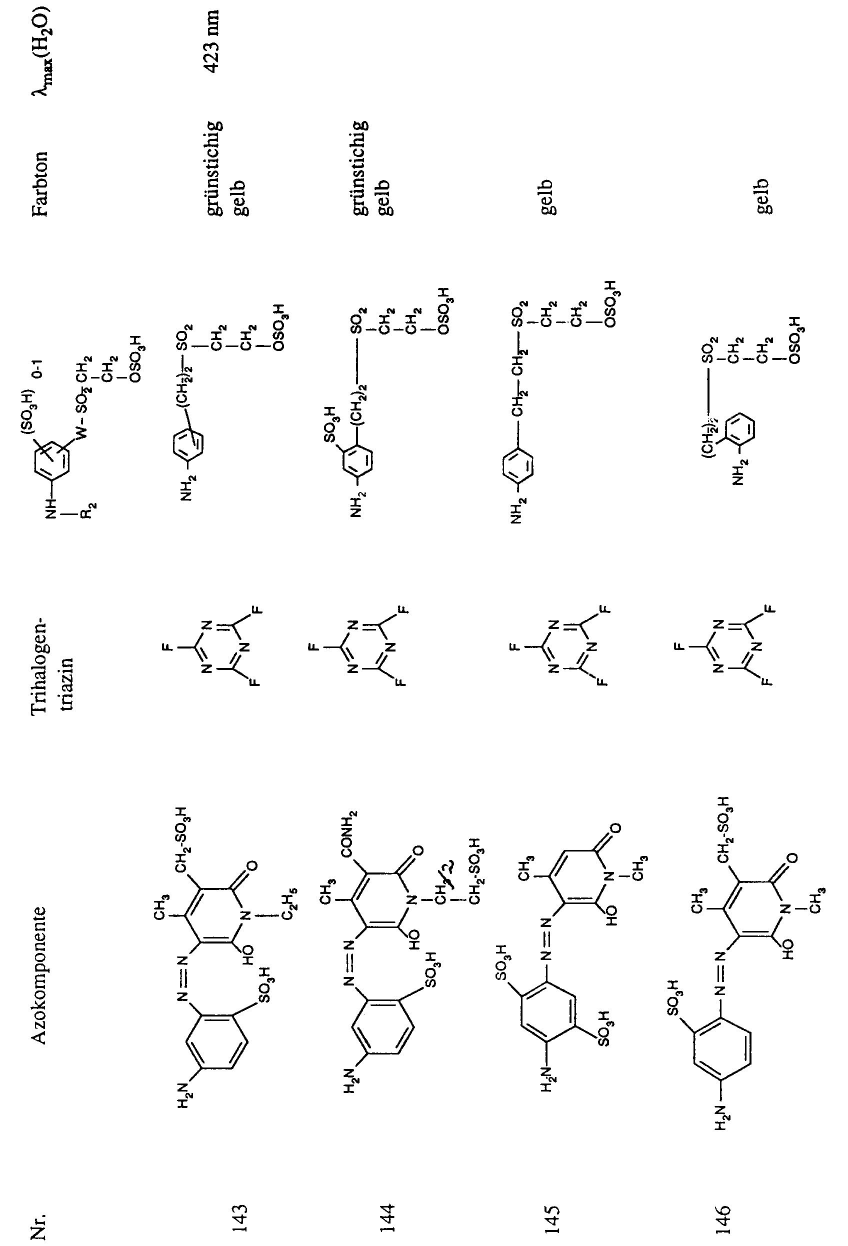

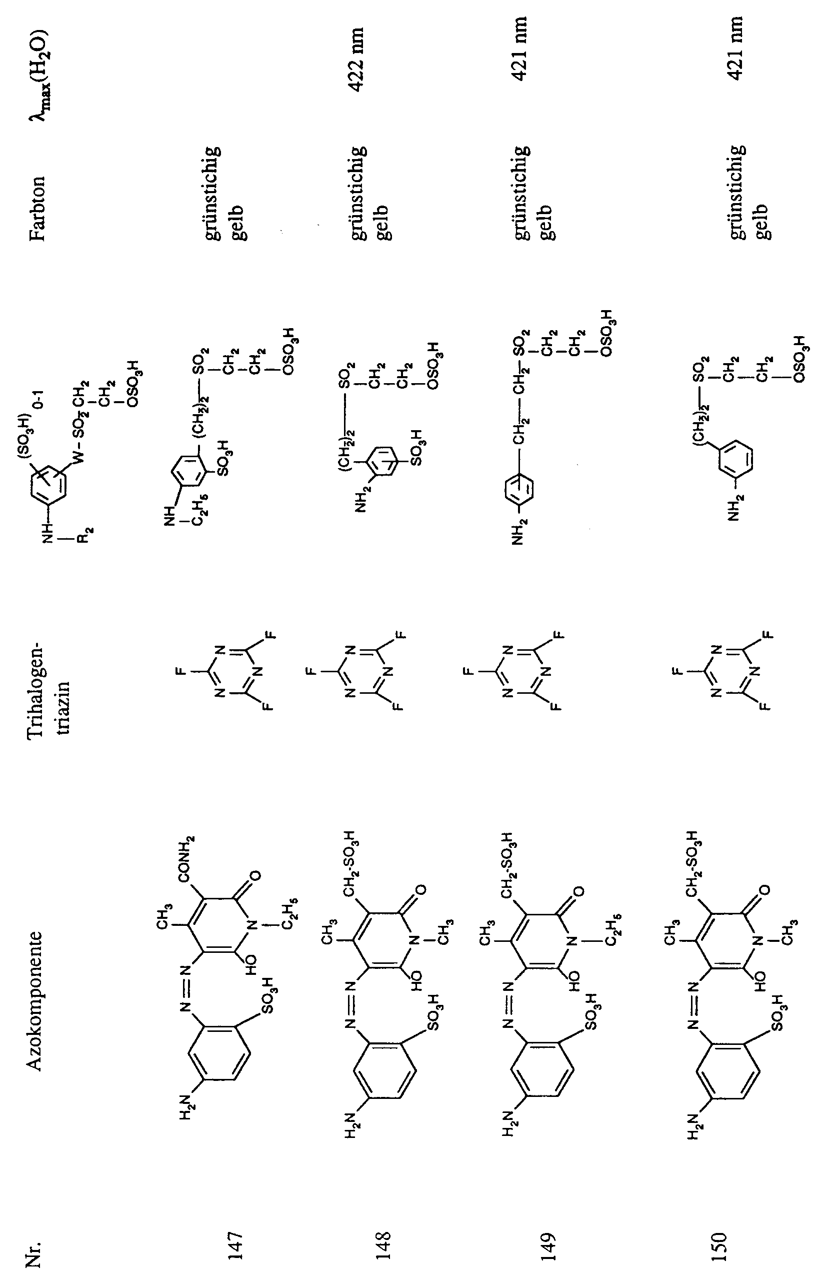

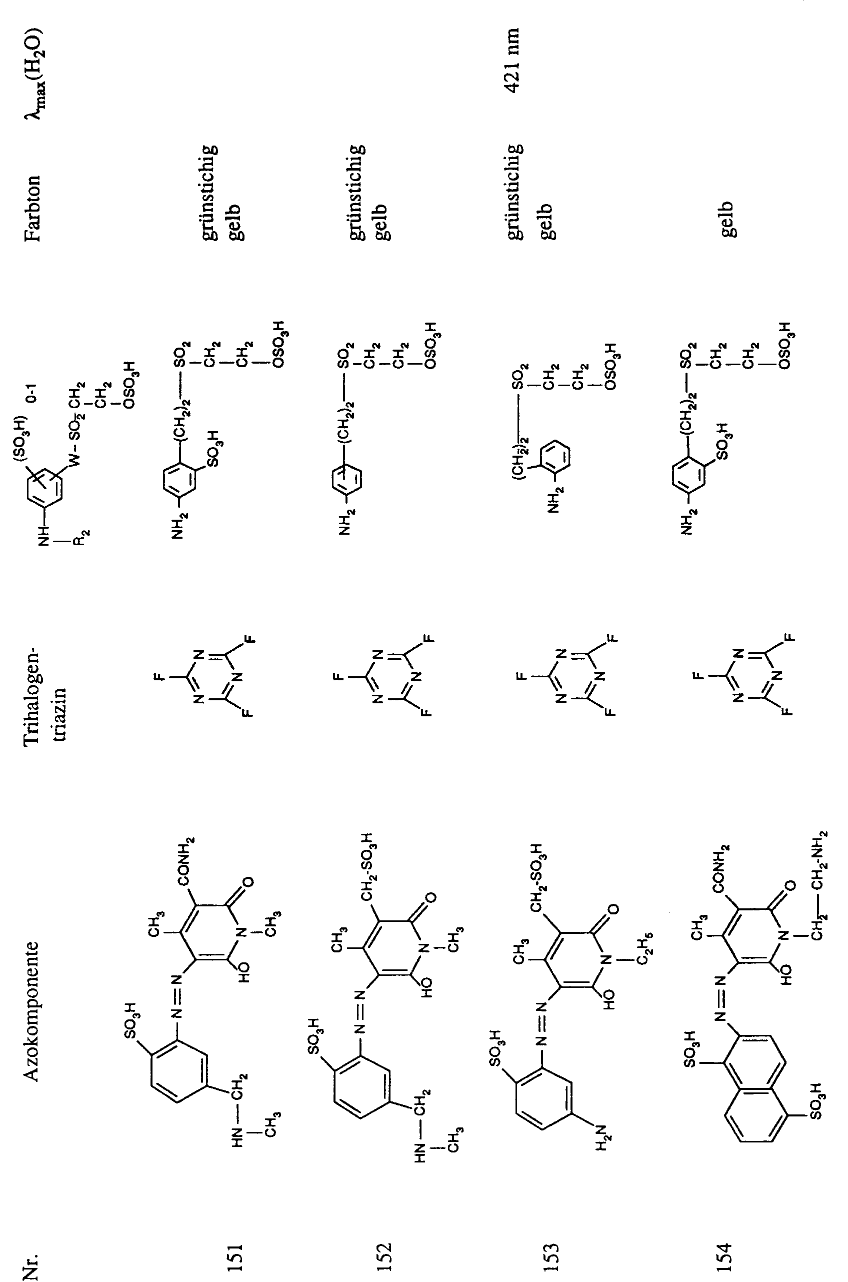

### Beispiel 155

Eine Lösung von 22,6 g der Komponente der Formel 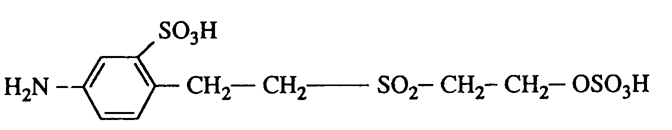
in 60 ml Wasser, erhalten nach den Angaben des Beispiels 80, wird mit 2 g Natriumfluorid versetzt und auf pH 3,5 gestellt. Man läßt bei 0°C 5,2 ml Cyanurfluorid in 5 Minuten zutropfen und hält den pH-Wert mit etwa 54 ml 2 n Sodalösung auf 3,5 bis 3,7.

25 g 1-Amino-4-(2'-aminomethyl-4'-methyl-6'-sulfophenyl-amino)-anthrachinon-2-sulfonsäure werden in 400 ml Wasser und 50 ml Aceton durch Neutralisation mit ca. 28 ml 2 n Natronlauge bei pH 7 gelöst. Nach Abkühlung der Lösung auf 0 bis 5°C läßt man die Lösung obiger Reaktivkomponente zulaufen und hält den pH-Wert mit 2 n Sodalösung auf 6,5. Nach beendeter Kondensation wird der Farbstoff entweder ausgesalzen oder durch Eindampfen im Vakuum bei 35 bis 40°C isoliert. Er entspricht der Formel, 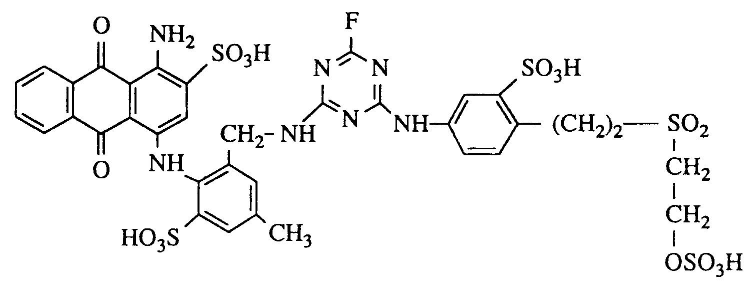
kann zum Drucken oder Färben nach Kontinue-Verfahren für Cellulosegewebe eingesetzt werden und liefert klare rotstichig blaue Farbtöne. Dabei werden sehr gute Fixierausbeuten erzielt (λₘₐₓ = 624 und 587 nm, in H₂O).

### Beispiel 156

14,7 g 1-Amino-4-(3'-amino-phenylamino)-anthrachinon-2,4'-disulfonsäure werden in 250 ml Wasser bei pH 5 und 0 bis 5°C gelöst Man läßt 2,8 mi Cyanurfluorid innerhalb von 5 bis 10 Minuten zu der Lösung der Farbkomponente tropfen und hält den pH-Wert mit 2 n Sodalösung auf 4,2 bis 4,7. Nach kurzem Nachrühren ist die Kondensation zum Difluortriazinylfarbstoff beendet.

Eine neutralisierte Lösung von 12,3 g Verbindung der Formel 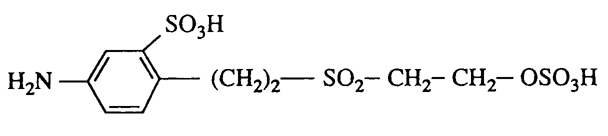
in 40 ml Wasser wird nun zu der Lösung der reaktiven Farbstoffkomponente langsam zugegeben und dabei der pH-Wert auf 5,0 bis 5,6 gehalten. Danach hält man den pH auf 6,0 bis 6,5 und läßt im Verlaufe von 15 Stunden die Temperatur allmählich auf 20°C ansteigen, wonach die Kondensation beendet ist. Die Farbstofflösung wird nun im Laufe von 2 Stunden ausgesalzen. Man saugt den ausgefällten Farbstoff der Formel 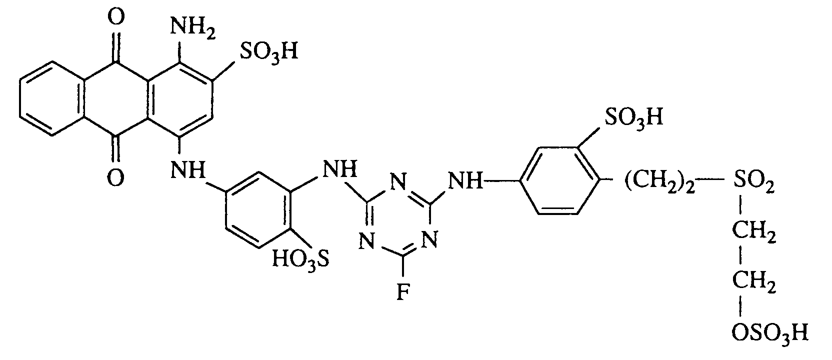
λₘₐₓ = 604 nm (H₂O)
ab und wäscht ihn mit Salzlösung bis zum hellen Ablauf. Nach Trocknung im Vakuum bei 45°C erhält man ein Produkt, mit dem Cellulosegewebe in blauen Tönen und mit guter Fixierausbeute gefärbt und bedruckt werden kann.

### Beispiel 157

16,7 g Komponente der Formel 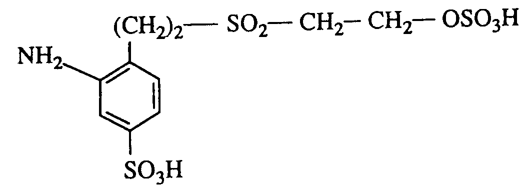
werden in 80 ml Wasser gelöst und auf einen pH-Wert von 4,0 gestellt. Man setzt 1,9 g Natriumfluorid zu der Lösung und kühlt auf 0 bis 2°C ab. Sodann läßt man 4,2 ml Cyanurfluorid unter weiterer Kühlung zulaufen und hält den pH-Wert mit Sodalösung zwischen 4,0 und 4,2. Etwa 15 Minuten nach Cyanurfluorid-Zugabe ist die Umsetzung völlig beendet. Man stellt nun die Lösung auf pH 4,5 bis 5,0. Der erhaltenen Reaktivkomponente wird im Laufe von 30 Minuten eine neutralisierte Lösung von 19,0 g 1-Amino-4-(3'-amino-2'-methylphenylamino)-anthrachinon-2,5'-disulfonsäure in 350 ml Wasser zugetropft. Dabei hält man in der Reaktionslösung die Temperatur weiter auf 0 bis 5°C und den pH-Wet mit Sodalösung auf 6,0 bis 6,5. Nach 2 Stunden läßt man die Temperatur im Laufe von 15 Stunden allmählich auf 10°C ansteigen. Nach Beendigung der Kondensation wird der Farbstoff der Formel 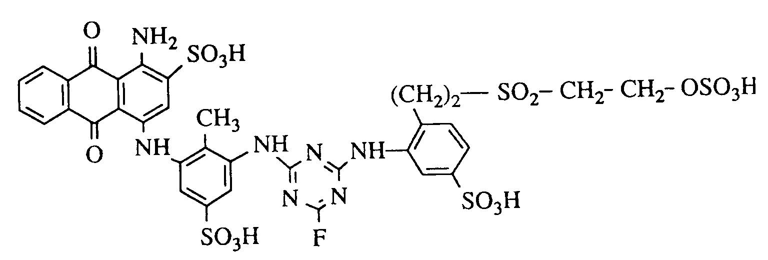
mit Natriumchlorid aus der Lösung ausgesalzen, abgesaugt, mit 20 %iger Natriumchloridlösung gewaschen und bei 45°C im Vakuum getrocknet.

Der Farbstoff gibt auf Baumwolle blaue Färbungen und Drucke mit guter Fixierausbeute.

Weitere blaue Anthrachinonfarbstoffe mit ähnlichen Eigenschaften werden erhalten, wenn man die nachfolgend aufgeführten Anthrachinonkomponenten der allgemeinen Formel 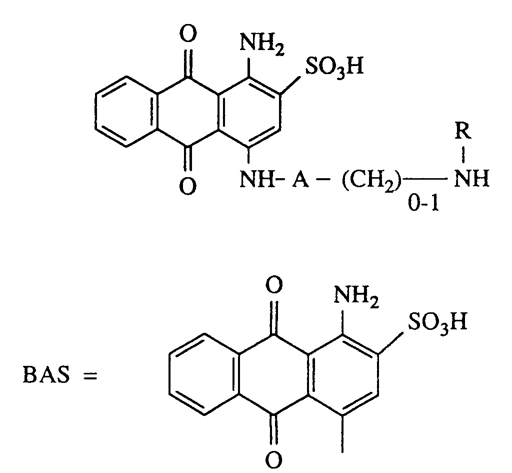
mit den Trihalogentriazinen und den Sulfatoethylsulfonylalkyl-anilinen nach einer der oben dargelegten Methoden kondensiert.

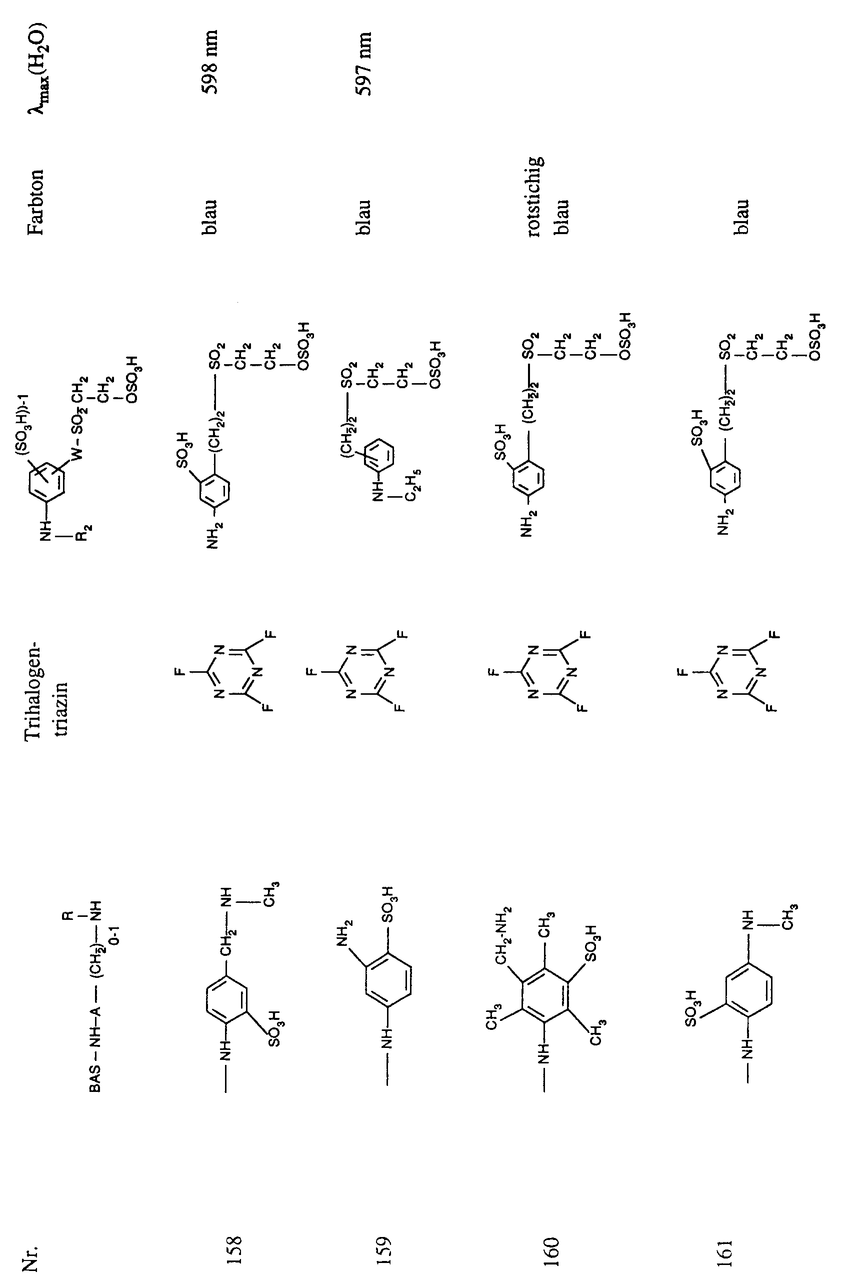

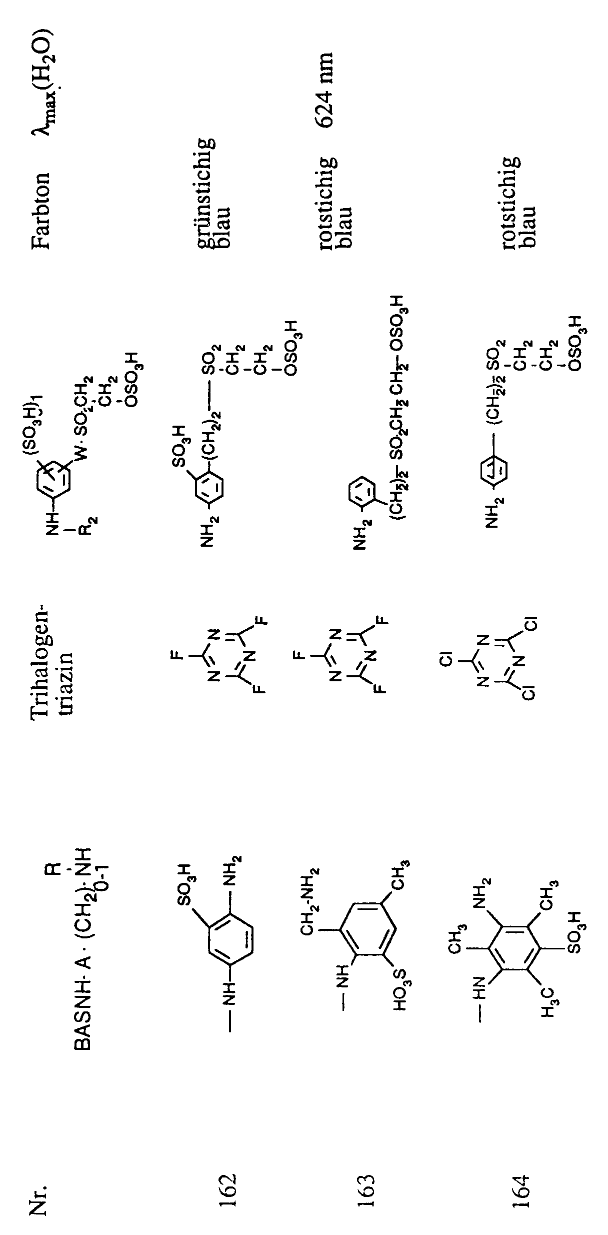

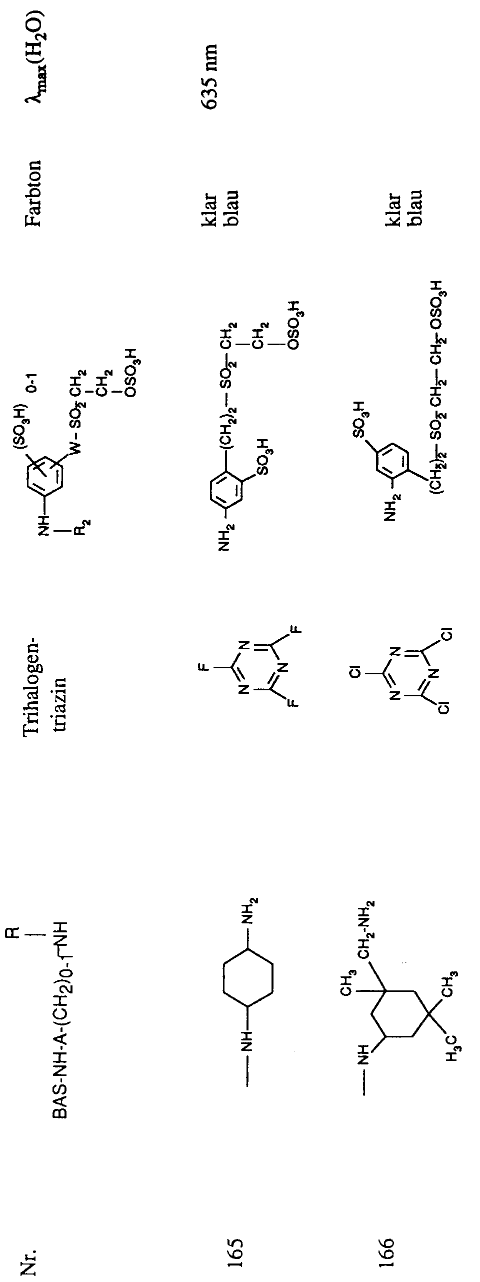

### Beispiel 167

65 g des Natriumsalzes der Verbindung der Formel 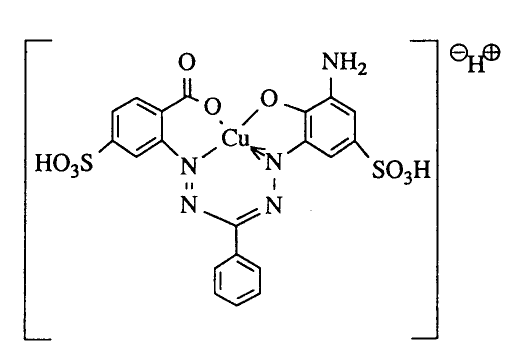
werden in 200 ml Wasser bei pH 7,5 gelöst. Man kühlt auf 0°C ab und läßt in 20 Minuten 9 g Trifluortriazin eintropfen und hält dabei den pH-Wert durch Zugabe von Sodalösung bei 6 bis 7. Nach beendeter Umsetzung wird eine neutralisierte Lösung von 18,3 g Verbindung der Formel 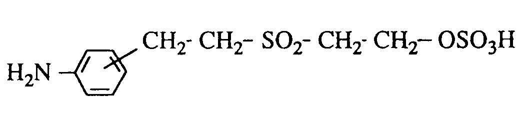
in 80 ml Wasser, hergestellt nach den Angaben des Beispiel 6, zugetropft und der pH-Wert mit Sodalösung bei 7 gehalten. Nach beendeter Kondensation wird der Farbstoff entweder durch Eindampfen bzw. Sprühtrocknung oder durch Aussalzen isoliert. Der so erhaltene Farbstoff der Formel 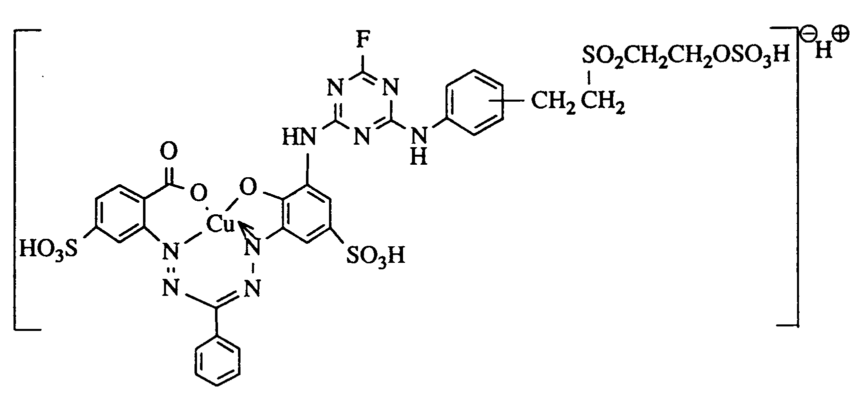
λₘₐₓ = 611 nm
färbt Baumwolle in echten blauen Tönen.

### Beispiel 168

Einen weiteren wertvollen Farbstoff erhält man, wenn man anstelle der in Beispiel 167 eingesetzten Farbbase das Natriumsalz der Verbindung der Formel 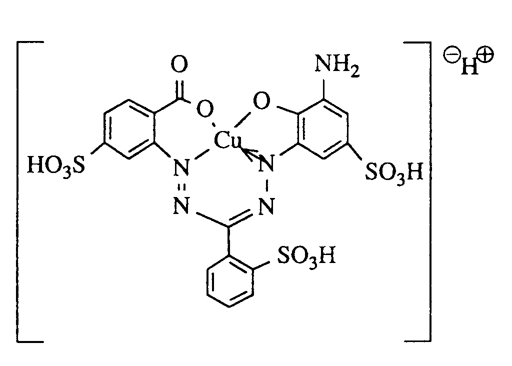
einsetzt und im übrigen analog verfährt Der so erhaltene Farbstoff der Formel 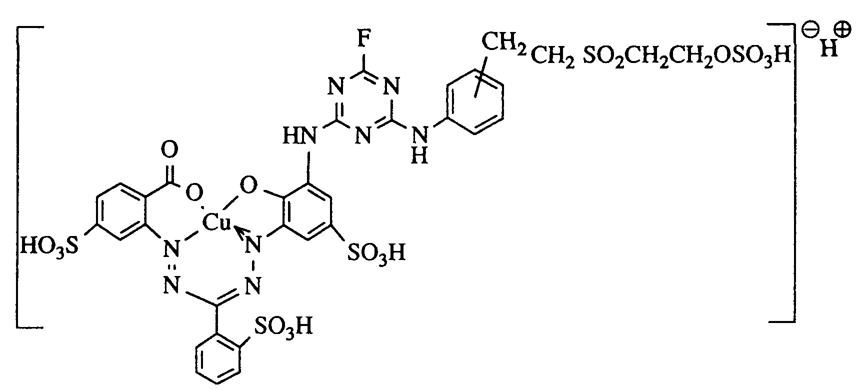
λₘₐₓ = 589 nm
färbt Baumwolle in echten blauen Tönen.

### Beispiel 169

Setzt man in Beispiel 91 anstelle des dortigen Isomerengemisches 2-(x-Aminophenyl)-ethyl-2'-sulfato-ethylsulfon äquivalente Mengen 2-(2-Aminophenyl)-2'-sulfatoethylsulfon ein, dann erhält man den Farbstoff der Formel 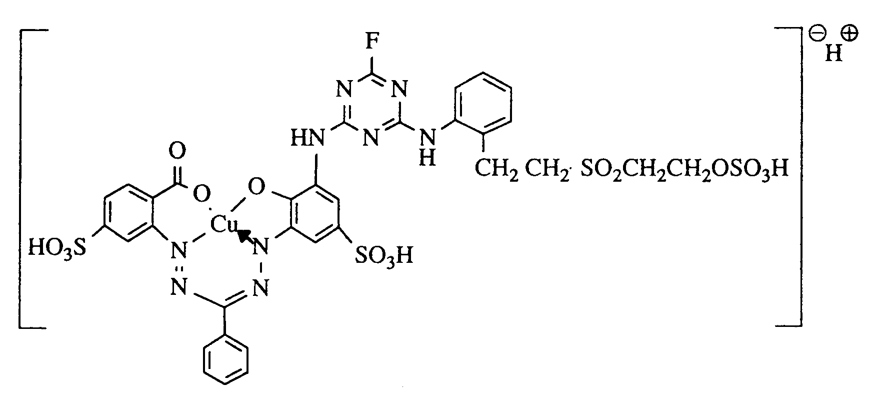
λₘₐₓ = 612nm
der Baumwolle nach den für Reaktivfarbstoffe üblichen Applikationsmethoden in blauen Tönen färbt.

Weitere Formazan-Farbstoffe in nachfolgender Tabelle erhält man durch Kombination entsprechender Komponenten.

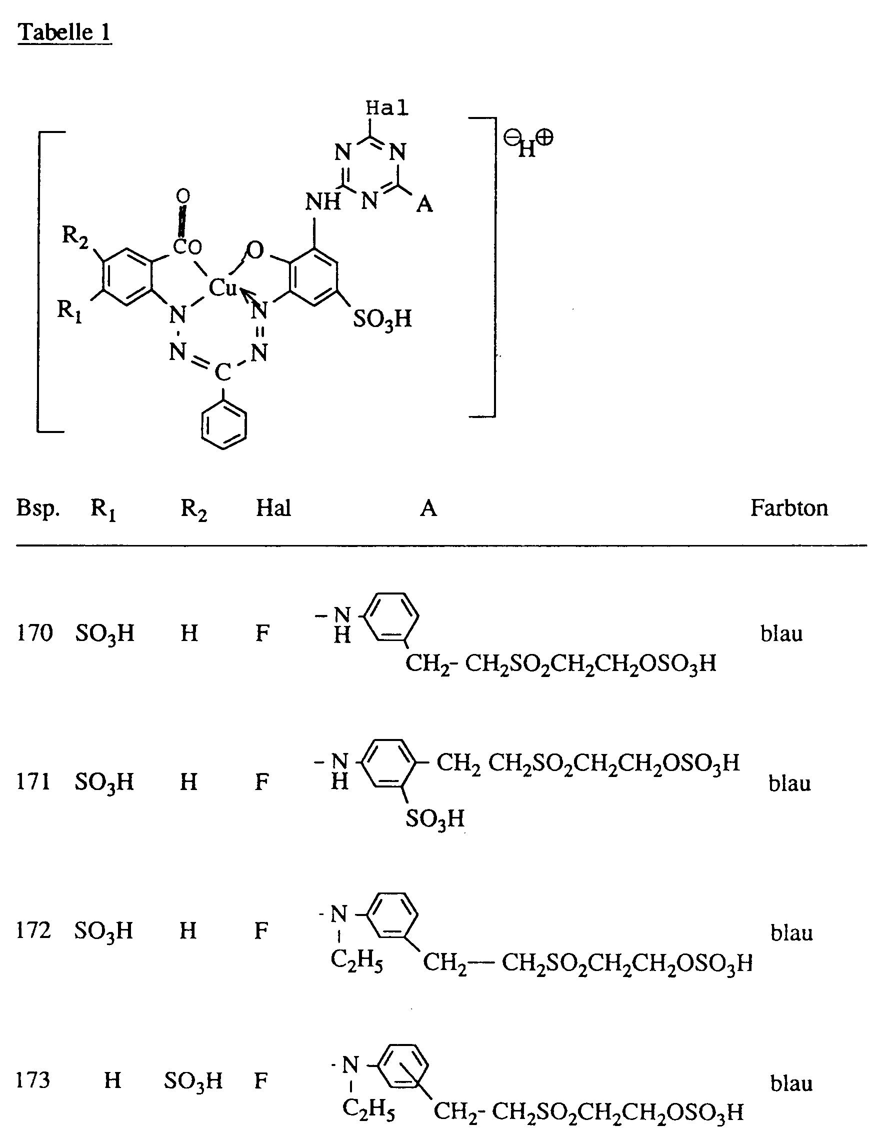

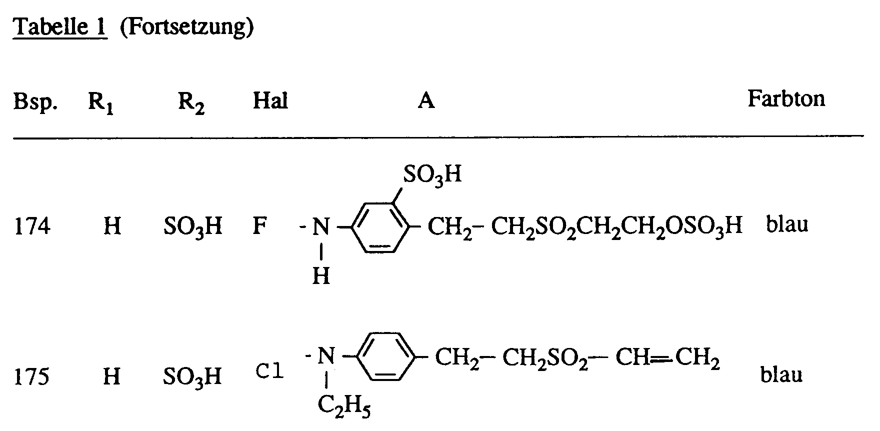

### Beispiele 176 bis 183

Weitere erfindungsgemäße Farbstoffe der allgemeinen Formel 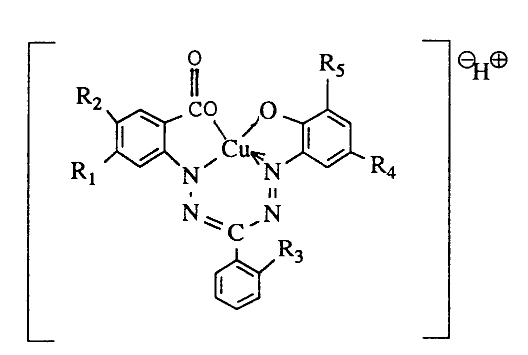
lassen sich analog dem Ausführungsbeispiel durch Umsetzung der in der Tabelle 2 angegebenen Komponenten herstellen.

Die erhaltenen Farbstoffe besitzen sehr gute faserreaktive Farbstoffeigenschaften und liefern nach den üblichen Färbe- und Druckverfahren farbstarke echte Färbungen und Drucke mit dem im jeweiligen Tabellenbeispiel angegebenen Farbton auf Baumwolle.

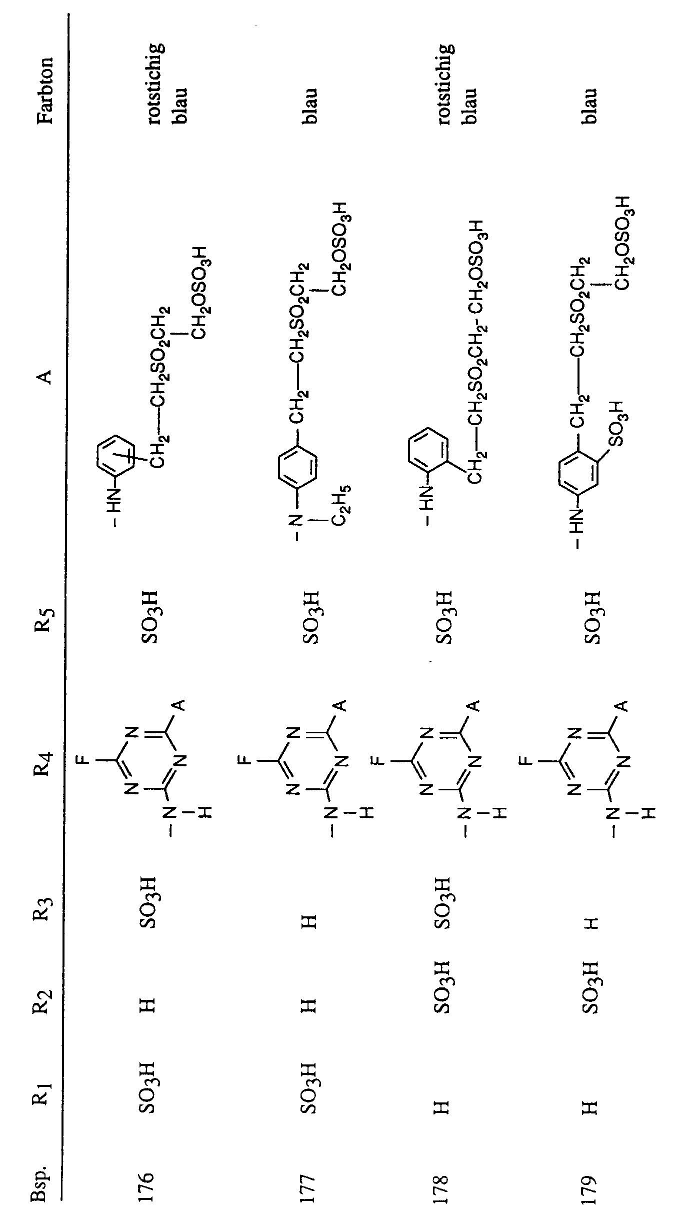

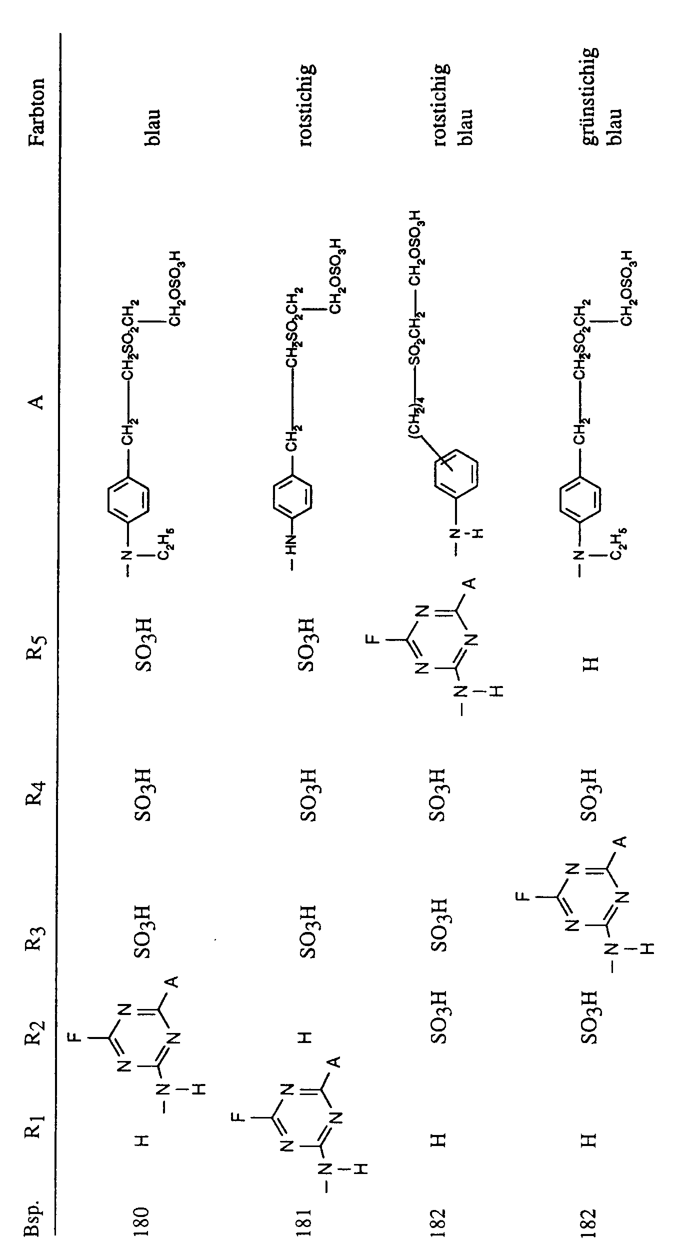

### Beispiel 184

Eine neutralisierte Lösung von 14,4 g Komponente der Formel 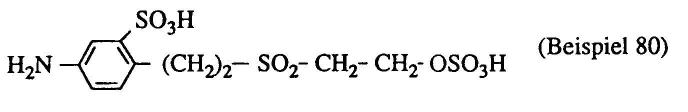
und 1,6 g Natriumfluorid in 60 ml Wasser wird auf 0 bis 2°C abgekühlt. Man läßt 5,5 g Cyanurfluorid zulaufen und hält den pH-Wert mit 2 n Sodalösung zwischen 3,5 bis 4,0. Nach Beendigung der Kondensation stellt man den pH-Wert auf 5,0.

32 g Kupferphthalocyaninkomponente der Formel 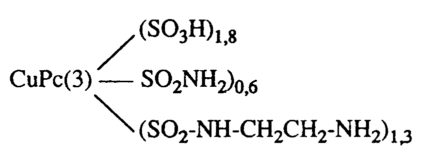
hergestellt nach den Angaben der Europäischen Patentschrift 0 073 267, werden in 300 ml Wasser bei pH= 7,0 bis 7,5 gelöst. Man läßt nun die Lösung des obigen Kondensationsproduktes zu der Farbstoffkomponente bei 0 bis 5°C zulaufen und hält den pH-Wert in der Reaktionsmischung auf 7,0 bis 7,5. Nach 3 Stunden läßt man die Temperatur allmählich auf 20°C ansteigen und hält weiterhin den pH-Wert konstant. Nach beendeter Umsetzung wird das erhaltene Produkt aus der Lösung ausgesalzen, abgesaugt, mit etwas Phosphatlösung bei pH 6,0 gepuffert und im Vakuum bei 45°C getrocknet Der Farbstoff entspricht der Formel 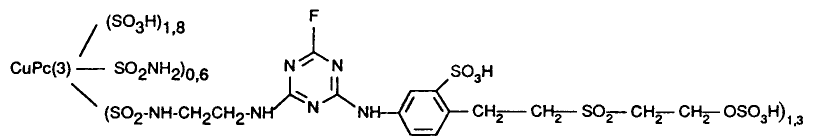
λₘₐₓ = 668 nm, 627 nm in H₂O.
Der Farbstoff liefert auf Cellulosefasern türkisblaue Färbungen und Drucke.

### Beispiel 185

Setzt man in Beispiel 184 anstelle der dortigen 32 g Kupferphthalocyaninkomponente 32,4g Kupferphathalocyaninverbindung der Formel 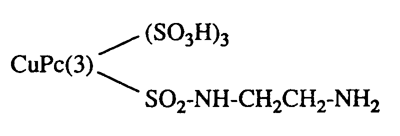
(hergestellt durch Kondensation von Kupferphthalocyanintetrasulfochlorid/Sulfonsäure mit Monoacetylethylendiamin und anschließende Verseifung gemäß den Angaben der Deutschen Offenlegungsschrift 1 644 681, Beispiel 2) ein und verfährt im übrigen entsprechend den dortigen Angaben, dann erhält man einen Farbstoff der Formel 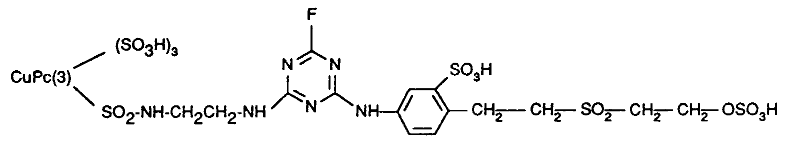
der auf Cellulosegewebe türkisblaue Färbungen und Drucke mit guter Ergiebigkeit liefert.
λₘₐₓ = 668 nm, 628 nm in H₂O.

### Beispiel 186

31,2 g Kupferphthalocyanin-Verbindung der Formel 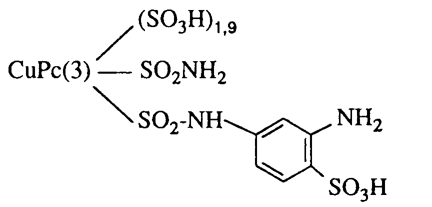
hergestellt durch Kondensation von Kupferphthalocyanin-tetrasulfochlorid/sulfonsäure mit 3-Aminoacetanilid und Ammoniak sowie nachfolgende Verseifung der Acetylaminogruppe in verdünnter Natronlauge bei 75°C, werden in 420 ml Wasser bei pH 7 gelöst Man läßt zu der Lösung bei 0 - 3°C 3,1 ml Cyanurfluorid zutropfen und hält den pH-Wert mit 2 n Sodalösung auf 4,5 bis 5,0. Nach beendeter Kondensation wird die Lösung von 11,5 g Reaktivkomponente des Beispiels 6C in 50 ml Wasser zugegeben und die Kondensation mit dem Difluortriazinylfarbstoff bei pH 5,5 bis 6 zunächst bei 0 bis 5°C und später gegen Raumtemperatur ansteigend zu Ende geführt. Dererhaltene Farbstoff der Formel 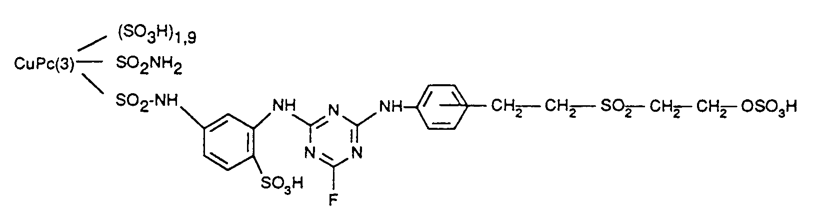
λₘₐₓ = 667 nm, 627 nm in Wasser
wird durch Eindampfen im Vakuum bzw. Sprühtrocknung oder durch Aussalzen isoliert, wobei vor dem Trocknungsprozeß mit wenig Phosphat auf pH 6 gepuffert wird. Der Farbstoff färbt und druckt Baumwolle nach den für Reaktivfarbstoffe bekannten Verfahren echt und ergiebig in türkisblauen Tönen.

Weitere Phthalocyanin-Reaktivfarbstoffe werden erhalten, wenn man die in nachfolgender Zusammenstellung angegebenen Phthalocyaninkomponenten, Trifluortriazin und β-Sulfatoethylsulfonylalkylaniline nach einer der vorstehend beschriebenen Methoden miteinander kondensiert.

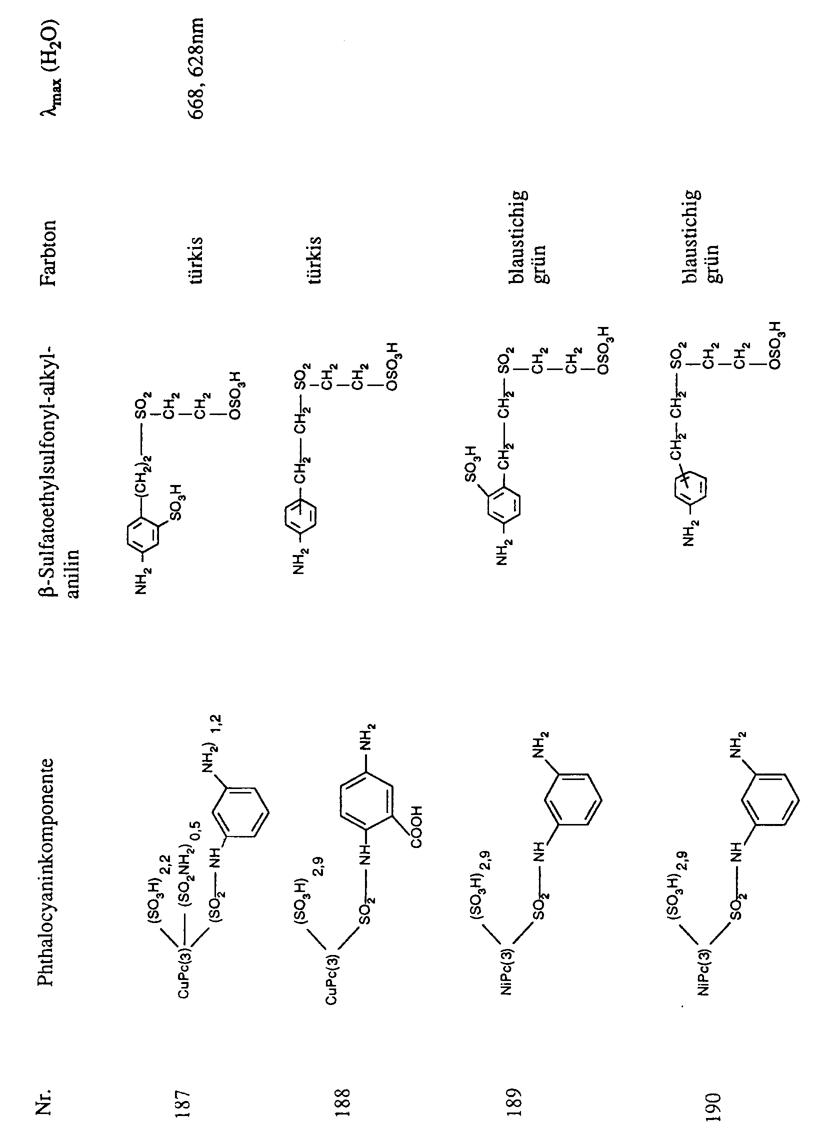

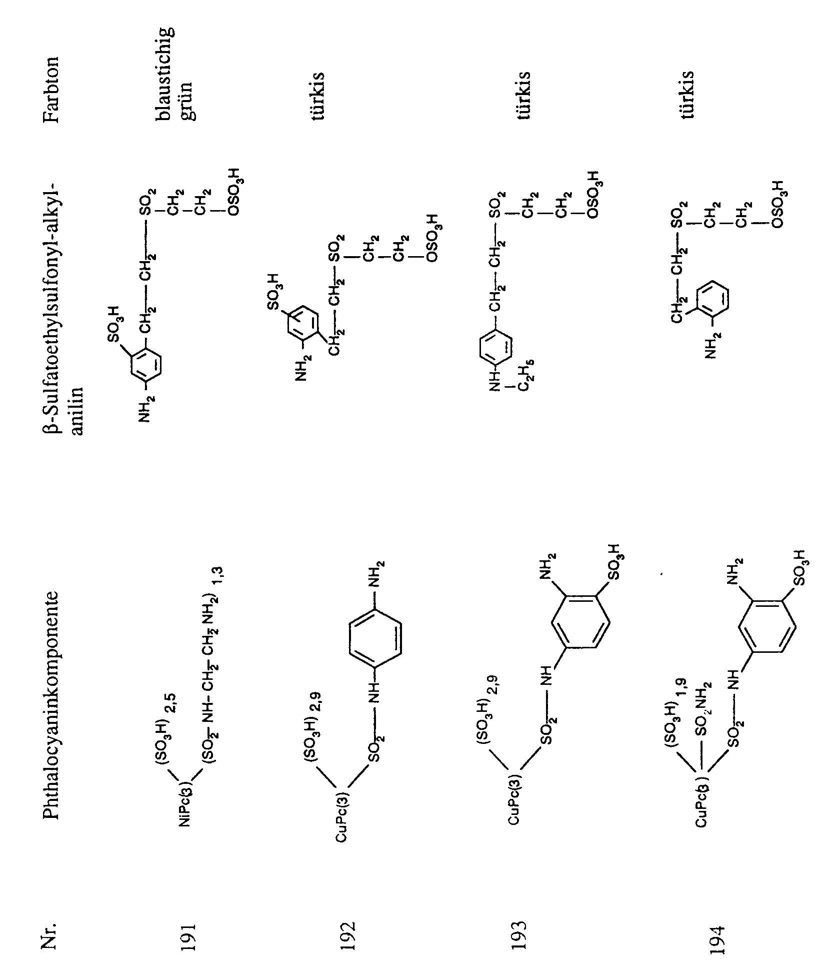

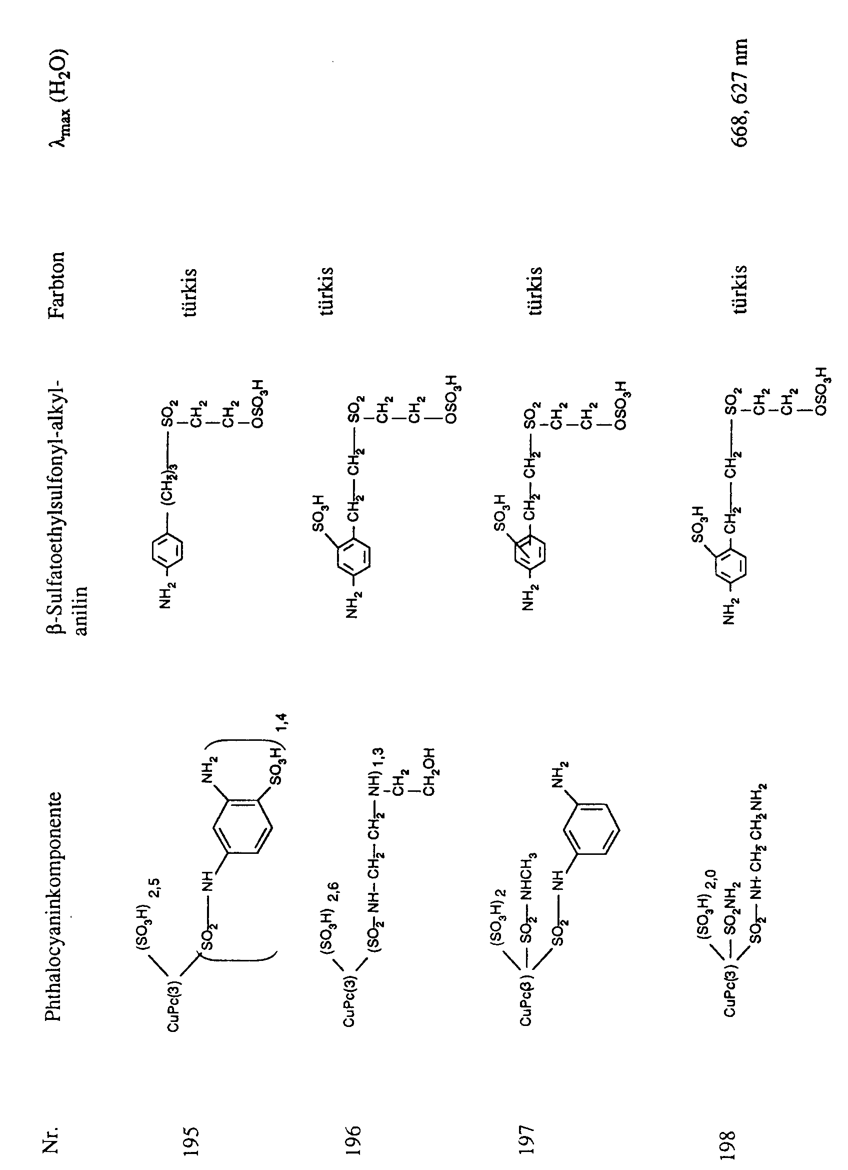

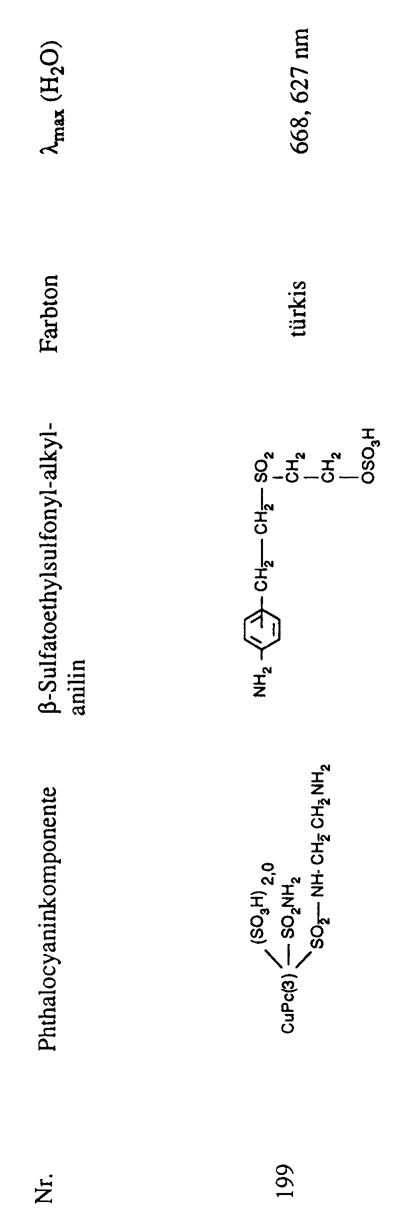

### Beispiel 200

36,7 g der auf bekanntem Weg hergestellten Amino-disazoverbindung der Formel 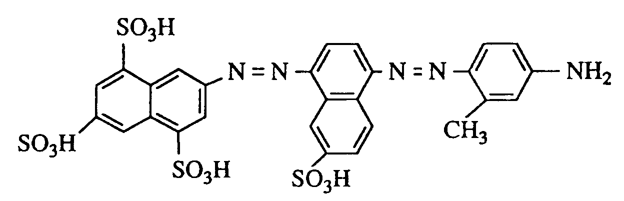
werden in 400 ml Wasser bei einem pH-Wert von 6,0 gelöst. Nach Abkühlung der Lösung auf 0°C läßt man zügig 5,0 ml Cyanurfluorid zutropfen und hält den pH-Wert mit 2 n Sodalösung auf 4,5 bis 5,0.

Nach Beendigung dieser ersten Kondensationsstufe trägt man 17,4 g Isomerengemisch aus Beispiel 81C ein und hält den pH-Wert mit Sodalösung auf 5,5 bis 6,0. Man rührt 2 Stunden bei 0 bis 5°C nach und läßt dann unter weiterer pH-Kontrolle die Temperatur auf 20°C ansteigen. Der erhaltene Farbstoff der Formel 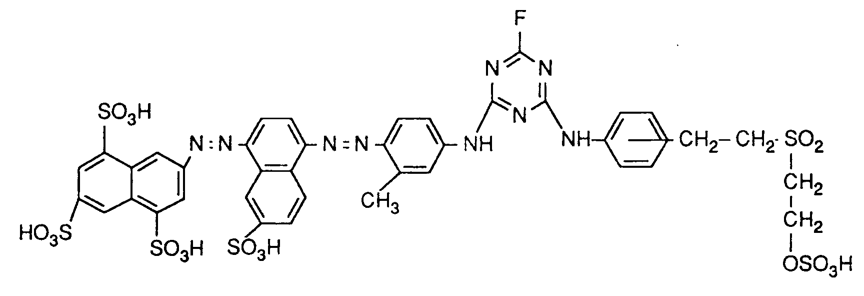
wird mit Natriumchlorid ausgesalzen, abgesaugt und nach Pufferung bei pH 6 im Vakuum bei 45°C getrocknet. Er färbt Baumwolle nach den für Reaktivfarbstoffe bekannten Verfahren ergiebig in braunen Tönen.

### Beispiel 201

Setzt man anstelle der Aminodisazoverbindung des Beispiels 200 die Verbindung der Formel 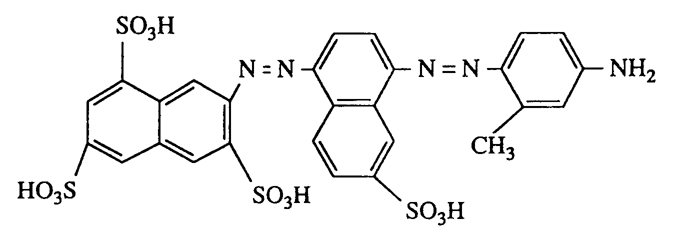
kondensiert mit Cyanurfluorid und anschließend mit der Verbindung der Formel 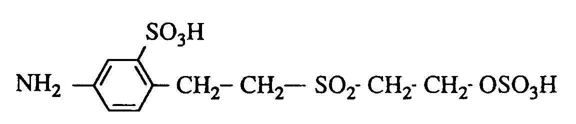
so erhält man einen Farbstoff der Formel 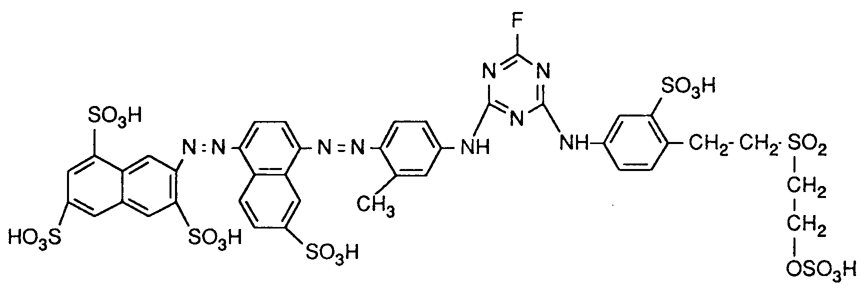
der Baumwolle ebenfalls ergiebig in braunen Tönen färbt.

Weitere braune Reaktivfarbstoffe erhält man durch Kondensation der folgenden Komponenten.

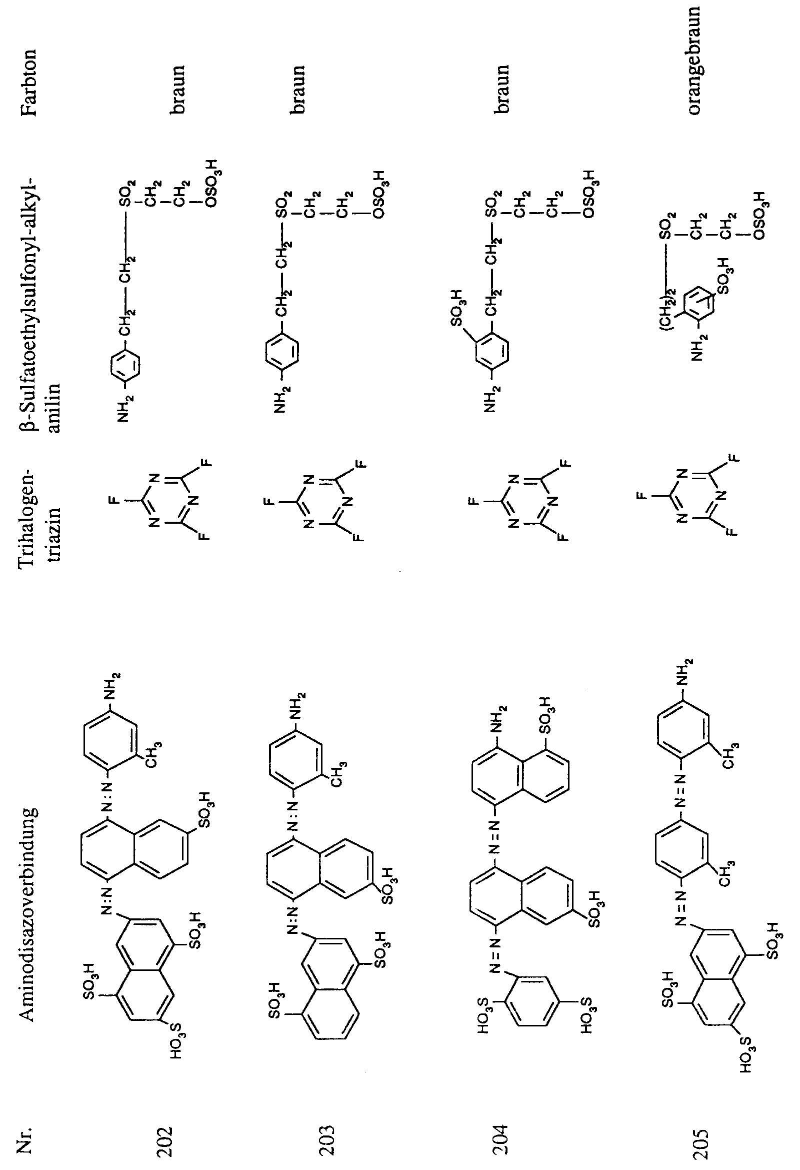

### Beispiel 206

50,3 g Aminoazoverbindung der Formel 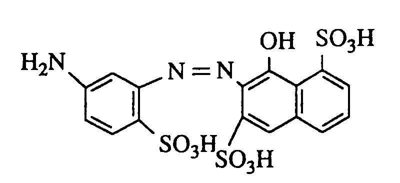
werden in 400 ml Wasser bei pH 6 gelöst. Man kühlt die Lösung auf 0 bis 2°C ab und läßt 9,3 ml Cyanurfluorid in einigen Minuten zutropfen. Während dieser Operation hält man den pH-Wert mit 2 n Sodalösung auf 4,5 und rührt dann unter den gleichen Bedingungen noch kurze Zeit nach. Ist der Sodaverbrauch zum Stillstand gekommen, läßt man eine mit 10 %iger Lithiumhydroxid-Lösung auf pH 6 gestellte Lösung von 32,3 g 4-[(2-Sulfatoethylsulfonyl)-ethyl]-anilin in 180 ml Wasser zulaufen und hält den pH-Wert im Reaktionsgemisch auf 5,5 bis 6,0. Nach 3 Stunden läßt man die Temperatur allmählich auf 20°C ansteigen und isoliert den erhaltenen Farbstoff der Formel 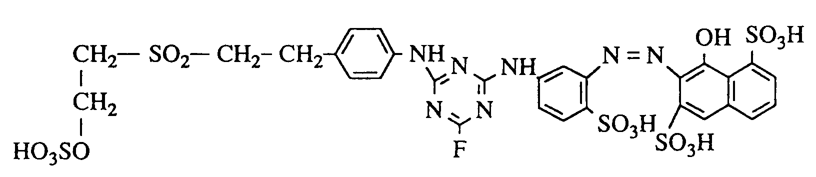
durch Aussalzen und Absaugen. Nach schonender Trocknung erhält man ein Pulver, das Baumwolle nach den üblichen Methoden ergiebig in Scharlachtönen färbt.

### Beispiel 207

Ersetzt man in Beispiel 206 die Aminoazoverbindung durch eine äquivalente Menge der isomeren Verbindung 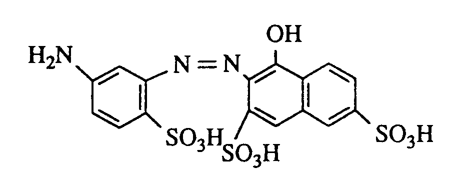
kondensiert mit Cyanurfluorid und in zweiter Stufe mit der Verbindung der Formel 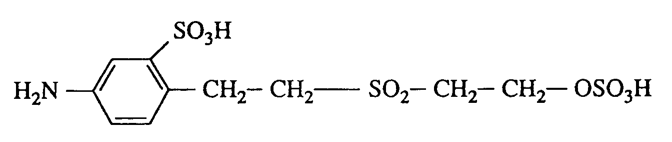
so erhält man den Farbstoff der Formel 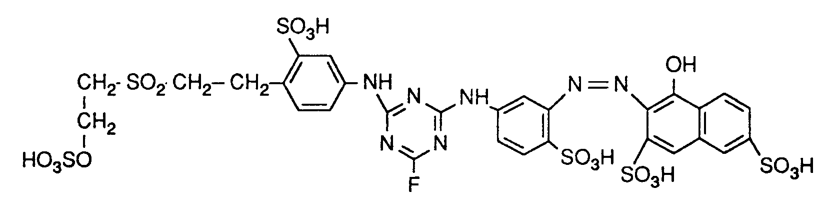
der Baumwolle in rotstichigen Orangetönen mit guten Fixierausbeuten färbt.

Weitere Reaktivfarbstoffe auf der Basis von Aminoazonaphtholverbindungen erhält man durch Kondensation nachstehender Komponenten.

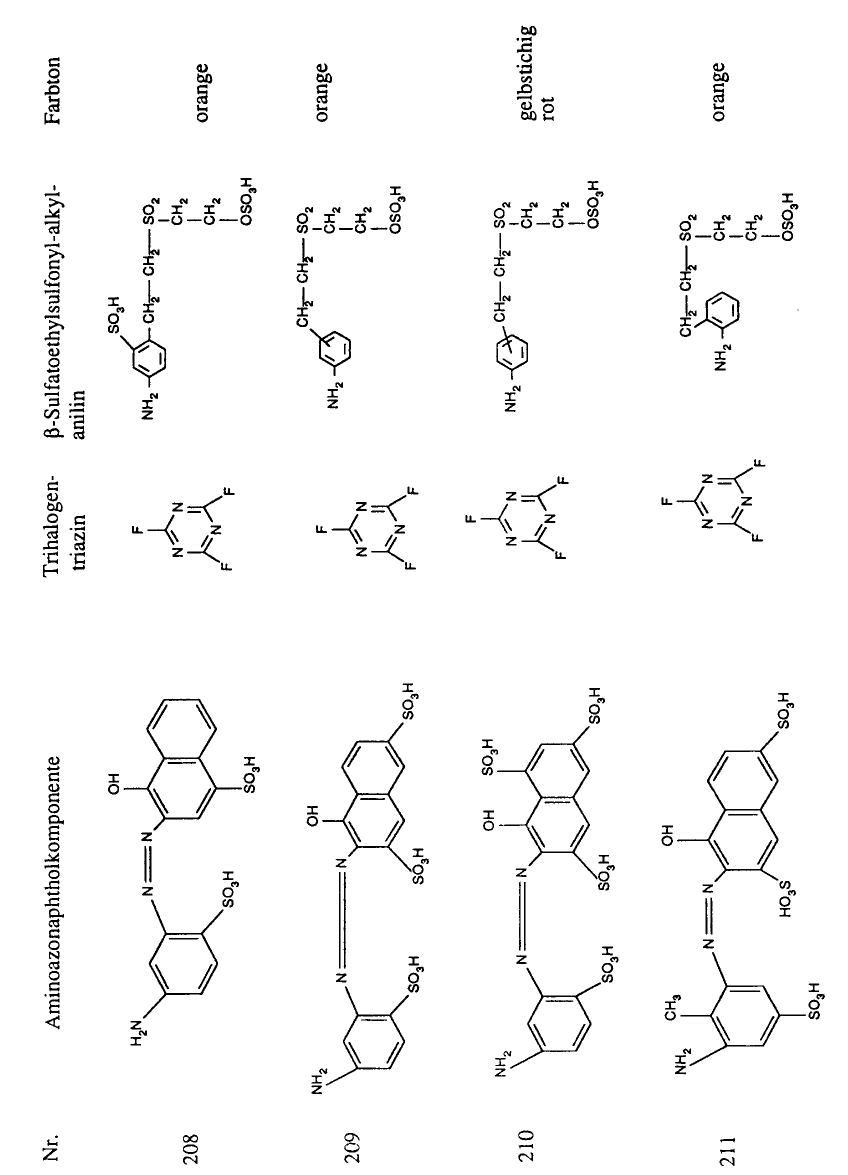

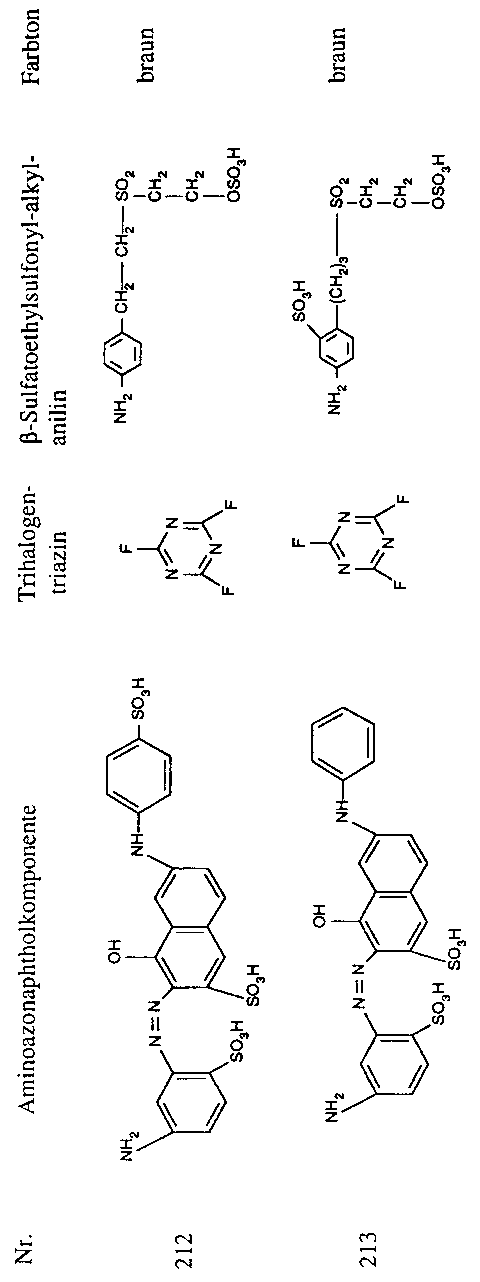

### Beispiel 214

Gemäß Beispiel 184 kondensiert man 19,5 g Komponente der Formel 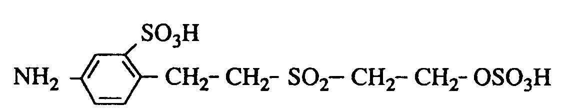
mit 7,4 g Cyanurfluorid in 80 mi Wasser in Gegenwart von 2,1 g Natriumfluorid. Die erhaltene Lösung des Kondensationsproduktes läßt man in eine auf pH 7 gestellte, 0 bis 5°C gekühlte Lösung von 31 g Azoverbindung der Formel 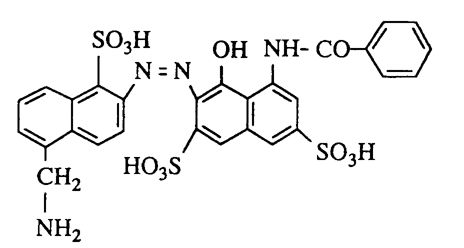
in 300 ml Wasser einlaufen und hält dabei den pH-Wert in der Mischung mit verdünnter Sodalösung auf 6,5. Nach 3 Stunden wird die Temperatur allmählich auf 20°C gesteigert. Nach beendeter Kondensation wird der Farbstoff durch Aussalzen und Absaugen isoliert und nach Pufferung auf einen pH-Wert von 6,5 im Vakuum bei 45°C getrocknet. Er entspricht der Formel 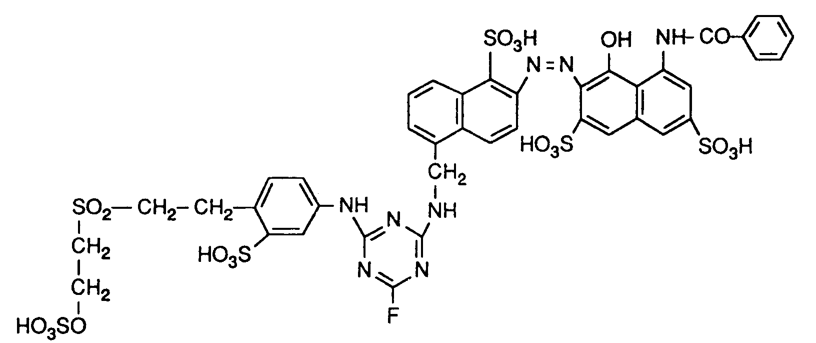
und färbt Baumwolle aus langer Flotte in blaustichig roten Tönen mit guter Fixierausbeute.

Ähnliche rote Farbstoffe erhält man durch Umsetzung folgender Komponenten.

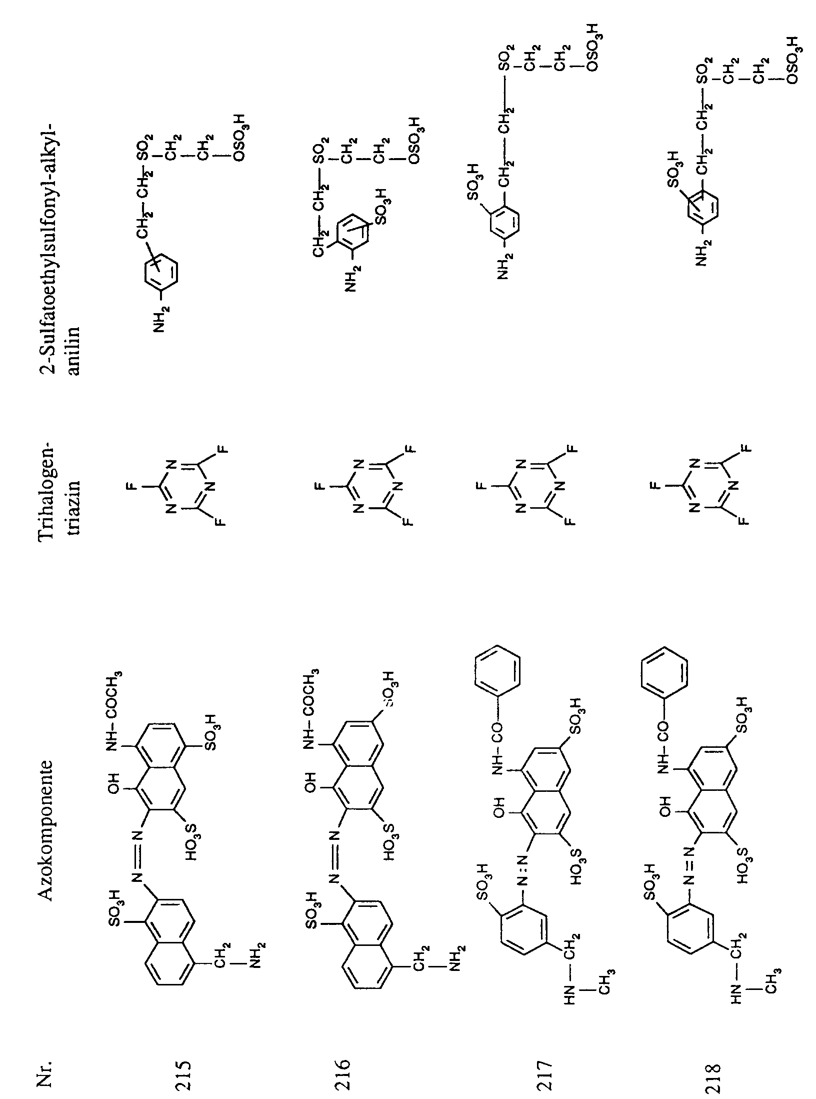

### Beispiel 219

Gemäß Beispiel 184 werden 19,5 g Komponente des Beispiels 80 in 80 ml Wasser und 2,1 g Natriumfluorid mit 7,5 g Cyanurfluorid kondensiert.

22,1 g Triphendioxazinverbindung der Formel 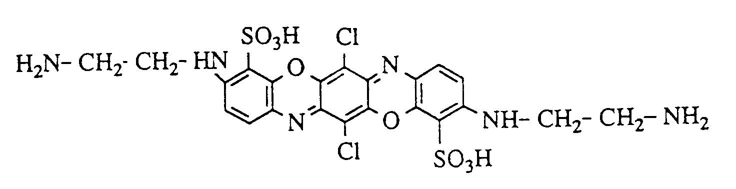
werden in 300 ml Wasser durch Zugabe von Natronlauge bei pH 11,5 bis 12 gelöst.

Man läßt nun diese Lösung und die der oben hergestellten Reaktivkomponenten gleichzeitig in 80 ml vorgelegtes Eiswasser eintropfen und hält in dem Reaktionsgemisch den pH-Wert mit 2 n Natronlauge auf 8 bis 8,5, die Temperatur weiter auf 0 bis 2°C. Nach mehreren Stunden ist die Umsetzung beendet. Man läßt die Temperatur über Nacht auf 20°C ansteigen. Der Farbstoff wird ausgesalzen, abgesaugt und nach Pufferung auf pH 6,7 bei 45°C im Vakuum getrocknet. Er entspricht der Formel 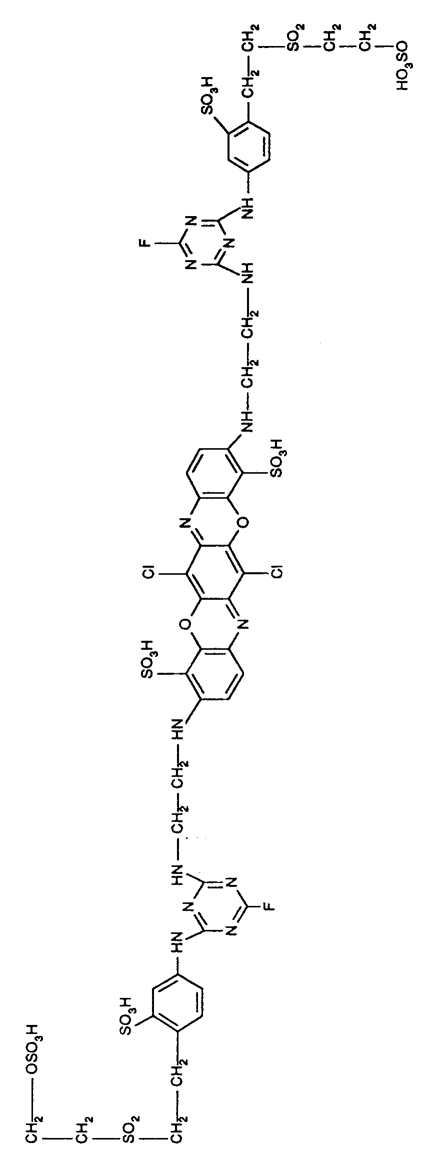
und färbt Baumwolle nach den üblichen Methoden mit guten Fixierausbeuten in kräftigen Blautönen.

### Beispiel 220

27 g Triphendioxazinverbindung der Formel 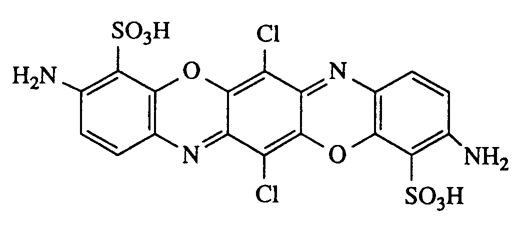
werden in 1.000 ml Wasser mit 10 %iger Lithiumhydroxid durch Einstellen des pH-Wertes auf 7,0 gelöst.
Man kühlt auf 0 bis 5°C ab und tropft 5,3 ml Cyanurfluorid hinzu.
Der pH-Wert im Reaktionsgemisch wird durch Zutropfen von 10 %iger Lithiumhydroxid-Lösung auf 6,0 bis 6,5 gehalten. Zur Beendigung der Umsetzung steigert man die Temperatur innerhalb von 2 Stunden auf 20°C und hält den pH-Wert weiter in den obigen Grenzen, bis der Verbrauch an Neutralisationsmittel zum Stillstand kommt.
Nun wird eine neutralisierte Lösung von 18,5 g Komponente aus Beispiel 81C in 80 ml Wasser zu dem Primär-Kondensationsprodukt gegeben und der pH-Wert weiter mit Lithiumhydroxid auf 6,0 bis 6,5 gehalten.

Der erhaltene Farbstoff der Formel 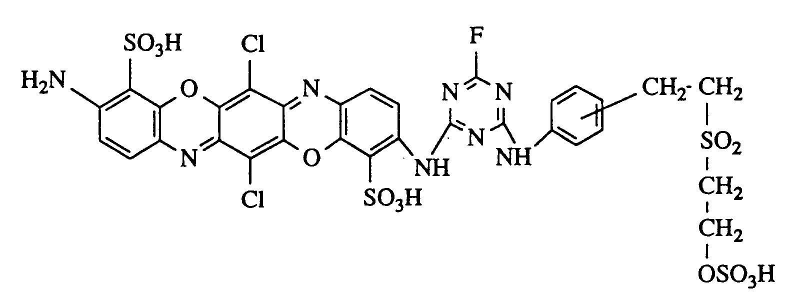
färbt Baumwolle aus langer Flotte mit einer optimalen Färbetemperatur von 70 bis 80°C in stark rotstichig blauen Tönen.

Weitere Triphendioxazin-Reaktivfarbstoffe werden in analoger Verfahrensweise zu den Beispielen 219 und 220 durch Kondensation folgender Komponenten hergestellt:

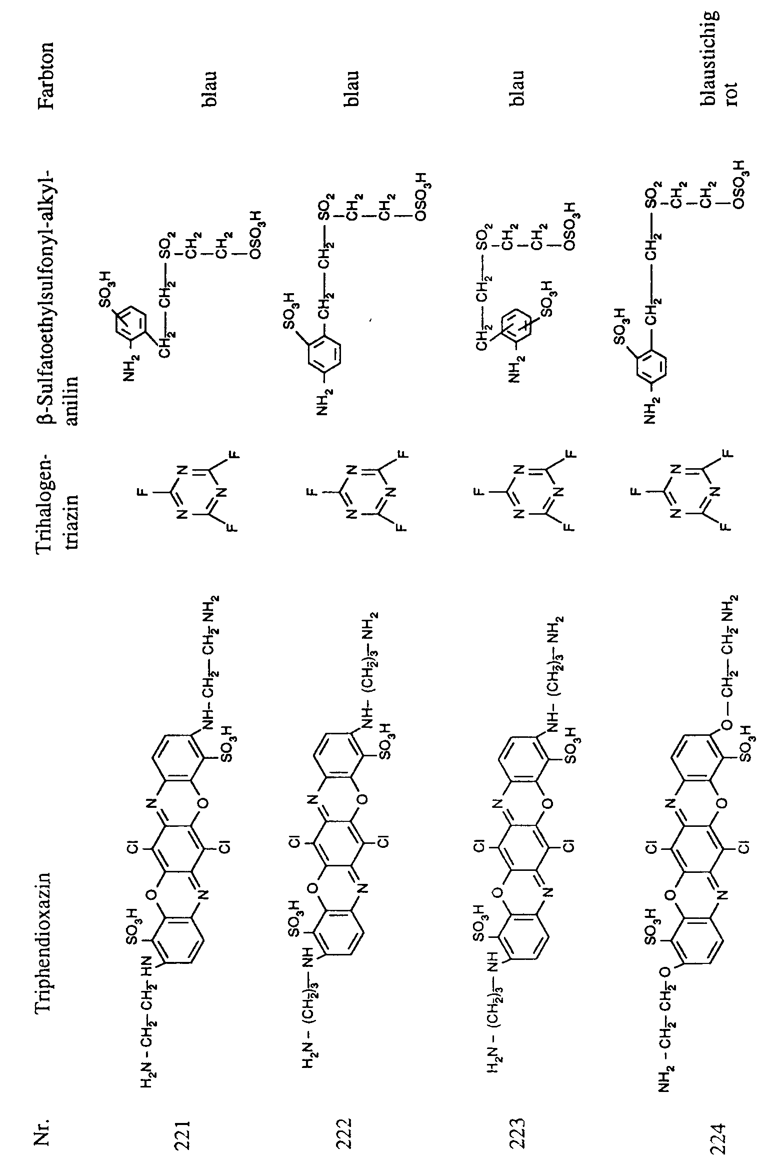

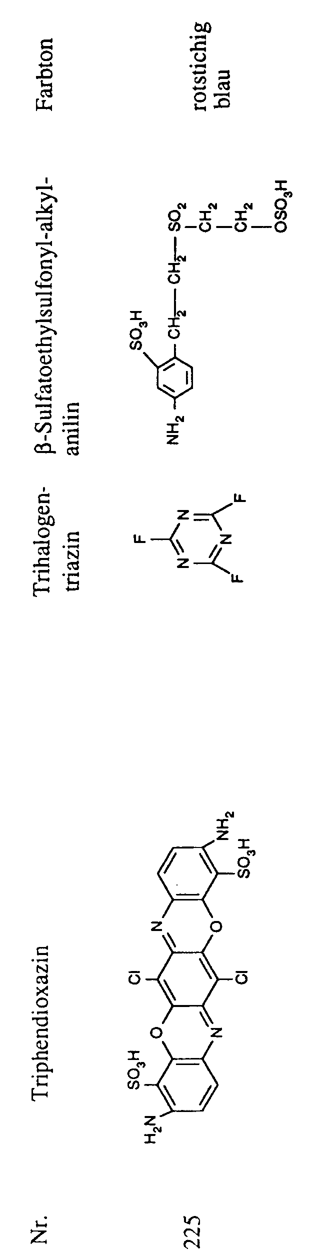

### Beispiel 226

35,2 g der bekannten Verbindung 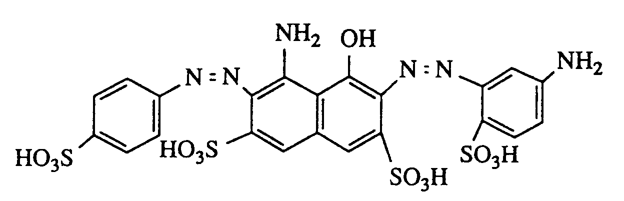
werden in 350 ml Wasser gelöst und der pH-Wert der Lösung auf 5,0 gestellt. Man kühlt die Lösung auf 0°C ab, läßt 7,4 g Cyanurfluorid zutropfen und hält den pH-Wert mit 2 n Sodalösung auf 4,5.
Nach beendeter Umsetzung gibt man eine neutralisierte Lösung von 17,0 g Komponente des Beispiels 79F 70 ml Wasser hinzu und hält den pH-Wert mit 2 n Sodalösung auf 6,0, wobei die Temperatur zunächst 4 Stunden 0 bis 5°C gehalten und dann allmählich auf 20°C gesteigert wird.
Nach abgeschlossener Kondensation wird der Farbstoff nach Pufferung auf pH 6 entweder direkt durch Sprühtrocknung oder durch Aussalzen, Absaugen und Vakuumtrocknung bei 40°C isoliert. Der Farbstoff hat die Formel 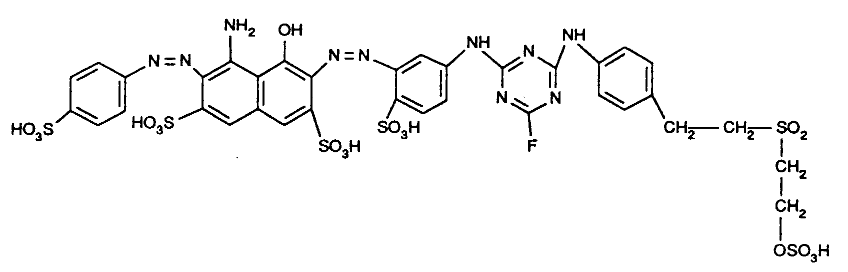
und färbt Baumwolle nach den für Reaktivfarbstoffe üblichen Färbetechniken sehr ergiebig in marineblauen Tönen.

Weitere ähnliche Cellulosefasern marineblau bis schwarz färbende Reaktivfarbstoffe werden erhalten, wenn man die in nachfolgender Zusammenstellung angegebenen Aminodisazokomponenten der allgemeinen Formel 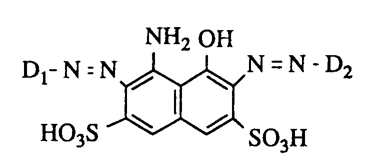
mit den Trihalogentriazinen und β-Sulfatoethylsulfonylalkylanilinen kondensiert.

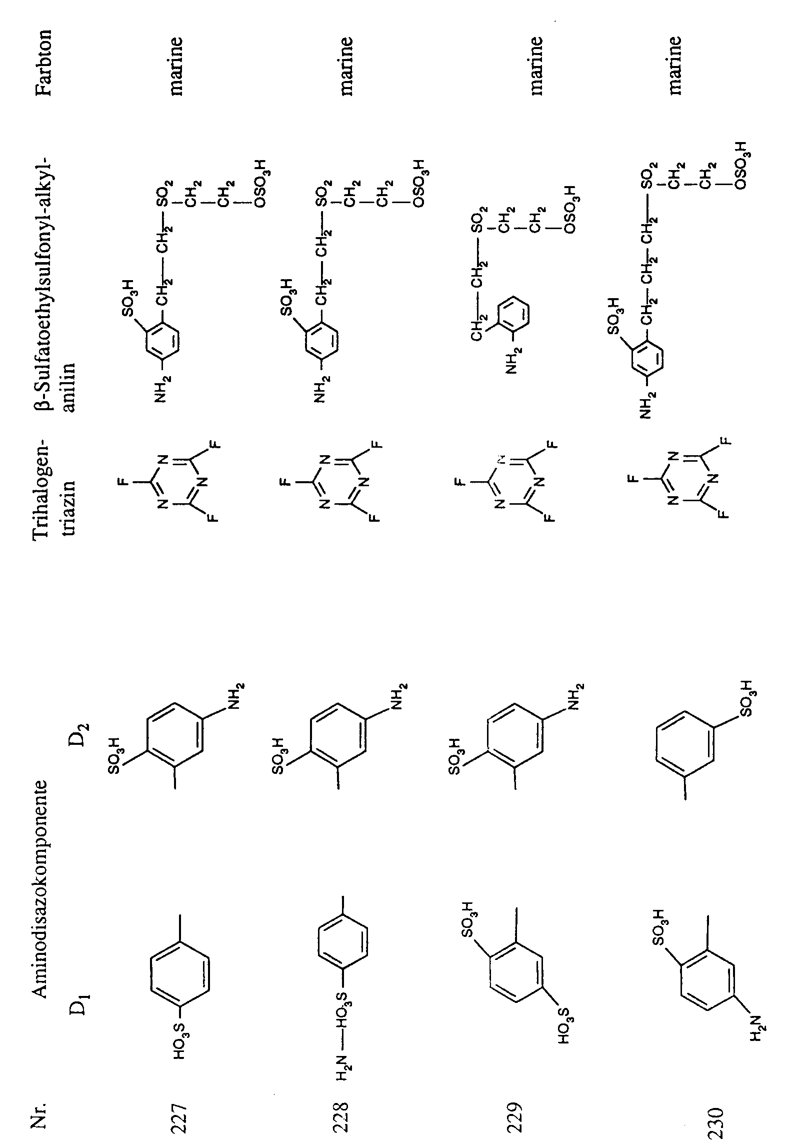

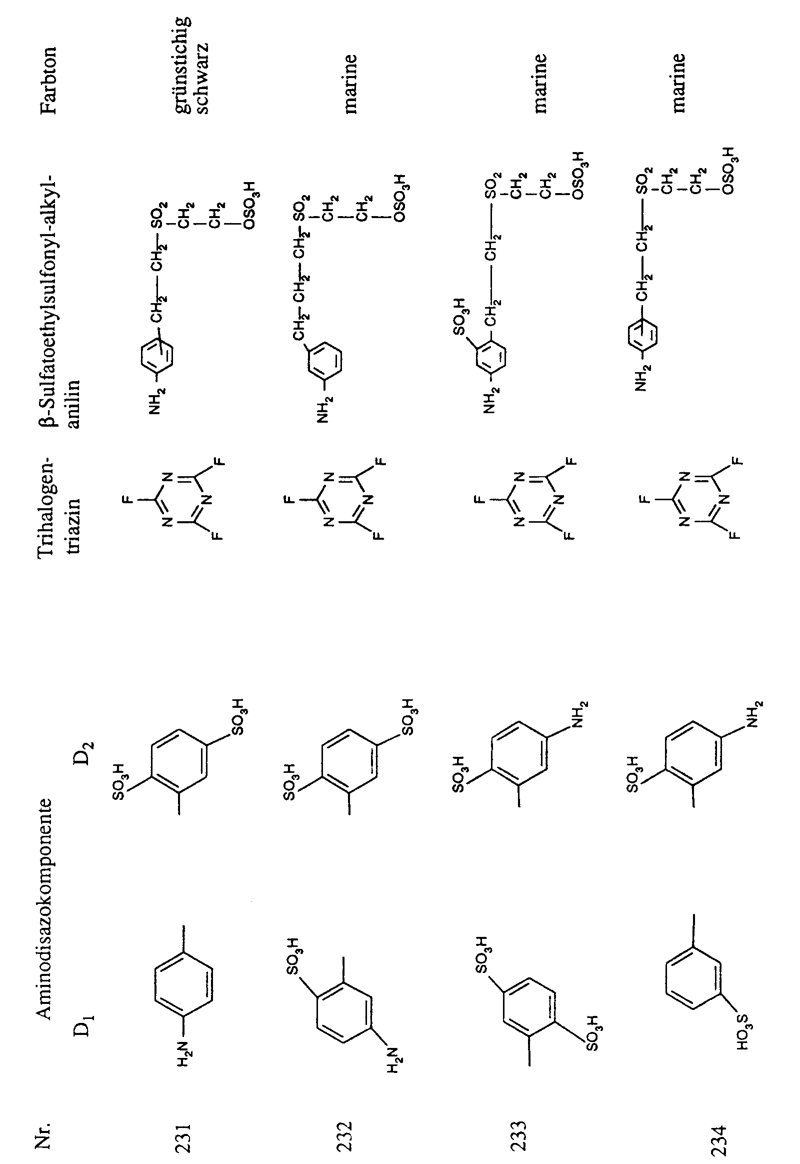

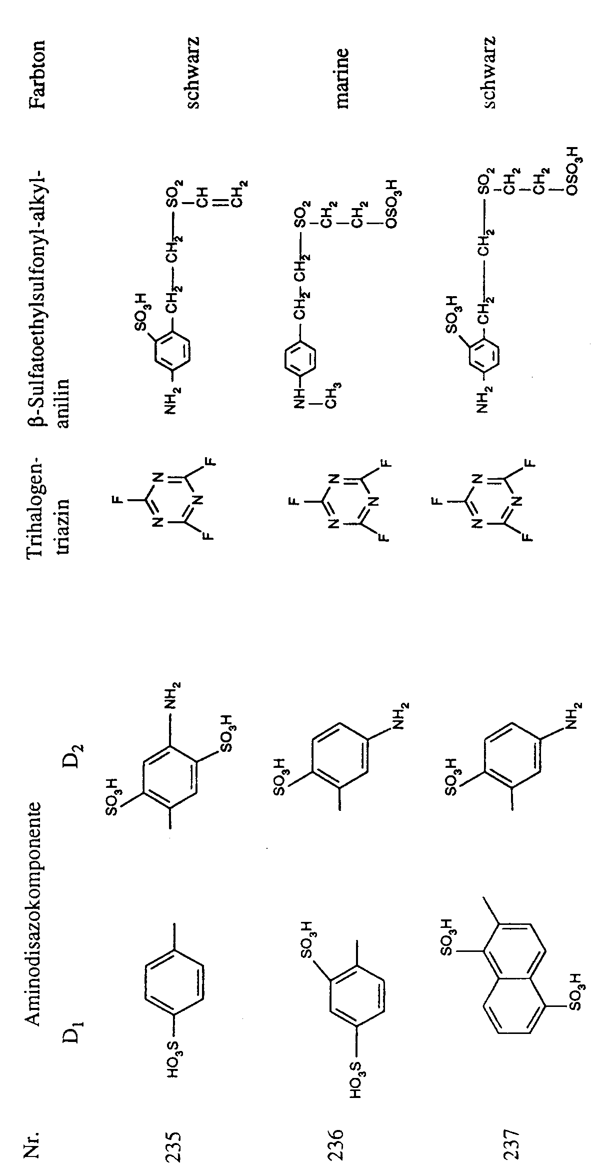

### Beispiel 238

50 mmole der bekannten Kupferkomplexverbindung der Formel 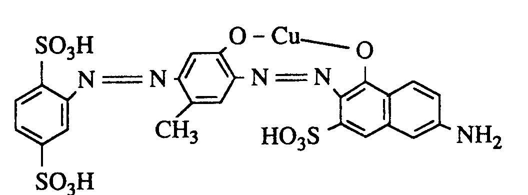
werden in 600 mi Wasser bei pH 6,5 gelöst. Man kühlt auf 0-3° ab und läßt zu der Lösung 7,4 g Cyanurfluorid in wenigen Minuten zutropfen. Während des Eintropfens hält man den pH-Wert mit 2n Sodalösung auf 4,5-5,0. Nach etwa viertelstündigem Nachrühren setzt man zu dem Primärkondensat eine neutralisierte Lösung von 17,0 g Verbindung der Formel 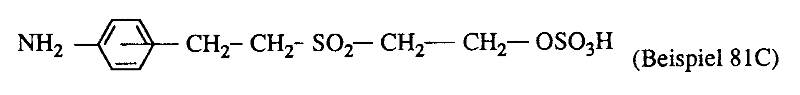
in 80 ml Wasser und hält den pH-Wert im Reaktionsgemisch mit Sodalösung auf 5,0-6,0. Wenn der Sodaverbrauch allmählich zum Stillstand kommt, läßt man die Temperatur auf 20° ansteigen. Nach beendeter Umsetzung wird der Farbstoff der Formel 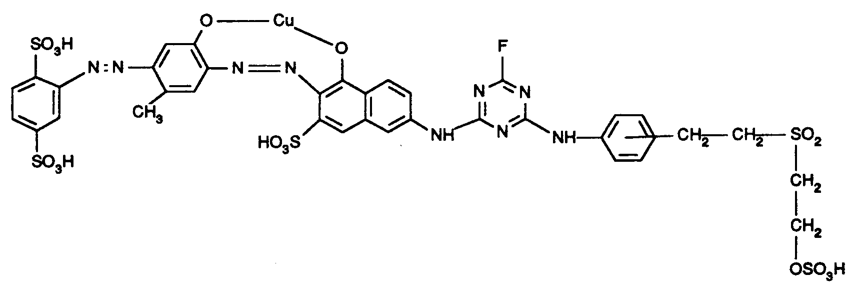
ausgesalzen, isoliert und nach Pufferung auf pH 6 im Vakuum bei 45° getrocknet.

Das Produkt färbt Cellulosefasern nach den für Reaktivfarbstoffe üblichen Farbtechniken mit sehr guten Fixierausbeute in marineblauen Tönen.

### Beispiel 239

Eine neutralisierte Lösung von 24,7 g Komponente der Formel 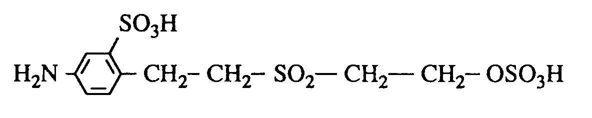
und 2,4 g Natriumfluorid in 100 ml Wasser wird analog Beispiel 99 mit 8,6 g Cyanurfluorid kondensiert.

Man läßt die erhaltene Lösung bei 0-2°C zu einer neutralen Lösung von 50 mmolen der bekannten Kupferkomplexverbindung der Formel 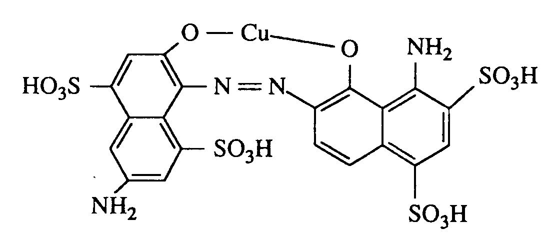
zulaufen und hält den pH-Wert im Reaktionsgemisch mit 2n Sodalösung auf 5-6. Wenn die Sodaaufnahme nach einigen Stunden nachläßt, wird die Temperatur langsam auf 20°C gesteigert.

Nach Beendigung der Kondensation wird der Farbstoff der Formel 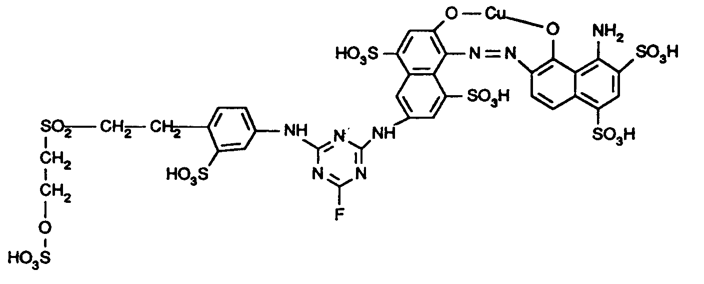
ausgesalzen, isoliert und bei 45° im Vakuum getrocknet. Er färbt Cellulosefasern nach den für Reaktivfarbstoffe üblichen Farbtechniken in blauen Tönen.

Weitere Reaktivfarbstoffe, die Baumwolle nach den üblichen Färbetechniken sehr ergiebig färben, erhält man, wenn man die in nachfolgender Zusammenstellung angegebenen, bekannten Kupferkomplexverbindungen nach den in Beispielen 238 oder 239 dargelegten Verfahrensweisen mit den Trihalogentriazinen und den β-Sulfatoethylsulfonylalkylanilinen kondensiert.

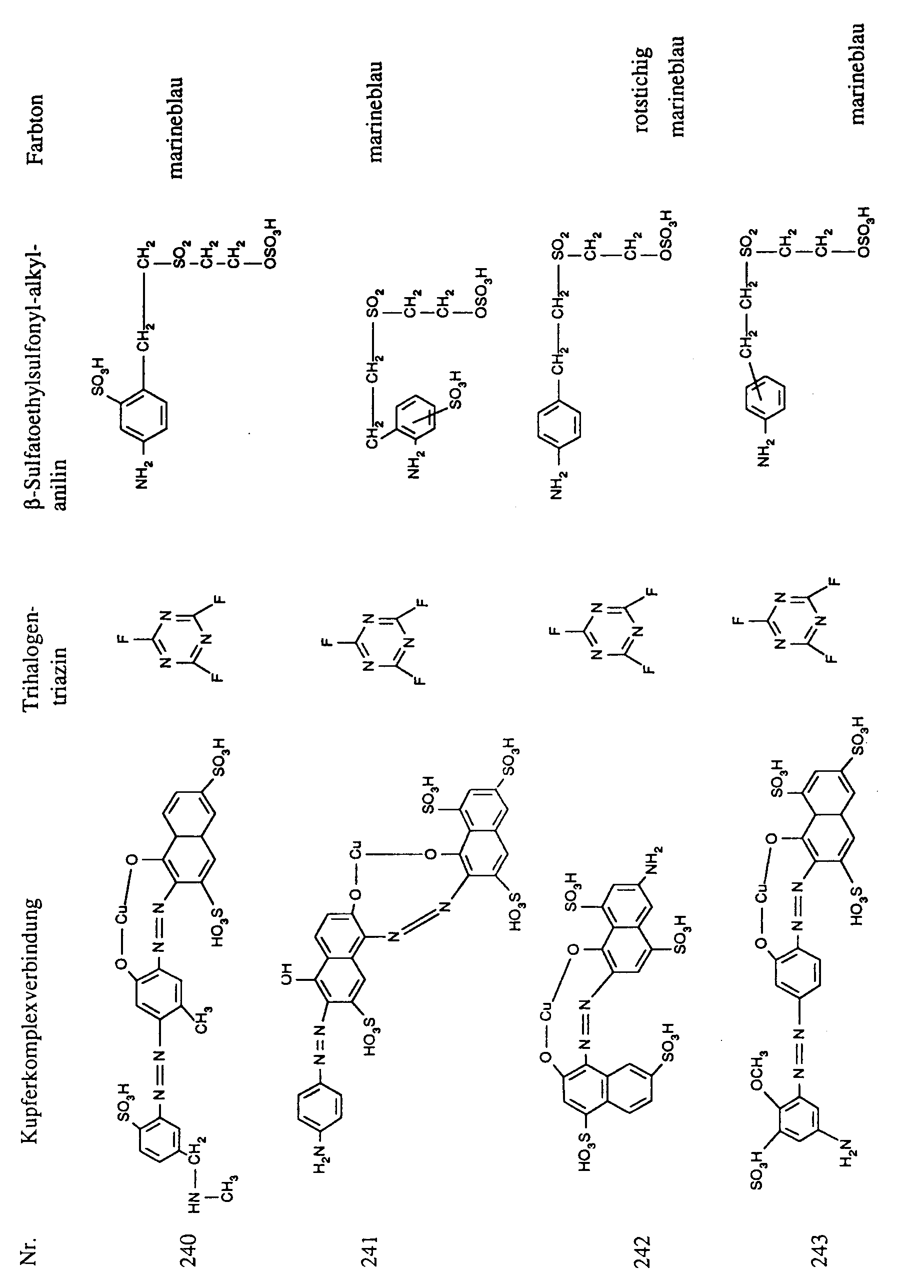

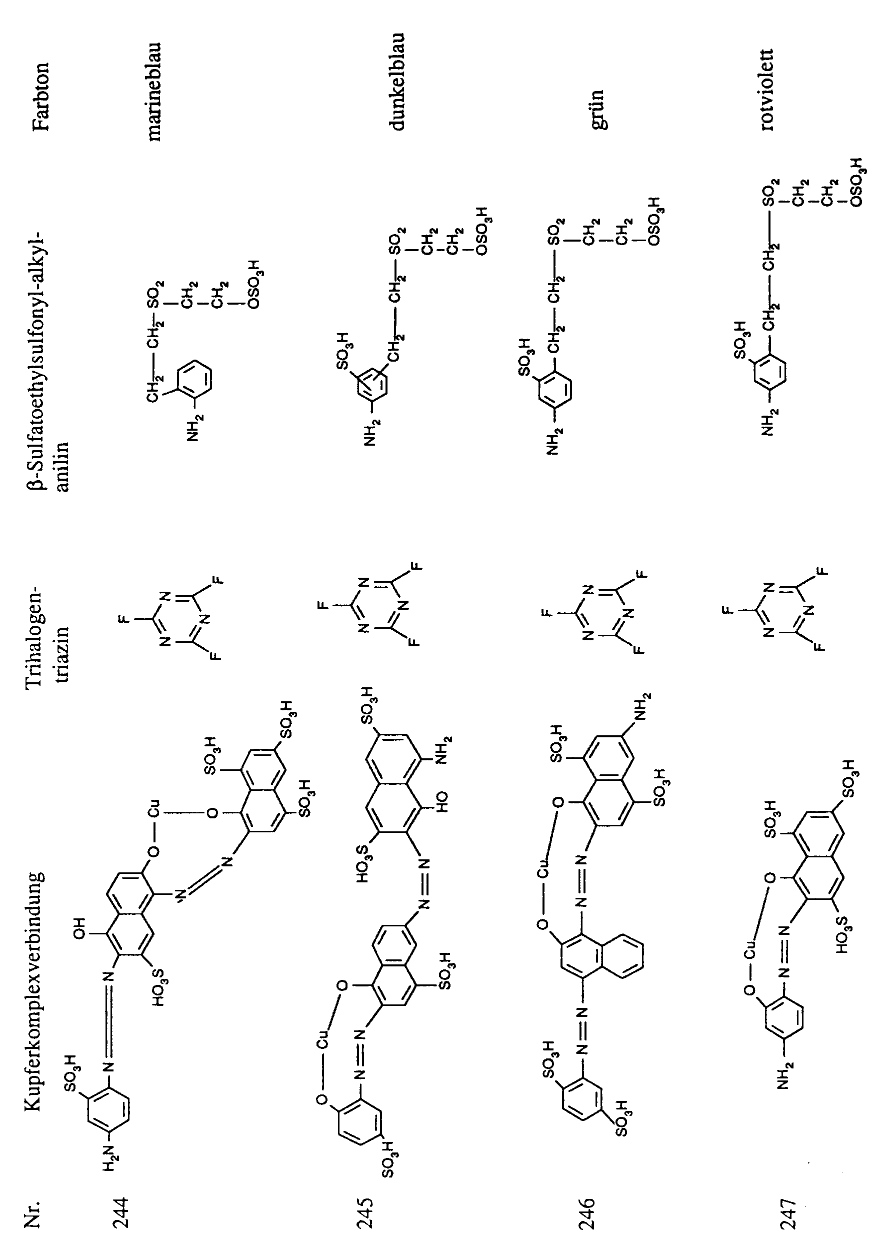

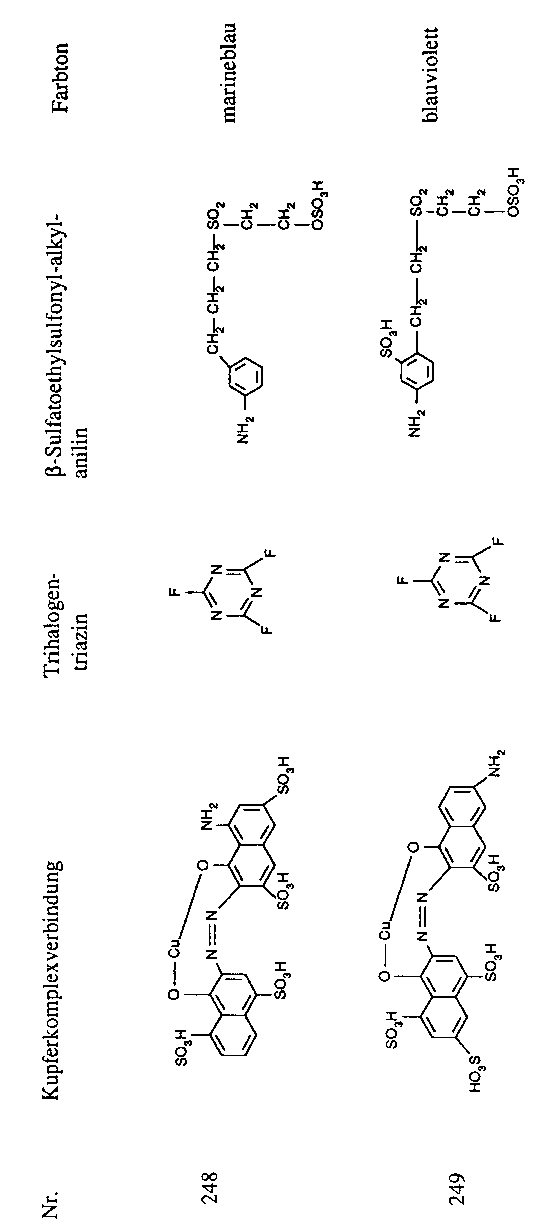

### Beispiel 250

50 mmol des 1:2-Chromkomplexes der Formel 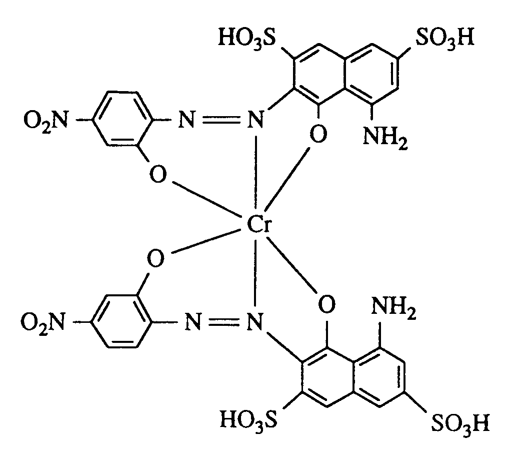
der durch Kupplung von diazotiertem 5-Nitro-2-aminophenol mit 1-Amino-8-hydroxynaphthalin-3,6-disulfonsäure und anschließender Umwandlung in den 1:2-Cr-Komplex erhalten werden kann, werden in 750 Teilen Wasser bei pH 7 gelöst und mit einer Lösung versetzt, die nach den Angaben des Beispiels 108 aus 44,7 g der Komponente des Beispiels 80 und 15,5 g Cyanurfluorid hergestellt wurde und die Verbindung 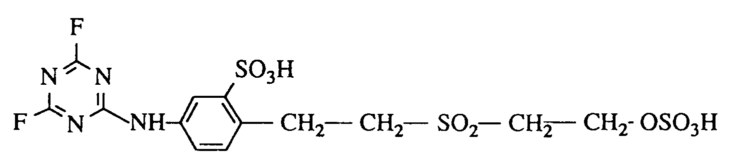
enthält. Man hält den pH-Wert auf 6-6,5 und die Temperatur auf 20-25°. Nach beendeter Kondensation wird der entstandene Reaktivfarbstoff ausgesalzen, abgesaugt und nach Pufferung auf pH 6,5 schonend im Vakuum getrocknet.

Mit dem erhaltenen dunklen Pulver wird Baumwolle in grünstichig grauen Tönen gefärbt.

Setzt man an Stelle des oben erwähnten reinen Chrom-Komplexes eine 1:1-Mischung aus dem Chromkomplex- und den entsprechenden Kobaltkomplex ein, dann wird eine Farbstoffmischung isoliert, die Baumwolle in neutralen lichtechten Grau- bzw. Schwarztönen färbt,

### Beispiel 251

50 mmole des Co-Komplexes der Formel 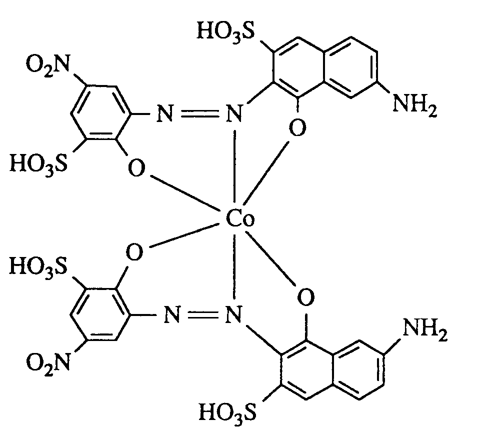
werden in 800 Volumenteilen Wasser bei pH 6 gelöst und die Lösung auf 0-5° abgekühlt. Man läßt unter kräftigem Rühren 14,9 g Cyanurfluorid zutropfen und hält den pH-Wert mit 2n Sodalösung auf 4,5-5,0. Nach beendeter Primärkondensation setzt man eine neutrale Lösung hinzu, die in 150 ml Wasser 21,4g der Komponente 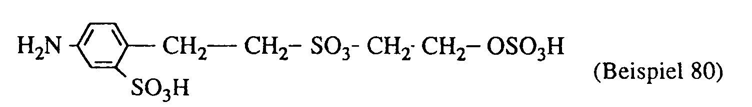
und 17,0 g Komponente der Formel 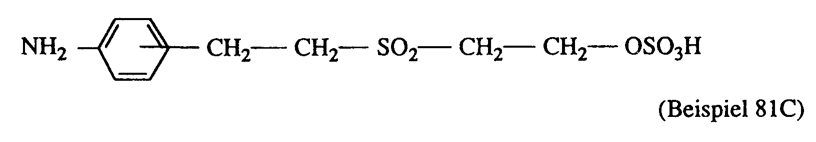
enthält. Man hält den pH-Wert auf 5,5-6,0 und läßt nach 2 Stunden die Temperatur auf 20° ansteigen. Ist die Kondensation beendet, wird der erhaltene Reaktivfarbstoff ausgesalzen, abgesaugt und im Vakuum bei 45° getrocknet. Das erhaltene Pulver färbt Baumwolle nach den für Reaktivfarbstoffe üblichen Techniken ergiebig in lichtechten Brauntönen.

### Beispiel 252

50 mmole Triphendioxazinverbindung der Formel 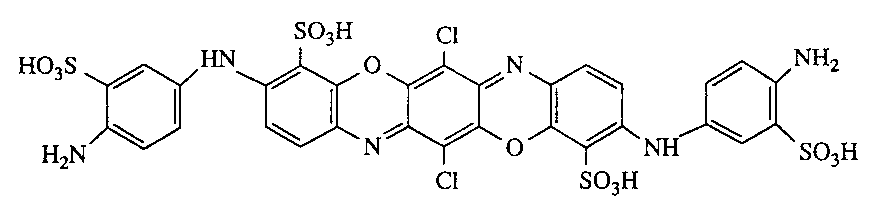
werden bei pH 6 in 900 ml Wasser gelöst Man läßt zu der Lösung bei 0-3° 14,9 g Cyanurfluorid zutropfen und hält den pH-Wert mit 2n Sodalösung auf 4,5-5,0.

Nach kurzem Nachrühren setzt man eine neutrale Lösung von 42,8 g Komponente des Beispiels 80 in 160 ml Wasser zu dem Primärkondensationsproudukt und hält den pH-Wert auf 6,0. Nachdem die Kondensation durch allmähliche Steigerung der Temperatur bis zu 20° beendet ist, wird der Farbstoff der Formel 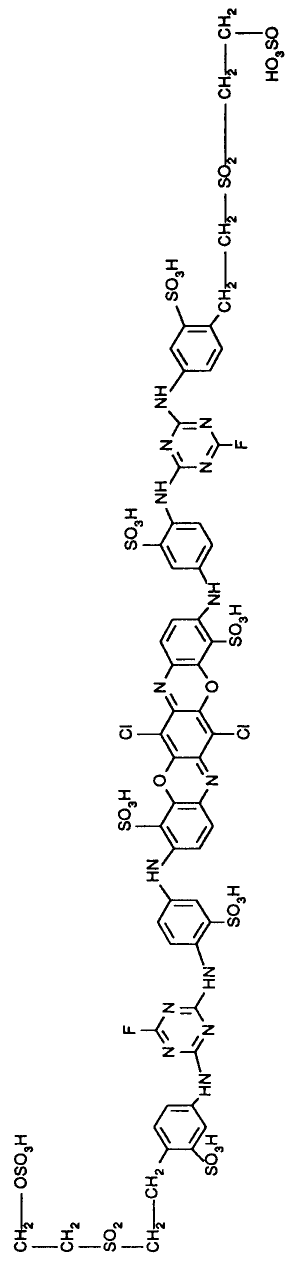
ausgesalzen, isoliert und getrocknet.

Er färbt Cellulosefasern in grünstichig blauen Tönen.

### Beispiel 253

21,9 g 1-(4-Benzoylamino)-8-hydroxynaphthalin-3,6-disulfonsäure werden in 250 ml Wasser bei pH 5,5 gelöst Nach Abkühlung der Lösung auf 0-3° werden 7,1 g Cyanurfluorid zügig zugetropft und der pH-Wert im Reaktionsgemisch mit verdünnter Sodalösung auf 4,5 gehalten. Nach kurzem Nachrühren setzt man eine auf 0° gekühlte neutrale Lösung von 16,3 g Komponente des Beispiels 81C in 80 ml Wasser zu und hält den pH-Wert über Nacht auf 5,5-6,0. Nach beendeter Kondensation setzt man eine Diazoniumsalzsuspension zu, die man auf übliche Weise durch Diazotierung von 8,7 g 2-Aminobenzolsulfonsäure erhalten hat, und führt die Kupplung durch Sodazugabe bei pH 6,5-7 zunächst mehrere Stunden bei 0° später ansteigend auf 20° zu Ende. Der erhaltene Farbstoff der Formel 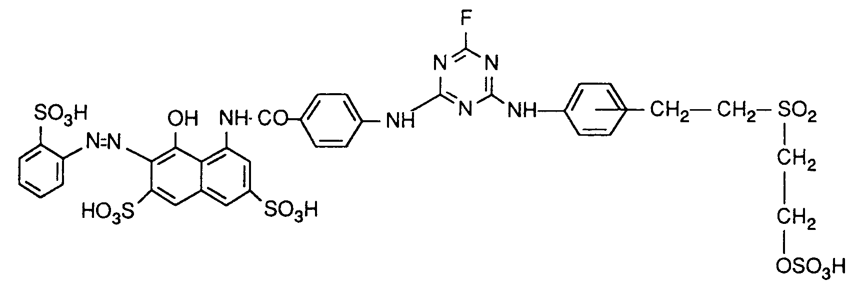
wird isoliert und getrocknet. Er gibt auf Baumwolle aus langer Flotte kräftige rote Färbungen von guter Licht- und Naßechtheit.

### Beispiel 254

25,7 g Triazol der Formel 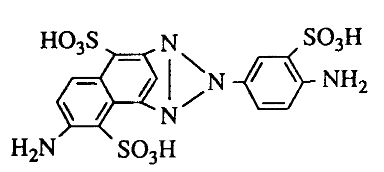
hergestellt nach den Angaben der Europäischen Patentschrift 0 013 879, werden bei pH 6,5 in 700 ml Wasser gelöst. Man kühlt auf 0° und tropft langsam 6,9 g Cyanurfluorid zu. Man hält den pH-Wert mit Natriumhydrogencarbonatlösung auf 6,0-6,5. Wenn die Reaktion nach wenigen Minuten beendet ist, setzt man eine neutrale, gekühlte Lösung von 20,2 g Komponente des Beispiels 80 in 80 ml Wasser zu und hält den pH-Wert weiter mit Sodalösung auf 6,5.

Nach 2 Stunden läßt man die Temperatur auf 20° ansteigen. Man versetzt mit 3,7 g Natriumnitrit und läßt in 20 ml 28 %ige Salzsäure einfließen. Nach einer Stunde des Nachreagierens wild eventuell überschüssige salpetrige Säure mit Amidosulfonsäure zerstört. Man streut nun 6,5 g Barbitursäure ein und kuppelt durch Zugabe von Natriumacetat zunächst bei pH 5, später mit Soda bei pH 5,5-6. Nach Beendigung der Kupplung wird der Farbstoff isoliert und bei 40° im Vakuum getrocknet. Er entspricht der Formel 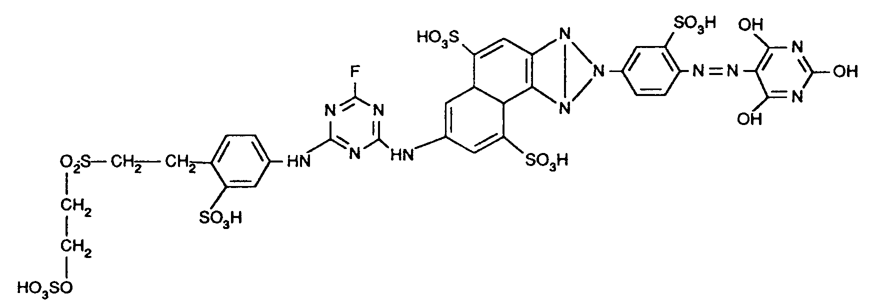
und färbt Baumwolle in brillanten Gelbtönen.

Ähnliche gelbe Farbstoffe erhält man, wenn man an Stelle der Barbitursäure folgende Kupplungskomponenten einsetzt:
2,6-Dihydroxypyridin-4-carbonsäure
1-(4-Sulfophenyl)-3-methyl-pyrazolon-(5)
1-(4-Sulfophenyl)-pyrazolon-(5)-3-carbonsäure
1,4-Dimethyl-2-hydroxy-pyridon-(6)-5-carbonamid
1,4-Dimethyl-2-hydroxy-3-sulfomethylen-pyridon-(6)-5-carbonamid
Acetessigsäure-N-(2'-methoxy-5'-methyl-4'-sulfophenylamid)
Acetessigsäure-N-(2',5'-dimethoxy-4'-sulfophenylamid)
1-Phenyl-3-methyl-5-aminopyrazol
1-(6,8-Disulfonaphthyl-(2))-3-methyl-pyrazolon-(5)
1,4-Dimethyl-2-hydroxy-5-cyan-pyridon-(6).

Weitere gelbe Farbstoffe erhält man, wenn man anstelle der Sulfatoethylsulfon-Komponente des Beispiels 80 diejenige des Beispiels 81C einsetzt.

### Beispiel 255

Zu einer Farbstofflösung, die gemäß Beispiel 76 synthetisiert wurde, setzt man nach der Kupplung 3,0 g Pyridin-3-carbonsäure. Man erwärmt die Lösung auf 75 bis 80°C und hält den pH-Wert mit 2 n Sodalösung auf 7,0, bis der Austausch des Fluoratoms gegen den Nicotinsäurerest beendet ist. Nach Abkühlen kann der Farbstoff ausgesalzen oder die Lösung nach Entsalzen und Aufkonzentrieren als Flüssigfarbstoff verwendet werden.

Der Farbstoff entspricht der Formel 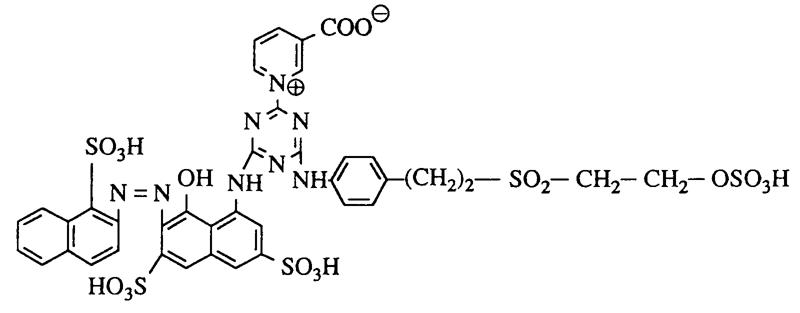
und färbt ähnlich dem Farbstoff des Beispiels 76 Baumwolle aus langer Flotte.

In ähnlicher Weise können auch die anderen in den vorangegangenen Beispielen beschriebenen Fluortriazinfarbstoffe in die 3-Carboxypyridiniumtriazin-Farbstoffe umgewandelt werden.

## Patentansprüche

1. Reaktivfarbstoffe der Formel 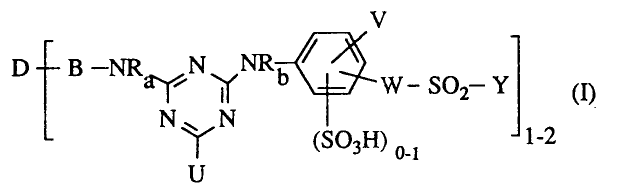 worin
D = Rest eines organischen Farbstoffes
B = direkte Bindung oder Brückenglied an ein Ring-C-Atom eines aromatisch-carbocyclischen oder an ein Ring C-Atom oder N-Atom eines aromatisch-heterocyclischen Ringes in D,
Rₐ, R_{b} = gleich oder verschieden, H, C₁-C₄-Alkyl oder mit OH, CN, CO₂H, OSO₃H oder SO₃H substituiertes C₁-C₄-Alkyl,
U = Cl, F oder ein gegebenenfalls durch CO₂H, CO₂NH₂, SO₃H oder C₁-C₄-Alkyl substituierter Pyridiniumrest,
W = geradkettiges oder verzweigtes C₁-C₆-Alkylen,
Y = CH=CH₂ oder CH₂-CH₂-X, worin
X = alkalisch eliminierbarer Rest,
V = H, Halogen, C₁-C₄-Alkoxy, C₁-C₃-Alkyl, CN, COOH, SO₃H, oder CONH₂,
mit der Maßgabe, daß
a)
D = Rest eines Farbstoffes der Formazan-, Phthalocyanin-, Antrachinon-und Triphendioxazin-Reihe, wenn W = -CH₂-, und
b)
D = Rest eines Farbstoffes der Formazan-, Phthalocyanin-, Antrachinon-und Triphendioxazin-Reihe und
U = die anfangs gegebene Bedeutung zukommt, wenn W = C₂-Alkylen
oder
c)
U = F oder ein gegebenenfalls durch CO₂H, CONH₂, SO₃H oder C₁-C₄-Alkyl substituierter Pyridiniumrest ist und
D = Rest eines organischen Farbstoffes, wenn der Rest W für C₂-Alkylen steht.

2. Reaktivfarbstoffe gemäß Anspruch 1, worin bedeuten
D = Rest eines Farbstoffes der Formazan-, Phthalocyanin-, Antrachinon-und Triphendioxazin-Reihe und
U = Cl oder F
W = C₁-C₄-Alkylen,
X = OSO₃H, Cl, Br oder F.

3. Reaktivfarbstoffe gemäß Anspruch 1, worin bedeuten
W = C₂-C₆-Alkylen
U = F oder ein Pyridiniumrest, der durch CO₂H, CONH₂, SO₃H oder C₁-C₄-Alkyl substituiert sein kann.

4. Farbstoffe gemäß Anspruch 3, dadurch gekennzeichnet, daß
X = OSO₃H, SSO₃H, OCOCH₃, OPO₃H₂, OSO₂CH₃, SCN, NHSO₂CH₃, Cl, F, Br, OCOC₆H₅, OSO₂-C₆H₄CH₃, N^{⊕}(CH₃)₃,
und
U = F.

5. Farbstoff gemäß wenigstens einem der vorhergehenden Ansprüche, worin
Rₐ= H oder C₁-C₂-Alkyl,
R_{b}= H, C₁-C₃-Alkyl, β-Hydroxyethyl, β-Sulfatoethyl, β-Carboxyethyl, β-Cyanethyl oder Carboxymethyl,
W = CH₂, C₂H₄, 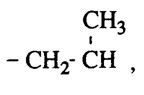 -(CH₂)₃-
Y = CH=CH₂ oder CH₂-CH₂-X-, mit
X= Cl oder OSO₃H,
V = H, Chlor, C₁-C₂-Alkyl, COOH, SO₃H, C₁-C₂-Alkoxy.

6. Farbstoffe nach wenigstens einem der vorhergehenden Ansprüche, dadurch gekennzeichnet, daß sie wenigstens einer der folgenden Formeln entsprechen 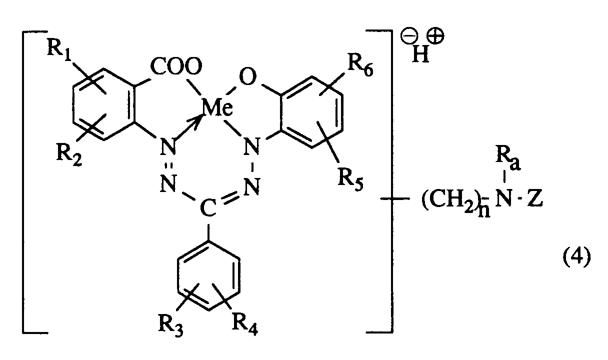 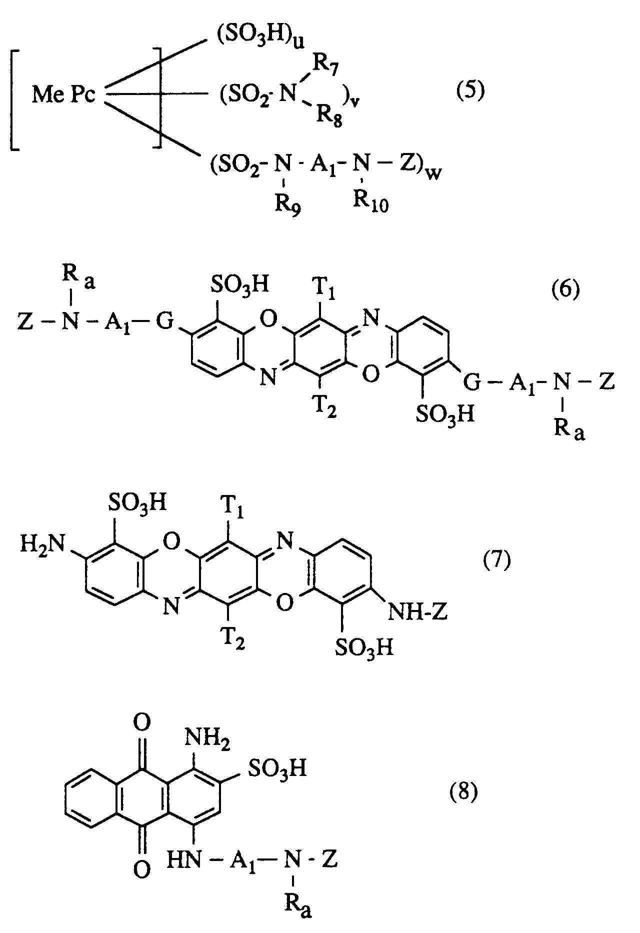 worin
Rₐ= H oder C₁-C₂-Alkyl
Pc = Phthalocyaninkern,
Me = zweiwertiges Metallion,
n = 0 oder 1
u + v + w = 3-4 ist, mit der Maßgabe, daß
w = 0,8 bis 2,0
v = 0 bis 1,0
u = 1,0 bis 3,0,
A₁ = aliphatishes, araliphatisches oder aromatisches Brückenglied,
G = Sauerstoff oder -N-R₁₁, worin
R₁₁= H, C₁-C₂-Alkyl, wobei wenn A₁ = C₂-Alkylen, R₁₁ und Rₐ zu einem Ring geschlossen sein können
T₁, T₂ = H, Chlor, Brom, C₁-C₄-Alkyl, C₁-C₄-Alkoxy oder Acylamino,
R₁-R₆ = unabhängig voneinander H, C₁-C₄-Alkyl, C₁-C₄-Alkoxy, Hydroxy, Halogen, Carboxy, Sulfonamido, Alkyl-oder Arylcarbonylamino, oder -sulfonylamino, β-Sulfatoethylsulfonyl oder SO₃H, Carboxymethyl, Carboxyethyl,
R₇-R₁₀ = H, C₁-C₂-Alkyl, gegebenenfalls substituiert durch Hydroxy, Carboxy oder Sulfonyl, worin R₉ und R₁₀ auch zu einem Ring geschlossen sein können, wenn A₁ = C₂-Alkylen,
Z = ein Rest der Formel 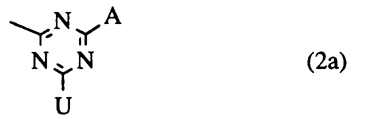
worin U die in Anspruch 1 genannte Bedeutung hat,
A = ein Rest der Formel 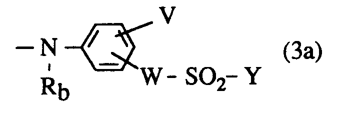
worin W, V und Y die in Anspruch 5 genannte Bedeutung haben,
R_{b} = H, C₂H₅, i-C₃H₇, n-C₃H₇, C₂H₄OH, Carboxymethyl oder Carboxyethyl.

7. Farbstoffe gemäß wenigstens einem der vorhergehenden Ansprüche, dadurch gekennzeichnet, daß sie folgender Formel entsprechen 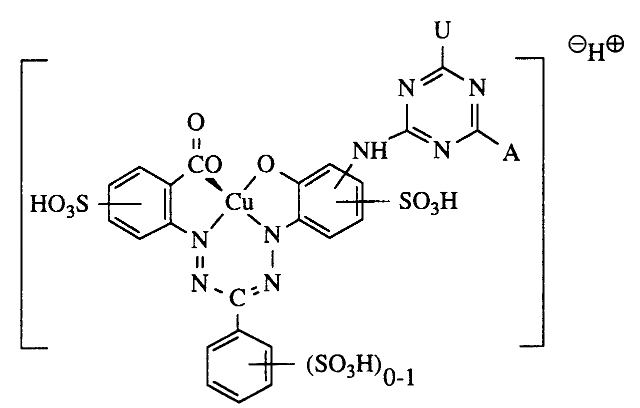 worin bedeuten
U = F, Cl oder ein gegebenenfalls durch COOH, CO₂NH₂, SO₃H oder C₁-C₄-Alkyl substituierter Pyridiniumrest, 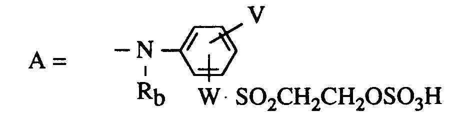
worin V, W und R₆ die in Anspruch 6 genannte Bedeutung haben.

8. Farbstoffe gemäß Anspruch 1, 3 und 4 mit der Formel (II),
D⁅B - NRₐ - Z]₁₋₂ (II)
worin B die in Anspruch 1 gegebene Bedeutung zukommt,
D = Rest eines Azo-, Polyazo- oder Metallkomplexazofarbstoffes
Rₐ = H, C₁-C₂-Alkyl und
Z = Rest der Formel 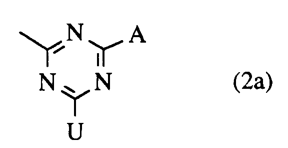
worin
U = F 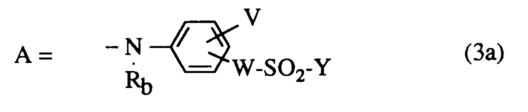
mit
R_{b} = H, CH₃,C₂H₅, i-C₃H₇, n-C₃H₇, C₂H₄OH, Carboxymethyl oder Carboxyethyl,
W = -C₂H₄-, -CH(CH₃)-CH₂-, -(CH₂)₃-,
und V und Y die unter Anspruch 5 gegebene Bedeutung zukommt.

9. Amine der Formel 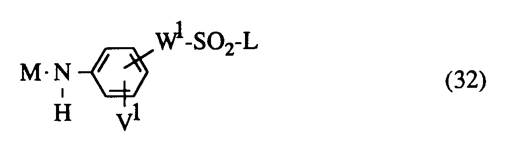 worin
M = C₂H₅, C₃H₇, C₂H₅OH,
V¹ = H, Cl, SO₃H, CH₃, CO₂H, OCH₃,
L = CH=CH₂, CH₂-CH₂-Q,
Q = Cl, OH, -OSO₃H,
W¹ = CH₂, C₂H₄, 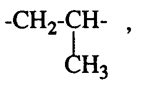 -(CH₂)₃-.

10. Verfahren zur Herstellung von Farbstoffen gemäß wenigstens einem der vorhergehenden Ansprüche, dadurch gekennzeichnet, daß eine Farbbase der allgemeinen Formel 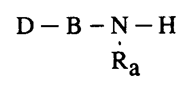 in der D, B, Rₐ die in Anspruch 1 genannte Bedeutung haben, mit 2,4,6-Trichlor- oder 2,4,6-Trifluortriazin umgesetzt wird, das erhaltene Zwischenprodukt in einem weiteren Reaktionsschritt mit einem Aminosulfon der Formel 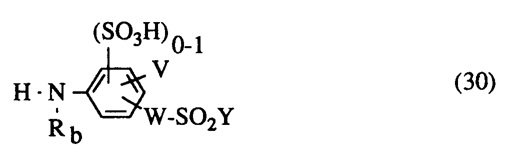 umgesetzt wird oder daß man eine Farbbase 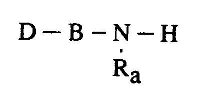 mit einer faserreaktiven Verbindung der Formel (19) kondensiert 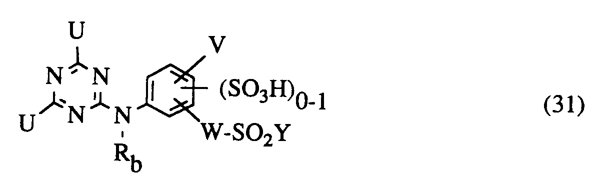 worin die Substituenten die in Anspruch 1 und 5 angegebene Bedeutung haben.

11. Verfahren zur Herstellung von Aminen gemäß Anspruch 9, dadurch gekennzeichnet, daß Verbindungen der Formel (33) 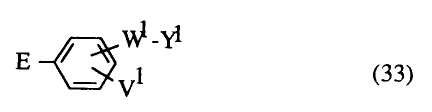 worin
V¹, W¹ = die in Anspruch 9 genannte Bedeutung haben,
E = NO₂ oder Acylamino,
Y¹ = Cl, Br oder -OSO₃H
mit 2-Mercaptoethanol zu Sulfiden der Formel (34) 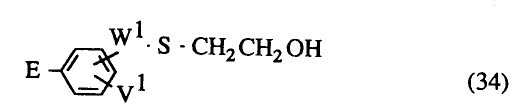 umgesetzt werden und diese zu Sulfonen der Formel (35) 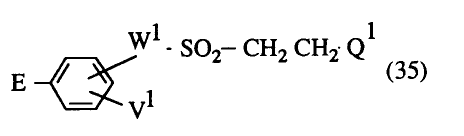 worin
Q¹ = HO oder Cl,
oxidiert werden und anschließend die Nitrogruppe E reduziert bzw. die Acylaminogruppe E verseift wird, die entstehenden Aminoverbindungen N-alkyliert werden, gegebenenfalls anschließend die OH-Gruppe in Q¹ in eine -OSO₃H-Gruppe umgewandelt wird und gegebenenfalls die so erhaltenen Amine durch Behandeln mit alkalisch wirkenden Mitteln in Verbindungen der Formel (32) überführt werden, worin L für die -CH=CH₂-Gruppe steht.

12. Verfahren zur Herstellung von Aminen gemäß Anspruch 9 (mit W=C₂H₄), dadurch gekennzeichnet, daß man an Ethenylaromaten der Formel (33a) 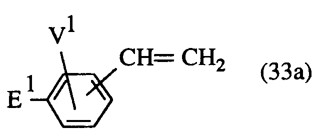 worin
E¹= H, NO₂ oder Acylamino, und
V¹ die unter Formel (33) angegebene Bedeutung hat,
2-Mercaptoethanol zu Sulfiden der Formel (34a) 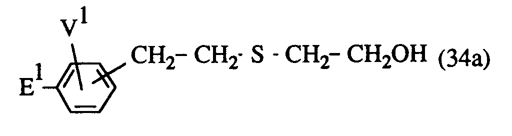 radikalkatalysiert addiert,
diese zu Sulfonen der Formel (35a) 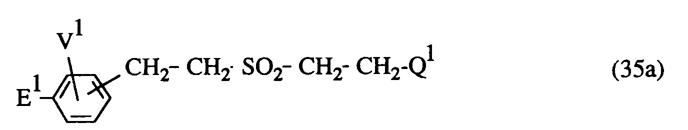 worin
Q¹ die in Anspruch 11 angegebene Bedeutung hat, oxidiert und anschließend, wenn E¹=H zu E¹=NO₂ nitriert, die Nitrogruppe E¹ reduziert bzw. die Acylaminogruppe E¹ verseift, gegebenenfalls die entstandenen Aminoverbindungen N-alkyliert und/oder die OH-Gruppe Q¹ in eine OSO₃H-Gruppe umwandelt und gegebenenfalls im Phenylkern an Stelle von V¹=H eine SO₃H-Gruppe einführt.

13. Verfahren zum Färben von Cellulose und/oder polyamidhaltigen Materialien mit einem Reaktivfarbstoff, dadurch gekennzeichnet, daß ein Reaktivfarbstoff gemäß wenigstens einem der vorherstehenden Ansprüche verwendet wird.

14. Verfahren nach Anspruch 13, dadurch gekenzeichnet, daß der Farbstoff in Abmischung mit anderen Farbstoffen für eine Trichromie verwendet wird.
